(19) **Europäisches Patentamt / European Patent Office / Office européen des brevets**

(11) **EP 1 944 605 A1**

(12) **EUROPEAN PATENT APPLICATION**
published in accordance with Art. 153(4) EPC

(43) Date of publication:
**16.07.2008 Bulletin 2008/29**

(51) Int Cl.:
*G01N 29/09* (2006.01)    *G01N 19/00* (2006.01)

(21) Application number: **06822603.4**

(22) Date of filing: **30.10.2006**

(86) International application number:
**PCT/JP2006/321646**

(87) International publication number:
**WO 2007/052601 (10.05.2007 Gazette 2007/19)**

(84) Designated Contracting States:
**DE FR GB IT**

(30) Priority: **31.10.2005  JP 2005316529**
**07.12.2005  JP 2005353414**
**27.10.2006  JP 2006292956**

(71) Applicant: **OMRON CORPORATION**
**Kyoto-shi, Kyoto 600-8530 (JP)**

(72) Inventors:
• **OMATA, Nobuaki**
**Kyoto-shi, Kyoto 600-8530 (JP)**

• **SUGA, Takahiro**
**Kyoto-shi, Kyoto 600-8530 (JP)**
• **URABE, Shinichi**
**Kyoto-shi, Kyoto 600-8530 (JP)**
• **FURUSAWA, Hirokazu**
**Kyoto-shi, Kyoto 600-8530 (JP)**
• **NAGAYANAGI, Mamoru**
**Kyoto-shi, Kyoto 600-8530 (JP)**

(74) Representative: **Wilhelms · Kilian & Partner**
**Patentanwälte**
**Eduard-Schmid-Strasse 2**
**81541 München (DE)**

(54) **VISCOELASTICITY MEASURING DEVICE AND VISCOELASTICITY MEASURING METHOD, AND PROCESS DEVICE**

(57)    A delaying member (3) is incorporated so that one surface of the delaying member can coincide with the carrying surface in the carrier line (30). A pressurizing roller (34) is positioned vertically above the one side of the delaying member (3) and in the direction in which its longitudinal direction is orthogonal to the carrying direction of the carrier line (30). Then, the pressurizing roller (34) has its both ends connected to the pressurizing units (32_1, 32_2), respectively. In response to a pressurize command, the pressurizing units (32_1 and 32_2) linearly drive the pressurizing roller (34) vertically upwards to vertically downwards with respect to the carrying surface of the carrier line (30) to pressurize a measurement target (SMP).

Fig. 3

**EP 1 944 605 A1**

**Description**

TECHNICAL FIELD

The present invention relates to a measuring device of viscoelastic property that measures viscoelastic property of a measurement target, and a method of measuring viscoelasticity. Specifically, it relates to technology for measuring viscoelastic property in real time.

The present invention also relates to a process unit that provides an object to be processed with external action so that the object to be processed can have desired viscoelastic property. Specifically, it relates to technology for controlling processing of a process while measuring viscoelastic property of an object to be processed.

In addition, this invention relates to technology for controlling a measurement error due to temperature dependency of propagation property of sonic wave.

BACKGROUND ART

Viscoelastic property is one of indicators for measuring physical properties of materials. Viscoelasticity is a physical property having both elasticity that causes strain in proportion to stress to be given and viscosity that causes viscous fluidity in response to stress to give.

As a method of measuring such viscoelasticity, a dynamic viscoelasticity testing (DMA: Dynamic Mechanical Analysis) method that is mainly used in solids or a rotating viscometric apparatus (rotational rheometer) that is mainly used in fluids is known.

For instance, as disclosed in "'Guide on Analytical Instruments (12th Edition)', Japan Analytical Instruments Manufacturers Association, pp 105, September 1, 2004" (Nonpatent literature 1), a dynamic viscoelasticity testing method is a method of providing a measurement target with cyclic stress and measuring then strain response of the measurement target. In addition, a rotating viscometric apparatus is an apparatus that has a measurement target intervene between a plate of a planar shape and a cone of a conic shape, provides the measurement target with creep displacement of predetermined cycle by driving a cone, and measures stress that is then generated in the plate.

Such viscoelastic property of matter is very important in terms of quality control in manufacturing processes. For instance, in a process in which a desired product is obtained by providing such measurement targets as raw materials or semimanufactures with external action such as agitation, etc., it is desirable to optimize stop timing or agitating speed, etc., depending on varying viscoelastic property, as the viscoelastic property of a measurement target varies by agitation.

[Patent Literature 1] Japan Patent Application KOKAI Publication No. 05-0215726

[Nonpatent Literature 1] "Guide on Analytical Instruments (12th Edition)", Japan Analytical Instruments Manufacturers Association, pp.105, September 1, 2004

DISCLOSURE OF INVENTION

PROBLEMS TO BE SOLVED BY THE INVENTION

However, in a conventional measurement means, it was necessary to extract a part of a measurement target as a sample because it needs a sample for measuring viscoelastic property. The conventional measurement means also provides stress or creep displacement having a specific cycle, thereby measuring viscoelastic property in that cycle (frequency). Thus, it had a problem that measurement should be repeated for a plurality of cycles so as to obtain viscoelastic property over a wide frequency domain, which is time-consuming or troublesome.

Thus, it was difficult to continuously measure viscoelastic property of products or semimanufactures in a manufacturing process, etc., which limited measurement of viscoelastic property to post-manufacturing inspections of products before shipment.

Hence, the present invention was made to solve such the problem and aims to provide a viscoelastic property measuring device capable of measuring viscoelastic property of a measurement target in a prompt and highly precise manner, and a method of measuring viscoelasticity.

In addition, in a process, it was difficult to continuously measure viscoelastic property of an object to be processed and optimize the process according to the measured viscoelastic property, and thus measurement of viscoelastic property was limited to after termination of the process, etc.

Hence, another object of this invention is to provide a process unit capable of performing optimum processing depending on changes in viscoelastic property of an object to be processed due to external action.

Incidentally, it has been known that there exists temperature dependency in propagation rate of sonic wave (or sound speed). Thus, in the case in which some measurement is attempted by using sonic wave, any effect of temperature dependency on sonic wave should be controlled. For instance, Japan Patent Application KOKAI Publication No. 05-0215726 (Patent Literature 1) discloses an ultrasonic applied measuring device that has enabled control of error generation due to sound speed of ultrasonic plate wave that varies with temperature changes of a sample. Thus, when measurement is performed by using sonic wave, it is necessary to control measurement errors due to temperature dependency of propagation property of sonic wave.

Yet another object is to provide technology of controlling measurement errors of viscoelastic property due to temperature dependency.

MEANS FOR SOLVING THE PROBLEMS

According to an aspect of this invention, it is a viscoelastic property measuring device including a sensor unit that emits a first sonic wave to a measurement target and receives a second sonic wave generated by the first sonic wave being reflected by the target measurement, a delaying member that is positioned in close contact with the sensor unit and generates a delay time between the first sonic wave emitted from the sensor unit and the second sonic wave received by the sensor unit with a propagation of the first sonic wave and the second sonic wave, a measurement control unit that measures viscoelastic property of the measurement target based on a measurement signal of the second sonic wave received by the sensor unit, and an close-contact mechanism for bringing the measurement target and the delaying member into close contact.

A viscoelastic property measuring device according to this aspect emits first sonic wave to a measurement target and measures viscoelastic property of the measurement target based on second sonic wave to be generated by the first sonic wave being reflected at the measurement target. Now, as the close-contact mechanism can bring the measurement target and the delaying member into close contact, generation of a gap, etc., between the measurement target and the delaying member can be controlled. Therefore, the viscoelastic property measuring device capable of measuring viscoelastic property of a measurement target in a prompt and highly precise manner can be embodied.

Preferably, the close-contact mechanism includes a pressurizing unit that pressurizes a measurement target so that the measurement target is in close contact with the delaying member.

It is also preferable that the viscoelastic property measuring device according to this aspect further includes a measurement control unit for measuring temperature of the delaying member. The measurement control unit further includes a reference data storage unit that, for every temperature of the delaying member, previously stores a plurality of reference data indicative of property of the second sonic wave at the time of emitting the first sonic wave in a state where a reference medium is bonded with the delaying member in place of the measurement target, a corrected reference data determining unit that determines corrected reference data corresponding to the measured temperature values of the delaying member to be measured by the temperature measuring unit, based on the reference data of every temperature stored in the reference data storage unit, and a calculating unit that calculates viscoelastic property of a measurement target from the measurement signal using the corrected reference data determined by the corrected reference data determining unit as a reference.

It is also preferable that the measurement control unit includes a reference data storage unit that previously stores a plurality of reference data indicative of property of second sonic wave in association with delay time until the sensor unit emits first sonic wave and then the sensor unit receives the reflected second sonic wave, in a state where the reference medium is bonded with the delaying member in place of a measurement target; a delay time extracting unit that extracts a delay time of a measurement signal based on temporal intensity change of the measurement signal; a corrected reference data determining unit that determines corrected reference data depending on the extraction delay time to be extracted by the delay time extracting unit based on the plurality of reference data stored in the reference data storage unit in association with the delay time; and a calculating unit that calculates viscoelastic property of a measurement target from a measurement signal using the corrected reference data determined by the corrected reference data determining unit as a reference.

The present invention according to another aspect is a method of measuring viscoelastic property of a measurement target. The method of measuring viscoelastic property according to this aspect includes a step of bringing a measurement target and a delay member into close contact, wherein the delaying member is inserted between the measurement target and a sensor unit and configured to generate the delay time between a first sonic wave to be emitted from the sensor unit and a second sonic wave to be generated by the first sonic wave being reflected by the measurement target. Furthermore, the method of measuring viscoelastic property according to this aspect includes the steps of emitting first sonic wave from a sensor unit; receiving second sonic wave by the sensor unit, and measuring viscoelastic property of a measurement target based on measurement signal of the second sonic wave to be received the sensor unit.

The method of measuring viscoelastic property according to this aspect emits first sonic wave to a measurement target, and measures viscoelastic property of the measurement target based on second sonic wave to be generated by the first sonic wave being reflected by the measurement target. Now bringing the measurement target and delaying member into close contact could control generation of a gap, etc., between the measurement target and the delaying member. Thus, the method capable of measuring viscoelastic property of a measurement target in a rapid and highly precise manner could be embodied.

Preferably, the method of measuring viscoelastic property according to this aspect further includes the steps of: for every temperature of a delaying member, previously obtaining a plurality of reference data indicative of property of second sonic wave at a time of emitting the first sonic wave in a case where the reference medium is bonded with the delaying member in place of a measurement target, measuring temperatures of the delaying member, determining corrected reference data depending on the measured temperature value of the delaying member, based on the reference data obtained for every temperature of the delaying member; and calculating viscoelastic property of the measurement target from the measurement signal using the determined corrected reference data as a reference.

Also, preferably, the method of measuring viscoelastic property according to this aspect further includes the steps of: previously storing a plurality of reference data indicative of property of second sonic wave in association with delay time until a sensor unit emits first sonic wave and then the sensor unit receives the second sonic wave in a state where the reference medium is bonded with a delaying member in place of a measurement target; extracting the delay time of a measurement signal based on temporal intensity changes of the measurement signal; determining corrected reference data depending on extracted extraction delay time based on the plurality of reference data to be stored in association with the delay time; and calculating viscoelastic property of the measurement target from the measurement signal using the determined corrected reference data as a reference.

According to yet another aspect, this invention is a process unit including an action unit that provides an object to be processed with an external action and changes viscoelastic property of the object to be processed, a sensor unit that emits a first sonic wave to the object to be processed and receives second wave generated by the first sonic wave being reflected at the object to be processed or passing through the object to be processed, and a measurement control unit that measures viscoelastic property of the object to be processed based on a measurement signal of the second sonic wave received by the sensor unit. The measurement control unit controls the action unit based on the measurement result of viscoelastic property of the object to be processed.

With the process unit according to this aspect, viscoelastic property of the object to be processed is measured by emitting the first sonic wave to the object to be processed by the sensor unit and receiving the second sonic wave generated by the object to be processed. Then, the action unit is controlled based on the measurement result of the measured viscoelastic property. Thus, as the action unit can be controlled so that viscoelastic property of the object to be processed can be of desired value, it is possible to implement the process unit that performs optimal processing depending on changes in the viscoelastic property of the object to be processed due to external action.

Preferably, the process unit according to this aspect further includes a delaying member that is inserted between the object to be processed and a sensor unit and generates a delay time between the first sonic wave and the second sonic wave, and a temperature measuring unit for measuring temperature of the delaying member. Then, the measurement control unit includes a reference data storage unit that for every temperature of the delaying member, previously stores a plurality of reference data indicative of property of the second sonic wave at a time of emitting the first sonic wave in a state where the reference medium in place of the object to be processed, is bonded with the delaying member, a corrected reference data determining unit that determines corrected reference data depending on the measured temperature values of the delaying member to be measured by the temperature measuring unit based on the reference data for every temperature to be stored in the reference data storage unit, and a calculating unit that calculates viscoelastic property of the object to be processed from the measurement signal using the corrected reference data determined by the corrected reference data determining unit as a reference.

Also, preferably, the measurement control unit further includes a reference data storage unit that previously stores a plurality of reference data indicative of property of the second sonic wave in association with the delay time until the sensor unit emits the first sonic wave and then the sensor unit receives the reflected second sonic wave in a state where the reference medium is bonded with the delaying member in place of the object to be processed, a delay time extracting unit that extracts delay time of a measurement signal based on the temporal intensity change in the measurement signal, a corrected reference data determining unit that determines corrected reference data depending on extracted delay time to be extracted by the delay time extracting unit based on the plurality of reference data stored in the reference data storage unit in association with the delay time, and a calculating unit that calculates viscoelastic property of the object to be processed from the measurement signal using the corrected reference data determined by the corrected reference data determining unit as a reference.

EFFECT OF THE INVENTION

According to the present invention, a viscoelastic property measurement device that can measure viscoelastic property of a measurement target in a prompt and highly precise manner and a method of measuring viscoelasticity can be implemented. Also, according to the present invention, a process unit that can perform optical processing depending on changes in viscoelastic property of an object to be processed due to external action can be implemented. In addition, according to the present invention, any measurement error of viscoelastic property due to temperature dependency can be controlled.

BRIEF DESCRIPTION OF THE DRAWINGS

FIG. 1 is a schematic configuration diagram of a viscoelastic property measuring device according to Embodiment 1 of the present invention.

FIG. 2 is a schematic configuration diagram of a viscoelastic property measuring device when viewed from the exterior.

FIG. 3 is a sectional view of line III-III in FIG. 2.

FIG. 4A is a view illustrating a surface reflection method.

FIG. 4B is a view illustrating a surface reflection method.

FIG. 4C is a view illustrating a surface reflection method.

FIG. 5 is a flow chart for measuring viscoelastic property.

FIG. 6 is a schematic configuration diagram of a viscoelastic property measuring device according to Embodiment 2 of the present invention.

FIG. 7 is an outline view illustrating a process unit including the viscoelastic property measuring device.

FIG. 8 is a flow chart related to control of a reaction process.

FIG. 9 is a schematic configuration diagram of a viscoelastic property measuring device according to Embodiment 3 of the present invention.

FIG. 10 is a schematic configuration diagram of the viscoelastic property measuring device when viewed from the exterior.

FIG. 11 is a sectional view of line XI-XI in FIG. 10.

FIG. 12 is a schematic configuration diagram of a viscoelastic property measuring device according to Embodiment 4 of the present invention.

FIG. 13A is a device configuration diagram of a viscoelastic property measuring device according to Embodiment 4 of the present invention.

FIG. 13B is a device configuration diagram of a viscoelastic property measuring device according to Embodiment 4 of the present invention.

FIG. 14A is a view for illustrating operation during measurement of a viscoelastic property measuring device according to Embodiment 4 of the present invention.

FIG. 14B is a view for illustrating operation during measurement of a viscoelastic property measuring device according to Embodiment 4 of the present invention.

FIG. 14C is a view for illustrating operation during measurement of a viscoelastic property measuring device according to Embodiment 4 of the present invention.

FIG. 15A is a device configuration diagram of a viscoelastic property measuring device according to Embodiment 5 of the present invention.

FIG. 15B is a device configuration diagram of a viscoelastic property measuring device according to Embodiment 5 of the present invention.

FIG. 16A is a device configuration diagram of a viscoelastic property measuring device according to Embodiment 6 of the present invention.

FIG. 16B is a device configuration diagram of a viscoelastic property measuring device according to Embodiment 6 of the present invention.

FIG. 17 is a schematic configuration diagram of a process unit according to Embodiment 7 of the present invention.

FIG. 18 is a detailed schematic configuration diagram of a measurement control unit, sensor unit and delaying member.

FIG. 19 is an example of time change in the storage elastic modulus (viscosity) to an object to be processed consisting of a mixture of flour and water.

FIG. 20 is a flow chart of process control in a measurement control unit.

FIG. 21 is a flow chart of acquiring a reference value in a measurement control unit.

FIG. 22 is a view for illustrating control in a process unit according to a variant example 1 of Embodiment 7 of the present invention, for time change in the storage elastic modulus as shown in FIG. 19.

FIG. 23 is a flow chart of process control according to the variant example 1 of Embodiment 7 of the present invention.

FIG. 24 is a view for illustrating control in a process unit according to a variant example 2 of Embodiment 7 of the present invention, for time change in the storage elastic modulus as shown in FIG. 19.

FIG. 25 is a flow chart of the process control according to the variant example 2 of Embodiment 7 of the present invention.

FIG. 26 is a view for illustrating control in a process unit according to a variant example 3 of Embodiment 1 of the present invention, for time change in the stock elastic modulus as shown in FIG. 19.

FIG. 27 is a flow chart of the process control according to the variant example 3 of Embodiment 7 of the present invention.

FIG. 28A is a view showing a relationship between a position and reflected sonic wave of an object to be processed in a kneading container as shown in FIG. 17.

FIG. 28B is a view showing a relationship between a position and reflected sonic wave of an object to be processed in a kneading container as shown in FIG. 17.

FIG. 29 is a flow chart of process control in a measurement control unit according to a variant example 4 of Embodiment 7 of the present invention.

FIG. 30 is a schematic configuration view of a process unit according to Embodiment 8 of the present invention.

FIG. 31 is an example of time change in the storage elastic modulus (elasticity) to an object to be processed consisting of a mixture of raw materials for manufacturing silver line noodle.

FIG. 32 is a schematic configuration diagram of a process unit according to Embodiment 9 of this present invention.

FIG. 33 is an example of frequency characteristic of the loss elastic modulus to an object to be processed consisting of a mixture of raw materials for manufacturing fish sausage.

FIG. 34 is a flow chart of process chart in a measurement control unit according to Embodiment 9 of the present invention.

FIG. 35 is a schematic configuration diagram of a process unit according to Embodiment 10 of the present invention.

FIG. 36 is an example of time change in the loss elastic modulus (viscosity) to an object to be processed consisting of a mixture of raw materials for manufacturing tire rubber.

FIG. 37 is a flow chart of process control in a measurement control unit according to Embodiment 10 of the present invention.

FIG. 38 is a schematic configuration diagram of a process unit according to Embodiment 11 of the present invention.

FIG. 39 is an example of time change in the storage elastic modulus and the loss elastic modulus to an object to be processed consisting of a mixture of raw materials for manufacturing mayonnaise.

FIG. 40 is a flow chart of process control in the measurement control unit according to Embodiment 11 of the present invention.

FIG. 41 is a schematic configuration diagram of a process unit according to Embodiment 12 of the present invention.

FIG. 42 is an example of time change in the loss elastic modulus to an object to be processed consisting of photosensitizing agent.

FIG. 43 is a flow chart of process control in a measurement control unit according to Embodiment 12 of the present invention.

FIG. 44 is a schematic configuration diagram of a process unit according to Embodiment 13 of the present invention.

FIG. 45 is a schematic configuration diagram of a process unit according to Embodiment 14 of the present invention.

FIG. 46 is a more detailed layout drawing of a sensor unit and a delaying member.

FIG. 47A is a view for illustrating a method of measuring viscoelastic property by means of a bottom reflection method.

FIG. 47B is a view for illustrating a method of measuring viscoelastic property by means of a bottom reflection method.

FIG. 47C is a view for illustrating a method of measuring viscoelastic property by means of a bottom reflection method.

FIG. 48A is temporal waveforms in each of FIG.47A, FIG. 47B and FIG. 47C.

FIG. 48B is temporal waveforms in each of FIG.47A, FIG. 47B and FIG. 47C.

FIG. 48C is temporal waveforms in each of FIG.47A, FIG. 47B and FIG. 47C.

FIG. 49 is a flow chart of process control in a measurement control unit according to Embodiment 14 of the present invention.

FIG. 50 is a flow chart of acquiring a reference value in a measurement control unit according to Claim 14 of the present invention.

FIG. 51 is a schematic configuration diagram of a process unit according to Embodiment 15 of the present invention.

FIG. 52 is a more detailed layout drawing of a transmitting unit, receiving unit, and delaying member.

FIG. 53 is a more detailed schematic configuration diagram of the measurement control unit, transmitting unit, receiving unit and delaying member.

FIG. 54 is a flow chart of process control in a measurement control unit according to Embodiment 15 of the present invention.

FIG. 55 is a schematic configuration diagram of a process unit according to Embodiment 16 of the present invention.

FIG. 56 is an example of time change in the loss elastic modulus to an object to be processed consisting of raw materials of ceramics.

FIG. 57 is a flow chart of processing in a measurement control unit according to Embodiment 16 of the present invention.

FIG. 58 is a schematic configuration diagram of a process unit according to Embodiment 17 of the present invention.

FIG. 59 is an example of time change in the loss elastic modulus to an object to be processed consisting of a ceramic molding.

FIG. 60 is a flow chart of processing in a measurement control unit according to Embodiment 17 of the present invention.

FIG. 61 is a schematic view illustrating essential parts of a viscoelastic property measuring device according to Embodiment 18 of the present invention.

FIG. 62 is a schematic configuration diagram of the viscoelastic property measuring device according to Embodiment 18 of the present invention.

FIG. 63A is a view for illustrating the principle of the surface reflection method.

FIG. 63B is a view for illustrating the principle of the surface reflection method.

FIG. 64 is a view illustrating temporal intensity change in sonic wave emitted or received by a transducer.

FIG. 65 is a graph showing temporal intensity change of a reference signal for every temperature of a delaying member.

FIG. 66 is a control block diagram related to measurement processing of viscoelastic property according to Embodiment 18 of the present invention.

FIG. 67 is a view showing data structure of reference data according to Embodiment 18 of the present invention.

FIG. 68 is a view illustrating an example of a relationship between reference data stored in a reference data memory unit and the measured temperature values.

FIG. 69 is a flow chart related to measurement processing of viscoelastic property according to Embodiment 18 of the present invention.

FIG. 70 is a control block diagram related to acquisition process of reference data according to Embodiment 18 of the present invention.

FIG. 71 is a flow chart related to acquisition process of reference data according to Embodiment 18 of the present invention.

FIG. 72 is a view for illustrating a method of determining delay time related to corrected reference data in a variant example of Embodiment 18 of the present invention.

FIG. 73 is a view for illustrating a method of determining a characteristic of temporal intensity change in corrected reference data in the variant example of Embodiment 18 of the present invention.

FIG. 74 is a view showing one example of corrected reference data to be determined by interpolation of two reference data.

FIG. 75 is a flow chart related to measuring process of viscoelastic property according to the variant example of Embodiment 18 of the present invention.

FIG. 76 is a control block diagram related to measuring process of viscoelastic property according to Embodiment 19 of the present invention.

FIG. 77A is a schematic graphic view of one example of reference data to be stored in a reference data memory data unit.

FIG. 77B is a schematic graphic view of one example of reference data to be stored in a reference data memory data unit.

FIG. 78A is a view showing data structure of reference data according to Embodiment 19 of the present invention.

FIG. 78B is a view showing data structure of reference data according to Embodiment 19 of the present invention.

FIG. 79 is a flow chart related to measuring process of viscoelastic property according to Embodiment 19 of the present invention.

FIG. 80 is a control block diagram related to acquisition process of reference data according to Embodiment 19 of the present invention.

FIG. 81A is a view for illustrating a method of determining corrected reference data in a variant example of Embodiment 19 of the present invention.

FIG. 81B is a view for illustrating a method of determining corrected reference data in a variant example of Embodiment 19 of the present invention.

FIG. 82 is a flow chart related to measuring process of viscoelastic property according to the variant example of Embodiment 19 of the present invention.

FIG. 83 is a schematic configuration diagram of a viscoelastic measuring device according to Embodiment 20 of the present invention.

FIG. 84 is a control block related to determination process of viscoelastic property according to Embodiment 20 of the present invention.

FIG. 85 is a graph showing one example of temporal intensity change in reflected sonic wave received in a reference state.

FIG. 86 is a view showing data structure of reference data according to Embodiment 20 of the present invention.

FIG. 87 is a view illustrating an example of a relationship of reference data stored in a reference data memory unit and delay time.

FIG. 88 is a view for illustrating process of extracting delay time in a delay time extracting unit.

FIG. 89 is a view for illustrating another process of extracting delay time in a delay time extracting unit.

FIG. 90A is a view for illustrating yet another process of extracting delay time in a delay time extracting unit.

FIG. 90B is a view for illustrating yet another process of extracting delay time in a delay time extracting unit.

FIG. 91 is a flow chart related to measuring process of viscoelastic property according to Embodiment 20 of the present invention.

FIG. 92 is a control block diagram related to acquisition process of reference data according to Embodiment 20 of the present invention.

FIG. 93 is a view illustrating an example of a relationship of reference data stored in a reference data memory unit and delay time of a measurement signal.

FIG. 94 is a view for illustrating a method of determining a characteristic of that is corrected reference data in a variant data of Embodiment 20 of the present invention.

FIG. 95 is a view illustrating an example of corrected reference data to be determined by interpolation between two reference data.

FIG. 96 is a flow chart related to measuring process of viscoelastic property according to the variant example of Embodiment 20 of the present invention.

FIG. 97 is a control block diagram related to measuring process of viscoelastic property according to Embodiment 21 of the present invention.

FIG. 98 is a view showing data structure of reference data according to Embodiment 21 of the present invention.

FIG. 99 is a flow chart related to measuring process of viscoelastic characteristic according to Embodiment 21 of the present invention.

FIG. 100 is a control block diagram related to acquisition process of reference data according to Embodiment 21 of the present invention.

FIG. 101 is a flow chart related to measuring process of viscoelastic property according to a variant example of Embodiment 21 of the present invention.

FIG. 102 is a view showing data structure of reference data according to Embodiment 21 of the present invention.

FIG. 103 is a view for illustrating estimation process of temperatures of a delaying member according to Embodiment 22 of the present invention.

DESCRIPTION OF REFERENCE NUMERALS

2 Sensor unit, 2_2 Receiving unit, 2_1 Transmitting unit, 3, 3_1, 3_2, 3A to 3D Delaying member, 5 Temperature measuring unit, 7 Couplant member, 10, 10A to 10C, 11 Calculating unit, 12 12_1, 12_2 Temporal data memory unit, 14 Storage unit, 14A to 14D Reference data memory unit, 16 Display output unit, 18 Input unit, 20, 20_1, 20_2 Transducer, 22 Transmission control circuit, 24 Transmitting circuit, 25 Direction matching unit, 26 Receiving circuit, 28, 28_1, 28_2 Signal processing circuit, 30 Carrier line, 32_1, 32_2 Pressurizing unit, 34 Pressurizing roller, 40 Gap space, 42 Reaction vessel, 44, 54, 144, 150, 172, 188, 198, 210, 218_1, 218_2, 236 Motor, 46 Circulating pump, 48, 50, 58 Piping, 52 Three-way valve, 56 Agitating unit, 62 Measurement container, 64 Closure member, 68 Depressurizing unit, 70 Pipe member, 72 Link member, 74 Drive unit, 76, 176 Impeller, 78 Area, 80 Carrier stand, 82 Closure member, 84 Spring member, 85 Seal member, 88 Couplant member, 92 Container area, 98 Sheet member, 99 Gap, 100 Viscoelastic Property Measuring Device, 130, 140, 214, 230 Kneading container, 142, 232 Impeller, 146, 174 Drive shaft, 152, 196 Roller, 154 Scraper, 156, 186 Power supply unit, 158, 182_1, 182_2 Heat generating unit, 160 Block unit, 170 Agitation container, 180, Retaining container, 184 Dripping pipe, 190, 194 Rotating table, 192 Work, 216_1, 216_2 Shaft, 220_1, 220_2 Vane unit, 224 Gas Supplying Unit, 226 Pressure-regulating valve, 228 Injection unit, 238 Molding, 240 Receiving table roller, 242 Drying furnace, 244 Burner, 246 Moving table roller, 248 Temperature sensing unit, 250 Discharging table roller, 330 Corrected reference data determining unit, 332A to 332D Reference data acquisition control unit, 334, 336, 342 Frequency characteristic acquisition unit, 338 Calculating unit, 340, 346 Corrected reference data determining unit, 344, 348 Delay time extracting unit, 501, 502, 503, 504, 505, 506, 551, 552, 650 Viscoelastic Property Measuring Device, 601, 602, 603, 604, 605 Measurement control unit, 651 Measurement control unit, 700, 701, 702, 703, 704, 705, 706, 707, 708, 709, 710, 711 Process unit, 801, 802, 803, 804, 805, 806, 807, 808, 809, 810, 811 Measurement control unit, 901 Processing unit, OBJ Object to be processed, SMP Measurement target

BEST MODE FOR CARRYING OUT THE INVENTION

Now we describe embodiments of the present invention in detail with reference to drawings. We assign same numerical references to identical or corresponding parts throughout the drawings, and do not repeat descriptions thereof.

[Embodiment 1]

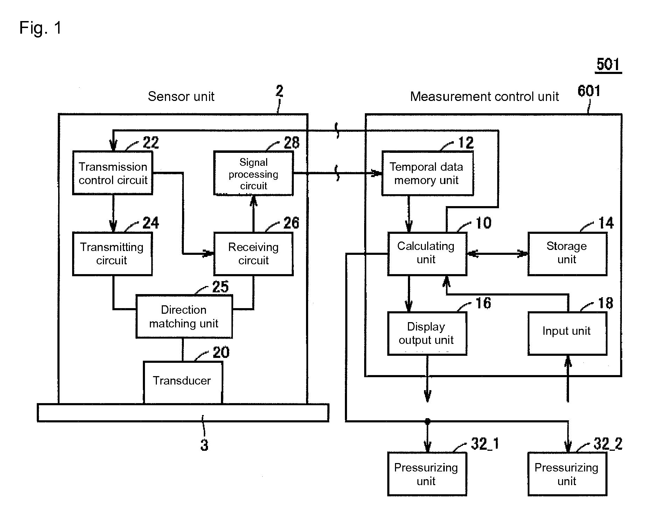

FIG. 1 shows schematic configuration of a viscoelastic property measuring device 501 according to Embodiment 1 of the present invention.

With reference to FIG. 1, the viscoelastic property measuring device 501 includes a measurement control unit 601, sensor unit 2, delaying member 3, and pressurizing units 32_1, 32_1. Then, in the viscoelastic property measuring unit 501, the sensor unit 2 emits sonic wave causing a measurement target to vibrate, as incident sonic wave, and receives reflected sonic wave to be generated by the sonic wave being reflected by a measurement target. Then, the sensor unit 2 emits incident sonic wave to a measurement target SMP through a delaying member 3, and receives reflected sonic wave through the delaying member 3. And, based on the reflected sonic wave received by the sensor unit 2, the viscoelastic property measuring unit 501 measures viscoelastic property of the measurement target by means of a measurement control unit 601. Preferably, incident sonic wave to be emitted by the sensor unit 2 is ultrasonic wave.

The viscoelastic property used herein is a collective term of property of a substance to be specified in at least one or more of storage elastic modulus, loss elastic modulus and loss tangent. We will describe the storage elastic modulus, loss elastic modulus and loss tangent later.

In addition, in the viscoelastic property measuring device 501, pressurizing units 32_1 and 32_2 pressurize a measurement target and increases close contact between the measurement target and delaying member 3.

The measurement control unit 601 is implemented in a calculator, etc., for instance, and includes an input unit 18, temporal data memory unit 12, storage unit 14, calculating unit 10, and display output unit 16.

When receiving a command from the external, such as a user, the input unit 18 outputs the command to the calculating unit 10. By way of example, the input unit 18 consists of operation buttons, keyboard, mouse, touch panel, etc.

The temporal data memory unit 12 stores at predetermined intervals signals indicative of temporal intensity change in sonic wave to be received by the sensor unit 2. In addition, the temporal data memory unit 12 is such configured that it can change cycle of sampling the time by request from the calculating unit 10.

The storage unit 14 stores reference data to be previously acquired and used for calculating viscoelastic property, and returns the reference data by request from the calculating unit 10. In addition, the storage unit 14 stores viscoelastic property to be calculated continuously in the calculating unit 10.

When receiving a measurement start command from the external, the calculating unit 10 gives an emit command to the sensor unit 2 via the input unit 18, which then emits incident sonic wave to a measurement target. Then, the calculating unit 10 reads out a signal indicative of temporal intensity change (hereinafter referred to as a "measurement signal") of reflected sonic wave to the temporal data memory unit 12. Then, by way of example, the calculating unit 10 performs frequency analysis process such as Fourier process (FFT process: Fast Fourier Transform; hereinafter also referred to as FFT process), and acquires an amplitude value and phase in a frequency domain of a measurement signal. Subsequently, the calculating unit 10 measures viscoelastic property of a measurement target by reading out reference data stored in the storage unit 14, and comparing the reference data with the amplitude value an phase in the frequency domain of the acquired reflected sonic wave. Furthermore, the calculating unit 10 outputs the viscoelastic property of the measured measurement target to a display output unit 16 and/or the storage unit 14. Thus, single emission of incident sonic wave from the sensor unit 2 enables calculation of viscoelastic property in a same frequency band as that contained in the emitted sonic wave.

If measurement process of viscoelastic property starts when receiving a measurement start command from the external, the calculating unit 10 gives a pressurize command to pressurizing units 32_1 and 32_2 and pressurizes the measurement target.

In addition, if a reference data acquision command is given from the external in the state in which a reference medium (air, by way of example) is bonded with the delaying member 3 (hereinafter referred to as a "reference state"), the calculating unit 10 gives the sensor unit 2 an emit command, and causes it to emit incident sonic wave. Then, the calculating unit 10 reads out a signal indicative of temporal intensity change in reflected sonic wave stored in the temporal data memory unit 12. In the following, we refer to a signal indicative of temporal intensity change in reflected sonic wave obtained in a reference state as a "reference signal". In addition, the calculating unit 10 performs FET process on a reference signal, obtains an amplitude value and phase in a frequency domain, and stores them as reference data in the storage unit 14.

The display output unit 16 displays viscoelastic property of a measurement target to be calculated from the calculating unit 10 or status, etc. of each process and/or outputs data thereof to the external. When it displays externally, the display output unit 16 includes a display unit such as a liquid crystal display or plasma display, by way of example. When it also outputs to the external, the display output unit 16 includes an interface, etc., that complies with the standards such as USB (Universal Serial Bus), RS-232C (Recommended Standard 232 version C), IEEE (Institute of Electrical and Electronic Engineers) 1394, SCSI (Small Computer System Interface), Ethernet (trademark registered), IEEE 1284 (parallel board), etc.

On the one hand, the sensor unit 2 includes a transmission control circuit 22, transmitting circuit 24, direction matching unit 25, transducer 20, receiving circuit 26, and signal processing circuit 28.

When receiving an emit command from the measurement control unit 601, the transmission control circuit 22 outputs to the transmitting circuit 24 a generation signal for generating incident sonic wave to emit. For instance, the transmission control circuit 22 outputs pulse signals for generating pulsed incident sonic wave, or period signals for generating incident sonic wave containing predetermined frequency components. In addition, the transmission control circuit 22 outputs to the receiving circuit 26 a trigger signal that notifies timing to output the generation signal.

The transmitting circuit 24 outputs to a direction matching unit 25 an electrical signal corresponding to the generation signal to be given by the transmitting control circuit 22.

The direction matching unit 25 is connected to the transmitting circuit 24, a transducer 20, and the receiving circuit 26, respectively, and communicates to the receiving circuit 26 an electrical signal received from the transducer 20 while communicating to the transducer 20 an electrical signal outputted from the transmitting circuit 24. In other words, the direction matching unit 25 limits directions of signal transmission to prevent electrical signals to be given from the transmitting circuit 24 from being communicated to the receiving circuit 26.

The transducer 20 is connected to the transmitting circuit 24 and the receiving circuit 26 through the direction matching unit 25, and not only converts into sonic wave an electrical signal received from the transmitting circuit 24 through the direction matching unit 25 and emits it to a measurement target, but also converts into an electrical signal the sonic wave received from the measurement target and outputs it to the receiving circuit 26 through the direction matching circuit 25. By way of example, the transducer 20 consists of such a piezoelectric device as lead zirconate titanate, etc.

The receiving circuit 26 receives an electrical signal to be given by the direction matching unit 25, and outputs it to the signal processing circuit 28 after subjecting it to predetermined amplification. The receiving circuit 26 also responds to a trigger signal from the transmission control circuit 22 and starts receiving an electrical signal to be outputted from the transducer 20.

The signal processing circuit 28 receives an electrical signal from the receiving circuit 26, performs analog/digital conversion, and sequentially outputs an intensity value (amplitude value) at respective times of sonic wave to be received at the transducer 20.

The delaying member 3 is positioned to be in close contact with the transducer 20 of the sensor unit 2, and propagates incident sonic wave generated from the transducer 20 and reflected sonic wave generated at a measurement target. Therefore, timing for reflected sonic wave reflected at the measurement target to enter the transducer 20 is delayed to timing for the transducer 20 to emit the incident sonic wave. Thus, measurement error due to overlapping of the period during which the transmitting circuit 24 generates incident sonic wave, that is, the period during which the receiving circuit 26 stops receiving and the period during which the receiving circuit 26 receives an electrical signal of reflected sonic wave.

When receiving a pressurize command from the calculating unit 10, the pressurizing units 32_1 and 32_2 pressurizes a measurement target by driving mechanically connected rollers or panels, etc. and improves close contact between the measurement target and the delaying member 3.

In Embodiment 1, the pressurizing units 32_1 and 32_2 implements a "close-contact mechanism".

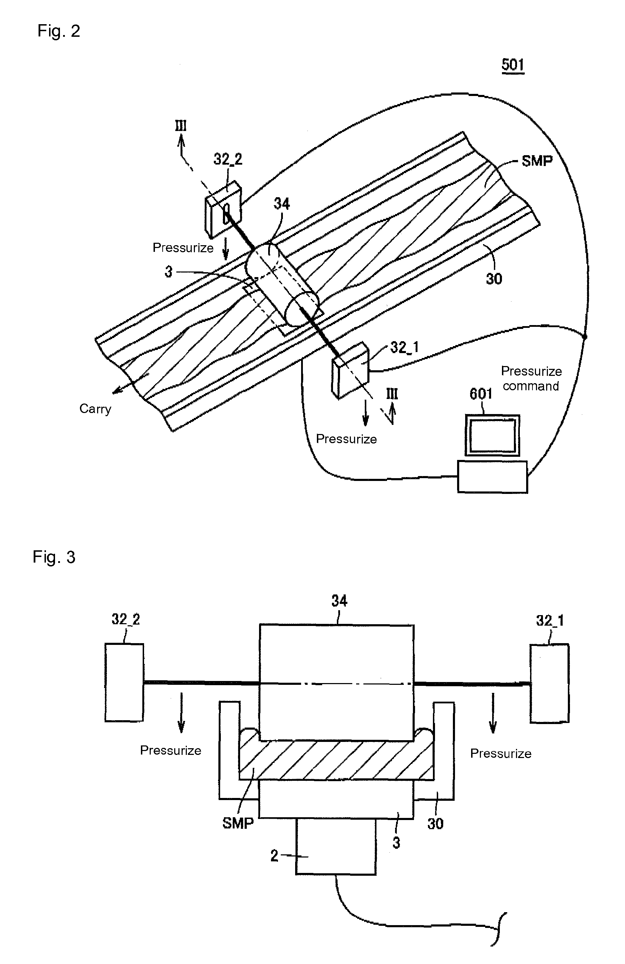

FIG. 2 schematically shows appearance of the viscoelastic property measuring device 501.

FIG. 3 shows cross section structure of line III-III in FIG. 2.

With reference to FIG. 2, we describe configuration in which viscoelastic property of a measurement target SMP is continuously measured, in a carrier line on which the measurement target SMP such as solid or semi-solid material, by way of example, is continuously carried. The measurement target SMP to be carried on such a carrier line contains synthetic rubber, konjac, bean curd, etc., by way of example.

For instance, synthetic rubber is a product viscoelastic property of which is strictly controlled as its quality, and the viscoelastic property substantially changes depending on composition of material rubber or additive amount of vulcanizing agent. Thus, if viscoelastic property could be continuously measured in intermediate processes, it would be possible to obviate product failure and increase productivity.

In addition, in the case of konjac or bean curd, etc., as viscoelastic property determines resistance to the teeth, in other words, texture, strict control of viscoelastic property is required. However, in the case of konjac, since coagulation effect on same coagulant widely varies depending on temperatures or amount of water contained in raw materials, it is often up to experience and intuition of skilled worker to decide the quantity of coagulant. Hence, if viscoelastic property could be continuously measured in intermediate processes, it would be possible to easily manufacture quality food even in manufacturing floor with no skilled worker.

In such a manufacturing process, the carrier line 30 carries product or semimanufactures that are measurement targets SMPs. Like a belt conveyor or roller conveyor, the carrier line 30 can be configured to carry them by way of frictional force.

With reference to FIG. 2 and FIG. 3, the delaying member 3 is incorporated in the carrier line so that one surface of the delaying member can coincide with the carrying surface in the carrier line 30. Then, the sensor unit 2 is positioned in close contact with other surface of the delaying member 3.

A pressurizing roller 34 is positioned above and perpendicular to the carrying surface of the carrier line 30, i.e., one side of the delaying member 3 and in the direction in which its longitudinal direction is orthogonal to the carrying direction of the carrier line 30. Then, the pressurizing roller 34 has its both ends connected to the pressurizing units 32_1 and 32_2, respectively.

In response to a pressurize command received from the calculating unit 10, the pressurizing units 32_1 and 32_2 linearly drive the pressurizing roller 34 vertically upwards to vertically downwards with respect to the carrying surface of the carrier line 30 to pressurize a measurement target SMP. Furthermore, the pressurizing units 32_1 and 32_2 have the pressurizing roller 34 rotate so as to be synchronized with carrying speed of the measurement target SMP on the carrier line 30 and may assist in carrying the measurement target SMP.

Thus, the measurement target SMP is carried between the delaying member 3 and the pressurizing roller 34 and the pressurizing roller 34 pressurizes the measurement target SMP, thereby allowing improved close contact between the measurement target SMP an the delaying member 3.

In the following, we describe the principle of measuring viscoelastic property of a measurement target SMP and the effect of improving close contact between the measurement target SMP and the delaying member 3.

(Measurement of Viscoelastic Property)

As described above, viscoelastic property is a physical property having elasticity that causes strain in proportion to stress to be given and viscosity that causes viscous fluidity in response under stress to be given. Then, viscoelastic property is described in terms of the storage elastic modulus, loss elastic modulus, and loss tangent.

Such viscoelastic property is explained by means of Maxwell model in which a spring that is an elastic element and a dash pot that is a viscous element are connected in series or Forked Model in which they are connected in parallel. Then, the storage elastic modulus described above is a value representative of elasticity of matter, while the loss elastic modulus is a value representative of viscosity.

In general, when periodic stress is given to a substance, components in the same phase as the stress correspond to the storage elastic modulus L' and components (orthogonal components) having a phase difference of 90°from the stress correspond to the loss elastic modulus L". In other words, as the storage elastic modulus L' and the loss elastic modulus L" have a relationship of being independent of each other (linear independence), it can be expressed on a Gaussian plane. Then, let the storage elastic modulus L' be a real component and the loss elastic modulus L" be an imaginary component, and the loss elastic modulus can be expressed as the loss tangent $\tan\delta = L''/L'$ using a declination $\delta$ made by the storage elastic modulus L' and the loss elastic modulus L" on the Gaussian plane.

In Embodiment 1, the surface reflection method is used wherein viscoelastic property is measured based on reflected sonic wave to be generated by emitting sonic wave to the measurement target SMP and then the sonic wave being reflected on the surface of the measurement target SMP.

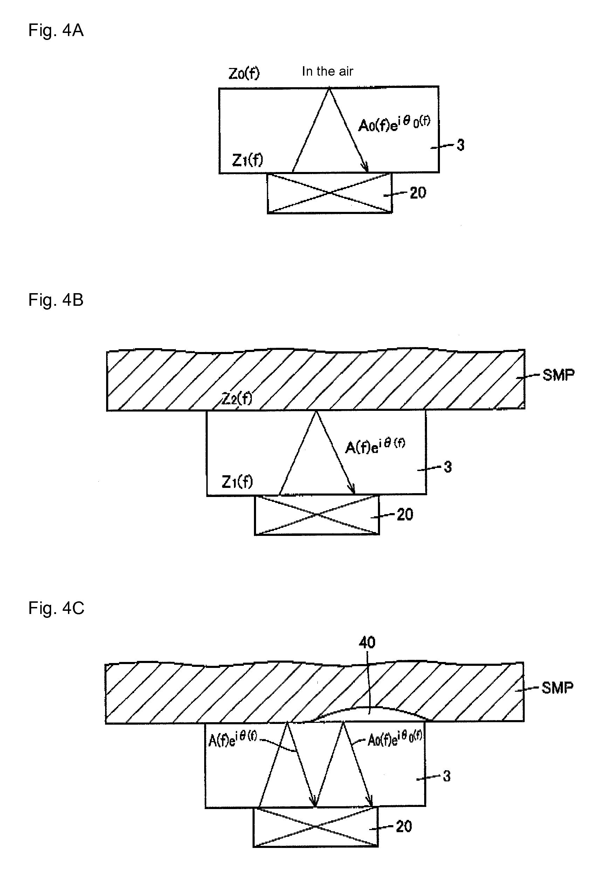

FIG. 4A to FIG. 4C show figures for schematically describing the surface reflection method.

FIG. 4A shows the case in which reference data is obtained.

FIG. 4B shows the case in which viscoelastic property of a measurement target SMP is measured.

FIG. 4C shows the case in which a measurement error occurs in viscoelastic property.

First, in order to represent propagation characteristic of incident sonic wave to be emitted by the transducer 20, acoustic impedance of the delaying member 3 and the measurement target SMP is introduced.

With reference to FIG. 4A, to obtain reference data, incident sonic wave is emitted from the transducer 20 in a reference state in which air that is a reference medium is bonded to the delaying member 3, namely, in the state in which the delaying member 3 is not in contact with the measurement target SMP.

Now, if it is assumed that frequency of the incident sonic wave and reflected sonic wave is f, acoustic impedance of the delaying member 3 that depends on the frequency f can be expressed as $Z_1(f)$. In addition, acoustic impedance in the air can be expressed as $Z_0(f)$. However, both acoustic impedance $Z_0(f)$ and $Z_1(f)$ are a complex number. Furthermore, the reflectivity $R_{01}(f)$ of the incident sonic wave on a boundary surface between the delaying member 3 and the air can be expressed as expression (1):

$$\text{Reflectivity } R_{01}(f) = (Z_0(f) - Z_1(f))/(Z_0(f) + Z_1(f)) \cdots (1)$$

Now, since acoustic impedance in the air $Z_0(f)$ is sufficiently smaller than acoustic impedance of the delaying member 3 and the measurement target SMP, it can be considered irrespective of the frequency f that $0 < Z_0(f) << Z_1(f)$, thus the reflectivity $R_{01}(f) = -1$. That is, it can be considered that the incident sonic wave is fully reflected on the boundary surface between the delaying member 3 and the air.

Furthermore, sonic wave entering the transducer 20 is expressed as $A_0(f) \exp(i\theta_0(f))$. However, since I is a unit of an imaginary number, $A_0(f)$ is amplitude characteristic (a real value) in the frequency domain, and $\theta_0(f)$ is phase characteristic in the frequency domain ($0 \leq \theta_0(f) < \infty$). Then, as the incident sonic wave on the boundary surface between the delaying member 3 and the air is fully reflected, the incident sonic wave to be emitted from the transducer 20 to the measurement target SMP through the delaying member 3 is expressed by expression (2).

$$A_0(f)\exp(i\theta_0(f)) \times R_{01}(f) = -A_0(f)\exp(i\theta_0(f)) \cdots (2)$$

More specifically, the viscoelastic property measuring device 501 assumes that the incident sonic wave expressed by expression (2) is emitted to the measurement target SMP, and stores the constituents $A_0(f)$ and $\theta_0(f)$ as reference data.

On the one hand, with reference to FIG. 4B, to measure viscoelastic property of a measurement target SMP, the measurement target SMP and delaying member 3 are brought in close contact, and the same incident sonic wave as the case of FIG. 4A is emitted from the transducer 20. Then, viscoelastic property of the measurement target SMP is measured by comparing the incident sonic wave reflected on the boundary surface between the delaying member 3 and the measurement target SMP with the stored reference data.

Let acoustic impedance of the measurement target SMP be $Z_2(f)$, and the reflectivity of the incident sonic wave $R_{12}(f)$ on the boundary surface between the delaying member 3 and the measurement target SMP can be expressed by the expression (3). However, acoustic impedance $Z_2(f)$ is a complex number.

$$\text{Reflectivity } R_{12}(f) = (Z_2(f) - Z_1(f))/(Z_2(f) + Z_1(f)) \cdots (3)$$

Furthermore, expression (4) can be derived by deforming expression (3):

$$Z_2(f) = Z_1(f) \times (1 + R_{12}(f))/(1 - R_{12}(f)) \cdots (4)$$

Now, reflected sonic wave entering the transducer 20 is expressed as $A(f)\exp(i\theta(f))$. However, i is a unit of an imaginary number, $A(f)$ is amplitude characteristic (a real value) in the frequency domain, and $\theta(f)$ is phase characteristic in the frequency domain ($0 \leq \theta_0 < \infty$). Then, expression (5) can be true by using the reference data expressed by expression (2):

$$A(f)\exp(i\theta(f)) = -A_0(f)\exp(i\theta_0(f)) \times R_{12}(f) \cdots (5)$$

Furthermore, expression (6) can be derived by deforming expression (5).

$$R_{12}(f) = -A(f)/A_0(f) \times \exp(i(\theta(f) - \theta_0(f))) \cdots (6)$$

Expression (6) is substituted into expression (4), and expression (7) is derived:

$$Z_2(f)=Z_1(f)\times\{1-A(f)/A_0(f)\times exp(i(\theta(f)-\theta_0(f)))\}/\{1+A(f)/A_0(f)\times exp(i(\theta(f)-\theta_0(f)))\}\cdot$$

$$\cdot\cdot(7)$$

Now, for the storage elastic modulus L' (f) and the loss elastic modulus L"(f) of the measurement target, a relationship expressed by expression (8) can be established between acoustic impedance the measurement target SMP $Z_2(f)$ and density $\rho_2$.

$$L'+iL''(f)=Z_2(f)^2/\rho_2\cdot\cdot\cdot(8)$$

When expression (7) is substituted into expression (8) and the real component is separated from the imaginary component, the storage elastic modulus L'(f), loss elastic modulus L"(f) and loss tangent tanδ(f) corresponds to expressions (9), (10), and (11), respectively.
$$L'(f)=Re[Z_2(f)^2/\rho_2]=(Z_1(f)^2/\rho_2)\times\{(1-(A(f)/A_0(f))^2)^2-4(A(f)/A_0(f))^2\times sin^2(\theta(f)-\theta_0(f))\}/\{1+2(A(f)/A_0(f))cos(\theta(f)-\theta_0(f))+(A(f)/A_0(f))^2\}^2\cdot\cdot\cdot(9)$$

$$L''(f)=Im[Z_2(f)^2/\rho_2]=(Z_1(f)^2/\rho_2)\times\{4(A(f)/A_0(f))\times(1-(A(f)/A_0(f))^2)\times sin(\theta(f)-\theta_0(f))\}/\{1+2(A(f)/A_0(f))\times cos(\theta(f)-\theta_0(f))+(A(f)/A_0(f))^2\}^2\cdot\cdot\cdot(10)$$

$$tan\delta(f)=L''/L'=\{4\times(A(f)/A_0(f))\times(1-(A(f)/A_0(f))^2)\times sin(\theta(f)-\theta_0(f))\}/\{(1-(A(f)/A_0(f))^2)^2-4\times(A(f)/A_0(f))^2\times sin^2(\theta(f)-\theta_0(f))\}\cdot\cdot\cdot(11)$$

As shown in expressions (9) to (11), any of the storage elastic modulus L'(f), loss elastic modulus L"(f), and loss tangent tanδ(f) can be defined by having $A_0(f)$ and $\theta_0(f)$ as reference data $\{A(f)/A_0(f)\}$ and $\{\theta(f)-\theta_0(f)\}$. In other words, viscoelastic property of the measurement target SMP can be measured by comparing the reflected sonic wave of the measurement target SMP with the reference data that was previously stored. In addition, as described above, as viscoelastic property of the measurement target SMP depends on frequency, the viscoelastic property measuring device 501 measures the storage elastic modulus, loss elastic modulus, and loss tangent for every frequency component. In addition, if viscoelastic property in the high frequency domain is required, sonic wave to be emitted from the transducer 20 becomes ultrasonic.
In the following, we describe a measurement error. With reference to FIG. 4C, if a gap space 40 is generated due to air bubbles on some part of a boundary surface between the measurement target SMP and delaying member 3, the measurement target SMP cannot be in close contact with the delaying member 3.
As a real transducer 20 makes close contact with the delaying member 3 with predetermined area, it can be considered that incident sonic wave is emitted from the entire close-contact surface. Now, as shown in FIG. 4B, if the delaying member 3 and the measurement target SMP are in close contact, no error is generated as reflected sonic wave reflected on the boundary surface between the delaying member 3 and the measurement target SMP has almost uniform amplitude and phase.

However, if any gap space 40 exists on some part of the boundary surface between the measurement target SMP and the delaying member 3, reflected sonic wave to be reflected in the air space 40 has different amplitude characteristic and phase characteristic from the reflected sonic wave reflected on the measurement target SMP.

For instance, if acoustic impedance in the gap space 40 is identical to that in the air, reflected sonic wave to be reflected in the gap space 40 has same amplitude characteristic and phase characteristic as reflected sonic wave stored as reference data.

As described above, if air space 40 exists on some part of the boundary surface between the measurement target SMP and the delaying member 3, a plurality of reflected sonic waves having different amplitude characteristics and phase characteristics from each other are generated, which leads to measurement error.

Then, as shown in FIG. 2 and FIG. 3, in the viscoelastic property measuring device 501, the pressurizing units 32_1 and 32_2 pressurize the measurement target SMP by means of the pressurizing roller 34 and improve close contact between the measurement target SMP and the delaying member 3, thereby preventing generation of any gap space 40 and suppressing measurement errors. This enables the viscoelastic property measuring device 501 to implement highly precise measurement of viscoelastic property of a measurement target SMP.

(Flow of measurement of viscoelastic property)

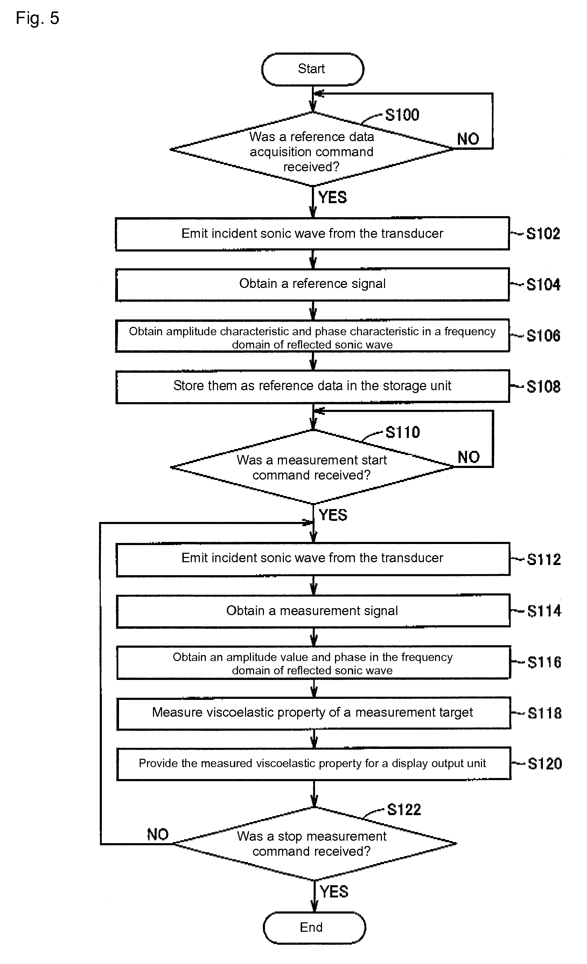

FIG. 5 shows processing flow related to measurement of viscoelastic property according to Embodiment 1 of the present invention.

With reference to FIG. 1 and FIG. 5, a calculating unit 10 determines whether or not it received a reference data acquisition command from the external via an input unit 18 (step S100). On the one hand, a user positions a sensor unit 2 in the state in which it does not contact a measurement target SMP (reference state), and give the reference data acquisition command.

If it did not receive the reference data acquisition command (NO in step S100), the calculating unit 10 waits till it receives the reference data acquisition command (step S100).

When it received the reference data acquisition command (YES in step S100), the calculating unit 10 gives an emit command to the sensor unit 2 and causes the transducer 20 to emit incident sonic wave (step S102).

Next, the calculating unit 10 obtains from a temporal data memory unit 12 a reference signal indicative of change in temporal intensity of reflected sonic wave to be received by the transducer 20 (step S104). Then, the calculating unit 10 performs FFT process on the obtained reference signal, and obtains amplitude characteristic and phase characteristic in the frequency domain of the reflected sonic wave (step S106). In addition, the calculating unit 10 stores, as reference data, the amplitude characteristic and phase characteristic in the frequency domain of the obtained reference signal in the storage unit 14 (step S108).

Next, the calculating unit 10 determines whether or not it received a measurement start command via the input unit 18 (step S110). On the one hand, the user positions the sensor unit 2 so that it is in close contact with the measurement target SMP, or gives the measurement start command after positioning the measurement target so that it is in close contact with the sensor unit 2.

If it did not receive the start command (NO in step S110), the calculating unit 10 waits till it receives the measurement start command (step S110).

When it receives the measurement start command (YES in step S110), the calculating unit 10 gives the sensor unit 2 an emit command, and causes the transducer 20 to emit incident sonic wave (step S112).

Next, the calculating unit 10 obtains a measurement signal indicative of temporal intensity change in reflected sonic wave that the transducer 20 receives from the temporal data memory unit 12 (step S114). Then, the calculating unit 10 performs FFT process on the obtained measured sonic wave, and amplitude characteristic and phase characteristic in the frequency domain of the reflected sonic wave (step S116). Furthermore, the calculating unit 10 measures viscoelastic property of a measurement target SMP from the obtained amplitude characteristic and phase characteristic with amplitude characteristic and phase characteristic stored as reference data in the storage unit 14 being as a reference (step S118).

Then, the calculating unit 10 gives the measured viscoelastic property to a display output unit 16 (step S122). Then, a user can learn the measured viscoelastic property via the display output unit 16.

In addition, the calculating unit 10 determines whether or not it received a stop measurement command (step S122). If it did not receive the stop measurement command (NO in step S122), the calculating unit 10 gives the sensor unit 2 the emit command again and causes the transducer 20 to emit incident sonic wave (step S112). In the following, steps S114 to S120 are repeated.

When it received the stop measurement command (YES in step S122), the calculating unit 10 terminates the process.

Instead of the process described above that obtains reference data for every measurement process, as described below, the configuration may be such that a plurality of reference data is previously stored in the storage unit 14 and optimal reference data can be set when measurement is performed. In addition, since reference data is highly dependent on temperatures, the configuration may be such that optimum reference data is selected depending on temperature of a measurement SMP, when measurement is performed.

In addition, the configuration may be such that 2 sensor units and delaying members having identical characteristics are arranged, respectively, and viscoelastic property is measured by keeping one delaying member in a reference state to obtain a reference signal, while keeping other delaying member together with a measurement target in measurement state to obtain a measurement signal. In other words, as the reference signal obtained by the former sensor unit kept in the reference state corresponds to the reference data, it is no longer necessary to previously obtain reference data, and measurement precision can be enhanced as reference data can be obtained at the timing of measurement.

According to Embodiment 1 of the present invention, the measurement control unit emits incident sonic wave from the sensor unit to a measurement target, and measures viscoelastic property of the measurement target based on reflected sonic wave generated by being reflected at the measurement target. Thus, it is only necessary to make close contact with the sensor unit to the surface of a measurement target through the delaying member, and creation of a test specimen is no longer needed. Hence, the viscoelastic property measuring device capable of promptly measuring viscoelastic property of a measurement target can be implemented.

In addition, according to Embodiment 1 of the present invention, the pressurizing rollers are arranged above the delaying member so that a measurement target is intermediate between the delaying member and the pressurizing rollers. Furthermore, the pressurizing unit drives the pressurizing rollers vertically downward to the delaying member, and pressurizes the measurement target towards the delaying member. Thus, as close contact between the measurement target and the delaying member can be improved, and measurement errors can be controlled, the viscoelastic property measuring device capable of highly precisely measuring viscoelastic property of a measurement target.

In addition, according to Embodiment 1 of the present invention, the delaying member and the sensor unit are arranged at predetermined positions on the carrier line, and measure in real time viscoelastic property of measuring devices being carried continuously. Thus, in manufacturing intermediate processes, viscoelastic property of semimanufactures, etc., is continuously measured and quality control can be carried out based on the measurement result. Hence, the viscoelastic property measuring device capable of obviating product failure in manufacturing processes and increasing productivity can be implemented.

[Embodiment 2]

In the Embodiment 1 described above, we described the configuration in which a measurement target and the delaying member are forcibly brought into close contact by using the pressurizing rollers. On the one hand, in Embodiment 2, we describe the configuration in which a measurement target is in close contact with the delaying member by employing characteristic of the measurement target itself.

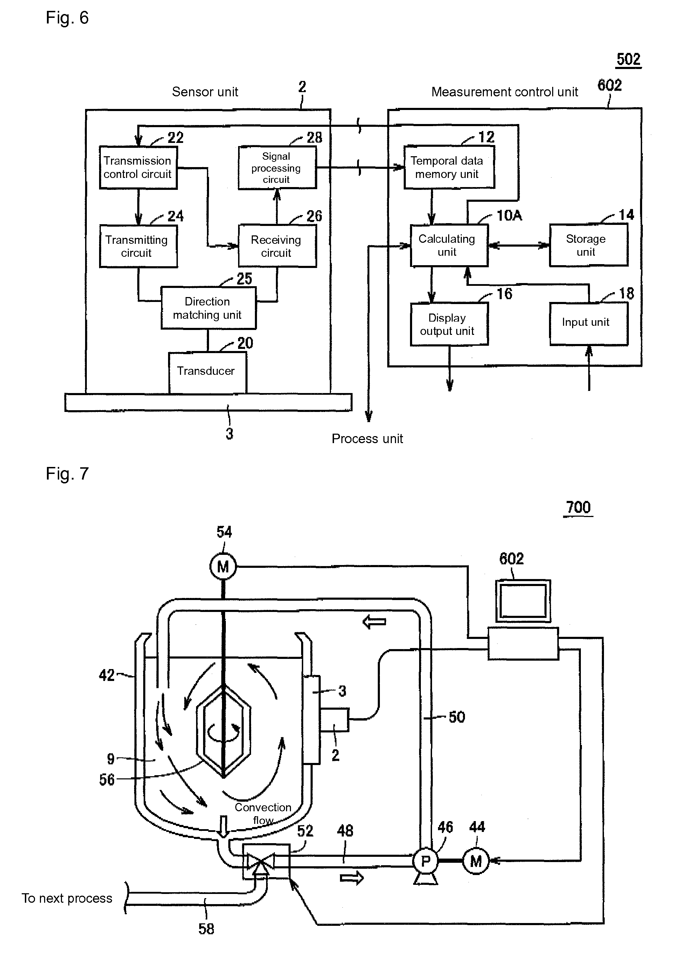

FIG. 6 shows the schematic configuration of a viscoelastic property measuring device 502 according to Embodiment 2 of the present invention.

With reference to FIG. 6, in the viscoelastic property measuring unit 502, the measurement control unit 601 of the viscoelastic property measuring unit 501 as shown in FIG. 1 is replaced with a measurement control unit 602 and the pressurizing units 32_1 and 32_2 are removed. In addition, in the measurement control unit 602, the calculating unit 10 of the measurement control unit 601 is replaced with a calculating unit 10A.

Furthermore, the viscoelastic property measuring device 502 is connected to a process unit that performs predetermined processes on a measurement target SMP, and controls the process unit, depending on viscoelastic property of a measurement target SMP to be measured.

Similar to the calculating unit 10, the calculating unit 10A, when receiving a measurement start command from the external via the input unit 18, gives the sensor unit 2 an emit command and causes it to emit incident sonic wave to the measurement target SMP. Then, the calculating unit 10A measures viscoelastic property of the measurement target SMP by comparing amplitude characteristic and phase in frequency domain of a measurement signal with reference data. Furthermore, the calculating unit 10A gives the process unit a control command so that viscoelastic property of the measured measurement target SMP can be desired property. For any other things, as the calculating unit 10A is similar to the calculating unit 10, we do not repeat detailed description.

FIG. 7 shows schematic configuration of a process unit 700 including the viscoelastic property measuring device 502.

With reference to FIG. 7, the process unit 700 is a device that performs processes to react fluid material (hereinafter also referred to fluids), and, by way of example, is applied to manufacturing of ink, etc. Then, the process unit 700 includes a reaction vessel 42, piping 48, 50, and 58, and circulating pump 46, motors 44, 54, agitating unit 46, three-way valve 52, and viscoelastic property measuring device 502 (measurement control unit 602, sensor unit 2 and delaying member 3).

The reaction vessel 42 is a vessel in which a reaction process is performed, and circulation by the circulating pump 46 and agitation by the agitating unit 56 generate convection flow in the vessel, promoting the reaction process. Then, the reaction vessel 42 has a notch on a part of the side thereof, and the delaying unit 3 is attached to the notch.

Connected with the motor 44, the circulating pump 46 receives drive force, and provides fluids received from one side with predetermined discharge pressure and outputs it from the other side. Then, the circulating pump 46 receives fluids in the reaction vessel 42 through the piping 48 that is such configured that it can be connected with the lower part of the reaction vessel 42, and circulates it to the upper part of the reaction vessel 42 through the piping 50.

In response to a control command from the measurement control unit 602, the motor 44 runs/stops or changes rotating speed, and controls the amount of fluids circulated by the circulating pump 46.

Connected with the motor 54 and receiving the drive force, the agitating unit 56 agitates fluids by rotating a testudinal vane, by way of example.

Responding to a control command from the measurement control 602, the motor 54 runs/stops or changes rotating speed, and controls the amount of agitation circulated by the agitating unit 56.

Connected with the lower part of the reaction vessel 42, and responding to a control command from the measurement control unit 602, the three-way valve 52 introduces inflowing fluid from the reaction vessel 42 to the piping 48 or the piping 58. That is, the three-way valve 52 introduces fluid to the circulating pump 46 through the piping 48 if the reaction process in the reaction vessel 42 is in progress, and the fluid to a next process through the piping 58 when the reaction process completes in the reaction vessel 42.

Attached to the notch on the side of the reaction vessel 42, the delaying member 3 defines a part of the inner surface of the reaction vessel 42. Thus, under static pressure depending on depth from a top surface of fluid that is a measurement target SMP, the surface of one side of the delaying member 3 is in close contact with the measurement target SMP. The delaying member 3 may be arranged to be in close contact with a measurement target SMP, and positioned on the bottom of the reaction vessel 42, etc., in addition to being arranged on the side of the reaction vessel 42.

The sensor unit 2 is arranged so that it is brought in close contact with the delaying member 3 on a surface opposite to the surface on which the delaying member 3 makes close contact with the measurement target SMP. Then, the sensor unit 2 emits incident sonic wave to the measurement target SMP through the delaying member 3.

Furthermore, it is desirable that the surface to which the sensor unit 2 emits incident sonic wave be parallel to the surface on which the delaying member 3 make close contact with the measurement target SMP. With such arrangement, as incident sonic wave enters perpendicular to a measurement target SMP to be measured, measurement of higher precision can be carried out.

As arranging the delaying member 3 to define a part of the inner surface of the reaction vessel 42, as described above, can improve close contact between the measurement target SMP and the delaying member 3, measurement of viscoelastic property with high precision can be carried out.

In Embodiment 2, the reaction vessel 42 implements an "close-contact mechanism".

Additionally, the measurement control unit 602 compares viscoelastic property of the measured measurement target SMP with settings to be given from the external, and gives a control command to the motor 44 and 54 and the third-way valve 52. For instance, higher rotating speed of the motor 44 increases the amount of circulation, thus promoting the reaction process. In addition, the higher rotating speed of the motor 54 increases the amount of agitation, thus promoting the reaction process.

Then, the measurement control unit 602 compares settings that have been previously given by the external with the measured viscoelastic property, and controls the motors 44 and 54, depending on the deviation. When a value of the measured viscoelastic property reaches the settings, the measurement control unit 602 also determines that the reaction process has completed, and controls the third-way valve 52 so as to discharge the fluid to a next process.

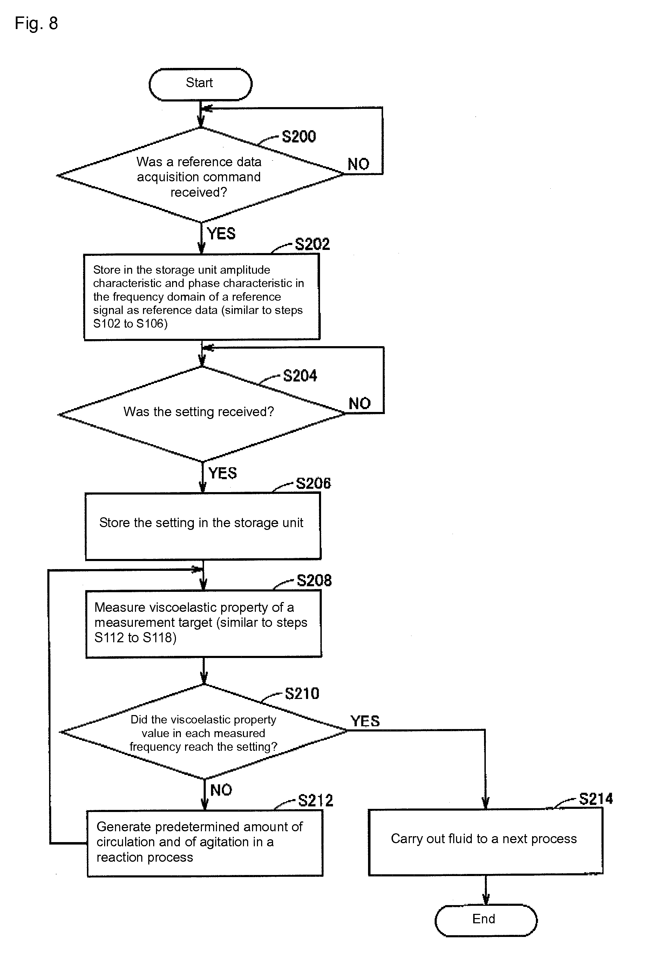

FIG. 8 shows the process flow related to control of a reaction process. The calculating unit 10A (FIG. 6) that includes the measurement control unit 602 performs respective steps shown in FIG. 8.

With reference to FIG. 7 and FIG. 8, the calculating unit 10A determines whether or not it received a reference data acquisition command via the input unit 18 (step S200). On the one hand, in the condition in which no fluid exists in the reaction vessel 42 or the delaying member 3 and the fluid are not in close contact, the user gives a reference acquisition command via the input unit 18.

If it did not receive the reference data acquisition command (NO in step S200), the calculating unit 10A waits till it receives the reference acquisition command (step S200).

If it received the reference acquisition command (YES in step S200), the calculating unit 10A performs processes similar to steps S102 to S108 as shown in FIG. 5, and stores amplitude characteristic and phase characteristic in the frequency domain of a reference signal in the storage unit 14 (step S202).

Then, the calculating unit 10A determines whether or not it received settings via the input unit 18 (step S204). On the one hand, after injecting into the reaction vessel 42 fluid, which is a target of a reaction process, manually or by an injection device (not shown), a user gives desired viscoelastic property as settings via the input unit 18.

If it did not receive the settings (NO in step S204), the calculating unit 10A waits till it receives the settings (step S204).

If it received the settings (YES in step S204), the calculating unit 10A stores in the storage unit 14 the settings it received (step S206), and further measures viscoelastic property of the measurement target SMP (step S208) by performing processes similar to steps S112 to S118 as shown in FIG. 5.

Then, the calculating unit 10A determines whether or not values of viscoelastic property at respective measured frequencies have reached the settings (step S21 0).

If the values of viscoelastic property at the respective measured frequencies have not reached the settings (NO in step S21 0), the calculating unit 10A gives the motors 44 and 54 a control command, and generates predetermined amount of circulation and of agitation in the reaction process (step S212). Then, the calculating unit 10A repeats steps S208 and S210.

If the values of viscoelastic property at the respective measured frequencies have reached the settings (YES in steps S21 0), the calculating unit 10A determines that the reaction process completed, gives the three-way valve 52 a control command, and discharges the fluid in the reaction vessel 42 to a next process (step S214). Then, the calculating unit 10A terminates the process.

According to Embodiment 2 of the present invention, the delaying member is arranged integrally with the reaction vessel on the side of the reaction vessel that accumulates measurement targets having fluidity. Thus, the delaying member receives static pressure from a measurement target, depending on depth of the delaying member in the accumulated measurement targets. Hence, as close contact between the measurement target and the delaying member can be improved and measurement errors can be controlled, the viscoelastic property measuring device capable of measuring viscoelastic property of a measurement target highly precisely can be implemented.

In addition, according to Embodiment 2 of the present invention, the measurement control unit compares measurement result of a measurement target with settings given by the external, and controls the process unit so that viscoelastic property of the measurement target matches the settings. Hence, as processes can be controlled in a highly precise manner, productivity in the process unit can be increased.

[Embodiment 3]

In Embodiment 1 described above, we described the configuration in which a measurement target and the delaying member are forcibly brought into close contact by means of the pressurizing rollers. On the one hand, in Embodiment 3, we describe the configuration that uses a delaying member formed to improve close contact with a measurement target.

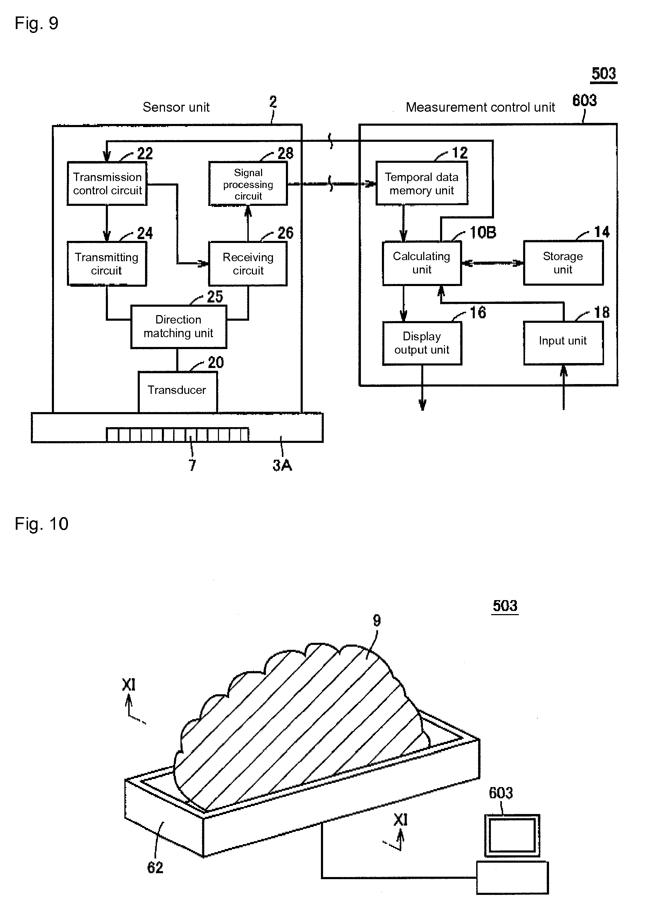

FIG. 9 shows schematic configuration of a viscoelastic property measuring device 503 according to Embodiment 3 of the present invention.

With reference to FIG. 9, the viscoelastic property measuring device 503 includes a measurement control unit 603, sensor unit 2, delaying member 3A and couplant member 7.

In the viscoelastic property measuring device 603, the calculating unit 10 of the viscoelastic property measuring device 601 as shown in FIG. 1 is replaced with a calculating unit 10B. Then, the calculating unit 10B is equivalent to the calculating unit 10 from which the capability of providing the pressurizing units 32_1 and 32_2 with a pressurize command has been removed.

As the sensor unit 2 is similar to the sensor unit as shown in FIG. 1, we do not repeat detailed description thereof.

The delaying unit 3A is arranged to be in close contact with a transducer 20 of the sensor unit 2 and propagates incident sonic wave generated from the transducer 20 and reflected sonic wave generated at a measurement target SMP. Then, the delaying member 3A has a notch into which the couplant member 7 is injected on the surface opposite to the surface that is brought in close contact with the transducer 20. Furthermore, it is desirable that the area of the notch is greater than the area where the delaying member 3A is brought in close contact with the transducer 20, and also that depth of the notch is constant. For any other things, as it is similar to the notch 3 according to Embodiment 1, we do not repeat detailed description.

The couplant member 7 is a solid substance or semisolid substance having fluidity and is a substance that improves close contact with a measurement target SMP. As the couplant member 7 acts as a medium that propagates incident sonic wave generated from the transducer 20 to a measurement target SMP, it desirably controls generation of reflected sonic wave on a boundary surface between the couplant member 7 and the delaying member 3A. Thus, any substance having acoustic impedance approximate to acoustic impedance of the delaying member 3A is selected, as appropriate, as the couplant 7.

In Embodiment 3, the couplant 7 implements an "close-contact mechanism".

FIG. 10 schematically shows appearance of the viscoelastic property measuring device 503.

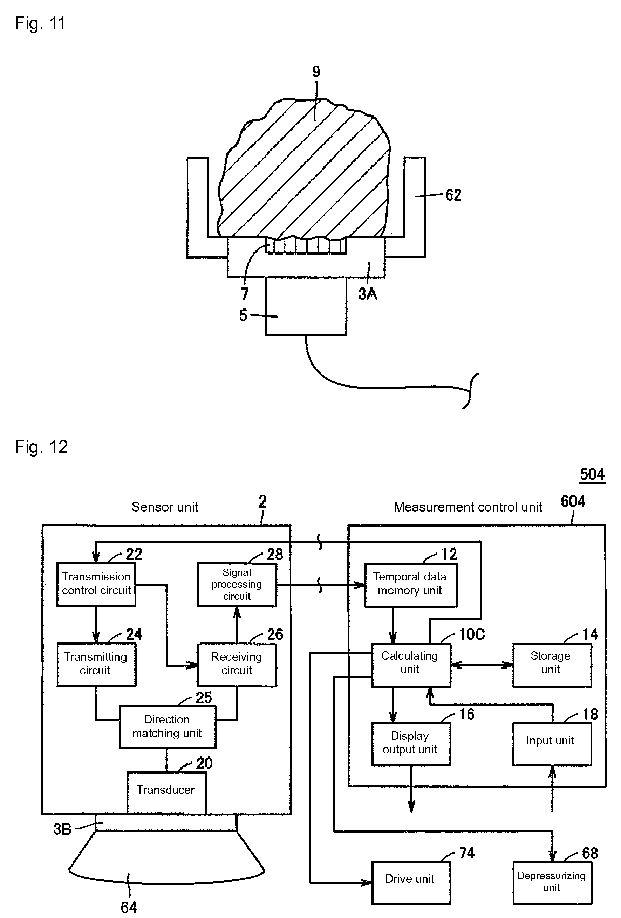

FIG. 11 shows a cross section structure of line XI-XI in FIG. 10.

With reference to FIG. 10, we describe the configuration in which by way of example, a user first inputs a measurement target SMP into a measurement container 62 shaped like a measure, and measures viscoelastic property.

As described above, in the case of konjac or bean curd, etc., as viscoelastic property determines resistance to the teeth, in other words, texture, strict control of viscoelastic property is required. However, in the case of konjac, coagulation effect on same coagulant widely varies depending on temperatures or amount of water contained in raw materials, it is often up to experience and intuition of skilled worker to decide the quantity of coagulant.

Hence, if viscoelastic property could be continuously measured in real time, it would be possible to easily manufacture quality food even in manufacturing floor with no skilled worker.

Now, in the viscoelastic property measuring device 503, the couplant member 7, delaying member 3A and sensor unit 2 are arranged on a part of the bottom of the measurement container 62 into which such measurement targets SMP as konjac or bean curd are inputted and viscoelastic property of the measurement targets is measured in real time.

With reference to FIG. 10 and FIG. 11, the measurement container 62 has a notch on a part of its bottom and the delaying member 3A is attached to the notch.

The delaying unit 3A is such arranged that its top surface, i.e., the surface that is in close contact with the measurement target SMP corresponds to the bottom of the inner bottom of the measurement container 62. Furthermore, the delaying member 3A is such arranged that the notch into which the couplant member 7 is injected is its top surface. Then, the delaying member 3A is brought in close contact with the sensor unit 2 on its bottom.

The couplant member 7 is injected into the notch provided on the top surface of the delaying member 3A and is intermediate between the measurement target SMP and the delaying member 3A. The couplant member 7 exhibits high close contact with the measurement target SMP.

The sensor unit is brought in close contact with the lower surface of the delaying member 3A and emits incident sonic wave to a measurement SMP through the delaying member 3A and the couplant member 7. The sensor unit 2 is then reflected at the measurement target SMP and receives reflected sonic wave that is transmitted through the couplant member 7 and delaying member 3A.

In the following, as a viscoelastic property measuring method by the measurement control unit 603 and sensor unit 2 is similar to Embodiment 1, we do not repeat detailed description.

According to Embodiment 3 of the present invention, as the couplant member having fluidity is inserted between the delaying member and a measurement target, the couplant member deforms due to its fluidity even when weight of the measurement target is light or when the amount of deformation of the measurement target is small, thereby filling a gap between the delaying member and the measurement target. Hence, as close contact between the measurement target and the delaying member can be improved and measurement errors can be controlled, the viscoelastic property measuring device capable of measuring viscoelastic property of a measurement target highly precisely can be implemented. Additionally, as provision of any means of pressurizing a measurement target from the external, etc. is not needed and thus configuration can be simplified, the viscoelastic property measuring device that can curb costs can be implemented.

In addition, the delaying member and couplant member as shown in Embodiment 3 may be applied to the viscoelastic property measuring device as shown in Embodiment 1. Close contact can be further improved by inserting the couplant member between the delaying member and a measurement target, and measurement of higher precision can be implemented.

[Embodiment 4]

In Embodiments 1 to 3 described above, we described the configuration in which a measurement target and the delaying member are brought into close contact by means of the pressurizing means. On the one hand, in Embodiment 4, we describe the configuration in which a space is formed where a measurement target and a delaying member contact and the measurement target and the delaying member are brought into close contact by depressurizing the inside of the space.

FIG. 12 shows schematic configuration of a viscoelastic property measuring device 504 according to Embodiment 4 of the present invention.

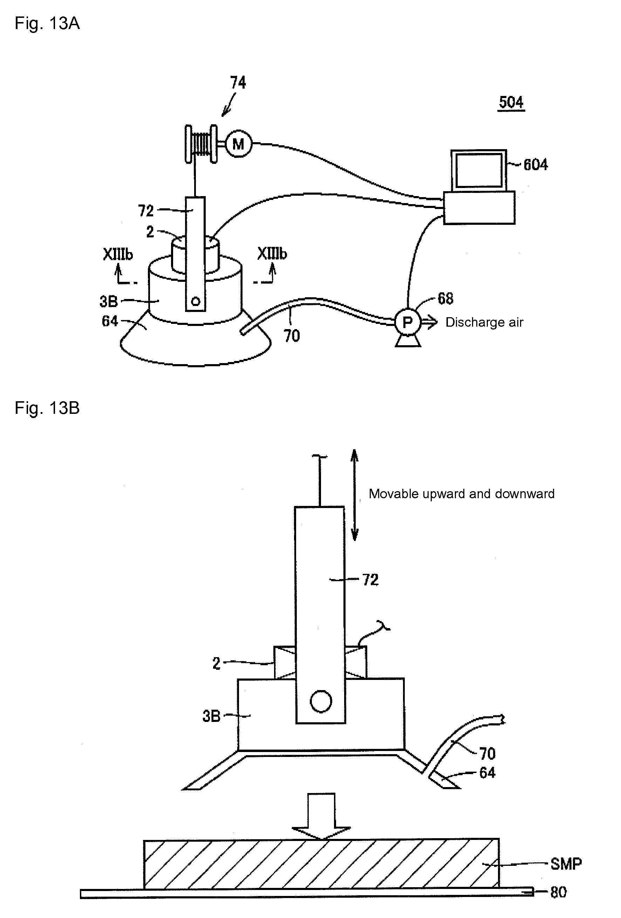

FIG. 13A and FIG. 13B show the device configuration of the viscoelastic property measuring device 504 according to Embodiment 4 of the present invention.

FIG. 13A schematically shows appearance of the viscoelastic property measurement device 504.

FIG. 13B shows a cross section structure of the line XIIIb to XIIIb in FIG. 13A.

With reference to FIG. 12, the viscoelastic property measuring device 504 includes a measuring control unit 604, sensor unit 2, delaying member 3B, closure member 64, depressurizing unit 68 and drive unit 74.

In the measurement control unit 604, the calculating unit 10 of the measurement control unit 601 as shown in FIG. 1 is replaced with a calculating unit 10C. The calculating unit 10C gives a command from the calculating unit 10 to the depressurizing unit 68 and drive unit 74. For any other things, as it is similar to the measurement control unit 601 as shown in FIG. 1, we do not repeat detailed description.

As the sensor unit 2 is similar to the sensor unit 2 as shown in FIG. 1, we do not repeat detailed description.

With reference to FIG. 12 and FIG. 13A, the delaying member 3Bis arranged to be in close contact with the transducer 20 of the sensor unit 2and propagates incident sonic wave generated from the transducer 20 and reflected sonic wave generated at a measurement target SMP. Then, the delaying member 3B is connected to the closure member 74 on the surface opposite to the surface that is brought in close contact with the transducer 20. For any other things, as it is similar to the delaying member 3 according to Embodiment 1, we do not repeat detailed description.

The closure member 64 is made of soft material that has high transmission capability of incident and reflected sonic wave, is highly in close contact with the measurement target, and has low air permeability. In fact, the closure member 64 fulfills the function similar to the couplant member 7 in Embodiment 3 described above. In addition, the closure member 64 isolates from atmosphere the space to which the measurement target SMP and delaying member 3B abut, thus keeping closeness between the measurement target SMP and delaying member 3B. By way of example, in the viscoelastic property measuring device 504 according to Embodiment 4, the closure member 64 has a sucker shape.

The depressurizing unit 68 is connected with the closure member 64 through pipe member 70, and, in response to a command from the calculating unit 10C, discharges the air contained in the space isolated by the closure member 64 into outside of the space. Then, the depressurizing unit 68 makes pressure to be generated by the closure member 64 lower than the atmospheric pressure. The depressurizing unit 68 includes an electrically-operated pump, etc., by way of example, and discharges the atmosphere by means of rotational movement of a vane, etc.

Coupled with the delaying member 3B through a link member 72, the drive unit 74 drives up and down not only the delaying member 3B but also the sensor unit 2 and closure member 64 that are arranged in close contact with the delaying member 3B, in an integral manner. Then, the drive unit 74 operates responding to a command from the calculating unit 10C and varies a distance between the integrated delaying member 3B, sensor unit 2 and closure unit 64 and the measurement target SMP.

In Embodiment 4, the depressurizing unit 68 and closure member 64 implement an "close-contact mechanism".

In the following, with reference to FIG. 1B, we describe operation of the viscoelastic property measuring device 504 according to Embodiment 4.

When it receives a measurement start command from the external, the measurement control unit 604 gives the drive unit 74 a command, and causes the integrated delaying member 3B, sensor unit 2 and closure unit 64 to stick to a measurement target SMP placed on a carrier stand 80. Then, the closure member 64 shields a space between the measurement target SMP and delaying member 3B from outside air. Next, the measurement control unit 604 gives a command to the depressurizing unit 68, which then discharges air contained in the space closeness of which is secured by the closure member 64 and reduces pressure in the space lower than the atmospheric pressure. Ideally, a vacuum state is desirable. Then, the delaying member 3B is brought in close contact with the measurement target SMP through the closure member 64.

As such, when the delaying member 3B is fully made in close contact with the measurement target SMP, the measurement control unit 604 gives an emit command to the sensor unit 2 which then emits incident sonic wave to the measurement target SMP. The incident sonic wave emitted from the sensor unit 2 passes through the closure member 64 having high transmission capability and enters the measurement target SMP. The part thereof is reflected at the measurement target SMP, passes through the closure member 64 again, and is received by the sensor unit 2.

In the following, as a viscoelastic property measuring method by the measurement control unit 604 and sensor unit 2 is similar to Embodiment 1, we do not repeat detailed description.

In addition, we describe characteristic behavior of the viscoelastic property measuring device 504 according to Embodiment 4 of the present invention.

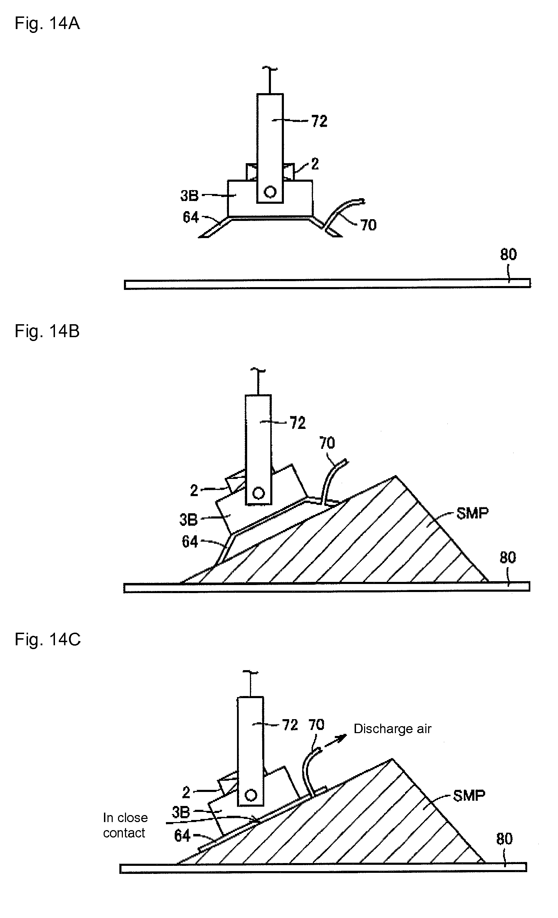

FIG. 14A and FIG. 14C illustrate operating conditions during measurement of the viscoelastic property measuring device 504 according to Embodiment 4 of the present invention.

FIG. 14A shows the condition in which a measurement target SMP does not exist on the carrier stand 80.

FIG. 14B shows the condition in which the closure member 64 is positioned on the measurement target SMP.

FIG. 14C shows the condition in which viscoelastic property of the measurement target SMP is measured.

With reference to FIG. 14A, in the condition in which the measurement target SMP does not exist on the carrier stand 80, the integrated delaying member 3B, sensor unit 2 and closure member 64 are retained suspended by the drive unit 74 (FIG. 13A) in vertical direction.

With reference to FIG. 14B, when the measurement target SMP is carried onto the carrier stand 80 from a neighboring carrier stand, etc., the measurement control unit 604 (FIG. 12 and FIG. 13) gives the drive unit 74 a command, and causes the integrated delaying member 3B, sensor unit 2 and closure member 64 move down vertically. Now, if the measurement target SMP has an oblique angle to the horizontal direction, the integrated delaying member 3B, sensor unit 2 and closure member 64 vary orientation thereof by means of a link mechanism of the link member 72 connecting the drive unit 74 and delaying member 3B so that emitting surface of incident sonic wave is parallel to the inclined plane of the measurement SMP. Thus, even if a measurement target SMP is an object having an oblique angle, the closure member 64 is positioned on the measurement target SMP.

With reference to FIG. 14C, the measurement control unit 604 gives a command to the depressurizing unit 68 (FIG. 12, FIG. 13A), which then discharges air contained in the space secured by the closure member 64 into outside of the space, and reduces pressure in the space lower than the atmospheric pressure. Then, the delaying member 3B is brought in close contact with to the measurement target SMP through the closure member 64.

In the following, similar to the measurement method described above, the measurement control unit 604 and sensor unit 2 measures viscoelastic property of the measurement target SMP.

According to Embodiment 4 of the present invention, closeness is ensured by isolating a space formed between the delaying member and measurement target, and generation of a gap, etc., that prevents close contact between the delaying member and the measurement target is controlled by reducing the pressure in that space lower than the atmospheric pressure. Hence, as close contact of the measurement target and the delaying member can be improved and measurement errors can be controlled, the viscoelastic property measuring device capable of measuring viscoelastic property of a measurement target highly precisely can be implemented.

In addition, according to Embodiment 4 of the present invention, the delaying member is coupled to the drive unit through the link member in which the delaying member includes the link mechanism. Thus, even when a measurement target is not parallel to the emitting surface of the delaying member, close contact between the measurement target and delaying member can be improved and measurement errors can be thereby controlled. Hence, the viscoelastic property measuring device capable of measuring viscoelastic property of a measurement target highly precisely can be implemented.

[Embodiment 5]

In Embodiment 4 described above, we described the configuration in which the closure member shaped like a sucker is used. On the one hand, in Embodiment 5, we describe the configuration in which a closure member is used with a sliding mechanism provided in the outer circumference of a delaying member.

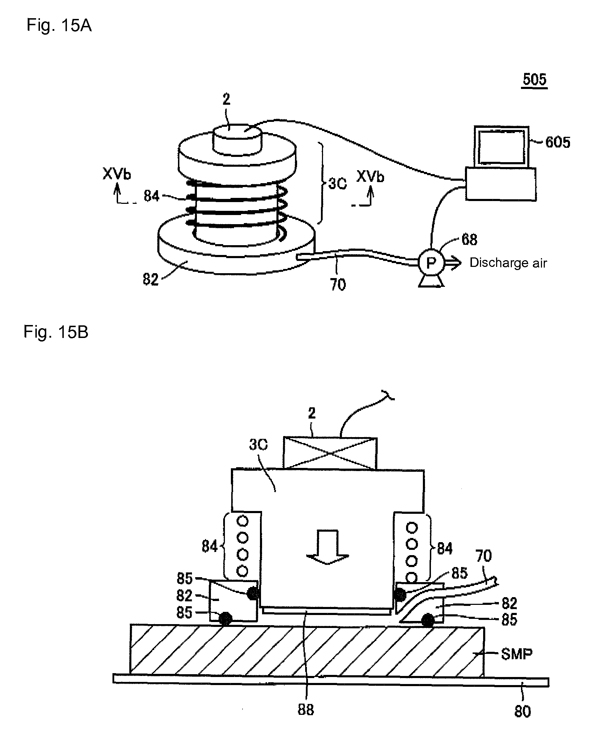

FIG. 15A and FIG. 15B show the device configuration of a viscoelastic property measuring device 505 according to Embodiment 5 of the present invention.

FIG. 15A schematically shows appearance of the viscoelastic property measuring device 505.

FIG. 15B shows a cross section structure of line XVb-XVb in FIG. 15A.

With reference to FIG. 15A, the viscoelastic property measurement device 505 includes a measurement control unit 605, sensor unit 2, delaying member 3C, closure member 82, spring member 84, and depressurizing member 68.

The measurement control unit 605 is equivalent to the measurement control unit 604 as shown in Embodiment 4 described above from which the function to give the drive unit a command has been removed, and we do not repeat any detailed description on any other things.

As the sensor unit 2 and depressurizing unit 68 are similar to Embodiment 4 as described above, we do not repeat any detailed description.

With reference to FIG. 15A and FIG. 15B, the delaying member 3C is such shaped that 2 cylinders of different radii are stacked together, one cylinder of larger radius being arranged on the upper side. On the outer circumference of the other cylinder of smaller radius to be arranged on the lower side is arranged an annular closure member 82. In addition, a couplant member 88 is arranged in close contact with the back side of the delaying member 3C.

The closure member 82 is configured to be slidable along the center axis of the cylinders, further energized by the spring member 84 coupled to the upper cylinder of the delaying member 3C, and exerts predetermined repulsive force vertically upward. The closure member 82 includes is provided with a seal member 85 for securing closeness on the surface abutting the outer circumferential surface of the delaying member 3C and the measurement target SMP. The seal member 85 includes an O ring, by way of example.

In other words, the closure member 82 varies a space to be formed between the delaying member 3C and the measurement target SMP, depending on pressure.

In addition, as the closure member 82 has a thorough hole formed on a part thereof, the thorough hole penetrating from the inner circumference to the outer circumference, and is connected with the depressurizing unit 68 through the thorough hole and a pipe member 70. Then, the depressurizing unit 68 discharges air contained in a space formed between the measurement target SMP and the closure member 82 into outside of the space, thereby reducing pressure in the space, and a difference between the reduced pressure in the space and the atmospheric pressure results in pressing force in the delaying member 3C.

The couplant member 88 is arranged in close contact with the emitting surface of the delaying member 3C, thereby enhancing close contact between the measurement target SMP and delaying member 3C. The couplant member 88 in Embodiment 5 consists of a semisolid material, has high transmission capability for incident sonic wave and reflected sonic wave, and is highly in close contact with the measurement target.

In Embodiment 5, the depressurizing unit 68 and closure member 82 implements an "close-contact mechanism".

In the following, with reference to FIG. 15, we describe the viscoelastic property measuring device 505 according to Embodiment 5 of the present invention.

When it receives a measurement start command from the external, the measurement control unit 605 (FIG. 15A) gives a command to the depressurizing unit 68, which then discharges air contained in the space formed by the closure member 82, and reduces pressure in the space lower than the atmospheric pressure. Ideally, a vacuum state is desirable. Then, pressing force in proportion to a pressure difference (gauge pressure) between pressure of the space formed by the closure member 82 and the atmospheric pressure is generated vertically downward on the delaying member 3C. Then, if the pressing force exceeds drag by the spring member 84, the delaying member 3C moves down vertically, and is brought in close contact with the measurement target SMP through the couplant member 88.

As such, when the delaying member 3C is fully made in close contact with the measurement target SMP, the measurement control unit 605 gives a command to the sensor unit 2, and emits incident sonic wave from the sensor unit 2 to the measurement target SMP. The incident sonic wave emitted from the sensor unit 2 transmits through the couplant member 88 and enters the measurement target SMP. Then, a part thereof if reflected at the measurement target SMP, transmits through the couplant member 88 again, and is received by the sensor unit 2.

In the following, as a viscoelastic property measuring method by the measurement control unit 605 and the sensor unit 2 are similar to Embodiment 4, we do not repeat detailed description.

According to Embodiment 5 of the present invention, closeness is ensured by isolating a space formed between the delaying member and measurement target, and generation of a gap, etc., that prevents close contact between the delaying member and the measurement target is controlled by reducing the pressure in that space lower than the atmospheric pressure. Hence, as close contact between the measurement target and the delaying member can be improved and measurement errors can be controlled, the viscoelastic property measuring device capable of measuring viscoelastic property of a measurement target highly precisely can be implemented.

[Embodiment 6]

In Embodiments 4 and 5 described above, we described the configuration in which a movable closure member is used to form a space where a measurement target and delaying member are in contact. On the one hand, in Embodiment 6, we describe the configuration in which a fixed container is used to measure viscoelastic property.

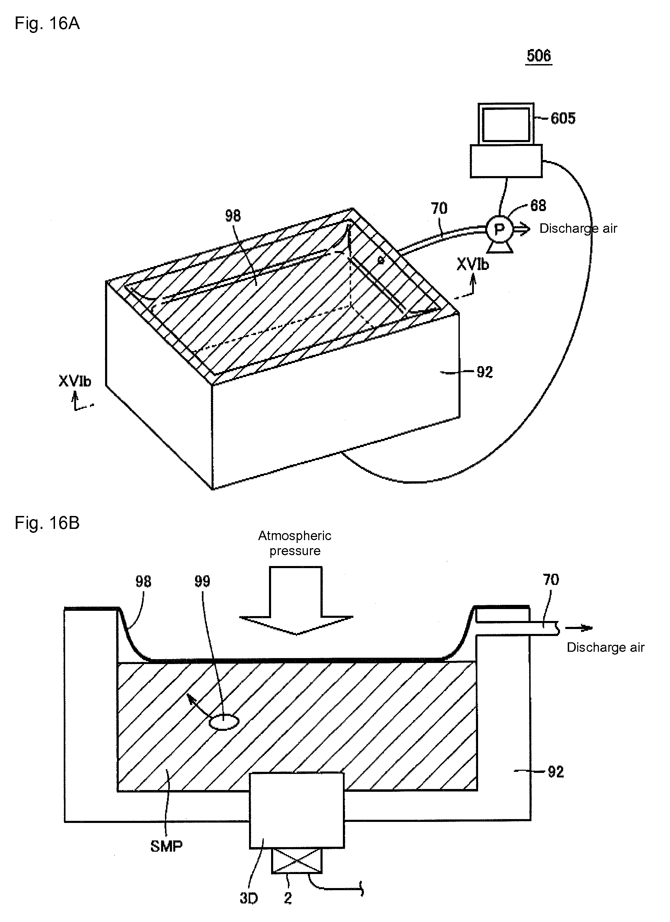

FIG. 16A and FIG.16B show the device configuration of a viscoelastic property measuring device 506 according to Embodiment 6 of the present invention..

FIG. 16A schematically shows appearance of the viscoelastic property measuring device 506.

FIG. 16B shows a cross section structure of line XVIb-XVIb in FIG. 16B.

With reference to FIG. 16A and FIG. 16B,the viscoelastic property measuring device 506 includes a measurement control unit 605, sensor unit 2, delaying member 3D, container area 92, seat unit 98, and depressurizing unit 68.

As the sensor unit 2, measurement control unit 605 and depressurizing unit 68 are similar to Embodiment 5 as described above, we do not repeat detailed description.

The container area 92 is a container that is shaped like a measure having an open top surface and a notch on the bottom. In addition, the container area 92 has a thorough hole formed on a part of its side, the thorough hole penetrating from the inner side to the outer side, and is connected to the depressurizing unit 68 through the thorough hole and pipe member 70.

The delaying member 3D is inserted into the notch provided on the bottom face and forms a part of the bottom face of the container area 92.

The seat member 98 is in close contact with the edge of the open top surface of the container area 92, isolating the inner space of the container area 92 from the atmosphere and ensuring closeness. Then, as the depressurizing unit 68 discharges air contained in the space in the container area 92 and reduces pressure in the space, pressing force results in the measurement target SMP from a difference between the reduced pressure and the atmospheric pressure through the seat member 98.

In Embodiment 6, the depressurizing unit 68, container area 92 and seat member 98 implement a "close-contact mechanism".

In the following, we describe operation of the viscoelastic property measuring device 506 according to Embodiment 6 of the present invention.

When it receives a measurement start command from the external, the measurement control unit 605 gives a command to the depressurizing unit 68 which then discharges air contained in the space formed by the container area 92 and seat member 98 into outside of the space, and reducing the pressure in the space lower than the atmospheric pressure. Ideally, a vacuum state is desirable. Then, on a measurement target SMP, pressing force, which is proportional to a pressure difference (gauge pressure) between pressure in the space formed by the container area 92 and seat member 98 and atmospheric pressure, is generated vertically downward. This pressing force presses out a gap 99 being intermediate between the measurement target SMP and the delaying member 3D.

Thus, as the measurement target SMP is given the gauge pressure in addition to static pressure due to its own weight, a close contact with the delaying member 3D can be further improved. Then, if the measurement target SMP is adequately in close contact with the delaying member 3D, the measurement control unit 605 gives an emit command to the sensor unit 2, which then emits incident sonic wave from the sensor unit 2 to the measurement target SMP. Then, a part of the incident sonic wave is reflected at the measurement target SMP and received by the sensor unit 2.

In the following, as the viscoelastic property measuring method by the measurement control unit 605 and sensor unit 2 is similar to Embodiments 4 and 5, we do not repeat detailed description.

According to Embodiment 6 of the preset invention, generation of a gap, etc., that prevents a close contact between the delaying member and the measurement target can be controlled, by isolating a space formed between the delaying member and a measurement target SMP from the atmospheric pressure and thereby ensuring closeness, reducing the pressure in that space lower than the atmospheric pressure. Hence, as a close contact between the measurement target and the delaying member can be improved and measurement errors can be controlled, the viscoelastic property measuring device capable of measuring viscoelastic property of a measurement target highly precisely can be implemented.

[Embodiment 7]

In the above description, we exemplified the viscoelastic property measuring device capable of measuring viscoelastic property of a measurement target in a prompt and highly precise manner. In the following description, we exemplify a process unit that performs optimum processing depending on changes in viscoelastic property of an object to be processed due to external action.

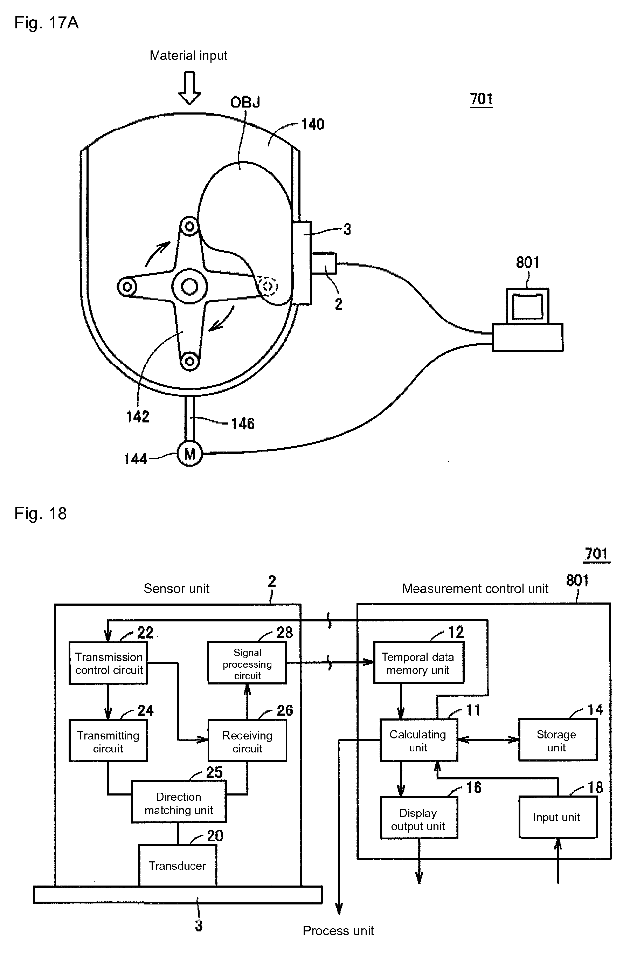

FIG. 17 shows the schematic configuration of a process unit 701 according to Embodiment 7 of the present invention.

With reference to FIG. 17, the process unit 701 includes a measurement control unit 801, sensor unit 2, delaying member 3, kneading container 140, impeller 141, motor 141, and drive shaft 146.

By rotating the impeller 142, the process unit 701 gives mixing action or agitating action to an object to be processed OBJ inputted into the kneading container 140. In parallel with this kneading process, the process unit 701 causes the sensor unit 2 to emit incident sonic wave to the object to be processed OBJ, and measures viscoelastic property of the object to be processed OBJ based on the reflected sonic wave generated by that incident sonic wave. In fact, the object to be processed OBJ is a measurement target of viscoelastic property. Additionally, when viscoelastic property of an object to be processed OBJ has reached a desired value, the process unit 701 terminates kneading of the object to be processed OBJ. By way of example, the process unit 701 receives mixtures of powder of cereal such as wheat, buckwheat and rice flour and water, and makes dough of bread (wheat and water), Japanese wheat noodle (wheat and water), soba noodle (buckwheat and water), rice dumpling (rice flour and water), etc. In the following, we mainly describe the case of making bread dough in detail.

The kneading container 140 has a bowl shape having an opening on its upper part and receives an object to be processed OBJ consisting of raw material from the opening.

Positioned at the center area of the kneading container 140 so that its rotating axis is in horizontal direction, the impeller 142 rotates under driving force from the motor 144. Then, the impeller 142 gives the object to be processed OBJ shear force due to its own rotation, ad kneads the object to be processed OBJ.

The drive shaft 146 transmits the drive force generated by the motor 144 to the impeller 142. In Embodiment 7 of the present invention, the drive shaft 146 converts rotation motion to the rotary shaft of the motor 144 into rotation motion to the rotary shaft of the impeller 142 via a gear (not shown).

The motor 144 is mechanically combined with the drive shaft 146, and provides the impeller 142 with the rotation motion generated by itself through the drive shaft 146. Then, the motor 144 operates or stops responding to an operation command from the measurement control unit 801.

The measurement control unit 801 gives an emit command to the sensor unit 2, emits incident sonic wave from the sensor unit 2 to the object to be processed OBJ, and measures viscoelastic property of the object to be processed OBJ based on temporal waveform of reflected sonic wave to be received at the sensor unit 2. In addition, the measurement control unit 801 controls an operation command to be given to the motor 144, based on viscoelastic property of the measured object to be processed OBJ.

The sensor unit 2 is positioned in close contact with the delaying member 3, and emits incident sonic wave to the inside of the kneading container 140 through the delaying member 3, responding to an emit command from the measurement control unit 801. Then, the sensor unit 2 receives reflected sonic wave generated by the incident sonic wave being reflected on a boundary surface between the object to be processed OBJ and delaying member 3, and outputs its temporal waveform to the measurement control unit 801. In addition, incident sonic wave emitted by the sensor unit 2 is sonic wave generating vibration in the object to be processed OBJ and is preferably ultrasonic wave.

The delaying member 3 is positioned so that its one side is integrated with the inner surface of the kneading container 140, and in close contact with the sensor unit 2 on its other side.

FIG. 18 shows the schematic configuration of the measurement control unit 801, sensor unit 2 and delaying member 3.

With reference to FIG. 18, the measurement control unit 801 is equivalent to the measurement control unit 601 of viscoelastic property measuring device 501 as shown in FIG. 1 with the calculating unit 10 replaced by the calculating unit 11. As the sensor unit 2 and delaying member 3 are similar to the sensor unit 2 and delaying member 3, respectively, as shown in FIG. 1, we do not repeat detailed description.

In addition to the capabilities that the calculating unit 10 is provided, the calculating unit 11 compares a viscoelastic property value at specific frequency of an object to be processed OBJ to be measured with a threshold that is 1 or more than 1, and changes the operation command to be outputted to the motor 144 based on the result of comparison. In Embodiment 7 of the present invention, the calculating unit 11 operates or stops the motor 144, depending on whether or not the viscoelastic property value at the specific frequency of the measured object to be processed OBJ exceeds the threshold of 1. In other words, till a viscoelastic property value of the measured object to be processed OBJ exceeds a predetermined threshold, the calculating unit 11 operates the motor 144 and rotates the impeller 142. It stops the motor 144 after the predetermined threshold is exceeded.

As other capabilities of the calculating unit 11 are similar to the calculating unit 10 described above, we do not repeat detailed description. In addition, as we described the sensor unit 2 and delaying member 3, we do not repeat detailed description.

In Embodiment 7 of the present invention, similar to Embodiments described above, viscoelastic property is measured by means of the surface reflection method and processes of the process unit are controlled based on the measurement result.

(Content of processes in the measurement control unit)

We describe temporal change in viscoelastic property in the case in which the process unit 701 according to Embodiment 7 of the present invention makes bread dough using a mixture of wheat flour and water as an object to be processed OBJ. We take note of the storage elastic modulus (elasticity) as viscoelastic property.

Wheat flour contains protein called gluten, which crosslinks with each other and forms long chain molecules, thereby increasing the storage elastic modulus. Then, as gluten is subjected to mixing action and kneading action of the impeller 142, the crosslinking is enhanced. Thus, kneading by the impeller 142 of an object to be processed OBJ consisting of a mixture of wheat flour and water increases the storage elastic modulus of the object to be processed OBJ. Then, further kneading the object to be processed OBJ results in breaking of crosslinking to the contrary. Thus, the storage elastic modulus of the object to be processed OBJ takes a downward turn. In fact, being kneaded by the impeller 142, the object to be processed OBJ consisting of a mixture of wheat flour and water increases its storage elastic modulus to a predetermined maximal value monotonously, and then decreases its storage elastic modulus.

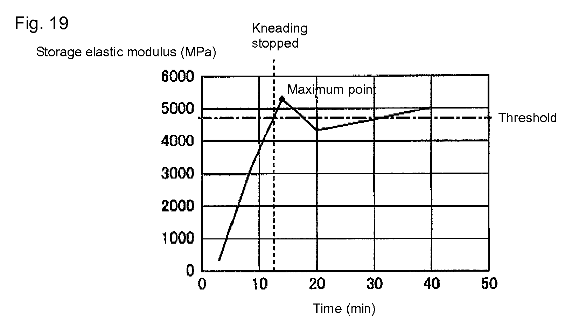

FIG. 19 shows one example of temporal change in the storage elastic modulus (elasticity) to the object to be processed OBJ consisting of a mixture of wheat flour and water. The rotating speed of the impeller 142 is constant and the storage elastic modulus is a value at 2.5MHz.

With reference to FIG. 19, the storage elastic modulus of the object to be processed OBJ monotonously increases in the period while it reaches a maximum point. Then, when it reaches the maximum point, the storage elastic modulus of the object to be processed OBJ takes a downward turn.

In general, what makes post-baking texture and flavor best is the to be the case in which bread dough is kneaded close to a maximum point of the storage elastic modulus as shown in FIG. 19. Thus, the measurement control unit 801 (FIG. 18) according to Embodiment 7 of the present invention measures the storage elastic modulus among viscoelastic properties, and performs kneading by the impeller 142 after raw material is inputted till the measured storage elastic modulus reaches a predetermined threshold. Then, the measurement control unit 801 stops kneading by the impeller 142 when the storage elastic modulus reaches the predetermined threshold.

In addition, a display output unit 16 (FIG. 18) is such configured that it can display temporal change in the storage elastic modulus as shown in FIG. 19 at any time and/or output data thereof to the external. Furthermore, the display output unit 16 is such configured that it can display information on commands such as an operation command or stop command, etc., to be given to the motor 144 and/or output data thereof to the external.

Additionally, the property descried above is also seen in cereal containing similar protein, and a similar control method is applicable to manufacturing of Japanese wheat noodles, soba noodles and rice dumpling in addition to the bread dough.

(Process Flow)

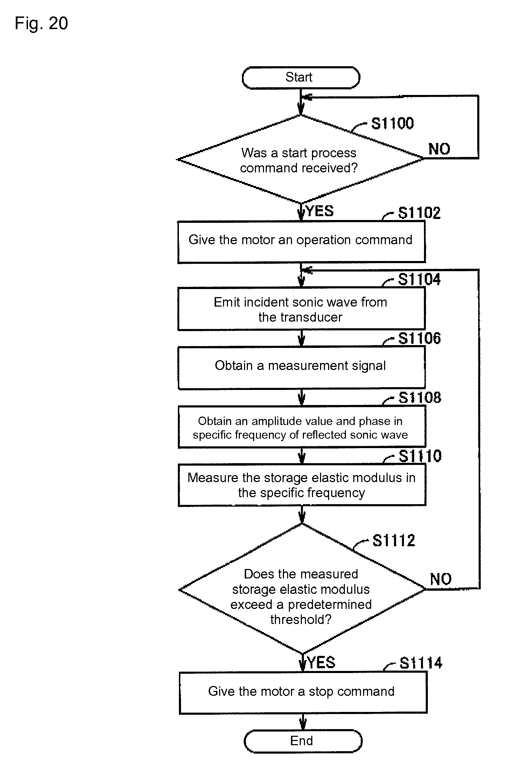

FIG. 20 shows the process flow related to process control according to Embodiment 7 of the present invention. In Embodiment 7 of the present invention, reference data that serves as a reference is previously obtained, according to the acquisition process of reference data to be described below.

With reference to FIG. 18 and FIG. 20, the calculating unit 11 determines whether or not it received a start process command via Input unit 18 (step S1100). On the one hand, a user gives a start process command after inputting raw material into kneading container 140.

If it did not receive the start process command (NO in step S1100), the calculating unit 11 waits till it receives the start process command (step S1100).

If it received the start process command (YES in step S1100), the calculating unit 11 gives the motor 144 an operation command (step S1102). Then, responding to operation of the motor 144, the impeller 142 starts kneading of an object to be processed OBJ. Then, the calculating unit 11 gives an emit command to the sensor unit 2 and emits incident sonic wave from the transducer 20 (step S1104).

Then, the calculating unit 11 obtains a measurement signal indicative of temporal intensity of reflected sonic wave to be received by the transducer 20 from the temporal data memory unit 12 (step S1106). The calculating unit 11 performs FFT process on the obtained measurement signal, and obtains an amplitude value and phase at a specific frequency (e.g., 2.5 MHz) of the reflected sonic wave (step S1108). In addition, the calculating unit 11 obtains from the storage unit 14 an amplitude value and phase that are stored as reference data, and using these as a reference, measures the storage elastic modulus of the object to be processed OBJ at the specific frequency (step S1110).

The calculating unit 11 determines whether or not the measured storage elastic modulus exceeds a preset threshold (step S1112). Additionally, if bread dough is manufactured as described above, the calculating unit 11 compares the storage elastic modulus with a predetermined upper threshold.

If the storage elastic modulus has not exceeded the threshold (NO in step S1112), the calculating unit 11 gives an emit command to the sensor unit 2 again and emits incident sonic wave from the transducer 20 (step S1104). In the following, we repeat steps S1106 to S1112.

When the storage elastic modulus has exceeded the threshold (YES in step S1112), the calculating unit 11 gives the motor 144 a stop command (step S1114). Then, in response to the stoppage of the motor 144, kneading by the impeller 142 ends. Then, the calculating unit 11 terminates the process.

In addition, when incident sonic wave containing a plurality of frequency components is emitted, although viscoelastic property can be measured for each of the plurality of frequencies, it may be acceptable that incident sonic wave constituted of a specific single frequency is emitted and only viscoelastic property at the single frequency is measured. In manufacturing of bread dough, sine wave of single frequency of 2.5 MHz may be used as incident sonic wave.

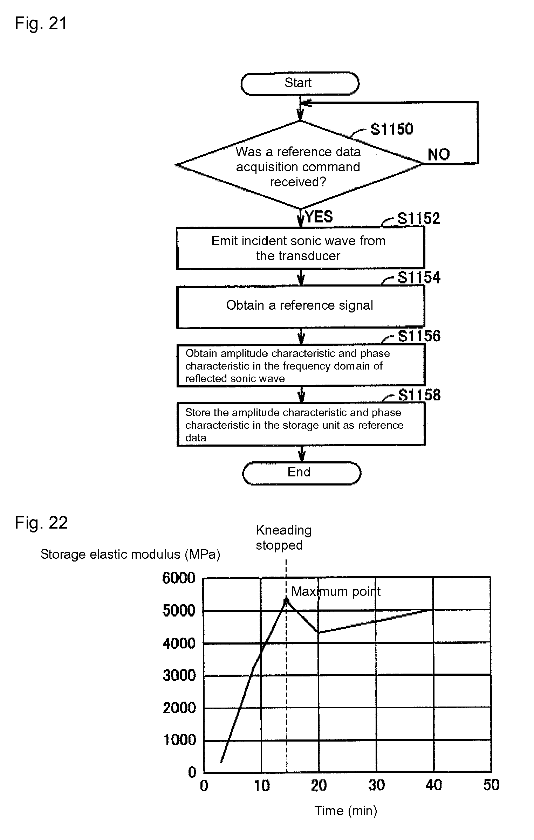

FIG. 21 shows the process flow related to acquisition of reference data according to Embodiment 7 of the present invention.

With reference to FIG. 18 and FIG. 21, the calculating unit 11 determines whether or not it received a reference data acquisition command via input unit 18 (step S1150). On the one hand, a user gives a reference data acquisition command after putting the kneading container 140 in an empty state, i.e., in the condition the delaying member 3 does not abut the object to be processed OBJ and other member, and abuts only air.

When it did not receive the reference data acquisition command (NO in step S1150), the calculating unit 11 waits till it receives the reference data acquisition command (step S1150). When it received the reference data acquisition command (YES in step S1150), the calculating unit 11 gives the sensor unit an emit command to the sensor unit 2 and emits incident sonic wave from the transducer 20 (step S1152).

Next, the calculating unit 11 obtains a reference signal indicative of temporal intensity of reflected sonic wave received by the transducer 20 from the temporal data memory unit 12 (step S1154). Then, the calculating unit 11 performs FFT process on the measured reference signal, and obtains amplitude characteristic and phase characteristic in the frequency domain of the reflected sonic wave (step S1156). Then, the calculating unit 11 stores in the storage unit 14 the amplitude characteristic and phase characteristic in the frequency domain of the obtained reference signal as reference data (step S1158). Then, the calculating unit 11 terminates the process.

In the process as shown in FIG. 20, the process to acquire reference data as shown in FIG. 21 may be performed for every measurement of viscoelastic property. In addition, the configuration may be such that a plurality of reference data is previously stored in the storage unit 14 and a user can set which reference data to adopt for every measurement.

In addition, the configuration may be such that a sensor unit and delaying member for obtaining reference data that have identical characteristic as the sensor unit 2 and delaying member 3 are arranged to contact only air, and after emitting identical incident sonic wave, reflected sonic waves received respectively at the sensor unit 2 and the sensor unit for obtaining reference data are compared. In fact, as reflected sonic wave to be received at the sensor unit for obtaining reference data is made reference data, it is no longer necessary to previously obtain reference data, reference data can be obtained at the timing of measurement. Thus, measurement precision can be further enhanced against possible disturbance such as temperature variations.

In Embodiment 7 of the present invention as described above, we exemplified the configuration in which the storage elastic modulus is measured as an example of viscoelastic property. However, needless to say, it can be also applied to the configuration in which the loss elastic modulus and loss tangent are measured.

According to Embodiment 7 of the present invention, the sensor unit emits incident sonic wave through the delaying member arranged integrally with the inner surface of the kneading container to an object to be processed, and receives reflected sonic wave generated by the incident sonic wave being reflected on a boundary surface between the object to be processed and the delaying member. Then, the measurement control unit measures the storage elastic modulus, which is one of viscoelastic properties of the object to be processed, based on the reflected sonic wave the sensor unit received, and controls operation or stoppage of the impeller based on the measurement result. This enables control of an object to be processed whose viscoelastic property changes under kneading action accompanying operation of the impeller, so that desired viscoelastic property may be obtained. Hence, for instance, a process unit that can perform optimum processing on an object to be processed, such as bread dough, that has a maximum point where increase of viscoelastic property takes a downward turn when it is subjected to kneading action, depending on changes in the viscoelastic property can be implemented.

In addition, according to Embodiment 7 of the present invention, as the measurement control unit stops the impeller when the measured viscoelastic property exceeds a predetermined threshold, viscoelastic property of an object to be processed can be reliably kept above the threshold.

[Variant Example 1 of Embodiment 7]

In Embodiment 7 of the present invention as described above, although we described the configuration in which start and end of kneading is controlled based on the measured storage elastic modulus and a predetermined threshold, start and end termination of kneading may be controlled by detecting a maximum point of the storage elastic modulus.

FIG. 22 outlines the case in which the process control according to variant example 1 of Embodiment 7 of the present invention is applied to an object to be processed having the storage elastic modulus that varies with time as shown in FIG. 19.

With reference to FIG. 22, upon receipt of a start process command, the measurement control unit 801 gives the motor an operation command, starts kneading, and accordingly repeats measurement of viscoelastic characteristic of an object to be processed OBJ continuously or at every predetermined time intervals. Then, the measurement control unit 801 calculates the time rate of change of the measured viscoelastic property, i.e., amount of change within a certain period of time, and then determines whether the time rate of change of the calculated viscoelastic property is a positive value or a negative value. In addition, the measurement control unit 801 detects the timing when the time rate of change of viscoelastic property has changed from a positive value to negative value, i.e., a maximum point of viscoelastic property. When it detects the maximum point of viscoelastic property, the measurement control unit 801 gives the motor 144 a stop command and stops kneading.

In addition, the display output unit 16 displays time change of the storage elastic modulus as shown in FIG. 22 at any time and/or outputs data thereof to the external. In addition, the display output unit 16 displays information on commands such as an operation command or stop command, etc., to be given to the motor 144 and/or outputs data thereof to the external.

As described above, after starting kneading of the object to be processed OBJ, the measurement control unit 801 continues kneading till viscoelastic property reaches a maximum point.

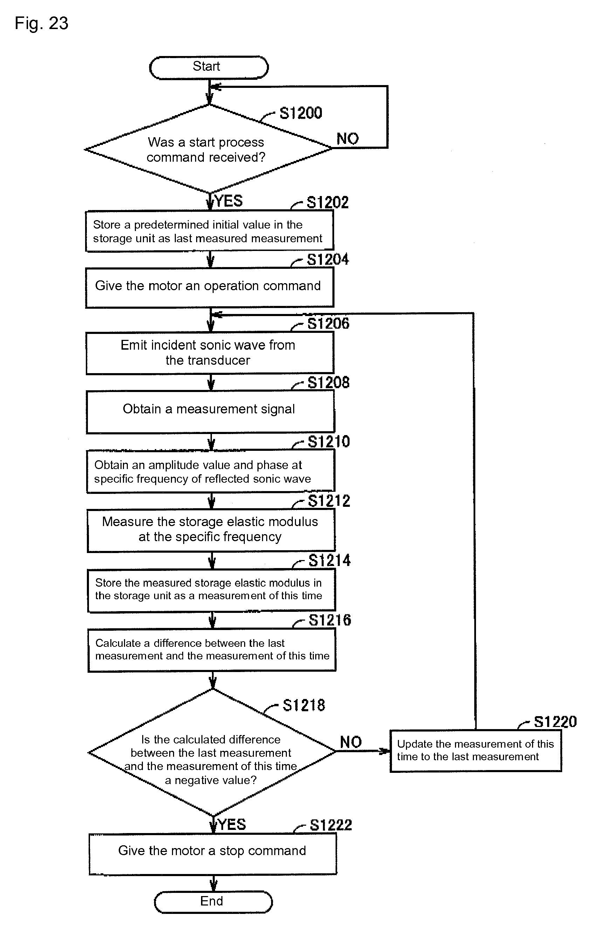

FIG. 23 shows the process flow related to process control according to variant example 1 of Embodiment 7 of the present invention. In addition, according to the process of obtaining reference data as shown in FIG. 21, reference data that serves as a reference is previously obtained in the storage unit 14.

With reference to FIG. 18 and FIG. 23, the calculating unit 11 determines whether or not it received a start process command via the input unit 18 (step S1200). On the one hand, a user gives the start process command after inputting raw material into the kneading container 140.

When it did not receive the start process command (NO in step S1200), the calculating unit 11 waits till it receives the start process command (step S1200).

When it received the start process command (YES in step S1200), the calculating unit 11 not only stores a predetermined initial value as a previous measurement in the storage unit 14 (step S1202), but also gives the motor 144 an operation command (step S1204). Then, responding to operation of the motor 144, the impeller 142 starts kneading of an object to be processed OBJ. Then, the calculating unit 11 gives the sensor unit 2 an emit command and emits incident sonic wave from the transducer 20 (step S1206).

Then, the calculating unit 11 obtains from the temporal data memory unit 12 a measurement signal indicative of temporal intensity change in reflected sonic wave received by the transducer 20 (step S1208). Then, the calculating unit 11 performs FFT process on the obtained measurement signal, and obtains an amplitude value and phase at a specific frequency of the reflected sonic wave (e.g., 2.5 MHz) (step S1210). Then, the calculating unit 11 obtains from the storage unit 14 an amplitude value and phase stored as reference data, and using these as a reference, measures the storage elastic modulus of the object to be processed OBJ at the specific frequency (step S1212).

Then, the calculating unit 11 stores the measured storage elastic modulus as a measured value of this time in the storage unit 14 (step S1214), and then calculates a difference between the last measured value and the measured data of this time (step S1216). Then, the calculating unit 11 determines whether or not a difference between the last measured value and the measured value of this time is a negative value or not (step S1218).

If the calculated difference between the last measured value and the measured value of this time is not a negative value (NO in step S1218), the calculating unit 11 gives the sensor unit 2 the emit command again after updating the measured value of this time stored in the storage unit 14 to the last measured value (step S1220), and emits incident sonic wave from the transducer 20 (step S1206). In the following, steps S1208 to S1218 are repeated.

If the calculated difference between the last measured value and the measured value of this time is a negative value (YES in step S1218), the calculating unit 11 gives the motor 144 a stop command (step S1222). Then, responding to stoppage of the motor 144, kneading by the impeller 142 ends. Then, the calculating unit 11 terminates the process.

As such, the measurement control unit 801 can obtain the object to be processed OBJ that has been kneaded into an optimum state, by detecting a maximum point of the storage elastic modulus and terminating kneading by the impeller 142.

According to Embodiment 7 of the present invention, as the impeller is stopped based on a sign of the time rate of change of the measured viscoelastic property, for any object to be processed having such an inflection point as a maximum point, its viscoelastic property can be a value at the inflection point. Hence, a process unit that can perform optimum processing on any object to be processed such as bread dough for which a maximum point is the best timing can be implemented.

[Variant Example 2 of Embodiment 7]

In variant example 2 of Embodiment 7 of the present invention as described above, although we described the configuration in which kneading is stopped by detecting a maximum point of the measured storage elastic modulus, i.e., the point where the sign of the time rate of change of the storage elastic modulus is inverted, start and termination of kneading may be controlled based on an absolute value of the time rate of change of the storage elastic modulus.

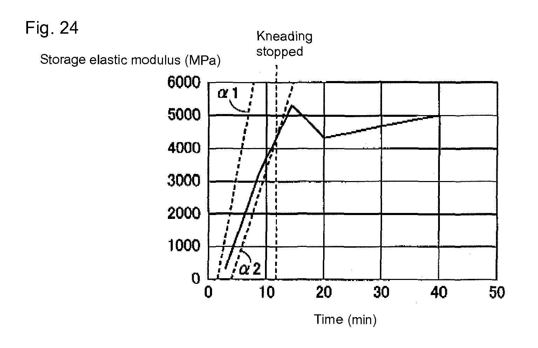

FIG. 24 outlines the case in which the process control according to the variant example 2 of Embodiment 7 of the present invention is applied to any object to be processed having the storage elastic modulus that varies with time as shown in FIG. 19.

With reference to FIG. 24, upon receipt of a start process command, the measurement control unit 801 gives the motor 144 an operation command, starts kneading, and accordingly repeats measurement of viscoelastic measurement of an object to be processed OBJ continuously or at every predetermined time intervals. Then, the measurement control unit 801 calculates the time rate of change of the measured viscoelastic property, i.e., amount of change within a certain period of time, and then determines whether the calculated value falls within a predetermined threshold range ($\alpha 1$ to $\alpha 2$). In addition, the measurement control unit 801 detects the time point when the time rate of change of viscoelastic property has deviated from the predetermined threshold range, and gives the motor 144 a stop command at the time of deviation and stops kneading.

In addition, the display output unit 16 displays the time change in the storage elastic modulus as shown in FIG. 24 at any time and/or outputs data thereof to the external. In addition, the display output unit 16 displays information on commands such as an operation command or stop command, etc., to be given to the motor 144 and/or outputs data thereof to the external.

As described above, after starting kneading of the object to be processed OBJ, the measurement control unit 801 continues kneading as far as the time rate of change of the viscoelastic property falls within the determined threshold range.

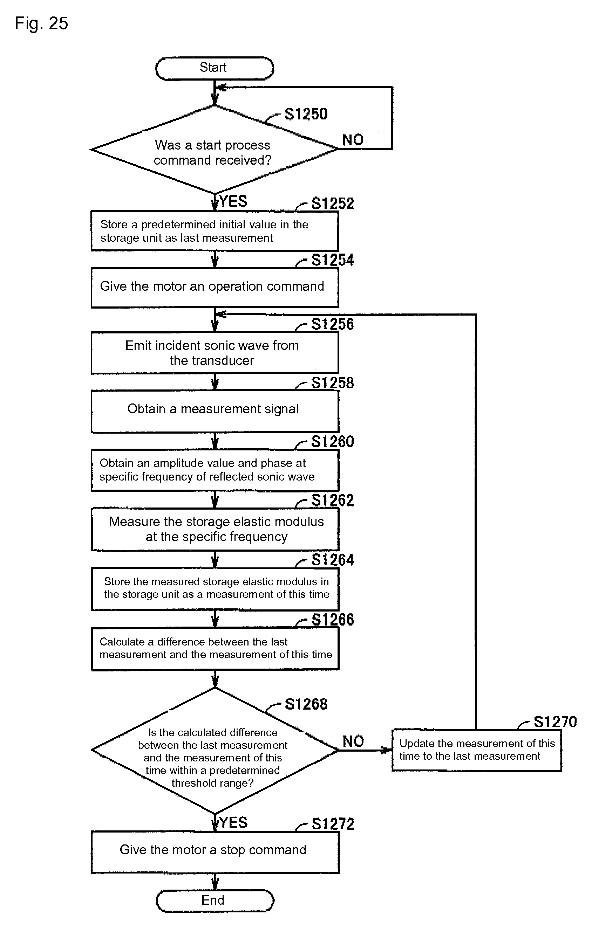

FIG. 25 shows the process flow related to the process control according to the variant example 2 of Embodiment 7 in the present invention. In addition, according to the process of obtaining reference data as shown in FIG. 21, reference data that serves as a reference is previously obtained in the storage unit 14.

With reference to FIG. 18 and FIG. 25, the calculating unit 11 determines whether or not it received a start process command via the input unit 18 (step S1250). On the one hand, a user gives the start process command after inputting raw material into the kneading container 140.

When it did not receive the start process command (NO in step S1250), the calculating unit 11 waits till it receives the start process command (step S1250).

When it received the start process command (YES in step S1250), the calculating unit 11 not only stores a predetermined initial value as the last measured value in the storage unit 14 (step S1252) but also gives the motor 144 an operation command (step S1254). Then, responding to operation of the motor 144, the impeller 142 starts kneading of an object to be processed OBJ. Then, the calculating unit 11 gives an emit command to the sensor unit 2, and emits incident sonic wave from the transducer 20 (step S1256).

Then, the calculating unit 11 obtains from the temporal data memory unit 12 a measurement signal indicative of temporal intensity change in reflected sonic wave received by the transducer 20 (step S1258). Then, the calculating unit 11 performs FFT process on the obtained measurement signal, and obtains an amplitude value and phase at a specific frequency of the reflected sonic wave (e.g., 2.5 MHz) (step S1260). The calculating unit 11 further obtains an amplitude value and phase stored as reference data from the storage unit 14, and using these as a reference, measures the storage elastic modulus of the object to be processed OBJ at the specific frequency (step S1262).

Then, the calculating unit 11 stores the measured storage elastic modulus as a measured value of this time in the storage unit 14 (step S1264), and then calculates a difference between the last measured value and the measured data of this time (step S1266). Then, the calculating unit 11 determines whether the calculated difference between the last measured value and the measured data of this time falls within the predetermined threshold range (step S1268).

If the calculated difference between the last measured value and the measured data of this time does not fall within the predetermined threshold range (NO in step S1268), the calculating unit 11 gives the sensor unit 2 the emit command again after updating the measured value of this time stored in the storage unit 14 to the last measured value (step S1270), and emits incident sonic wave from the transducer 20 (step S1256). In the following, steps S1254 to S1268 are repeated.

If the calculated difference between the last measured value and the measured data of this time does not fall within the predetermined threshold range (NO in step S1268), the calculating unit 11 gives the motor 144 a stop command (step S1272). Then, responding to stoppage of the motor 144, the impeller 142 terminates kneading. Then, the calculating unit 11 terminates the process.

Thus, if the time rate of change of storage elastic modulus gets out of the predetermined range, kneading by the impeller is terminated, and thus the object to be processed OBJ that has been kneaded into optimum state can be obtained.

According to the variant example 2 of Embodiment 7 of the present invention, the impeller is stopped based on whether the time rate of change of the measured viscoelastic property falls within a predetermined threshold range. Hence, as processing can be terminated before the change rate of viscoelastic property for external action substantially drops, the process unit capable of performing more efficient processes can be implemented.

[Variant Example 3 of Embodiment 7]

In the variant examples 1 and 2 of Embodiment 7 of the present invention as described above, although we described the configuration in which kneading is stopped after the time rate of change of the measured storage elastic modulus reaches a threshold or gets out of a threshold range, the timing of stopping kneading may be previously predicted from the time rate of change and controlled.

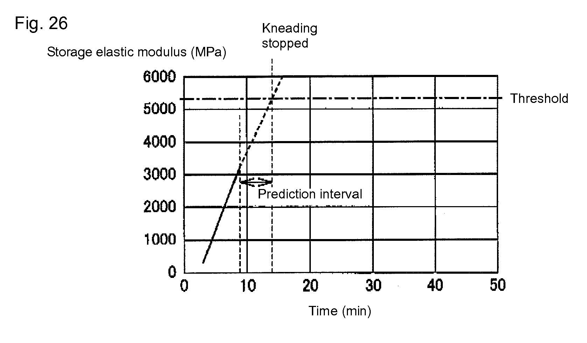

FIG. 26 outlines the case in which the process control according to the variant example 3 of Embodiment 7 of the present invention is applied to an object to be processed having the storage elastic modulus that varies with time as shown in FIG. 19.

With reference to FIG. 26, upon receipt of a start process command, the measurement control unit 801 gives the motor 144 an operation command, starts kneading, and accordingly repeats measurement of viscoelastic property of an object to be processed OBJ continuously or at every predetermined time intervals. After measuring viscoelastic property only for a predetermined period, the measurement control unit 801 derives an interpolant from a measured value of a plurality of measured viscoelastic properties. Then, the measurement control unit 801 calculates a future predicted value of viscoelastic property from the derived interpolant, and predicts time when viscoelastic property reaches a threshold. The measurement control unit 801 operates the motor 144 till the predicted time of reaching, and thereafter, gives the motor 144 a stops command, and stops kneading.

In addition, the display output unit 16 displays the time change in the storage elastic modulus as shown in FIG. 26 at any time and/or outputs data thereof to the external. In addition, the display output unit 16 displays information on commands such as an operation command or stop command, etc., to be given to the motor 144 and/or outputs data thereof to the external.

As described above, after starting kneading on the object to be processed OBJ, the measurement control unit 801 measures viscoelastic property for a predetermined period of time, predicts possible change in the future viscoelastic property, and previously obtains the timing of stopping kneading based on the predicted kneading characteristic.

As an interplant for predicting any future change from measured viscoelastic property, there are, by way of example, linear approximation, polynomial approximation, exponential approximation, logarithmic approximation, power approximation and moving average approximation, etc.

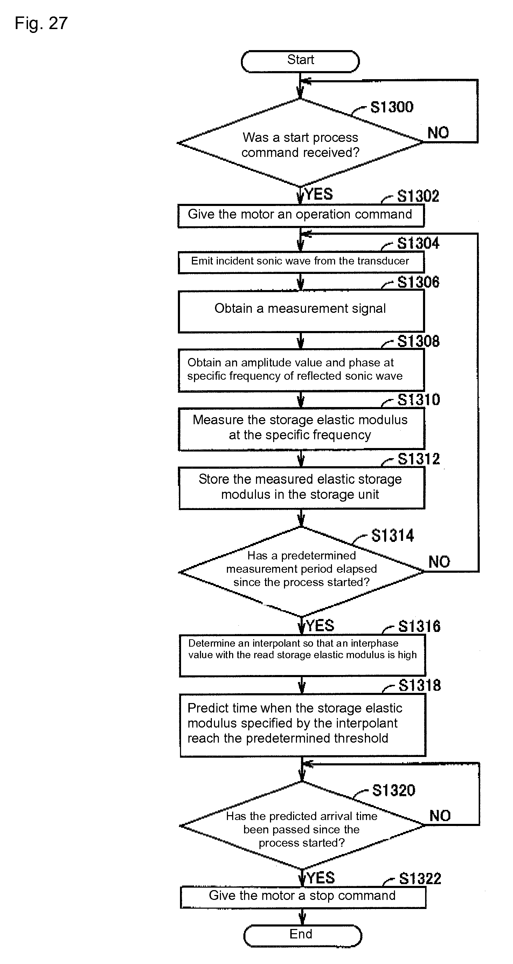

FIG. 27 shows the process flow related to the process control according to variant example 3 of Embodiment 7 of the present invention. According to the process for obtaining reference data as shown in FIG. 21, reference data that serves as a reference is previously obtained in the storage unit 14.

With reference to FIG. 18 and FIG. 27, the calculating unit 11 determines whether or not it received a start process command via the input unit 18 (step S1300). On the one hand, a user gives the start process command after inputting raw material into the kneading container 140.

When it did not receive the start process command (NO in step S1300), the calculating unit 11 waits till it receives the start process command (step S1300).

When it received the start process command (YES in step S1300), the calculating unit 11 gives the motor 144 an operation command (step S1302). Then, responding to operation of the motor 144, the impeller 142 starts kneading of an object to be processed OBJ. Then, the calculating unit 11 gives an emit command to the sensor unit 2 and emits incident sonic wave from the transducer 20 (step S1304).

Then, the calculating unit 11 obtains from the temporal data memory unit 12 a measurement signal indicative of temporal intensity change in reflected sonic wave received by the transducer 20 (step S1306). Then, the calculating unit 11 performs FFT process on the obtained measurement signal, and obtains an amplitude value and phase at a specific frequency (e.g., 2.5 MHz) of the reflected sonic wave (step S1308). The calculating unit 11 further obtains from the storage unit 14 an amplitude value and phase stored as reference data, and using these as a reference, measures the storage elastic modulus of the object to be processed OBJ at the specific frequency (step S1310), and stores the measured storage elastic modulus in the storage unit 14 (step S1312).

Next, the calculating unit 11 determines whether or not a predetermined measurement period has elapsed since the process started (step S1314). The predetermined period is the time required for obtaining as many values as necessary for deriving an interpolant.

If the predetermined measurement period has not yet elapsed since the process started (NO in step S1314), the calculating unit 11 gives an emit command to the sensor unit 2 again, and emits incident sonic wave from the transducer 20 (step S1304). In the following, steps S1306 to S1314 are repeated.

If the predetermined measurement period has elapsed since the process started (YES in step S1314), the calculating unit 11 reads out more than one storage elastic modulus stored in the storage unit 14, and determines an interpolant so that an interphase value with the read storage elastic modulus is high (step S1316). Then, the calculating unit 11 predicts time when the storage elastic modulus provided by the determined interpolant reaches the predetermined threshold (step S1318).

Then, the calculating unit 11 determines whether or not the predicted time of reaching has been passed since the process started (step S1320). If the predicted time of reaching has not been passed since the process started (NO in step S1320), the calculating unit 11 waits till the predicted time of reaching is passed since the process starts (step S1320). If the predicted time of reaching has been passed since the process started (YES in step S1320), the calculating unit 11 gives the motor 144 a stop command (step S1322). Then, responding to stoppage of the motor 144, kneading by the impeller 142 ends. Then, the calculating unit 11 terminates the process.

Thus, as kneading by the impeller 142 is terminated by previously predicting the termination time from the time rate of change of storage elastic modulus, the object to be processed OBJ that has been kneaded into optimum state can be obtained.

According to the variant example 3 of Embodiment 7 of the present invention, any change in future viscoelastic property is predicted by using the previously measured viscoelastic property and the impeller is stopped based on the predicted viscoelastic property. Hence, the process unit capable of performing an optimal processing so as not to delay the timing of stopping the impeller for a maximum point for any object to be processed, such as bread dough, for which the maximum point is the best timing can be implemented.

[Variant Example 4 of Embodiment 7]

In Embodiment 7 of the present invention, although we described the process unit in which an object to be processed is agitated in so-called vertical direction, the object to be processed becomes unified and rotationally moves within the kneading container when viscosity of the object to be processed increases in such the process unit. Thus, in the case of an object to be processed that has become unified, incident sonic wave does not necessarily enter the object to be processed from the sensor unit positioned on the side of the kneading container. Thus, it is desirable that out of reflected sonic wave entering the sensor unit, the sonic wave reflected at the object to be processed be selectively processed.

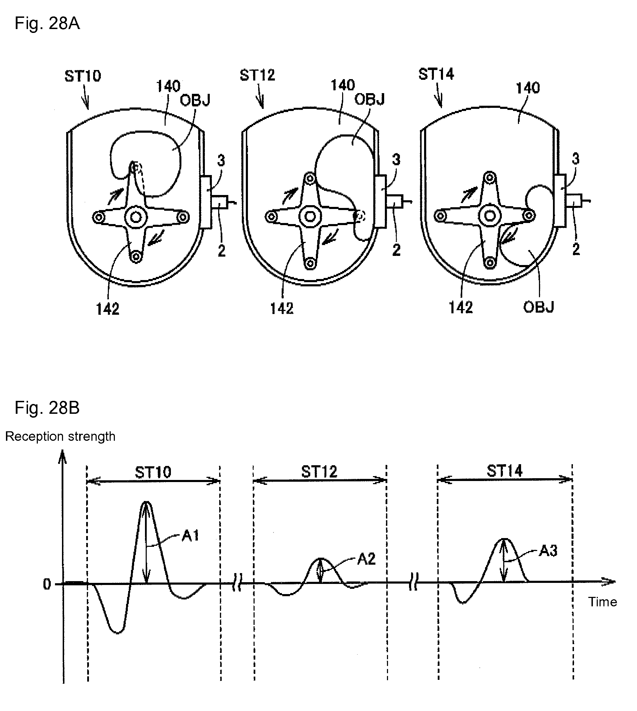

FIG. 28A and FIG. 28B show a relationship of a position of the object to be processed OBJ in the kneading container 140 as shown in FIG. 7 and reflected sonic wave.

FIG. 28A shows a positional relationship between the object to be processed OBJ and the sensor unit 2.

FIG. 28B shows temporal waveform of the reflected sonic wave received by the sensor unit 2.

With reference to FIG. 28A, as the impeller 142 rotates, the object to be processed OBJ rotationally moves in the kneading container 140. Thus, the object to be processed OBJ can be in close contact with the delaying member 3 during a predetermined period of time in one rotation. Specifically, in state ST10, the object to be processed OBJ cannot be in close contact with the delaying member 3, and consequently, incident sonic wave emitted from the sensor unit 2 is reflected on a boundary between the delaying member 3 and air. On the one hand, in state ST12, under pressure due to rotating force of the impeller 142, the processed OBJ is in close contact with the delaying member 3. Consequently, incident sonic wave emitted from the sensor unit 2 is reflected on a boundary between the delaying member 3 and the object to be processed OBJ. Additionally, in state ST14, the processed OBJ is simply in close contact with a part of the delaying member 3 and cannot be in close contact with the full surface of the delaying member 3. Thus, some of the incident sonic wave emitted from the sensor unit 2 is reflected on the boundary with the object to be processed OBJ, while the remaining incident sonic wave is reflected on the boundary with air. In addition, if the sensor unit 2 is positioned on the bottom of the kneading container 140, it is in close contact with the delaying member 3 due to empty weight of the object to be processed OBJ. Even in such a case, however, it can be in close contact with the delaying member 3 only when the object to be processed OBJ has moved to the bottom.

Incidentally, as acoustic impedance in the air is sufficiently smaller than an object to be processed OBJ, the percentage of incident sonic wave being reflected on the boundary between the delaying member 3 and air is higher than that of incident sonic wave being reflected on the boundary between the delaying member 3 and the object to be processed OBJ.

With reference to FIG. 28B, when viewed from the sensor unit 2, reception strength of reflected sonic wave reflected on the boundary between the delaying member 3 and air is higher than that of reflected sonic wave reflected on the boundary between the delaying member 3 and object to be processed OBJ.

Thus, in the plurality of reflected sonic waves received by the sensor unit 2 as time passes, accurate viscoelastic property of the object to be processed OBJ can be measured by selectively extracting those reflected between the delaying member 3 and object to be processed OBJ. In fact, this means that in FIG. 28B, the reception waveform with the lowest peak amplitude value is extracted among the reception waveforms in status ST10, ST12 and ST14, respectively.

Specifically, the measurement control unit 801 emits incident sonic wave having a predetermined temporal waveform at predetermined time intervals. Then, in synchronization with the timing of emitting incident sonic wave, the measurement control unit 801 detects maximum strength of reflected sonic wave corresponding to each incident sonic wave. In fact, the measurement control unit 801 detects peak amplitude values A1, A2, and A3, respectively, in FIG. 28B. Then, among the detected peak amplitude values, the measurement control unit 801 identifies time interval a value of which is smallest, and measures viscoelastic property using temporal waveform data of received sonic wave in that interval.

In addition, when emission time of incident sonic wave is extremely shorter than a rotational period of the impeller 142 (time needed for the impeller 142 to make one rotation), the sensor unit 2 can receive a multitude of reflected sonic waves in the period when the impeller 142 makes one rotation. Thus, for respective reflected sonic waves that are received in every rotation, a peak amplitude value can be detected from which the smallest peak amplitude value and an interval (time) associated with it can be identified. On the one hand, when the emission time of incident sonic wave is relatively long compared with the rotational period of the impeller 142, the smallest peak amplitude may be identified every time the impeller 142 makes multiple rotations.

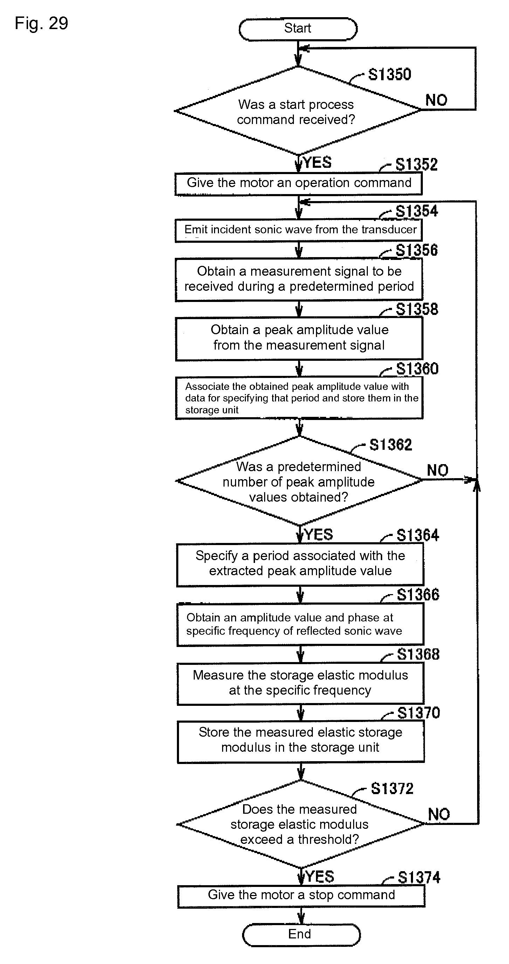

FIG. 29 shows the process flow related to the process control according to variant example 4 of Embodiment 7 of the present invention. According to the process for obtaining reference data as shown in FIG. 21, reference data that serves as a reference is previously obtained in the storage unit 14.

With reference to FIG. 18 and FIG. 29, the calculating unit 11 determines whether or not it received a start process command via the input unit 18 (step S1350). On the one hand, a user gives the start process command after inputting raw material into the kneading container 140.

When it did not receive the start process command (NO in step S1350), the calculating unit 11 waits till it receives the start process command (step S1350).

When it received the start process command (YES in step S1350), the calculating unit 11 gives the motor 144 an operation command (step S1352). Then, responding to operation of the motor 144, the impeller 142 starts kneading of an object to be processed OBJ. Then, the calculating unit 11 gives the sensor unit 2 an emit command and emits incident sonic wave from the transducer 20 (step S1354).

Then, the calculating unit 11 obtains a measurement signal the transducer 20 receives at predetermined time intervals from the temporal data memory unit 12 (step S1356). Then, the calculating unit 11 obtains a peak amplitude value from the obtained measurement signal (step S1358), associates the obtained peak amplitude with data for identifying that period, and stores it in the storage unit 14 (step S1360).

Then, the calculating unit 11 determines whether or not it obtained a predetermined number of peak amplitudes (step S1362). If it did not obtain the predetermined number of peak amplitudes (NO in step S1362), the calculating unit 11 gives the sensor unit 2 an emit command again, and emits incident sonic wave from the transducer 20 (step S1354). In the following, steps S1356 to S1362 are repeated.

On the one hand, when it obtained the predetermined number of peak amplitudes (YES in step S1362), the calculating unit 11 extracts the smallest peak amplitude among those stored in the storage unit 14, and identifies the period associated with that extracted peak amplitude value (step S1364). Then, the calculating unit 11 performs FFT process on a measurement signal in that identified period of time, and obtains an amplitude value and phase at that specific frequency of the reflected sonic wave (step S1366). Furthermore, the calculating unit 11 obtains the amplitude values and phase stored as reference data from the storage unit 14, measures the storage elastic modulus in the specific frequency with them being as a reference, (step S1368), and then stores the measured storage elastic modulus in the storage unit 14 (step S1370).

Next, the calculating unit 11 determines whether or not the measured storage elastic values exceeds a threshold (step S1372). When the storage elastic modulus does not exceed the threshold (NO in step S1372), the calculating unit 11 gives an emit command to a transmission control circuit 22 again, and emits incident sonic wave from the transducer 20 (step S1354). In the following, steps S1356 to S1372 are repeated.

When viscoelastic property exceeds the threshold (YES in step S1372), the calculating unit 11 gives the motor 144 a stop command (step S1374). Then, responding to stoppage of the motor 144, kneading by the impeller 142 ends. Then, the calculating unit 11 terminates the process.

As such, as only reflected sonic waves that are reflected at an object to be processed are selectively extracted among a plurality of reflected sonic waves received by the sensor unit 2, the storage elastic modulus can be measured with higher precision.

According to variant example 4 of Embodiment 7 of the present invention, even in the case in which an object to be processed moves in the kneading container as the impeller rotates, viscoelastic property is measured by selectively extracting reflected sonic wave at the most accurate location depending on strength of reflected sonic wave received by the sensor unit, the process unit capable of controlling any measurement error and performing optimum processing can be implemented.

[Embodiment 8]

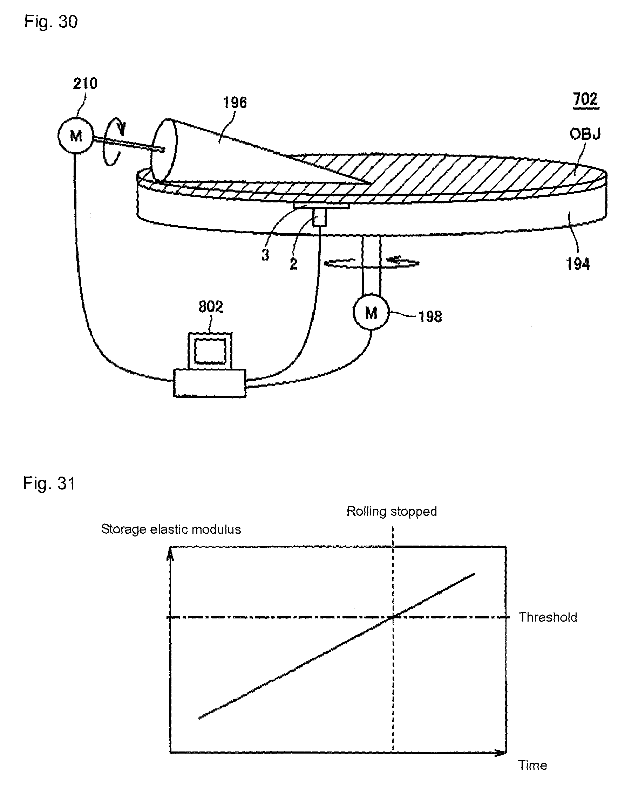

In Embodiment 7 of the present invention as described above, we described the configuration in which viscoelastic property is varied by kneading an object to be processed. On the one hand, in Embodiment 8 of the present invention, we describe the configuration in which viscoelastic property is varied by rolling an object to be processed. FIG. 30 shows the schematic configuration of a process unit 702 according to Embodiment 8 of the present invention.

With reference to FIG. 30, the process unit 702 includes a measurement control unit 802, rotating table 194, roller 196, motors 198 and 210, sensor unit 2 and delaying member 3. Then, by rolling an object to be processed OBJ positioned on the rotating table 194 through rotation of the rotating table 194 and roller 196, the process unit 702 changes its viscoelastic property.

Products to be manufactured by such the process unit 702 include silver line noodle, by way of example, and a mixture of wheat flour, salt and water is used as an object to be processed OBJ. In addition, noodles such as soba noodle can be manufactured similarly. In the following, we mainly describe the case of manufacturing silver line noodle, etc.

The rotating table 194 is positioned so that its rotary shaft is in vertical direction, and an object to be processed OBJ is received between the top surface thereof and the roller 196. As the rotating table 194 rotates under the drive force from the motor 198, it presses the object to be processed OBJ between the roller 196 and rotating table 194. The rotating table also rotates with the sensor unit 2 and delaying member 3 positioned therein integrated.

The motor 198 is mechanically combined with the rotating table 194, and transmits generated rotational movement to the rotating table 194. Then, the motor 198 operates or stops, responding to an operation command from the measurement control unit 802.

The roller 196 is positioned so that its outside diameter surface is always in touch with the top surface of the rotating table 194, irrespective of rotation angle, and rotates under drive force from the motor 210. Then, the roller 196 generates drawing force involved in its own rotation and rotation of the rotating table 194, thereby rolling the object to be processed OBJ.

The motor 210 is mechanically combined with the roller 196, and transmits generated rotational movement to the roller 196. Then, the motor 210 operates or stops, responding to operation command from the measurement control unit 802.

The delaying member 3 is positioned so that its one side forms a part of the top surface of the rotating table 194 and, on the other side, is in close contact with the sensor unit 2. As any other things are similar to Embodiment 7 of the present invention, we do not repeat detailed description.

The sensor unit 2 is positioned in close with the delaying member 3 and emits incident sonic wave to an object to be processed OBJ through the delaying member 3, responding to an emit command from the measurement control unit 802. Then, the sensor unit 2 receives reflected sonic wave generated by the incident sonic wave being reflected on a boundary surface between the object to be processed OBJ and delaying member 3, and outputs temporal waveform thereof to the measurement control unit 802. As any other things are similar to Embodiment 7 of the present invention, we do not repeat detailed description.

In addition, as more detailed configuration of the measurement control unit 802, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 31 shows one example of temporal change in the storage elastic modulus (elasticity) to the object to be processed OBJ composed of a mixture of raw material for manufacturing silver line noodle. It is also assumed that rotating speed is constant during rotation of the rotating stand 194 and roller 196.

With reference to FIG. 31, the measurement control unit 802 according to the Embodiment 8 of the present invention measures the storage elastic modulus as viscoelastic property of the object to be processed OBJ.

On the one hand, when the object to be processed is subjected to rolling action by the rotating table 194 and roller 196, it changes chemically combined state due to its stress, and the storage elastic modulus increases monotonously. In general, in the case of manufacturing silver line noodle, so-called "chewy" silver line noodle of quality can be manufactured by rolling the object to be processed OBJ composed of raw material so that it reaches predetermined storage elastic modulus.

Upon receipt of a start process command, the measurement control unit 802 gives an operation command to the motors 198 and 210, respectively. Then, rolling by the rotating table 194 and the roller 196 starts.

Then, when the storage elastic modulus of the object to be processed OBJ reaches a predetermined threshold, the measurement control unit 802 gives a stop command to the motors 198 and 210, respectively, and stops rolling by the rotating table 194 and roller 196.

In addition, the display output unit 16 displays temporal change in the storage elastic modulus as shown in FIG. 31 at any time and/or outputs data thereof to the external. Furthermore, the display output unit 16 displays information on commands such as an operation command or stop command, etc., to be given to the motors 198 and 210 and/or outputs data thereof to the external.

As the process flow in the process control unit 802 is similar to the process flow related to the process control according to Embodiment 7 of the present invention as shown in FIG. 20, we do not repeat detailed description.

According to Embodiment 8 of the present invention, the sensor unit emits incident sonic wave to an object to be processed through the delaying member positioned integrally with the top surface of the rotating table, and receives reflected sonic wave generated by the incident sonic wave being reflected on a boundary between the object to be processed and the delaying member. Then, the measurement control unit measures the storage elastic modulus, which is one of viscoelastic properties of the object to be processed, based on the reflected sonic wave the sensor unit received, and controls operation or stoppage of the rotating table and rollers based on the measurement result thereof. Thus, any object to be processed whose viscoelastic property changes under the rolling action by the rotating table and rollers can be controlled so that desired viscoelastic property can be obtained. Hence, the process unit capable of performing optimum processing on any object to be processed such as silver line noodles whose viscoelastic property increases monotonously under kneading action, depending on change in the viscoelastic property, so that desired viscoelastic property is obtained can be implemented.

[Embodiment 9]

In Embodiments 7 and 8 of the present invention as described above, we described the configuration in which control is performed by detecting temporal change in viscoelastic property (storage elastic modulus, by way of example) at a specific frequency. On the one hand, in Embodiment 9 of the present invention, we describe the configuration in which control is performed by detecting viscoelastic property to a plurality of frequencies, i.e., temporal change in viscoelastic property in the frequency domain.

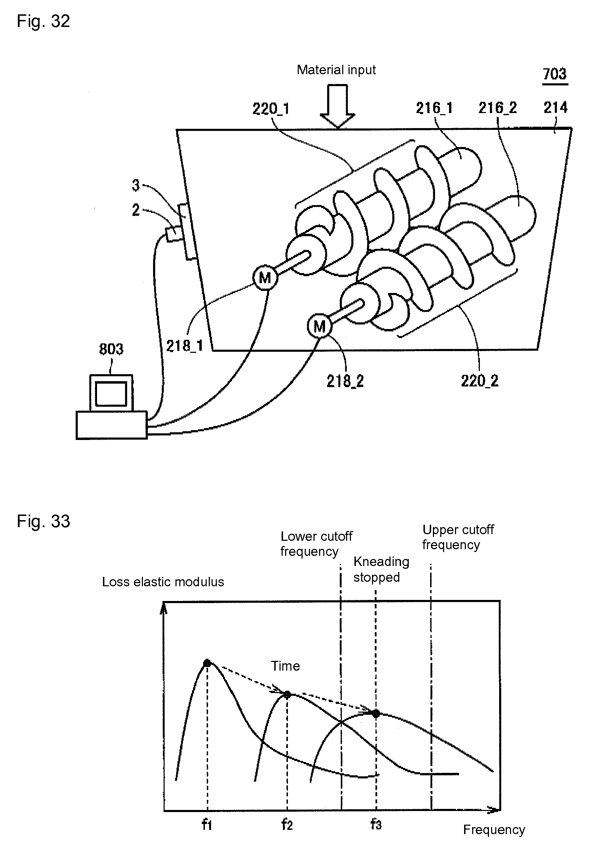

FIG. 32 shows the schematic configuration of a process unit 703 according to Embodiment 9 of the present invention.

With reference to FIG. 32, the process unit 703 includes a measurement control unit 803, kneading container 214, sensor unit 2, delaying member 3, motors 218_1, 218_2, shaft 216_1, 216_2, and vane units 220_1, 220_2. Then, by synchronizing the shafts 216_1 and 216_2 with each other in reverse directions and rotating them, the process unit 703 not only mixes and kneads an object to be processed OBJ inputted by the vane units 220_1 and 220_2 respectively installed thereto, but also emits incident sonic wave to the object to be processed OBJ from the sensor unit and measures viscoelastic property of the object to be processed OBJ based on reflected sonic wave generated by the incident sonic wave. Furthermore, the process unit 703 terminates kneading of the object to be processed OBJ when the object to be processed OBJ has desired viscoelastic property. By way of example, the process unit 703 receives a mixture of mince of fish and shellfish and egg whites and manufactures fish sausage. Similarly, the process unit 703 can also manufacture paste such as tubular rolls of boiled fish paste, chocolates, piecrusts, macaroni, cake dough, and noodle dough, etc.

The kneading container 214 is shaped like a box with an opening on its upper part, and receives an object to be processed OBJ composed of raw material.

The shafts 216_1 and 216_2 are such arranged that their rotary shafts are parallel to each other and rotate in opposite directions to each other under drive force from the motors 218_1 and 218_2, respectively.

The vane units 220_1 and 220_2 are formed to have a helical shape and attached to the shafts 216_1 and 216_2 so that mutual spacing is constant irrespective of rotation angle. Then, the shafts 216_1 and 216_2 give the vane units 220_1 and 220_2 rotation in opposite directions to each other, resulting in force that moves the object to be processed OBJ, which is intermediate between the vanes units 220_1 and 220_2, towards the axial direction of the shafts 216_1 and 216_2. In other words, each of the vane units 220_1 and 220_2 functions as a screw.

The motors 218_1 and 218_2 are mechanically combined with the shafts 216_1 and 216_2, respectively, and each of them transmits generated rotational movement to the shafts 216_1 and 216_2. Then, responding to an operation command from the measurement control unit 803, the motors 218_1 and 218_2 operates or stops in synchronization.

The measurement control unit 803 gives the sensor unit an emit command and emits incident sonic wave to the object to be processed OBJ from the sensor unit, and measures viscoelastic property of the object to be processed OBJ based on temporal waveform of reflected sonic wave to be received by the sensor unit 2. In addition, the measurement control unit 803 changes an operation command to be given to the motors 218_1 and 218_2, based on viscoelastic property of the measured object to be processed OBJ.

The sensor unit 2 is arranged in close contact with the delaying member 3, and emits incident sonic wave to inside of the kneading container 214 through the delaying member 3, responding to an emit command from the measurement control unit 803. Then, the sensor unit 2 receives reflected sonic wave generated by the incident sonic wave being reflected on a boundary between the object to be processed OBJ and the delaying member 3, and outputs its temporal waveform to the measurement control unit 803. As any other things are similar to Embodiment 7 of the present invention, we do not repeat detailed description.

The delaying member 3 is such arranged that its one side is integrated with the inner surface of the kneading container 214, while it is in close contact with the sensor unit 2 on the other side.

In addition, as more detailed configuration of the measurement control unit 803, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 33 shows one example of frequency characteristic of the loss elastic modulus to an object to be processed OBJ composed of a mixture of raw materials for manufacturing fish sausage. It is also assumed that rotating speed is constant during rotation of the shafts 216_1 and 216_2.

With reference to FIG. 33, the measurement control unit 803 according to Embodiment 9 of the present invention measures the loss elastic modulus (viscosity) as viscoelastic property of the object to be processed OBJ.

On the one hand, the object to be processed OBJ generates mixing action due to agitating force resulting from rotation of the vane units 220_1 and 220_2 that involves crush and fracture in initial state, and kneading action after it is fully mixed. Consequently, the loss elastic modulus of the object to be processed OBJ in the frequency domain totally shifts to high-frequency region, and a degree of frequency distribution expands. Thus, in the case of manufacturing fish sausage, etc., it is desirable that mixing and kneading be performed so that frequency whose loss elastic modulus takes a maximum value in the frequency domain falls within a threshold range, in order to improve workability in subsequent continuous molding process or heating process, etc.

Then, upon receipt of a start process command, the measurement control unit 803 gives an operation command to the motors 218_1 and 218_2, respectively, measures the frequency characteristic of the loss elastic modulus for the object to be processed OBJ, and continues its operation till the frequency in which the measured loss elastic modulus becomes maximum falls within the predetermined threshold range.

In addition, the display output unit 16 displays the frequency characteristic of the loss elastic modulus and its temporal change, as shown in FIG. 33, at any time and/or outputs data thereof to the external. In addition, the display output unit 16 displays information on commands such as an operation command or stop command, etc., to be given to the motors 218_1 and 218_2 and/or outputs data thereof to the external.

(Process Flow)

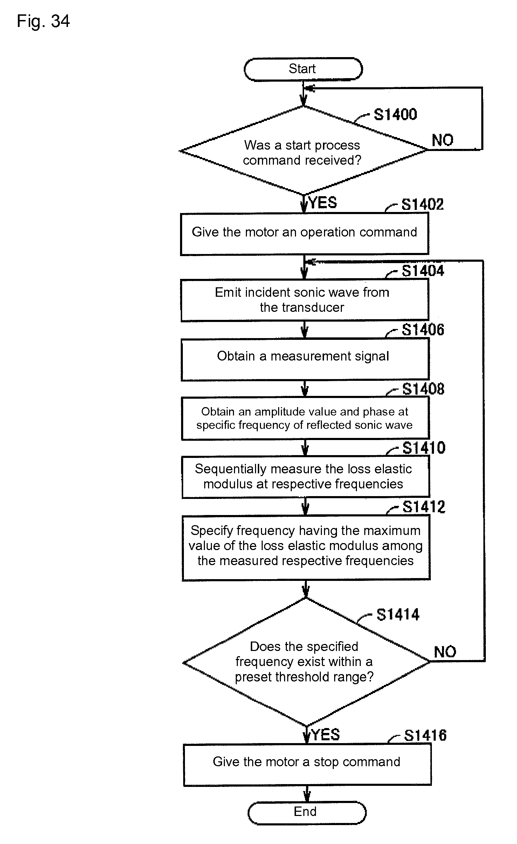

FIG. 34 shows the process flow related to the process control according to Embodiment 9 of the present invention. In addition, according to the process for obtaining reference data as shown in FIG. 21, reference data that serves as a reference is previously obtained in the storage unit 14.

With reference to FIG. 18 and FIG. 34, the calculating unit 11 determines whether or not it received a start process command via the input unit 18 (step S1400). On the one hand, the user gives the start process command after inputting raw material into the kneading container 140.

When it did not receive the start process command (NO in step S1400), the calculating unit 11 waits till it receives the start process command (step S1400).

When it received the start process command (YES in step S1400), the calculating unit 11 gives an operation command to the motors 218_1 and 218_2 (step S1402). Then, responding to operation of the motors 218_1 and 218_2, the vane units 20_1 and 220_2 starts kneading of an object to be processed OBJ. Then, the calculating unit 11 gives the sensor unit 2 an emit command and emits incident sonic wave from the transducer 20 (step S1404).

Then, the calculating unit 11 obtains from the temporal data memory unit 12 a measurement signal indicative of temporal intensity change in reflected sonic wave received by the transducer 20 (step S1406). Then, the calculating unit 11 performs FFT process on the obtained measurement signal, and obtains amplitude characteristic and phase characteristic in the frequency domain of the reflected sonic wave (step S1408). The calculating unit 11 further obtains from the storage unit 14 an amplitude value and phase stored as reference data, and sequentially measures the loss elastic modulus of the object to be processed OBJ at each frequency with them being as a reference (step S1410).

Then, the calculating unit 11 identifies the frequency that takes maximum value, among the loss elastic modulus at respective measured frequencies (step S1412). Furthermore, the calculating unit 11 determines whether the identified frequency falls within a predetermined threshold range (step S1414).

If the identified frequency does not exist in the preset threshold range (NO in step S1414), the calculating unit 11 gives an emit command to the sensor unit 2 again, and emits incident sonic wave from the transducer 20 (step S1404). In the following, steps S1406 to S1414 are repeated.

If the identified frequency falls within the preset threshold range (YES in step S1414), the calculating unit 11 gives a stop command to the motors 218_1 and 218_2 (step S1416). Then, responding to stoppage of the motors 218_1 and 218_2, kneading by the vane units 220_1 and 220_1 terminates. Then, the calculating unit 11 ends the process.

In the process flow described above, although we described the case in which a determination is made based on the frequency at which the loss elastic modulus in the frequency domain takes a maximum value, the configuration may be such that a determination is made based on a maximum value of the loss elastic modulus in the frequency domain or on the frequency range that exceeds a predetermined threshold.

According to Embodiment 9 of the present invention, the sensor unit emits incident sonic wave to the object to be processed through the delaying member that is arranged integrally on the inner surface of the kneading container, and receives reflected sonic wave generated by the incident sonic wave being reflected on a boundary between the object to be processed and delaying member. Then, the measurement control unit measures the loss elastic modulus, which is one of viscoelastic properties of the object to be processed, on respective frequency components, based on reflected sonic wave received by the sensor unit, and controls rotation or stoppage of the vane units based on the measurement result. Thus, any object to be processed whose viscoelastic property varies under mixing action and kneading action by the 2 vane units can be controlled so that desired viscoelastic property can be obtained. Hence, the process unit capable of performing, depending on change in the viscoelastic property, optimum processing on any object to be processed such as fish sausage whose frequency characteristic of viscoelastic property varies under mixing action and kneading action, so that desired viscoelastic property is obtained can be implemented.

Also, according to Embodiment 9 of the present invention, viscoelastic property of more than one frequency components can be measured in addition to viscoelastic property in a single frequency. Thus, the process unit capable of performing optimum processing based on frequency characteristic of viscoelastic property, i.e., changes in overall characteristics, instead of temporal change of viscoelastic property in a single frequency can be implemented.

[Embodiment 10]

In Embodiment 10 of the present invention as described above, we described the configuration in which viscoelastic property is changed by rolling the object to be processed. On the one hand, in Embodiment 10 of the present invention, we describe the configuration in which viscoelastic property is changed by rolling and heating an object to be processed.

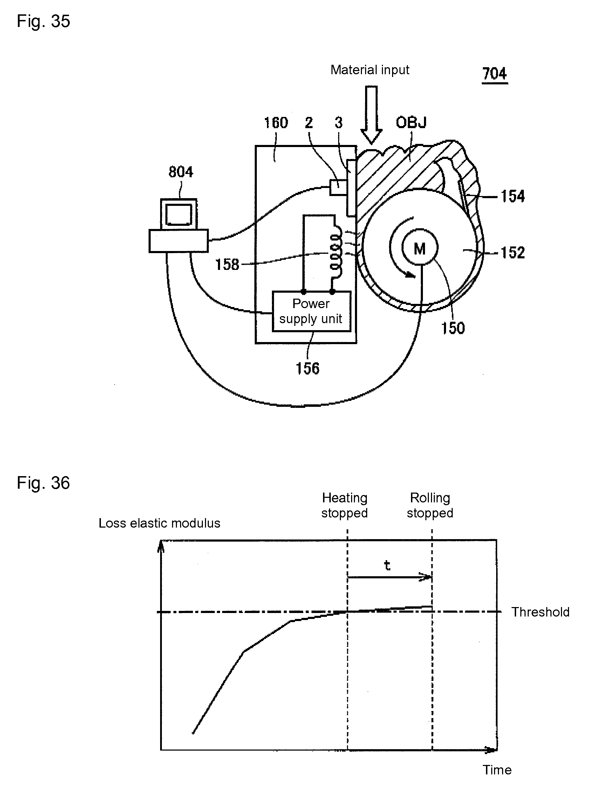

FIG. 35 shows the device configuration of a process unit 704 according to Embodiment 10 of the present invention.

With reference to FIG. 35, the process unit 704 includes a measurement control unit 804, block unit 160, sensor unit 2, delaying unit 3, motor 150, roller 152, scraper 154, power supply unit 156, and heat generating unit 158. Then, under rotational pressure from the roller 152, the process unit 704 not only rolls an object to be processed OBJ, which exists between the roller and the block unit 160, but also gives the object to be processed OBJ heat generated by the heat generating unit 158 built in the block unit 160. As such, the process unit 704 changes viscoelastic property of the object to be processed OBJ by giving rolling action and heating action to the object to be processed OBJ.

Products to be manufactured by such the process unit 704 include rubber, by way of example. For instance, when rubber for tires is manufactured, a mixture of natural rubber, synthetic rubber, sulfur, carbon black, silicon dioxide, pigments, etc. is used as an object to be processed OBJ. In the following, we mainly describe the case of manufacturing rubber for tires.

The block unit 160 is arranged to receive pressure from the roller 152 on its one side. Then, inside the surface abutting the roller 152 are arranged the sensor unit 2 and delaying member 3, and the power supply unit 156 and heat generating unit 158.

The roller 152 is arranged so that the outside diameter surface always abuts the block unit 160 irrespective of angle of rotation, and rotates under drive force from the motor 150. Then, the roller 152 stretches the object to be processed OBJ while giving the object to be processed OBJ pressure by its own rotation.

The motor 150 is mechanically combined with the roller 152 and transmits rotational movement generated by itself to the roller 152. Then, responding to an operation command from the measurement control unit 804, the motor 150 operates or stops or changes the rotating speed during operation.

The scraper 157 is arranged so that one end thereof abuts the surfaced of the roller 152, and separates the object to be processed OBJ, which is stuck to the roller 152 and rotating, from the roller 152. In fact, the scraper 154 removes the object to be processed OBJ attached to the surface of the roller 152 and implements continuous rolling by the roller 152.

The heat generating unit 158 converts supplied electricity received from the power supply unit 156 into thermal energy, and gives that thermal energy to the object to be processed OBJ through a contact surface with the block unit 160 and roller 152. By way of example, the heat generating unit 158 includes heating wire or IH equipment (IH: Induction Heating), etc.

In response to a command from the measurement control unit 804, the power supply unit 156 adjusts power to be supplied to the heat generating unit 158. In addition, the power supply unit 156 supplies power corresponding to the configuration of the heat generating unit 158, supplies direct current or commercial alternating current, by way of example, if the heat generating unit 158 includes heating wire, and supplies alternating current of high frequency if the heat generating unit 158 includes IH equipment.

The delaying member 3 is arranged so that its one side is integrated with the surface abutting the block unit 160 and object to be processed OBJ, and is in close contact with the sensor unit 2 on other side. As any other things are similar to Embodiment 7 of the present invention, we do not repeat detailed description.

The sensor unit 2 is positioned in close contact with the delaying member 3, and emits incident sonic wave to the object to be processed OBJ through the delaying member 3, responding to an emit command from the measurement control unit 804. Then, the sensor unit 2 receives reflected sonic wave generated by the incident sonic wave being reflected on a boundary surface between the object to be processed OBJ and delaying member 3, and outputs its temporal waveform to the measurement control unit 804. As any other things are similar to Embodiment 7 of the present invention, we do not repeat detailed description.

In addition, as more detailed configuration of the measurement control unit 804, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 36 shows one example of temporal change in the loss elastic modulus (viscosity) of the object to be processed OBJ consisting of a mixture of raw materials for manufacturing rubber for tires. In addition, the rotating speed is constant during operation of the roller 152, and thermal energy per unit time to be given from the heat generating unit 158 is also constant while being energized.

With reference to FIG. 36, the measurement control unit 804 according to Embodiment 10 of the present invention measures the loss elastic modulus as viscoelastic property of the object to be processed OBJ.

On the one hand, when the object to be processed OBJ is subjected to rolling action by the roller 152 and heating action from the heat generating unit 158, its constituents diffuse and the loss elastic modulus increases monotonously. In general, in the case of manufacturing rubber for tires, it is known that rubber for tires of good quality can be manufactured by giving rolling action and heating action till an object to be processed OBJ composed of raw materials reaches predetermined loss elastic modulus, then stopping the heating action and giving only rolling action.

Thus, upon receipt of a start process command, the measurement control unit 804 not only gives an operation command to the motor 150, but also gives an energize command to the power supply unit 156. Then, rolling by the roller 152 and heating by the heat generating unit start.

Then, when the loss elastic modulus of the object to be processed OBJ reaches a predetermined threshold, the measurement control unit 804 stops heating by the heat generating unit 158 by first giving the power supply unit 156 a cutoff command, and cutting off power supply from the power supply unit 156. Then, if a predetermined period of time has passed after it gave the cutoff command to the power supply unit 156, the measurement control unit 804 gives the motor 150 a stop command and stops rolling by the roller 152.

In addition, the display output unit 16 displays the temporal change in the loss elastic modulus, as shown in FIG. 19, at any time and/or outputs data thereof to the external. In addition, the display output unit 16 displays information on commands such as an operation command or stop command, etc., to be given to the motor 150 and an energize command or cutoff command to be given to the power supply unit 156, and/or outputs data thereof to the external.

(Process Flow)

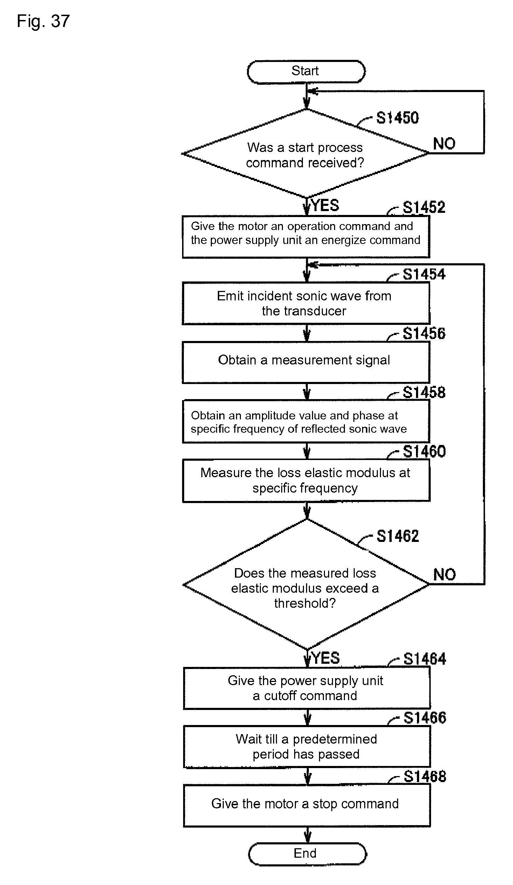

FIG. 37 shows the process flow related to the process control according to Embodiment 10 of the present invention. In addition, according to the process for obtaining reference data as shown in FIG. 21, reference data that serves as a reference is previously obtained in the storage unit 14.

With reference to FIG. 18 and FIG. 37, the calculating unit 11 determines whether or not it received a start process command via the input unit 18 (step S1450). On the one hand, the user gives the start process command after inputting raw material between the block unit 160 and the roller 152.

When it did not receive the start process command (NO in step S150), the calculating unit 11 waits till it receives the start process command (step S1450).

When it received the start process command (YES in step S1450), the calculating unit 11 gives an operation unit to the motor 150 and an energize command to the power supply unit 156 (step S1452). Then, the roller 152 starts rolling the object to be processed OBJ responding to operation of the motor 150, and the heat generating unit 158 starts heating the object to be processed OBJ responding to the power supply of the power supply unit 156. Then, the calculating unit 11 gives the sensor unit 2 an emit command and emits incident sonic wave from the transducer 20 (step S1454).

Then, the calculating unit 11 obtains from the temporal data memory unit 12 a measurement signal indicative of temporal intensity change in reflected sonic wave received by the transducer 20 (step S1456). Then, the calculating unit 11 performs FFT process on the obtained measurement signal, and obtains an amplitude value and phase at a specific frequency of the reflected sonic wave (step S1458). The calculating unit 11 further obtains from the storage unit 14 an amplitude value and phase stored as reference data, and measures the loss elastic modulus of the object to be processed OBJ at the specific frequency with them being as a reference (step S1460).

Then, the calculating unit 11 determines whether or not the measured loss elastic modulus has exceeded the threshold (step S1462).

When the loss elastic modulus has not exceeded the threshold (NO in step S1462), the calculating unit 11 gives the sensor unit 2 an emit command again and emits incident sonic wave from the transducer 20 (step S1454). In the following, steps S1456 to S1462 are repeated.

When the loss elastic modulus has exceeded the threshold (YES in step S1462), the calculating unit 11 gives the power supply unit 156 a cutoff command (step S1464). Then, with the cutoff of power supply from the power supply unit 156, heating by the heat generating unit 158 ends.

In addition, the calculating unit 11 waits till a predetermined period of time passes (step S1466). Then, the calculating unit 11 gives a stop command to the motor 150 (step S1468). Then, responding to stoppage of the motor 150, rolling by the roller 152 stops. The calculating unit 11 terminates the process.

According to Embodiment 10 of the present invention, the sensor unit emits incident sonic wave to an object to be processed through the delaying member that is positioned with its one side integrated with the surface abutting block unit and object to be processed, and receives reflected sonic wave generated by the incident sonic wave being reflected on a boundary between the object to be processed and the delaying member. Then, the measurement control unit measures the loss elastic modulus, which is one of viscoelastic properties of the object to be processed, based on the reflected sonic wave the sensor unit received, and controls operation or stoppage of the roller and heating or stopping of the heat generating unit, based on the measurement result thereof. Thus, any object to be processed whose viscoelastic property changes under the rolling action by the block unit and roller and heating by the heat generating unit can be controlled so that desired viscoelastic property can be obtained. Hence, for any object to be processed such as rubber for tires whose viscoelastic property increases monotonously under rolling action and heating action, the process unit capable of performing, depending on change in the viscoelastic property, optimum processing by independently controlling timing of stopping the roller and timing of stopping a heating element, respectively, so that predetermined viscoelastic property is obtained can be implemented.

[Embodiment 11]

In Embodiments 4 to 7 of the present invention as described above, we mainly described the configuration in which viscoelastic property is changed by giving external action to any object to be processed such as a solid substance or semisolid substance. On the one hand, in Embodiment 11 of the present invention, we mainly describe the configuration in which viscoelastic property is changed by giving external action to any object to be processed having the fluidity.

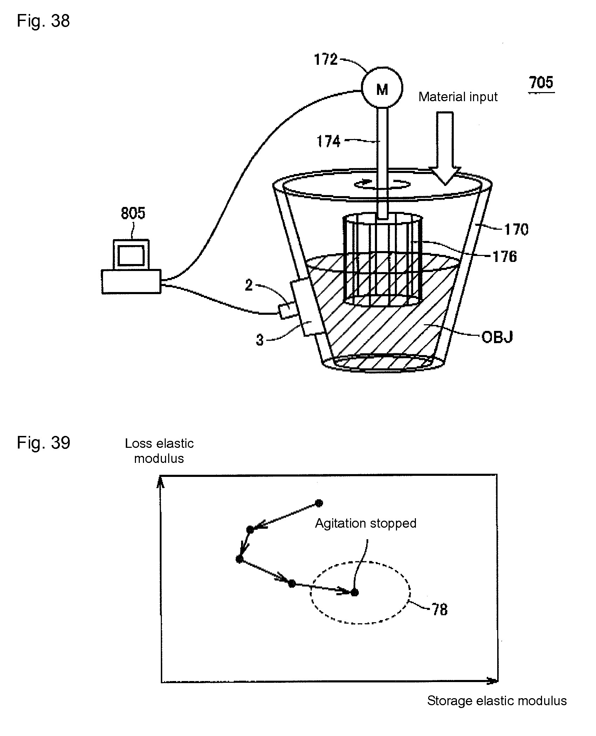

FIG. 38 shows the schematic configuration of a process unit 705 according to Embodiment 11 of the present invention.

With reference to FIG. 38, the process unit 705 includes a measurement control unit 805, agitating container 170, sensor unit 2, delaying member 3, motor 172, drive shaft 174, and impeller 76. Then, while rotating the impeller 176 and thereby agitating an object to be processed OBJ inputted into the agitating container 170, the process unit 705 emits incident sonic wave to the object to be processed OBJ from the sensor unit 2, and measures viscoelastic property of the object to be processed OBJ based on reflected sonic wave generated by the incident sonic wave. In addition, when the object to be processed OBJ reaches desired viscoelastic property, the process unit 705 terminates agitation of the object to be processed OBJ. By way of example, the process unit 705 can receive a mixture of uncooked eggs, oil, and vinegar and manufacture mayonnaise. Similarly, the process unit 705 can manufacture cake dough, piecrust, Baumkuchen dough, etc., from a mixture of uncooked eggs, wheat flour, sugar and essence. It can further manufacture chocolate, pasta dough, macaroni dough, noodle dough, etc. In the following, we mainly describe the case of manufacturing mayonnaise in detail.

The agitating container 170 is shaped like a cup with an opening on its upper part and receives an object to be processed OBJ composed of raw material from the opening on the upper part.

The impeller 176 is positioned so that its rotary shaft is in vertical direction, positioned at the center of the agitating container 170, and receives under drive force from the motor 172. Then, the impeller 176 gives swinging force into the object to be processed OBJ by its own rotation and agitates the object to be processed OBJ.

The drive shaft 174 gives the impeller 176 the drive force to be generated by the motor 172. If the rotating speed of the motor 172 is far different from that of the impeller 176 suitable for the object to be processed OBJ, an intermediate gear may be inserted between the motor 172 and the impeller 176.

The motor 172 is mechanically combined with the drive shaft 174 and transmits through drive shaft 174 rotational movement generated by itself to the impeller 176. Then, responding to an operation command from the measurement control unit 805, the motor 172 operates or stops or changes the rotating speed during operation.

The measurement control unit 805 gives the sensor unit 2 an emit command, emits incident sonic wave from the sensor unit 2 to the object to be processed OBJ, and measures viscoelastic property of the object to be processed OBJ based on temporal waveform of reflected sonic wave received by the sensor unit 2. In addition, the measurement control unit 805 changes an operation command to be given to the motor 172, based on viscoelastic property of the measured object to be processed OBJ.

The sensor unit 2 is arranged in close contact with the delaying member 3, and emits incident sonic wave into the agitating container 170 through the delaying member 3, responding to an emit command from the measurement control unit 805. Then, the sensor unit 2 receives reflected sonic wave generated by the incident sonic wave being reflected on a boundary between the object to be processed OBJ and delaying member 3, and outputs its temporal waveform to the measurement control unit 805. As any other things are similar to Embodiment 7 of the present invention, we do not repeat detailed description.

The delaying member 3 is arranged so that its one side is integrated with the inner surface of the agitating container 170, and is in close contact with the sensor unit 2 on other side.

In addition, as more detailed configuration of the measurement control unit 805, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 39 shows one example of temporal change with the storage elastic modulus and loss elastic modulus on the object to be processed OBJ composed of a mixture of raw materials for manufacturing mayonnaise. In addition, it is assumed that the rotating speed of the impeller 176 is constant during operation.

With reference to FIG. 39, the measurement control unit 805 according to Embodiment 11 of the present invention simultaneously measures the storage elastic modulus and loss elastic modulus as viscoelastic property of the object to be processed OBJ.

On the one hand, the object to be processed OBJ generates emulsification as interaction among molecules in the material changes, due to agitating action involved in rotation of the impeller 176. Thus, depending on rotation time of the impeller 176, both the storage elastic modulus and the loss elastic modulus of the object to be processed OBJ change. In general, in the case of manufacturing mayonnaise, it is desirable that either of the storage elastic modulus and the loss elastic modulus fall within a predetermined threshold range.

Then, the measurement control unit 805 determines whether or not the storage elastic modulus and loss elastic modulus shown on the same two-dimensional coordinates have reached the predetermined threshold range 78, and stops agitation by the impeller 176 when they reach the threshold range 78.

In addition, the display output unit 16 displays temporal change in a relationship between the storage elastic modulus and loss elastic modulus as shown in FIG. 39 at any time and/or outputs data thereof to the external. In addition, the display output unit 16 displays information on an operation command or stop command to be given to the motor 172 and/or outputs data thereof to the external.

(Process Flow)

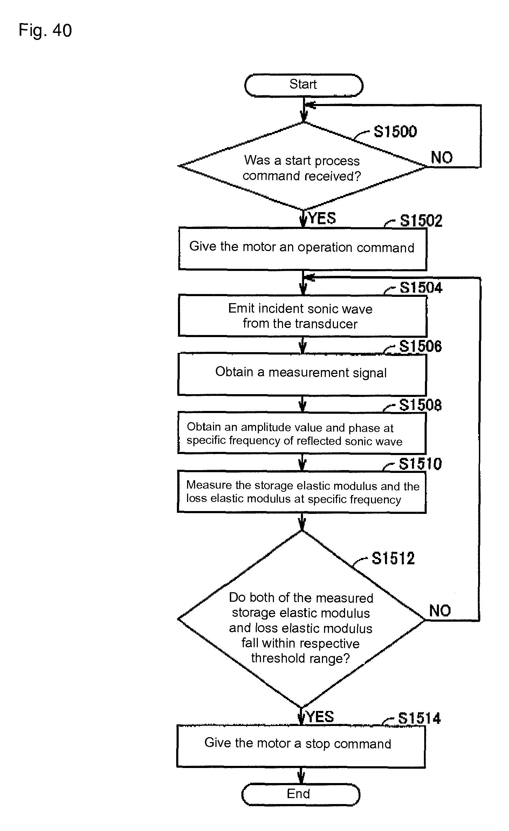

FIG. 40 shows the process flow related to the process control according to Embodiment 11 of the present invention. In addition, according to the process for obtaining reference data as shown in FIG. 21, reference data that serves as a reference is previously obtained in the storage unit 14.

With reference to FIG. 18 and FIG. 40, the calculating unit 11 determines whether or not it received a start process command via the input unit 18 (step S1500). On the one hand, a user gives the start process command after inputting raw material into the agitating container 170.

When it did not receive the start process command (NO in step S1500), the calculating unit 11 waits till it receives the start process command (step S1500).

When it received the start process command (YES in step S1500), the calculating unit 11 gives the motor 172 an operation command (step S1502). Then, responding to operation of the motor 172, the impeller 172 starts agitating the object to be processed OBJ. Then, the calculating unit 11 gives the sensor unit 2 an emit command and emits incident sonic wave from the transducer 20 (step S1504).

Then, the calculating unit 11 obtains from the temporal data memory unit 12 a measurement signal indicative of temporal intensity change in reflected sonic wave received by the transducer 20 (step S1506). Then, the calculating unit 11 performs FFT process on the obtained measured signal and obtains an amplitude value and phase in a specific frequency of reflected sonic wave (step S1508). In addition, the calculating unit 11 obtains from the storage unit 14 an amplitude value and phase stored as reference data in the storage unit 14, and measures the storage elastic modulus and loss elastic modulus at the specific frequency with them being as a reference (step S1510).

Then, the calculating unit 11 determines whether or not either of the measured storage elastic modulus and loss elastic modulus fall within respective threshold ranges (step S1512).

If any of the storage elastic modulus and loss elastic modulus does not fall within the respective threshold ranges (NO in step S1512), the calculating unit 11 gives the sensor unit 2 an emit command again and emits incident sonic wave from the transducer 20 (step S1504). In the following, steps S1506 to S1512 are repeated.

If either of the storage elastic modulus and loss elastic modulus fall within the respective threshold ranges (YES in step S1512), the calculating unit 11 gives the motor 172 a stop command (step S1514). Then, responding to stoppage of the motor 172, agitation by the impeller 176 ends. Then, the calculating unit 11 terminates the processing.

Additionally, the above processing may be similarly applied to cake dough, piecrust, Baumkuchen dough, chocolate, pasta dough, macaroni dough, noodle dough, etc. in addition to mayonnaise.

In the above description, although we described the configuration in which the storage elastic modulus and loss elastic modulus are measured simultaneously, only the loss tangent, which is a proportion of the loss elastic modulus to the storage elastic modulus, may be measured instead of the storage elastic modulus and loss elastic modulus. In this case, although absolute values of the storage elastic modulus and loss elastic modulus cannot be obtained, the configuration can be further simplified, because all that is required is to measure and determine 1 kind of value for any object to be processed on which a determination can be made based on a relative relationship between the loss elastic modulus and storage elastic modulus.

According to Embodiment 11 of the present invention, the sensor unit emits incident sonic wave to the object to be processed through the delaying member that is positioned integrally with the inner surface of the agitating container, and receives reflected sonic wave generated by the incident sonic wave being reflected between the object to be processed and delaying member. Then, the measurement control unit simultaneously measures the storage elastic modulus and loss elastic modulus, which are viscoelastic properties of the object to be processed, based on the reflected sonic wave the sensor unit received, and controls rotation or stoppage of the impeller based on the measurement result thereof. Thus, any object to be processed both the storage elastic modulus and the loss elastic modulus of which vary under agitating action due to rotation of the impeller can be controlled so that desired viscoelastic property can be obtained. Hence, the process unit capable of performing, depending on change in viscoelastic property, optimum processing on any object to be processed, such as mayonnaise, both the storage elastic modulus and loss elastic modulus of which change under agitating action so that viscoelastic property falls within the predetermined threshold range can be implemented.

[Embodiment 12]

In Embodiment 11 of the present invention as described above, we described the configuration in which viscoelastic property is changed by using rolling action and heating action at the same time. On the one hand, in Embodiment 12 of the present invention, we describe the configuration in which control is performed so as to be able to adapt to viscoelastic property that has fluctuated from a target value, while performing control so as to keep viscoelastic property constant by the heating action.

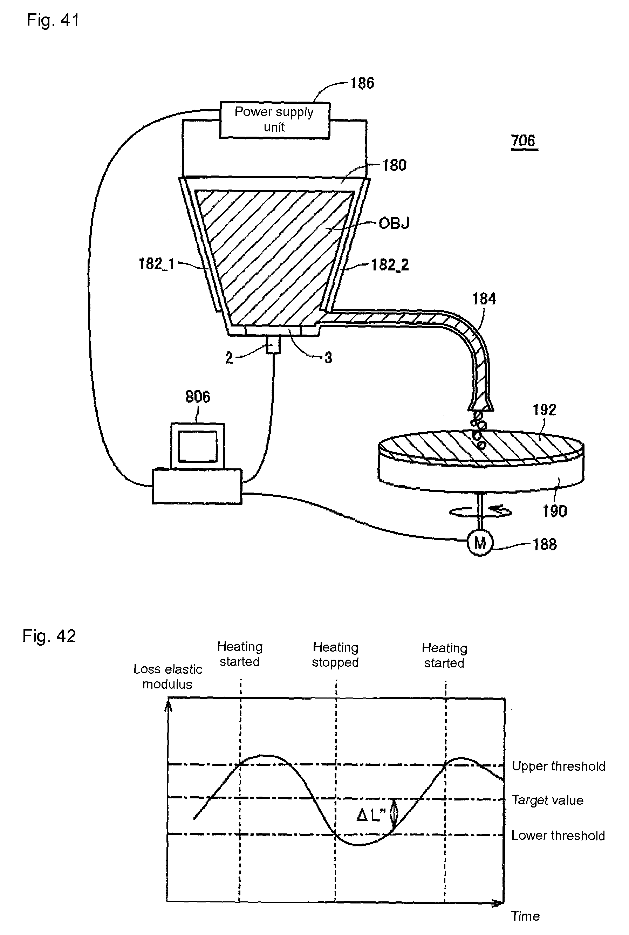

FIG. 41 shows the schematic configuration of a process unit 703 according to Embodiment 12 of the present invention.

With reference to FIG. 41, the process unit 706 includes a measurement control unit 806, retaining container 180, dripping pipe 184, sensor unit 2, delaying member 3, heat generating units 182_1, 182_2, power supply unit 186, motor 188, and rotating table 190. Then, the process unit 706 gives an object to be processed OBJ composed of fluid heat generated from the heat generating units 182_1, 182_2 arranged on the sides of the retaining container 180. In addition, the process unit 706 has the object to be processed OBJ drip onto the surface of a work 192 positioned on the rotating table 190, through the dripping pipe 184, and apply the object to be processed OBJ over the entire surface of the work 192 by utilizing centrifugal force generated in the work 192 as the rotating table 190 rotates. Such the approach of using centrifugal force and uniformly applying the object to be processed OBJ is also called spin coating. In addition, the process unit 706 optimizes thickness of film to be formed on the surface of the work 192 by controlling heat generated from the heat generating units 182_1 and 182_2 so that the object to be processed OBJ has desired viscoelastic property, and by controlling centrifugal force to be generated on the work 192, i.e., the number of rotations of the rotating table 190. By way of example, the process unit 706 implements a part of exposure process in manufacturing of a semiconductor circuit, by using a photosensitizing agent (photoresist) as the object to be processed OBJ and using a semiconductor wafer as the work 192. In addition, using organic dye as an object to be processed OBJ and polycarbonate substrate as a work 192, the process unit 706 can manufacture optical disks onto which writing is possible, such as CD-R, CD-RW, DVD-R, DVD+R, DVD-RW, DVD+RW, DVD-RAM, etc. In the following, we mainly describe in detail the case of implementing a part of the exposure process in the manufacture of semiconductor circuit.

The retaining container 180 is shaped like a cup with an opening on its upper part and receives an object to be processed OBJ such as photosensitizing agent from the opening on the upper part.

The dripping pipe 184 is coupled to the bottom of the retaining container 180 and causes the object to be processed OBJ in the retaining container 180 to drip from an extension of the rotary shaft of the rotating 190 toward the rotating table 190.

The rotating table 190 is arranged on the lower side of the dripping pipe 184 so that its rotary shaft is in vertical direction, and receives a work 192 between its top surface and the dripping pipe 184. Then, by rotating itself under drive force from the motor 188, the rotating table 190 causes the work 192 to rotate, and generates centrifugal force in the work 192.

The motor 188 is mechanically combined with the rotating table 190 and transmits generated rotational movement to the rotating table 190. Then, responding to a rotating speed command from the measurement control unit 806, the motor 188 has its rotating speed change freely.

The heat generating units 182_1 and 182_2 are arranged on the sides of the retaining container 180, converts supplied electricity received from the power supply unit 186 into thermal energy, and gives the thermal energy to the object to be processed OBJ through side walls of the retaining container 180. As any other things are similar to the heat generating unit 158 of Embodiment 10 of the present invention, we do not repeat detailed description.

The power supply unit 186 adjust power to be supplied to the heat generating units 182_1 and 182_2, responding to a command from the measurement control unit 806. As any other things are similar to the power supply unit 156 of Embodiment 10 of the present invention, we do not repeat detailed description.

The measurement control unit 806 gives the sensor unit 2 an emit command, emits incident sonic wave from the sensor unit 2 to the object to be processed OBJ, and measures viscoelastic property of the object to be processed OBJ based on temporal waveform of reflected sonic wave the sensor unit 2 receives. Then, the measurement control unit 806 not only gives the power supply unit 156 an energize command or cutoff command based on viscoelastic property of the measured object to be processed OBJ, but also gives the motor 188 a rotating speed command.

In response to the emit command from the measurement control unit 806, the sensor unit 2 is arranged in close contact with the delaying member 3, and emits incident sonic wave into the retaining container 180 through the delaying member 3. Then, the sensor unit 2 receives reflected sonic wave generated by the incident sonic wave being reflected on a boundary between the object to be processed OBJ and delaying member 3, and outputs the temporal waveform to the measurement control unit 806. As any other things are similar to Embodiment 7 of the present invention as described above, we do not repeat detailed description.

The delaying member 3 is arranged so that its one side is integrated with the bottom of the retaining container 180, and is in close contact with the sensor unit on other side.

In addition, as more detailed configuration of the measurement control unit 806, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 42 shows one example of temporal change of the loss elastic modulus to the object to be processed OBJ consisting of a photosensitizing agent.

With reference to FIG. 42, the measurement control unit 806 according to Embodiment 12 of the present invention measures the loss elastic modulus (viscosity) as viscoelastic property of the object to be processed OBJ.

On the one hand, for the object to be processed OBJ, due to increase of temperature, molecules are excited and the loss elastic modulus (viscosity) is lowered, while due to reduction in temperature, the loss elastic modulus increases adversely. Thus, if there is no heat supplied from the external, heat of the object to be processed OBJ is dispersed through the retaining container 180 and thus the loss elastic modulus of the processed OBJ decreases.

Now, when the measured loss elastic modulus exceeds the upper threshold, the measurement control unit 806 gives an energize command to the power supply unit 186, and starts heating by the heat generating units 182_1 and 182_2. When the measured loss elastic modulus falls below the lower threshold, the measurement control unit 806 gives a cutoff command to the power supply unit 186, and stops heating by the heat generating units 182_1 and 182_2. As such, the measurement control unit 806 controls a heating period of the heat generating units 182_1 and 182_2, so that the loss elastic modulus of the object to be processed OBJ maintains a target value.

Furthermore, in order to avoid possible effects of variations in the loss elastic modulus that cannot be suppressed by heating control of the heating units 182_1 and 182_2, the measurement control unit 806 controls the rotating speed of the rotating table 190. In fact, as the degree of diffusion is relatively low in the condition in which the loss elastic modulus of the object to be processed OBJ is low, the centrifugal force should be increased by accelerating the rotating speed of the rotating table 190. To the contrary, as the degree of diffusion is relatively high in the condition in which the loss elastic modulus of the object to be processed OBJ is high, the centrifugal force should be lowered by decelerating the rotating speed of the rotating table 190. Now, the measurement control unit 806 calculates a deviation $\Delta L''$ between the measured loss elastic modulus and the target value, and gives a rotating speed command to the motor 188 so that the reference rotating speed is increased or decreased only by the rotating speed corresponding to the deviation $\Delta L''$. For instance, as the centrifugal force is proportional to the squire of raised rotating speed (angular speed), the rotating speed corresponding to the loss elastic modulus of the object to be processed OBJ can be implemented by adding to or subtracting from the reference rotating speed a value that is obtained by multiplying the square root of the deviation $\Delta L''$ by a predetermined conversion factor. Additionally, method of obtaining the rotating speed corresponding to the deviation $\Delta L''$ can alternatively be implemented by PID control or fuzzy control, etc. in addition to the method described above.

In addition, the display output unit 16 displays temporal change in the loss elastic modulus as shown in FIG. 42 at any time and/or outputs data thereof to the external. In addition, the display output unit 16 displays information on a rotating speed command to be given to the motor 188, and an energize command or cutoff command to be given to the power supply unit 186 and/or outputs data thereof to the external.

(Process Flow)

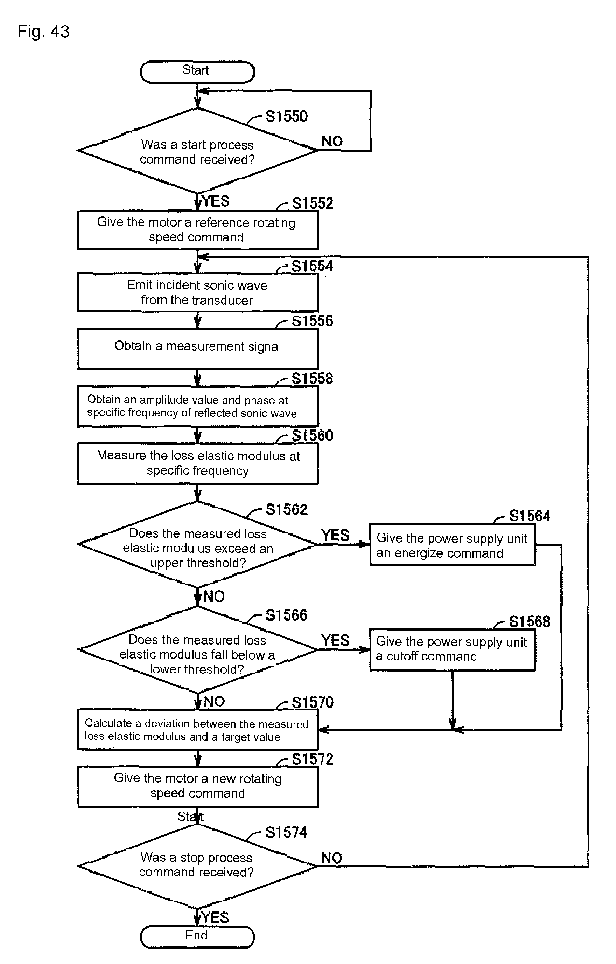

FIG. 43 shows the process flow related to the process control according to Embodiment 12 of the present invention. In addition, according to the process for obtaining reference data as shown in FIG. 21, reference data that serves as a reference is previously obtained in the storage unit 14.

With reference to FIG. 18 and FIG. 43, the calculating unit 11 determines whether or not it received a start process command via the input unit 18 (step S1550). On the one hand, a user gives the start process command after inputting raw material into the retaining container 180.

When it did not receive the start process command (NO in step S1550), the calculating unit 11 waits till it receives the start process command (step S1550).

When it received the start process command (YES in step S1550), the calculating unit 11 gives the motor 188 a reference rotating speed command (step S1552). Then, responding to rotation of the motor 188, the rotating table 190 and work 192 start rotating. Then, the calculating unit 11 gives the sensor unit 2 an emit command, and emits incident sonic wave from the transducer 20 (step S1554).

Then, the calculating unit 11 obtains from the temporal data memory unit 12 a measurement signal indicative of temporal intensity change in reflected sonic wave received by the transducer 20 (step S1556). Then, the calculating unit 11 performs FFT process on the obtained measured signal and obtains an amplitude value and phase in a specific frequency of reflected sonic wave (step S1558). In addition, the calculating unit 11 obtains from the storage unit 14 an amplitude value and phase stored as reference data in the storage unit 14, and measures the loss elastic modulus at the specific frequency with them being as a reference (step S1560).

Then, the calculating unit 11 determines whether or not the measured loss elastic modulus has exceeded the upper threshold (step S1562).

When the loss elastic modulus has exceeded the upper threshold (YES in step S1562), the calculating unit 11 gives the power supply unit 186 an energize command (step S1564). Then, responding to power supply of the power supply unit 186, the heat generating units 182_1 and 182_2 starts heating the object to be processed OBJ.

When the loss elastic modulus has not exceeded the upper threshold (NO in step S1562), the calculating unit 11 determines whether or not the measured loss elastic modulus has fallen below the lower threshold (step S1566).

When the loss elastic modulus has fallen below the lower threshold (YES in step S1566), the calculating unit 11 gives the power supply unit 186 cutoff command (step S1568). Then, power supply from the power supply unit 186 is cut off, and heating by the heat generating units 182_1 and 182_2 stops.

When the loss elastic modulus has not fallen below the lower threshold (NO in step S1566) or following step S1564 or S1568, the calculating unit 11 calculates a deviation $\Delta L''$ between the measured loss elastic modulus and a target value (step S1570). Then, the calculating unit 11 calculates a corrected value of number of rotations based on the calculated deviation $\Delta L''$ and gives it to the motor 188 as a new rotating speed command (step S1572).

Then, the calculating unit 11 determines whether or not it received a stop process command via the input unit (step S1574).

When it did not receive the stop process command (NO in step S1574), the calculating unit 11 gives the sensor unit 2 an emit command again, and emits incident sonic wave from the transducer 20(step S1554). In the following, steps S1556 to S1574 are repeated.

When it received the stop process command (YES in step S1574), it terminates the processing.

According to Embodiment 12 of the present invention, the sensor unit emits incident sonic wave to the object to be processed through the delaying member that is positioned integrally with the bottom face of the retaining container, and receives reflected sonic wave generated by the incident sonic wave being reflected on a boundary between the object to be processed and delaying member. Then, the measurement control unit measures the loss elastic modulus, among viscoelastic properties of the object to be processed, based on the reflected sonic wave the sensor unit received, and controls heating or stoppage of the heat generating units based on the measurement result thereof. Furthermore, based on the measurement result thereof, the sensor unit controls the rotating speed of the rotating table on which works onto which the object to be processed drip is positioned.

Thus, any object to be processed viscoelastic property of which varies under heating action of the heating unit can be controlled so that desired viscoelastic property can be obtained. In addition, it can be controlled so that behavior of the object to be processed due to misalignment from a reference value of viscoelastic property is compensated. Thus, the process unit capable of performing optimum processing on any object to be processed, such as photosensitizing agent, viscoelastic property of which varies under heating action and for which diffusion action due to the centrifugal force changes with the loss elastic modulus, so that it can be uniformly applied to a work, can be implemented.

[Embodiment 13]

In Embodiment 12 of the present invention as described above, we described the configuration in which the number of rotations is compensated based on viscoelastic property of an object to be processed OBJ. On the one hand, in Embodiment 13 of the present invention, we describe another configuration in which the number of rotations is controlled based on viscoelastic property of the object to be processed OBJ.

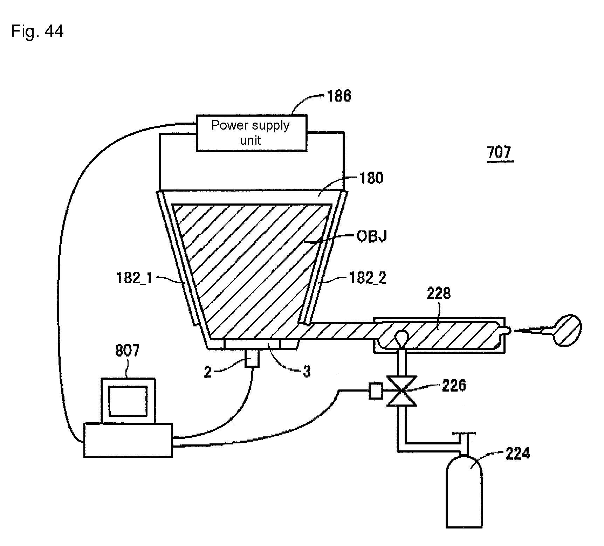

FIG. 44 shows the schematic configuration of a process unit 707 according to Embodiment 13 of the present invention.

With reference to FIG. 44, in the process unit 707 are provided the measurement control unit 807, gas supplying unit 224, pressure-regulating valve 226, and injection unit 228, which replace measurement control unit 806, dripping pipe 184, motor 188 and rotating table 190 of the process unit 706 as shown in FIG. 41 and according to Embodiment 12 of the present invention. Then, through the injection unit 228, the process unit 707 injects the object to be processed OBJ to a work (not shown), and applies the object to be processed OBJ to the surface of work. In addition, the process unit 707 controls heating generated by the heating units 182_1 and 182_2 such that the object to be processed OBJ has a desired viscoelastic property, and optimizes gas pressure that is used to inject the object to be processed OBJ, which is supplied from the gas supplying unit 224 to the injection unit 228, depending on viscoelastic property of the object to be processed OBJ.

By way of example, the process unit 707 implements an ink coater by using ink as an object to be processed OBJ.

The gas supplying unit is connected with the injection unit 228 through the pressure-regulating valve 226 and supplies gas to be used to inject an object to be processed OBJ from the injection unit 228. By way of example, the gas supplying unit 224 includes a gas canister, etc.

When receiving a regulate pressure command from the measurement control unit 807, the pressure-regulating valve 226 regulates gas pressure to be supplied from the gas supplying unit 224.

Having a cylinder shape, the injection unit 228 directs the object to be processed OBJ into the inside thereof through piping connected with the bottom face of the retaining container 180. Then, the injection unit 228 receives gas from the side, increases the internal pressure, and injects the object to be processed OBJ from the exit hole located on the side opposite to the side where the object to be processed was received.

The measurement control unit 807 gives the sensor unit 2 an emit command, emits incident sonic wave from the sensor unit 2 to the object to be processed OBJ, and measures viscoelastic property of the object to be processed OBJ based on temporal waveform of reflected sonic wave to be received at the sensor unit 2. Then, the measurement control unit 807 gives the power supply unit 186 an energize command or cutoff command, based on viscoelastic property of the measured object to be processed OBJ, and gives the pressure-regulating valve 226 a regulate pressure command. In fact, similar to the measurement control unit 806 according to Embodiment 12 of the present invention, the measurement control unit 807 optimizes gas pressure to be given to the injection unit 228 in order to avoid possible effects due to variations in the loss elastic modulus that cannot be fully suppressed by heating control of the heating units 182_1 and 182_2.

Specifically, as the degree of diffusion of the object to be processed OBJ to be injected from the injection unit 228 is low in the condition in which the loss elastic modulus of the object to be processed OBJ is low, the degree of diffusion should be increased by increasing gas pressure to be supplied. To the contrary, as the degree of diffusion is relatively high in the condition in which the loss elastic modulus of the object to be processed OBJ is high, the degree of diffusion should be lowered by reducing the gas pressure to be supplied. Thus, the measurement control unit 807 measures the loss elastic modulus as viscoelastic property and calculates a deviation between the measured loss elastic modulus and a target value. Then, the measurement control unit 807 gives the pressure-relieving valve 226 a regulate pressure command so that only pressure corresponding to the deviation from the reference supply pressure is compensated.

As any other things are similar to the process unit 706 according to Embodiment 12 of the present invention, we do not repeat detailed description.

According to Embodiment 13 of the present invention, the sensor unit emits incident sonic wave to the object to be processed through the delaying member that is positioned integrally with the bottom face of the retaining container, and receives reflected sonic wave generated by the incident sonic wave being reflected on a boundary between the object to be processed and delaying member. Then, the measurement control unit measures the loss elastic modulus, among viscoelastic properties of the object to be processed, based on the reflected sonic wave the sensor unit received, and controls heating or stoppage of the heat generating units based on the measurement result thereof. Furthermore, based on the measurement result thereof, the sensor unit controls the gas pressure for injecting the object to be processed.

Thus, any object to be processed viscoelastic property of which varies under heating action of the heating unit can be controlled so that desired viscoelastic property can be obtained. Additionally, it can be controlled so that behavior of the object to be processed due to misalignment from a reference value of viscoelastic property is compensated. Hence, the process unit capable of performing optimum processing so that injection is uniformly performed to any object to be processed such as ink agent viscoelastic property of which varies under heating action and the injection range to gas pressure changes with the loss elastic modulus can be implemented.

[Embodiment 14]

In Embodiments 1 to 13 of the present invention as described above, we described the configuration in which viscoelastic property is measured by the surface reflection method. On the one hand, in Embodiment 14 of the present invention, we describe the configuration in which viscoelastic property is measured by the bottom reflection method.

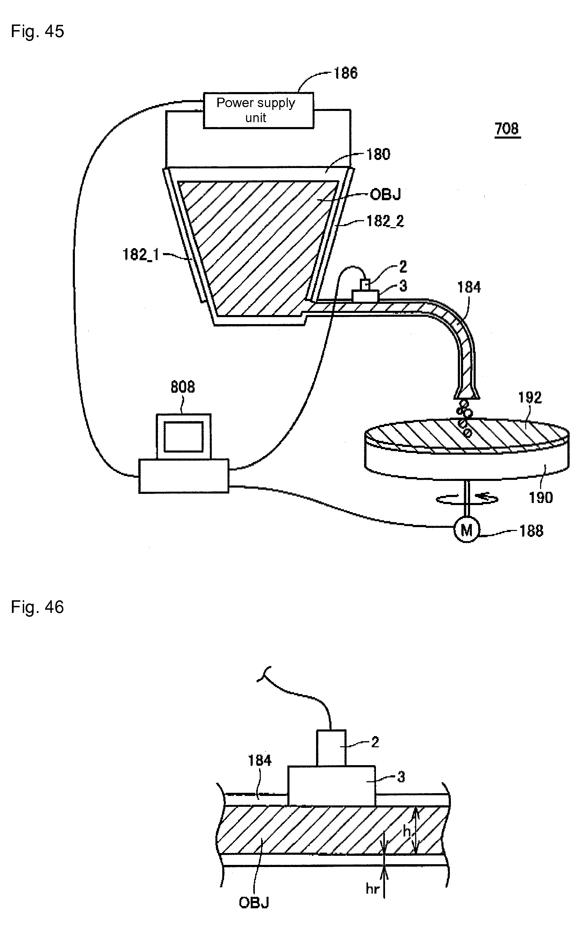

FIG. 45 shows the schematic configuration of a process unit 708 according to Embodiment 14 of the present invention.

With reference to FIG. 45, the process unit 708 replaced the measurement control unit 806 of Embodiment 12 as shown in FIG. 41 with measurement control unit 808, and changed a position with the sensor unit 2 and delaying member 3. Then, the process unit 708 emits incident sonic wave to an object to be processed OBJ from the sensor unit 2 that is positioned in the middle of the pipe of the dripping pipe 184, and measures viscoelastic property of the object to be processed OBJ based on reflected wave generated on a boundary between the processed OBJ and dripping pipe 184 after reflected wave generated by the incident sonic wave being reflected on a boundary between the delaying member 3 and the object to be processed OBJ and the incident sonic wave transmit through the object to be processed. As any other things are similar to the process unit 706 according to Embodiment 12 of the present invention, we do not repeat detailed description.

FIG. 46 shows the detailed layout configuration of the sensor unit 2 and delaying member 3.

With reference to FIG. 46, the delaying member 3 is arranged so that its one side is integrated with the inner surface of the dripping pipe 184, and is in close contact with the sensor unit 2 on the other side.

The sensor unit 2 is positioned in close contact with the delaying member 3, and emits incident sonic wave into the dripping pipe 184 through the delaying member 3, responding to an emit command from the measurement control unit 808. Then, the sensor unit 2 receives reflected sonic wave generated by being reflected on a boundary between the delaying member 3 and the object to be processed OBJ. Furthermore, the sensor unit 2 also receives reflected sonic wave that was not reflected on the boundary between the delaying member 3 and object to be processed OBJ, thus transmitting through inside of the dripping pipe 184 and being generated by being reflected on a boundary between the object to be processed OBJ and the dripping pipe 184 after it reached the opposite side of the delaying member 3. In other words, the sensor unit 2 receives 2 reflected sonic waves reflected in mutually different boundaries to one incident sonic wave, and outputs the temporal waveform to the measurement control unit 808. In Embodiment 14 of the present invention, the drip piping 184 includes a reflection member.

In addition, as more detailed configuration of the measurement control unit 806, sensor unit 2 and delaying member 3 is similar to the measurement control unit 801, sensor unit 2 and delaying member 3 according to Embodiment 7 of the present invention as shown in FIG. 18, we do not repeat detailed description.

(Bottom Reflection Method)

In Embodiment 14 of the present invention, incident sonic wave is emitted to an object to be processed OBJ and viscoelastic property is measured based on reflected sonic wave generated by the incident sonic wave being reflected on a boundary between the delaying member 3 and object to be processed OBJ, and reflected sonic wave generated by the incident sonic wave being reflected on a boundary between the object to be processed OBJ and dripping pipe 184.

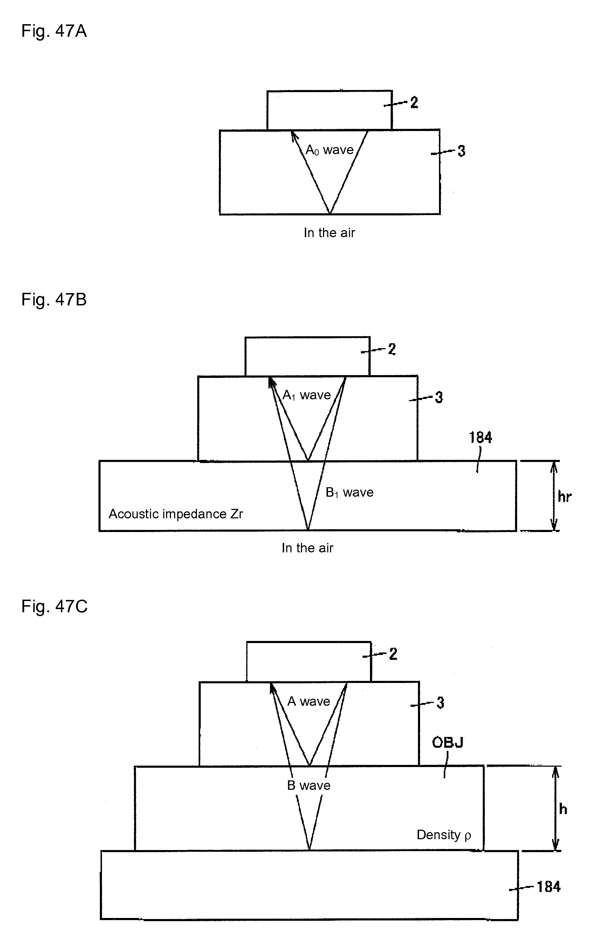

FIG. 47A to FIG. 47C are views for illustrating the method of measuring viscoelastic property by the bottom reflection method.

FIG. 47A shows the state for obtaining reference data.

FIG. 47B shows the state for obtaining group velocity of the dripping pipe 184.

FIG. 47C shows the state for deriving viscoelastic property of the object to be processed OBJ.

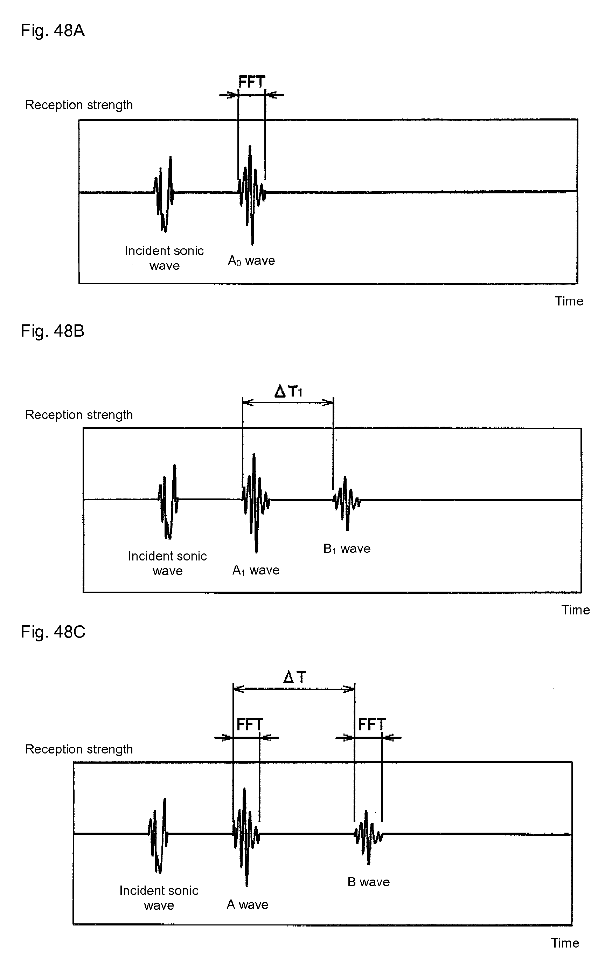

FIG. 48A to FIG. 48C show temporal waveform at each of FIG. 47A to FIG. 47C.

FIG. 48A shows temporal waveform in FIG. 47A.

FIG. 48B shows temporal waveform in FIG. 47B.

FIG. 48C shows temporal waveform in FIG. 47C.

With reference to FIG. 47A, in order to remove initial error in the delaying member 3, the user previously obtains incident sonic wave, as reference data, to be emitted from the sensor unit 2 through the delaying member 3. Specifically, the incident sonic wave is emitted from the sensor unit 2 in the condition in which the delaying member 3 is not in close contact with any of the dripping pipe 184 and object to be processed OBJ (reference state). Then, as shown in FIG. 48A, the sensor unit 2 receives the reflected sonic wave generated on a boundary between the delaying member 3 and air (the sonic wave received in reference state is hereinafter referred to as "$A_0$- wave".)

As described with FIG. 4A, as acoustic impedance in the air is sufficiently smaller than the delaying member 3 and object to be processed OBJ, the incident sonic wave emitted from the sensor unit 2 is totally reflected on the boundary between the delaying unit 3 and air.

Now, $A_0$ wave received by the sensor unit 2 is expressed as $A_0(f)\exp(i\theta_0(f))$. However, i is an imaginary unit, $A_0(f)$ is amplitude characteristic (real-valued), and $\theta_0(f)$ is phase characteristic ($0 \leq \theta 0(f) < \infty$). Then, the calculating unit 11 subjects temporal wave of reflected sonic wave ($A_0$ wave) received by the sensor unit 2 to FFT process, and obtains the amplitude characteristic $A_0(f)$ and phase characteristic $\theta_0(f)$ in the frequency region.

With reference to FIG. 47B, when the incident sonic wave is emitted from the sensor unit 2 with the delaying member 3 and the dripping pipe 184 in close contact, reflected sonic wave (hereinafter referred to as "$A_1$ wave") generated by being reflected on a boundary between the delaying member 3 and dripping pipe 184, and reflected sonic wave (hereinafter referred to as "$B_1$ wave") generated by being reflected on a boundary between the ripping pipe 184 and air are generated. Now with reference to FIG. 48B, in the sensor unit 2, the $A_1$ wave and $B_1$ wave are received, with the delay time of $\Delta T_1$ between them. Then, the measurement control unit 808 detects the delay time $\Delta T_1$ between $A_1$ wave and $B_1$ wave. In fact, the measurement control unit 808 detects the delay time $\Delta T_1$ between $A_1$ wave and $B_1$ wave based on a signal indicative of temporal intensity change received by the sensor unit 2.

Now, assuming that thickness $h_r$ of dripping pipe 184 and density $\rho_r$ are known, acoustic impedance $Z_r$ of the dripping pipe 184 is expressed as $Z_r = \rho_r \times Vg_r$ where the group velocity in the dripping pipe 184 is $V_{gr}$. In addition, as the group velocity $Vg_r$ is $Vg_r = 2h_r/\Delta T_1$, the acoustic impedance of the dripping pipe 814 $Z_r$ turns out to be $Z_r = 2h_r\rho_r/\Delta T_1$.

Hence, the measurement control unit 808 obtains the acoustic impedance $Z_r$ of the dripping pipe 184 from the measured delay time $\Delta T_1$, based on thickness $h_r$ and density $\rho_r$ of the dripping pipe 184 that are previously given.

With the above procedure, the measurement control unit 808 obtains the reference data for deriving viscoelastic property.

With FIG. 47C, when viscoelastic property of an object to be processed OBJ is measured, the object to be processed OBJ is arranged so that it is in close contact between the delaying member 3 and dripping pipe 184. Then, when the sensor unit 2 emits incident sonic wave, reflected sonic wave (hereinafter referred to as "wave A") generated by being reflected on a boundary between the delaying member 3 and object to be processed OBJ and reflected sonic wave (hereinafter referred to as "wave B") generated by being reflected on a boundary between the object to be processed OBJ and dripping pipe 184 are generated. Now, the measurement control unit 800 not only detects delay time between wave A and wave B, but also obtains amplitude characteristic and phase characteristic in the frequency domain of wave A and wave B.

In other words, with reference to FIG. 48C, the sensor unit 2 receives wave A and wave B with the delay time $\Delta T$ between both. Then, the measurement control unit 808 measures the delay time $\Delta T$ between wave A and wave B based on the signal received by the sensor unit 2 showing change in temporal intensity.

Now, since it is possible to previously obtain thickness h of the object to be processed OBJ and density $\rho$ of the object to be processed OBJ, acoustic impedance Z of the object to be processed OBJ is expressed as $Z = \rho \times Vg$, where group velocity in the object to be processed OBJ is Vg. In addition, as the group velocity Vg is $Vg = 2h/\Delta T$, the acoustic impedance Z of the object to be processed OBJ turns out to be $Z = 2h\rho/\Delta T$.

Then, the reflectivity R of the incident sonic wave on the boundary between the object to be processed OBJ and the dripping pipe 184 is $R = (Z - Z_r)/(Z + Z_r) = (2h\rho/\Delta T - Z_r)/(2h\rho/\Delta T + Z_r)$.

Thus, the calculating unit 11 previously obtains thickness h of the object to be processed OBJ and density $\rho$ of the object to be processed OBJ, and derives reflectivity R of the incident sonic wave on the boundary between the object to be processed OBJ and dripping pipe 184, together with the delay time $\Delta T$ to be measured and the acoustic impedance Zr of the dripping pipe 184 that is previously obtained.

In addition, wave A received by the sensor unit 2 is expressed as $A(f)\exp(i\theta_A(f))$, while wave B is expressed as $B(f)\exp(i\theta_B(f))$. However, i is an imaginary unit, A(f), B(f) are respectively characteristic properties (real-valued) in the frequency domain of wave A and wave B, $\theta_A(f)$, $\theta_B(f)$ is phase characteristic ($0 \leq \theta_A(f) < \infty$, $0 \leq \theta_B(f) < \infty$) in respective frequencies of wave A and wave B, respectively.

Then, the measurement control unit 808 subjects temporal intensity change of wave A received by the sensor unit 2 to FFT process, the amplitude characteristic $A(f)$ and phase characteristic $\theta_A(f)$ in the frequency domain of wave A are obtained, while it subjects temporal intensity change of wave B to FFT process, the amplitude characteristic $B(f)$ and phase characteristic $\theta_B(f)$ in the frequency domain of wave B are obtained.

Furthermore, attenuation coefficient $\alpha(f)$ of incident sonic wave becomes expression (12), using respective amplitude characteristic in the frequency domain of wave $A_0$, wave A, and wave B, and reflectivity R to be derived.

$$\alpha(f)=(1/2h)\ln(R(A_0(f)^2-A(f)^2)/A_0(f)B(f)))\cdots(12)$$

In addition, phase speed $Vp(f)$ of incident sonic wave becomes expression (13), using the amplitude characteristic and phase characteristic in the frequency domain of wave A and wave B:

$$V_p(f)=2h\times2\pi f/(\theta_B-\theta_A+2\pi f\Delta T+2N\pi)\cdots(13)$$

However, N is an arbitrary positive number.

Then, the storage elastic modulus $L'(f)$, loss elastic modulus $L''(f)$ and loss tangent $\tan\delta(f)$ corresponds to expressions (14), (15) and (16), respectively, using the attenuation coefficient $\alpha(f)$ and phase speed $V_p(f)$ derived by expressions (12) and (13):

$$L'(f)=\rho V_p^2(f)\cdots(14)$$

$$L''(f)=2\alpha\rho V_p^3(f)/\omega=\alpha V_p(f)L'(f)/\pi f\cdots(15)$$

$$\tan\delta(f)=\alpha(f)\times V_p(f)/\pi f\cdots(16)$$

Thus, the measurement control unit 808 performs operations of expressions (14) o (16) and measures viscoelastic property of the object to be processed OBJ.

(Process Flow)

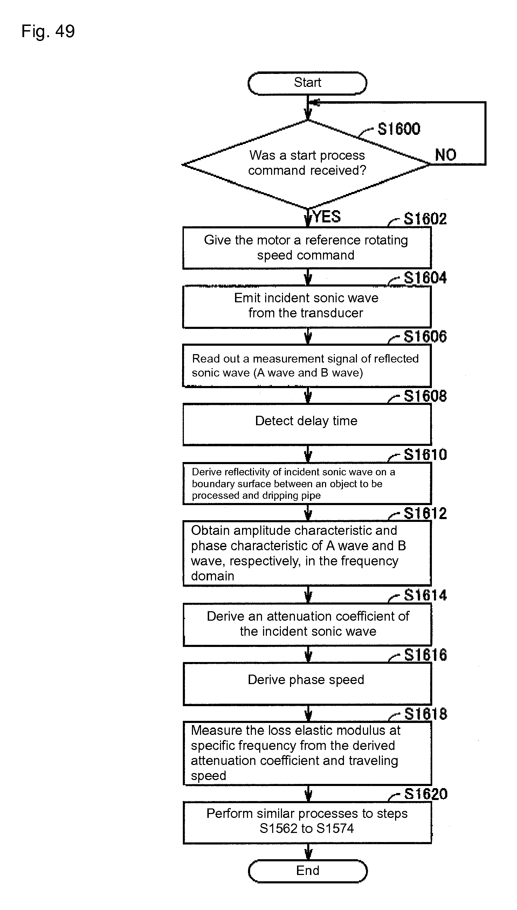

FIG. 49 shows the process flow related to the process control according to Embodiment 24 of the present invention. In addition, according to the process for obtaining reference data to be described later, reference data that serves as a reference is previously stored in the storage unit 14.

With reference to FIG. 18 and FIG. 49, the calculating unit 11 determines whether or not it received a start process command via the input unit (step S1600). On the one hand, a user gives the start process command after inputting raw material into the retaining container 180.

When it did not receive the start process command (NO in step S1600), the calculating unit 11 waits till it receives the start process command (step S1600).

When it received the start process command (YES in step S1600), the calculating unit 11 gives a reference rotating speed command to the motor (step S1602). Then, responding to rotation of the motor 188, the rotating table 190 and work 192 start rotating. The calculating unit 11 gives the sensor unit 2 an emit command and emits incident sonic wave from the transducer 20 (step S1604).

Then, the calculating unit 11 obtains from the temporal data memory unit 12 a measurement signal indicative of temporal intensity change in reflected sonic wave (wave A and wave B) received by the transducer 20 (step S1606). Then, the calculating unit 11 detects delay time based on the measurement signal including wave A and wave B it read out (step S1608). Furthermore, from the thickness and density of the object to be processed, acoustic impedance of the dripping pipe 184 and the measured delay time, the calculating unit 11 derives reflectivity of the incident sonic wave on a boundary between the object to be processed OBJ and dripping pipe 184 (step S1610).

In addition, the calculating unit 11 performs FFT process on respective measurement signals indicative of temporal intensity change in wave A and wave B, obtains amplitude characteristic and phase characteristic, respectively, in the frequency domains of wave A and wave B (step S1612). Then, the calculating unit 11 derives an attenuation coefficient of the incident sonic wave, based on the reference data stored in the storage unit 14, the derived reflectivity of the incident sonic wave on the boundary between the object to be processed OBJ and dripping pipe 184, and the respective amplitude characteristics in the frequency domains of wave A and wave B (step S1614). In addition, the calculating unit 11 derives phase speed based on the respective amplitude characteristics and phase characteristics in the frequency domains of wave A and wave B (step S1616).

The calculating unit 11 measures the loss elastic modulus at a specific frequency from the derived attenuation coefficient and traveling speed derived in the above steps (step S1618).

In the following, the calculating unit 11 performs processes similar to steps S1562 to S1574 as shown in FIG. 43 (step S1620). Then, when it completes performing step S1620, the calculating unit 11 terminates the process.

In the above process flow, although we described the configuration in which the loss elastic modulus is measured, measurement of the storage elastic modulus and loss tangent is also possible with similar processes.

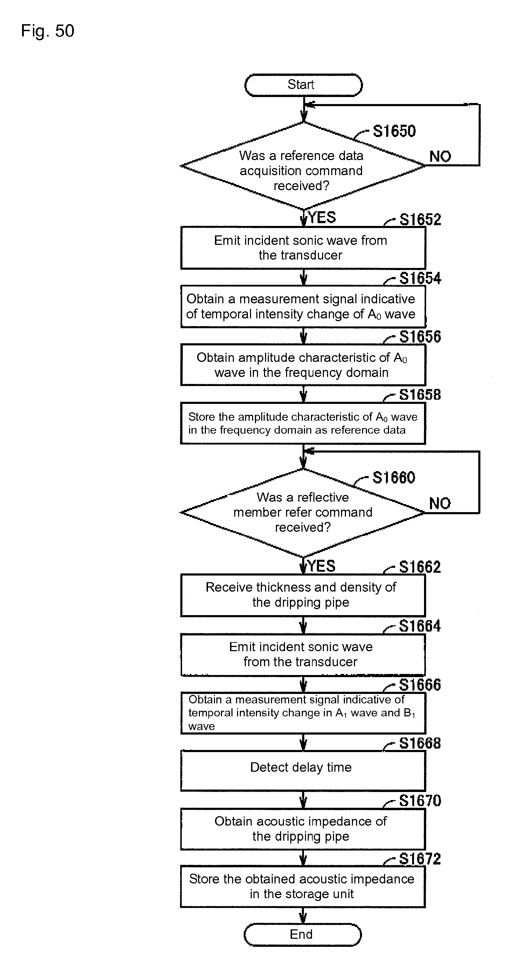

FIG. 50 shows the process flow related to acquisition of reference data according to Embodiment 14 of the present invention.

With reference to FIG. 18 and FIG. 50, the calculating unit 11 determines whether or not it received a reference data acquisition command via the input unit 18 (step S1650). A user issues the reference data acquisition command after arranging the delaying member 3 so that it is in close contact with neither the object to be processed OBJ nor the dripping pipe 184.

When it did not receive the reference acquisition command (NO in step S1650), the calculating unit 11 waits till it receives the reference acquisition command (step S1650).

When it received the reference acquisition command (YES in step S1650), the calculating unit 11 gives the sensor unit 2 an emit command, and emits incident sonic wave from the transducer 20 (step S1652).

Next, the calculating unit 11 obtains from the temporal data memory unit 12 a measurement signal indicative temporal intensity change in reflected sonic wave (wave $A_0$) received by the transducer 20 (step S1654). Then, the calculating unit 11 performs FFT process on the obtained measurement signal of wave $A_0$ and obtains amplitude characteristic in the frequency domain of reflected sonic wave (wave $A_0$) (step S1656). The calculating unit 11 further stores in the storage unit 14 the amplitude characteristic of the obtained reflected sonic wave (wave $A_0$) in frequency domain as reference data (step S1658).

Next, the calculating unit 11 determines whether or not it received a reflective member refer command via the input unit 18 (step S1660). A user issues the reflective member refer command after arranging the delaying member 3 so that it is in close contact with the dripping pipe 184, and then inputs thickness and density of the dripping pipe 184.

When it did not receive the reflective member refer command (NO in step S1660), the calculating unit 11 waits till it receives the reflective member refer command (step S1660).

When it received the reflective member refer command (YES in step S1660), the calculating unit 11 receives the thickness and density of the dripping pipe 184 provided through the input unit 18 (step S1662). The calculating unit 11 gives the sensor unit 2 an emit command and emits incident sonic wave from the transducer 20 (step S1664). Then, the calculating unit 11 obtains from the temporal data memory unit 12 a measurement signal indicative of temporal intensity change in reflected sonic wave (wave $A_1$ and wave $B_1$) received by the transducer 20 (step S1666). Then, the calculating unit 11 detects delay time based on the obtained measurement signal of the reflected sonic wave (wave $A_1$ and wave $B_1$) (step S1668). Then, the calculating unit 11 obtains acoustic impedance of the dripping pipe 184 from the thickness and density of the dripping pipe 184 and the detected delay time (step S1670). In addition, the calculating unit 11 stores the obtained acoustic impedance in the storage unit 14 (step S1672). Then, the calculating unit 11 terminates the process.

According to Embodiment 14 of the present invention, in addition to the effect of Embodiment 12 of the present invention, any error that may be generated when an object to be processed OBJ is thin compared with coverage of incident sonic wave to be emitted from the sensor unit can be controlled. In fact, reflected sonic wave is generated when incident sonic wave emitted from the sensor unit, after passing through an object to be processed, is reflected by a reflective member located on the opposite side of the delaying member. Thus, the measurement control unit measures the storage elastic modulus of the object to be processed, based on the reflected sonic wave that is received by the sensor unit and is generated on the boundary between the delaying member and object to be processed, and the reflected sonic wave generated on the boundary between the object to be processed and the reflective member. Hence, as viscoelastic property can be measured precisely even when an object to be processed is a small amount, a space necessary for measurement of viscoelastic property can be reduced.

[Embodiment 15]

In Embodiments 1 to 13 of the present invention as described above, we described the configuration in which viscoelastic property is measured by the surface reflection method. On the one hand, in Embodiment 15, we describe the configuration in which viscoelastic property is measured by a transmission method.

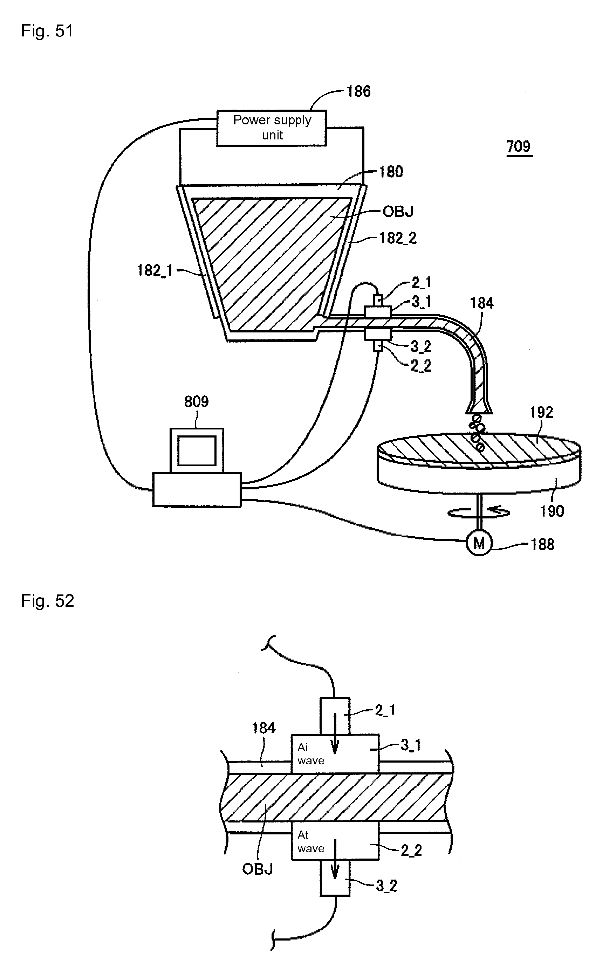

FIG. 51 shows the schematic configuration of a process unit 709 according to Embodiment 15 of the present invention.

With reference to FIG. 51, in the process unit 709, the measurement control unit 809, transmitting unit 2_1, receiving unit 2_2, and delaying members 3_1 and 3_2 replaced the measurement control unit 806, sensor unit 2, and delaying member 3 of the process unit 706 according to Embodiment 12 of the present invention as shown in FIG. 41. The process unit 709 causes the transmitting unit 2_1, which is positioned on the way of the dripping pipe 184, to emit incident sonic wave to an object to be processed, causes the receiving unit 2_2 to receive transmissive sonic wave that is the incident sonic wave after passing through the object to be processed, and then measures viscoelastic property of the object to be processed based on the received sonic wave. As any other things are similar to the process unit 706 according to Embodiment 12 of the present invention, we do not repeat detailed description.

FIG. 52 shows a positional relationship among the transmitting unit 2_1, receiving unit 2_2, and delaying members 3_1 and 3_2 in detail.

With reference to FIG. 52, the transmitting unit 2_1 and delaying member 3_1, and the receiving unit 2_2 and delaying member 3_2 are such arranged that they are radially opposed across the dripping pipe 184.

The delaying member 3_1 is such arranged that not only its one side is integrated with the inner surface of the dripping pipe 184 but also it is in close contact with transmitting unit 2_1 on the other side.

The transmitting unit 2_1 is arranged in close contact with the delaying member 3_1 and emits incident sonic wave into the dripping pipe 184 through the delaying member 3_1, responding to an emit command from the measurement control unit 801.

The delaying member 3_2 is such arranged that with its one side integrated with the inner surface of the dripping pipe 184, it is not only located collinearly with the delaying member 3_1 in the radial direction of the dripping pipe 184, but also arranged in close contact with the transmitting unit 2_1 on the other side.

Arranged in close contact with the delaying member 3_2, the receiving unit 2_2 receives the transmissive sonic wave that is incident sonic wave emitted from the transmitting unit 2_1, then passing through the delaying member 3_1, the object to be processed OBJ that fills inside of the dripping pipe 184, and the delaying member 3_2 in this order. Then, the receiving unit 2_2 outputs to the measurement control unit 809 a signal indicative of temporal intensity change of the transmissive sonic wave it received.

In Embodiment 15 of the present invention, the transmitting unit 2_1 and receiving unit 2_2 constitute the sensor unit.

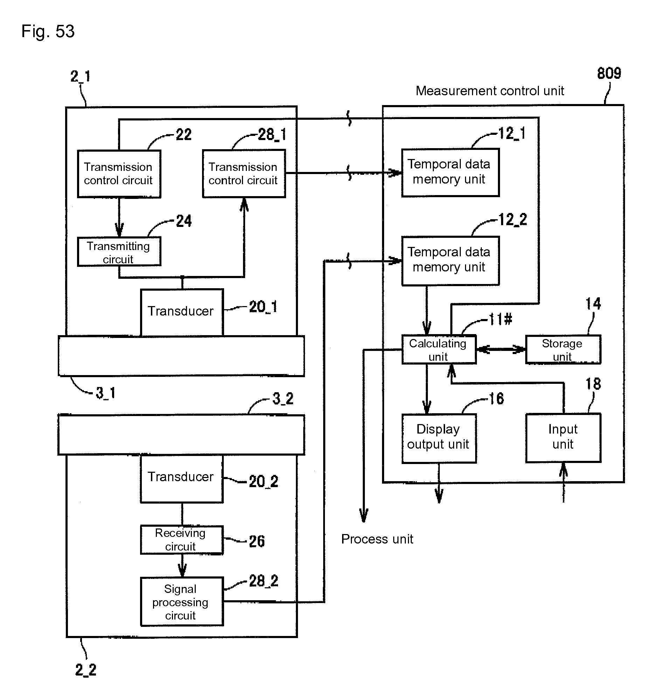

FIG. 53 shows the main part of the process unit 709 according to Embodiment 15 of the present invention.

With reference to FIG. 53, the calculating unit 11# of the measurement control unit 809 replaces the calculating unit 11 of the measurement control unit 801 according to Embodiment 7 of the present invention as shown in FIG. 18, and temporal data memory units 12_1 and 12_2 of the former replace the temporal data memory unit 12 of the latter.

When the calculating unit 11# receives a start process command through the input unit 18 from the external, it gives the transmitting unit 2_1 an emit command, and causes it to emit incident sonic wave to an object to be processed OBJ. Then, the calculating unit 11# obtains not only a signal that is indicative of temporal intensity change in the incident sonic wave and that is to be stored in the temporal data memory unit 12_1, but also a signal that is indicative of temporal intensity change in the transmissive sonic wave and that is to be stored in the temporal data memory unit 12_2. In addition, the calculating unit 11# performs FFT process on the respective signals indicative of the temporal intensity change it obtained, and obtains amplitude values and phases at a specific frequency. Next, the calculating unit 11# compares the amplitude values and phases of the incident sonic wave at the specific frequency with those of the transmissive sonic wave and measures viscoelastic property of the object to be processed OBJ.

As any other processes in the calculating unit 11# are similar to the calculating unit 11 of the process unit 701 according to Embodiment 7 of the present invention, we do not repeat detailed description.

The temporal data memory unit 12_1 stores signals indicative of the temporal intensity change in incident sonic waves to be emitted from the transmitting unit 2_1 in a predetermined cycle.

The temporal data memory unit 12_2 receives signals indicative of the temporal intensity change in transmissive sonic waves to be received by the receiving unit 2_2 in a predetermined cycle.

As any other things of the temporal data memory units 12_1, 12_2 are similar to the temporal data memory unit 12 of the process unit 701 according to Embodiment 7 of the present invention, we do not repeat detailed description.

The transmitting unit 2_1 includes the transmission control circuit 22 and transmitting circuit 24 that are among elements including the sensor unit 2 of the process unit 71 according to Embodiment 7 of the present invention and related to emission of incident sonic wave, as well as the signal processing circuit 28_1 and transducer 20_1. In addition, as the signal processing circuit 28_1 and transducer 20_1 are similar to the signal processing circuit 28 and transducer 20 that include the sensor unit 2 of the process unit according to Embodiment 7 of the present invention, we do not repeat detailed description.

On the one hand, the receiving unit 2_2 includes the receiving circuit 26 that is among components including the sensor unit 2 of the process unit 701 according to Embodiment 7 of the present invention and related to reception of reflected sonic wave, as well as the transducer 20_2 and signal processing circuit 28_2. In addition, as the transducer 20_2 and signal processing circuit 28_2 are similar to the transducer 20 an signal processing circuit 28 that include the sensor unit 2 of the process unit 701 according to Embodiment 7 of the present invention, we do not repeat detailed description.

The delaying members 3_1 and 3_2 are similar to the delaying member 3 of the process unit 701 according to Embodiment 7 of the present invention.

In Embodiment 15 of the present invention, although we exemplified the transmitting unit 2_1 and receiving unit 2_2, each provided with the delaying members 3_1 and 3_2, the delaying members 3_1 and 3_2 are not necessarily provided if processing is fast in the signal processing circuit.

(Transmission method)

Referring to FIG. 52 again, incident sonic wave to be emitted from the transmitting unit 2_1 (hereinafter referred to as wave $A_i$) is propagated to the delaying member 3_1, object to be processed OBJ and delaying member 3_2 in this order, and transmissive sonic wave thereof (hereinafter referred to as wave $A_t$) enters the receiving unit 2_2. Now, the transmissive sonic wave has its amplitude characteristic and phase characteristic change, depending on viscoelastic property of object to be processed OBJ. Thus, the calculating unit 11# mutually compares the amplitude characteristic and phase characteristic, respectively, in the frequency domain that can be obtained by performing FFT process on signals indicative of temporal intensity changes in the incident sonic wave and transmissive sonic wave, and thus measures viscoelastic property thereof.

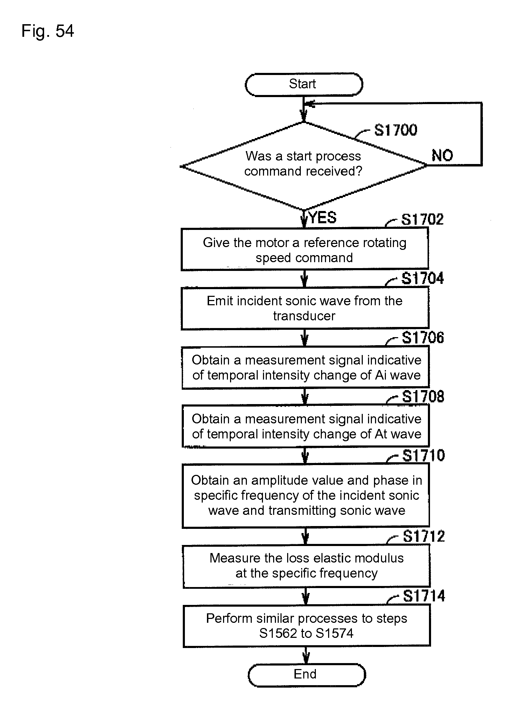

FIG. 54 shows the process flow related to the process control according to Embodiment 15 of the present invention.

With reference to FIG. 53 and FIG. 54, the calculating unit 11# determines whether or not it received a start process command via the input unit 18 (step S1700). A user gives the start process command after inputting raw material into the retaining container 180.

When it did not receive the start process command (NO in step S1700), the calculating unit 11# waits till it receives the start process command (step S1700).

When it received the start process command (YES in step S1700), the calculating unit #11 gives the motor 188 a reference rotating speed command (step S1702). Then, responding to rotation of the motor 188, the rotating table 190 and work 192 start rotating. The calculating unit 11# gives the transmitting unit 2_1 an emit command and emits incident sonic wave from the transducer 20_1 (step S1704).

Then, the calculating unit 11# obtains from the temporal data memory unit 12_1 in the transmitting unit 2_1 a signal indicative of temporal intensity change in the incident sonic wave (wave $A_i$) emitted by the transducer 20_1 (step S1706). At the same time, the calculating unit 11# obtains from the temporal data memory unit 12_2 in the receiving unit 2_2 a signal indicative of temporal intensity change in the transmissive sonic wave (wave $A_t$) received by the transducer 20_2. (step S1708).

Then, the calculating unit 11# performs FFT process on the received signals indicative of temporal intensity changes in the incident sonic wave (wave $A_i$) and transmissive sonic wave (wave $A_t$), and obtains amplitude values and phases at a specific frequency of the incident sonic wave and transmissive sonic wave, respectively (step S1710). Then, the calculating unit 11# mutually compares the obtained amplitude value and phase of the incident sonic wave with the amplitude value and phase of the transmissive sonic wave, and measures the loss elastic modulus at the specific frequency (step S1712).

In the following, the calculating unit 1# performs processes similar to step S1562 to S1574 as shown in FIG. 43 (step S1714). Then, when it completes performing step S1716, the calculating unit 11# terminates the process.

In the process flow as described above, although we described the configuration in which the loss elastic modulus is measured, measurement of the storage elastic modulus and loss tangent is also possible with similar processes.

According to Embodiment 15 of the present invention, in addition to the effect of Embodiment 12 of the present invention, reception efficiency in the sensor unit is better than the case in which reflected sonic wave is used, because viscoelastic property of object to be processed is measured based on incident sonic wave emitted from the transmitting unit and transmissive sonic wave received by the receiving unit. Therefore, when reflectivity of incident sonic wave is low, for instance, when a value of acoustic impedance of object to be processed is approximate to that of the delaying member, use of transmissive sonic wave passing through an object to be processed with high transmission rate enables measurement of viscoelastic property with good precision.

[Embodiment 16]

In Embodiments 7 to 15 of the present invention as described above, we described the process units that perform control based on result of comparison of measured viscoelastic property and predetermined threshold. On the one hand, in Embodiment 16 of the present invention, we describe the configuration in which control is continuously performed, depending on a deviation between measured viscoelastic property and a predetermined target value.

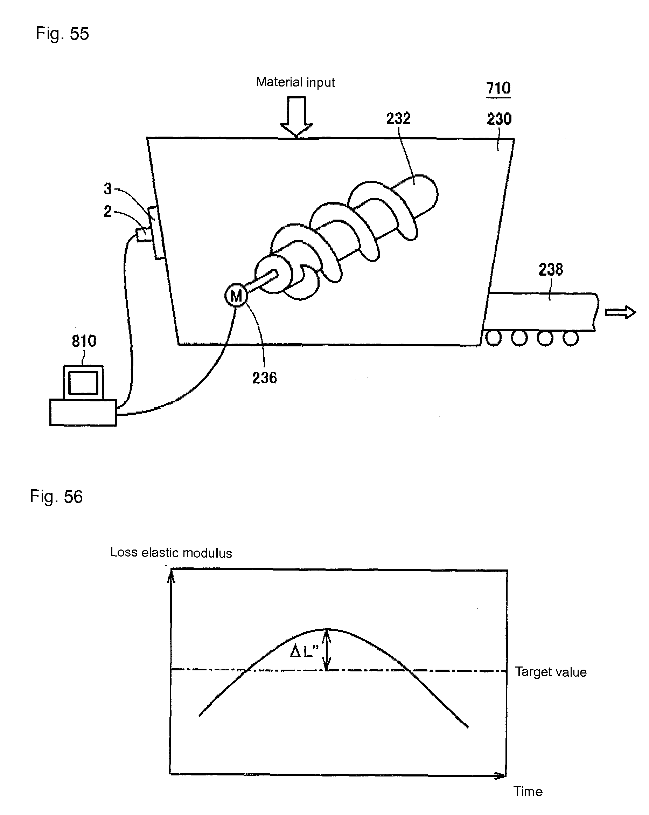

FIG. 55 shows the schematic configuration of a process unit 710 according to Embodiment 16 of the present invention.

With reference to FIG. 55, the process unit 710 includes a measurement control unit 810, kneading container 130, sensor unit 2, delaying member 3, motor 236, and impeller 232. The process unit 710 not only mixes and kneads inputted object to be processed OBJ by rotating the impeller 232, but also extrudes the object to be processed OBJ from a predetermined opening of the kneading container 230 (not shown) and continuously manufactures moldings 238 having a predetermined shape. In addition, the process unit 710 emits incident sonic wave to object to be processed OBJ from the sensor unit 2, and measures viscoelastic property of the object to be processed OBJ based on reflected sonic wave resulting from the incident sonic wave. In addition, by adjusting a rotating speed command to be given to the motor 236, depending on viscoelastic property of the object to be processed OBJ, and controlling the rotating speed of the impeller 232, the process unit 710 optimizes the amount per unit time of the object to be processed to be extruded from the kneading container 230, i.e., the molding speed of the moldings 238. By way of example, the process unit 710 can receive, as an object to be processed, a mixture of barium carbonate ($BaCO_3$), titanium oxide ($TiO_2$), and a binder, and manufacture ceramic materials. Similarly, the process unit 710 can also mold pottery or plastics.

The kneading container 232is shaped like a box with an opening on its upper part, and receives an object to be processed OBJ composed of raw material.

The impeller 232 is arranged within the kneading container 230 so that its rotary shaft is in horizontal direction, and rotates under drive force from the motor 236. The impeller 232 then gives agitating force to an object to be processed OBJ by its own rotation.

The motor 236 is mechanically combined with the impeller 232 and conveys generated rotational movement to the impeller 232. Then, responding to a rotating speed command from the measurement control unit 810, the motor 236 freely changes its rotating speed. By way of example, the motor 236 includes a VVVF (Variable Voltage Variable Frequency) device such as an inverter (not shown), and is configured to be able to change the rotating speed freely.

The measurement control unit 810 gives the sensor unit 2 an emit command, causes the sensor unit to emit incident sonic wave to an object to be processed OBJ and measures viscoelastic property of the object to be processed OBJ based on temporal waveform of reflected sonic wave received by the sensor unit 2. In addition, the measurement control unit 810 determines on a rotating speed command to be given to the motor 236, based on viscoelastic property of the object to be processed OBJ it measured.

The sensor unit 2 is arranged in close contact with the delaying member 3, and emits incident sonic wave into the kneading container 230 through the delaying member 3, responding to the emit command from the measurement control unit 810. Then, the sensor unit 2 receives reflected sonic wave generated by the incident sonic wave being reflected on a boundary between the object to be processed OBJ and the delaying member 3, and outputs temporal waveform thereof to the measurement control unit 810. As any other things are similar to Embodiment 7 of the present invention as described above, we do not repeat detailed description.

The delaying member 3 is such arranged that is one side is integrated with the inner surface of the kneading container 230 and it is also in close contact with the sensor unit 2 on the other side.

In addition, more detailed configuration of the measurement control unit 810, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 56 shows one example of temporal change in the loss elastic modulus of an object to be processed OBJ composed of ceramic raw materials. In addition, the storage elastic modulus used herein means a peak value at a specific frequency.

With reference to FIG. 56, the measurement control unit 810 according to Embodiment 16 of the present invention measures the loss elastic modulus (viscosity) as viscoelastic property of the object to be processed OBJ.

The object to be processed OBJ consisting of ceramic raw materials changes its loss elastic modulus due to outside temperature, temperature of the kneading container, moisture content, additive amount of a binder, etc. Thus, when the loss elastic modulus is low, namely, when viscosity is low, solidification is difficult, which thus requires control of the molding speed. On the one hand, when the loss elastic modulus is high, namely, when viscosity is high, solidification is easy, the molding speed can be accelerated, thus increasing productivity.

Now, when the loss elastic modulus of object to be processed OBJ is high, the measurement control unit 810 relatively increases the molding speed, while it relatively reduces the molding speed when the loss elastic modulus of object to be processed OBJ is low.

Specifically, the measurement control unit 810 previously specifies a target value of the loss elastic modulus and reference molding speed relative to the target value. Then, the measurement control unit 810 calculates a deviation $\Delta L''$ between measured loss elastic modulus and the target value, and gives the motor a rotating speed command so that corrected amount is added to or subtracted from the deviation $\Delta L''$ relative to the reference molding speed. For instance, if we believe that degree of solidification of an object to be processed OBJ is almost proportional to the loss elastic modulus, optimization of the molding speed responding to the loss elastic modulus of the object to be processed OBJ can be implemented by adding to or subtracting from the reference molding speed a corrected value to be obtained by multiplying the deviation $\Delta L''$ by a predetermined conversion coefficient. In addition to the method as described above, a method of obtaining rotating speed responding to a deviation $\Delta L''$ can be achieved by PID control or fuzzy control, etc.

In addition, the display output unit 16 displays temporal change in the loss elastic modulus as shown in FIG. 56 at any time and/or outputs data thereof to the external. In addition, the display output unit 16 displays information on a rotating speed command to be given to the motor 236 and/or outputs data thereof to the external.

(Process Flow)

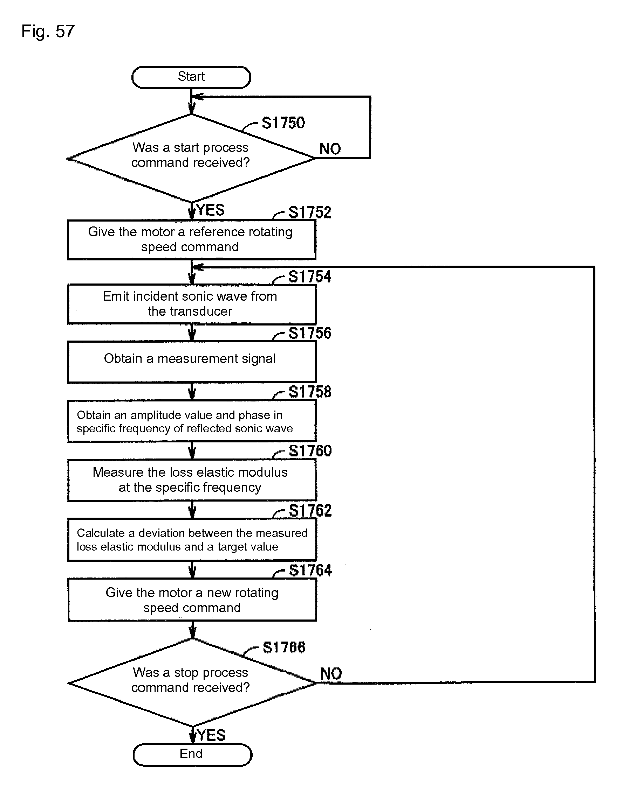

FIG. 57 shows the process flow related to the process control according to Embodiment 16 of the present invention. In addition, according to the process for obtaining reference data as shown in FIG. 21, reference data that serves as a reference is previously obtained in the storage unit 14.

With reference to FIG. 18 and FIG. 57, the calculating unit 11 determines whether or not it received a start process command via the input unit 18 (step S1750). On the one hand, a user gives the start process command after inputting raw material into the kneading container 230.

When it did not receive the start process command (NO in step S1750), the calculating unit 11 waits till it receives the start process command (step S1750).

When it received the start process command (YES in step S1750), the calculating unit 11 gives the motor 236 a reference rotating speed command to the motor (step S1752). Then, responding to rotation of the motor 236, the impeller 232 rotates and manufacturing of moldings 238 starts. Then, the calculating unit 11 gives the sensor unit 2 an emit command, and emits incident sonic wave from the transducer 20 (step S1754).

Then, the calculating unit 11 obtains from the temporal data memory unit 12 a measurement signal indicative of temporal intensity change in reflected sonic wave received by the transducer 20 (step S1756). Then, the calculating unit 11 performs FFT process on the measured signal it obtained, and obtains an amplitude value and phase of the reflected sonic wave at a specific frequency (step S1758). The calculating unit 11 further obtains from the storage unit an amplitude value and phase stored as reference data, and measures viscoelastic property of the object to be processed OBJ at the specific frequency with them being as a reference (step S1760).

Then, the calculating unit 11 calculates a deviation $\Delta L''$ between the measured loss elastic modulus and a target value (step S1762). Then, the calculating unit 11 calculates a corrected value of the molding speed based on the calculated deviation $\Delta L''$, and gives it to the motor 236 as a new rotating speed command (step S1764).

Then, the calculating unit 11 determines whether or not it received a terminate process command via the input unit 18 (step S1766).

When it did not receive the terminate process command (NO in step S1766), the calculating unit 11 gives the sensor unit 2 an emit command again and emits incident sonic wave from the transducer 20 (step S1754). In the following, it repeats steps S1756 to S1766.

When it received the stop process command (YES in step S1766), it terminates the process.

In Embodiment 16 of the present invention as described above, although we described the configuration in which the molding speed is adjusted, the configuration may be alternatively such that the loss elastic modulus of an object to be processed OBJ can reach a target value through any of adjustment of kneading time of the object to be processed OBJ, adjustment of the additive amount of a binder, and adjustment of container temperature, or any or all of them combined as appropriate.

According to Embodiment 16 of the present invention, the sensor unit emits incident sonic wave to an object to be processed through the delaying member that is arranged integrally with the side of the kneading container, and receives reflected sonic wave generated by the incident sonic wave being reflected on a boundary between the object to be processed and delaying member. Then, the measurement control unit measures the loss elastic modulus among viscoelastic properties of the object to be processed, based on the received reflected sonic wave, and controls the molding speed of the moldings based on the measurement result.

Thus, shape loss, etc., can be controlled even if the loss elastic modulus of an object to be processed deviates from a target value. Hence, the process unit capable of performing optimum process on any object to be processed the loss elastic modulus of which varies due to various factors can be implemented.

[Embodiment 17]

In Embodiments 7 to 15 of the present invention as described above, we described the process unit that performs control based on result of comparison between measured viscoelastic property and one threshold. On the one hand, in Embodiment 17 of the present invention, we describe the configuration in which control is performed based on result of comparison between measured viscoelastic property and more than one threshold.

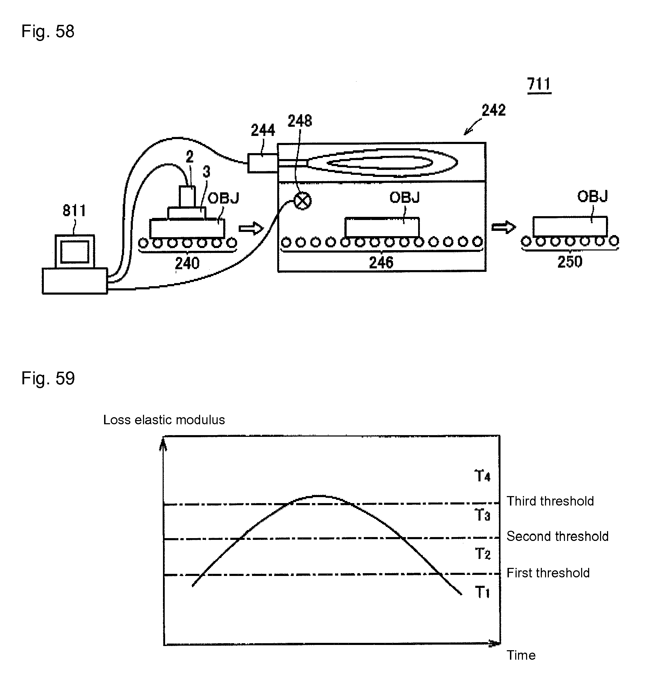

FIG. 58 shows the schematic configuration of a process unit 711 according to Embodiment 17 of the present invention.

With reference to FIG. 58, the process unit 711 includes a measurement control unit 811, drying furnace 242, receiving table roller 240, discharging table roller 250, sensor unit 2, and delaying member 3. Then, the process unit 711 emits incident sonic wave from the sensor unit 2 to an object to be processed OBJ received by the receiving table roller 240, and measures viscoelastic property of the object to be processed OBJ based on reflected sonic wave resulting from the incident sonic wave. The measurement control unit 811 not only determines drying temperature in the drying furnace 242 depending on viscoelastic property of the object to be processed OBJ it measured, but also dries the object to be processed OBJ by moving it in the drying furnace 242. In addition, the object to be processed OBJ dried in the drying furnace 242 is taken out by the discharging table roller 250.

As such, the measurement control unit 811 changes temperature in the drying furnace 242, depending on viscoelastic property of the object to be processed OBJ it received, and optimizes degree of drying of the object to be processed OBJ. By way of example, the process unit 711 receives and dries molded ceramic material such as that described in Embodiment 16 of the present invention as an object to be processed OBJ. Similarly, the process unit 711 dries molded paste to be molded pottery.

The receiving table roller 240 receives the object to be processed OBJ to be carried by the carrying means (not shown) and caries it to the drying furnace 242.

The drying furnace 242 includes a burner 244, temperature sensing unit 248, and moving table roller 246. The burner 244 is positioned above the carrying path and generated predetermined amount of heat responding to a burn command from the measurement control unit 811. Although the burner 244 burns mix gas of fuel gas and air, by way of example, instead of this, induction heating, microwave heating, resistive heating, etc. may be used alternatively. The temperature sensing unit 248 senses temperature inside the furnace in the vicinity of the carrying path of an object to be processed OBJ, and outputs the sensed temperature to the measurement control unit 811. The moving table roller 246 carries the received object to be processed OBJ from the left side of the figure to the right side of the figure in a predetermined speed.

The discharging table roller 250 discharges the object to be processed OBJ carried from the drying furnace 242 to an external device or mechanism.

The sensor unit 2 is arranged in close with the delaying member 3, and positioned on the to surface of the object to be processed OBJ through the delaying member 3 by an elevating mechanism (not shown) when the object to be processed OBJ is carried onto the receiving table roller 240. The delaying member 3 is then brought into close contact with the object to be processed OBJ due to its own weight or pressing pressure from above. Then, responding to an emit command from the measurement control unit 811, the sensor unit 2 emits incident sonic wave to the object to be processed OBJ through the delaying member 3. The sensor unit 2 receives reflected sonic wave generated by the incident sonic wave being reflected on a boundary between the object to be processed OBJ and delaying member 3 and outputs its temporal waveform to the measurement control unit 811. As any other things are similar to Embodiment 7 of the present invention as described above, we do not repeat detailed description.

When the object to be processed OBJ is on the receiving table roller 240, the measurement control unit 811 gives the sensor unit 2 an emit command, emits incident sonic wave to the object to be processed OBJ from the sensor unit 2, and measures viscoelastic property of the object to be processed OBJ based on the temporal waveform of the reflected sonic wave received by the sensor unit 2. The measurement control unit 811 determines drying temperature in the drying furnace 242 based on viscoelastic property of the object to be processed OBJ it measured, and gives the burner 244 a burn command so that temperature to be sensed by the temperature sensing unit 248 matches the drying temperature. Additionally, as generation of heat amount from the burner 24 and temperature increase in the drying furnace 242 are lines containing waste time and delay time, the measurement control unit 811 adjusts a burn command through PID control, etc., based on the determined drying temperature and temperature sensed by the temperature sensing unit 248.

In addition, more detailed configuration of the measurement control unit 811, sensor unit 2 and delaying member 3 is similar to the measurement control unit 801, sensor unit 2 and delaying member 3 according to Embodiment 7 of the present invention as shown in FIG. 18, we do not repeat detailed description.

FIG. 59 shows one example of temporal change in the loss elastic modulus of the object to be processed OBJ consisting of ceramic moldings. Additionally, the storage elastic modulus used herein is a peak value at a specific frequency.

With reference to FIG.59, the measurement control unit 811 according to Embodiment 17 of the present invention measures the loss elastic modulus (viscosity) as viscoelastic property of an object to be processed OBJ.

As described above, ceramic raw materials change its loss elastic modulus due to variations in outside temperature, temperature of the kneading container, moisture content, additive amount of a binder, etc. Thus, when the loss elastic modulus is low, namely, when viscosity is low, drying temperature should be controlled to reduce the probability of cracking due to excessive drying, etc. On the one hand, when the loss elastic modulus is high, namely, when viscosity is high, drying temperature should be increased in order to form more solid state.

Thus, when the loss elastic modulus of the object to be processed OBJ is high, the measuring control unit 811 sets drying temperature relatively high. When the loss elastic modulus of the object to be processed OBJ is low, to the contrary, it sets drying temperature relatively low.

Specifically, the measurement control unit 811 previously specifies a plurality of thresholds for the loss elastic modulus of an object to be processed OBJ to be measured. Then, the measurement control unit 811 determines drying temperature for those thresholds based on which range the measured loss elastic modulus lies in.

By way of example, in Embodiment 17 of the present invention, the measurement control unit 811 specifies 3 thresholds (first threshold, second threshold, and third threshold) and selects any one of 4 drying temperatures (T1, T2, T3, and T4) based on which threshold range the loss elastic modulus lines in. In other words, if the loss elastic modulus of the object to be processed OBJ is lower than the first threshold, the drying temperature T1 is selected. In addition, if the loss elastic modulus of the object to be processed OBJ exceeds the first threshold and is lower than the second threshold, the second drying temperature T2 is selected. In addition, if the loss elastic modulus of the object to be processed OBJ exceeds the second threshold and is lower than the third threshold, the drying temperature T3 is selected. In addition, if the loss elastic modulus of the object to be processed OBJ exceeds the third threshold, the drying temperature T4 is selected.

As such, the measurement control unit 811 optimizes the drying temperature depending on the loss elastic modulus of object to be processed OBJ. Additionally, instead of the configuration in which the drying temperature is changed, the configuration may be such that period of time during which an object to be processed OBJ is dried in the drying furnace, namely, speed of the moving table roller 246 may be controlled.

In addition, the display output unit 16 displays temporal change in the loss elastic modulus as shown in FIG. 59 at any time and/or outputs data thereof to the external. Furthermore, the display output unit 16 displays information on burning temperature to be selected, a burn command to be given to the burner 244, etc., and/or outputs data thereof to the external.

(Process Flow)

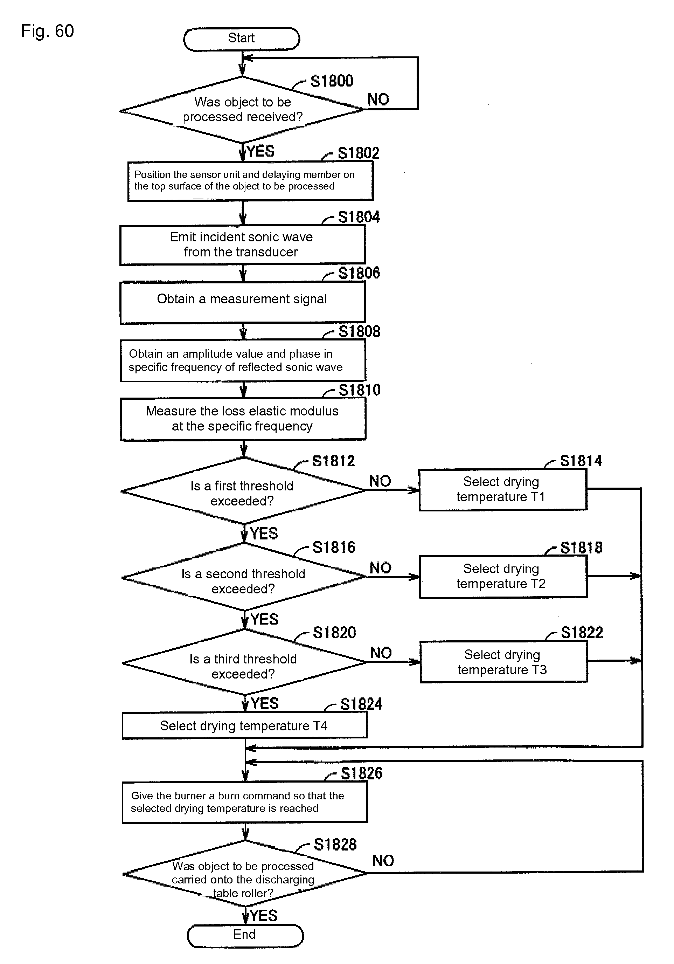

FIG. 60 shows the process flow related to the process control according to Embodiment 17 of the present invention. In addition, according to the process for obtaining reference data as shown in FIG. 21, reference data that serves as a reference is previously obtained in the storage unit 14.

With reference to FIG. 18 and FIG. 60, the calculating unit 11 determines whether or not an object to be processed OBJ was received by the receiving table roller 240 (step S1800). When the object to be processed OBJ was not received (NO in step S1800), the calculating unit 11 waits till the object to be processed OBJ is received (step S1800).

When the object to be processed OBJ was received (YES in step S1800), the calculating unit 11 positions the sensor unit 2 and delaying member 3 on the top surface of the object to be processed OBJ by an elevating mechanism (not shown) (step S1802). Then, the calculating unit 11 gives the transmission control circuit 22 an emit command and emits incident sonic wave from the transducer 20 (step S1804).

Then, the calculating unit 11 obtains a measurement signal indicative of temporal intensity change in reflected sonic wav received by the transducer 20 (step S1806). Then, the calculating unit 11 performs FFT process on the measurement signal it obtained, and obtains an amplitude value and phase of the reflected sonic wave at a specific frequency (step S1808). Then, the calculating unit 11 obtains from the storage unit 14 an amplitude value and phase stored as reference data and measures the loss elastic modulus of the object to be processed OBJ at the specific frequency with them being as a reference (step S1810).

Then, the calculating unit 11 determines whether or not the measured loss elastic modulus has exceeded a first threshold (step S1812). When the measured loss elastic modulus has not exceeded the first threshold (NO in step S1812), the calculating unit 11 selects drying temperature T1 (step S1814).

When the measured loss elastic modulus has exceeded the first threshold (YES in step S1812), the calculating unit 11 determines whether or not the measured loss elastic modulus has exceeded a second threshold (step S1816). When the measured loss elastic modulus has not exceeded the second threshold (No in step S1816), the calculating unit selects drying temperature T2 (step S1818).

When the measured loss elastic modulus has exceeded the second threshold (YES in step S1816), the calculating unit 11 determines whether or not the measured loss elastic modulus has exceeded a third threshold (step S1820). When the measured loss elastic modulus has not exceeded a third threshold (NO in step S1820), the calculating unit 11 selects drying temperature T3 (step S1822).

If the measured loss elastic modulus has exceeded the third threshold (YES in step S1820), the calculating unit selects drying temperature T4 (step S1824).

After selecting any of the drying temperatures (steps S1814, S1818, S1822, and S1824), the calculating unit 11 gives the burner 244 a burn command so that the selected drying temperature can be reached (step S1826). Then, the calculating unit 11 determines whether or not the object to be processed OBJ has been discharged from the drying furnace 242 to the discharging table roller 250 (step S1828). If it has not yet been discharged to the discharging table roller (NO in step S1828), the calculating unit 11 performs the process of step S1826 repeatedly.

When it has been discharged to the discharging table roller 250 (YES in step S1828), the calculating unit terminates the process.

In Embodiment 17 of the present invention as described above, although we described the configuration in which drying temperature is changed in discrete manner by comparing measured loss elastic modulus with a plurality of thresholds, the configuration may be such that drying temperature is changed continuously based on a deviation between measured loss elastic modulus and a target value.

According to Embodiment 17 of the present invention, the sensor unit emits incident sonic wave to an object to be processed through the delaying member to be positioned on the top surface of the object to be processed to be carried in and receives reflected sonic wave generated by the incident sonic wave being reflected on a boundary between the object to be processed and delaying member. Then, the measurement control unit measures the loss elastic modulus among viscoelastic properties of an object to be processed based on the received reflected sonic wave, and selects optimal drying temperature based on the measurement result.

Thus, an object to be processed can be optimally dried even when the loss elastic modulus of the object to be processed fluctuates due to various disturbances. Hence, the process unit capable of performing optimum processing on an object to be processed the loss elastic modulus of which fluctuates due to various factors.

[Embodiment 18]

In the description above, we exemplified the configuration for obtaining reference data for every measurement of viscoelastic property, and that for previously obtaining reference data prior to measurement of viscoelastic property. In the embodiments as shown below, we exemplify the configuration for controlling effect of temperature dependence of sonic wave, thereby implementing more precise and efficient measurement of viscoelastic property.

The invention disclosed in Embodiments 18 to 22 of the present invention is applicable to any viscoelastic property measuring device and process unit that measure viscoelastic property of a measurement target or object to be processed by using the surface reflection method and bottom reflection method. In the following description, in order to facilitate understanding, we exemplify the configuration for measuring viscoelastic property by using the surface reflection method.

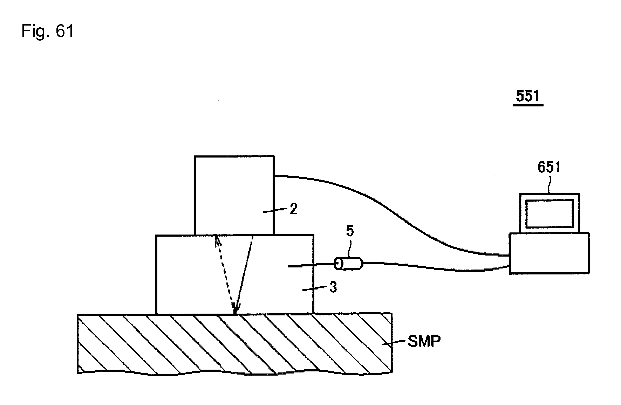

FIG. 61 schematically shows the main part of the viscoelastic property measuring device 551 according to Embodiment 18 of the present invention.

With reference to FIG. 61, the viscoelastic property measuring device 551 is configured to be able to measure viscoelastic property of a measurement target SMP. Then, the viscoelastic property measuring device 551 includes a measurement control unit 651, sensor unit 2, delaying member 3, and temperature measuring unit 5.

As we detailed the sensor unit 2 and delaying member 3 in Embodiment 1 of the present invention as described above, we do not repeat detailed description.

The temperature measuring unit 5 is a thermometer for obtaining temperature of the delaying member 3 (hereinafter also referred to as "delaying member temperature") and is constituted of a thermocouple or a resistance-temperature detector, by way of example. In particular, the temperature measuring unit 5 measures temperature of internal medium of the delaying member 3 and outputs the measured temperature value to the measurement control unit 651. Additionally, in FIG. 61, although we exemplify the configuration in which one temperature measuring unit 5 is arranged, a representative value may be obtained by arranging more than one temperature measuring unit 5 and averaging measured temperature values from respective temperature measuring units 5. This makes it possible to obtain temperature of the delaying unit 4 more precisely even when temperature distribution of the delaying member 4 is not uniform. In addition, it is desirable that the temperature measuring unit 5 be arranged in a position where it does not interfere with incident sonic wave or reflected sonic wave that propagate within the delaying unit 4. This is because error may occur in viscoelastic property as the incident sonic wave or reflected sonic wave is reflected more locally by the temperature measuring unit 5.

Similarly to the measurement control unit 601 according to Embodiment 1 of the present invention as described above, the temperature control unit 651 not only causes the sensor unit 2 to emit incident sonic wave with the measurement target SMP connected to the delaying member 3 (measurement state), but also measures viscoelastic property of the measurement target SMP based on reflected sonic wave generated by the incident sonic wave being reflected by the measurement target SMP.

In particular, the measurement control unit 651 according to Embodiment 18 of the present invention associates reference data showing characteristics of reflected sonic wave received without the sensor unit 2 in contact with the measurement target SMP (reference state), with the delaying member temperature and previously stores a plurality of the data. Then, when measurement starts, based on reference data previously stored for every temperature, the temperature control unit 651 determines corrected reference data corresponding to the delaying member temperature measured by the temperature measuring unit 5. In addition, the measurement control unit 651 measures viscoelastic property of the measurement target SMP from a measurement signal obtained in the measurement state, with the determined corrected reference data as a reference. In addition, reference data contains temporal intensity change of reflected sonic wave, or amplitude characteristic and phase characteristic of the reflected sonic wave in the frequency domain.

As such, the measurement control unit 651 determines reference data suitable for the delaying member temperature during measurement, from a plurality of reference data that is associated with the delaying member temperature and previously obtained, and calculates viscoelastic property based on the determined reference data. This can eliminate the need for obtaining reference data for every measurement, and perform control to prevent measurement result of viscoelastic property from being influenced by temperature change in the delaying member 3 that is being measured.

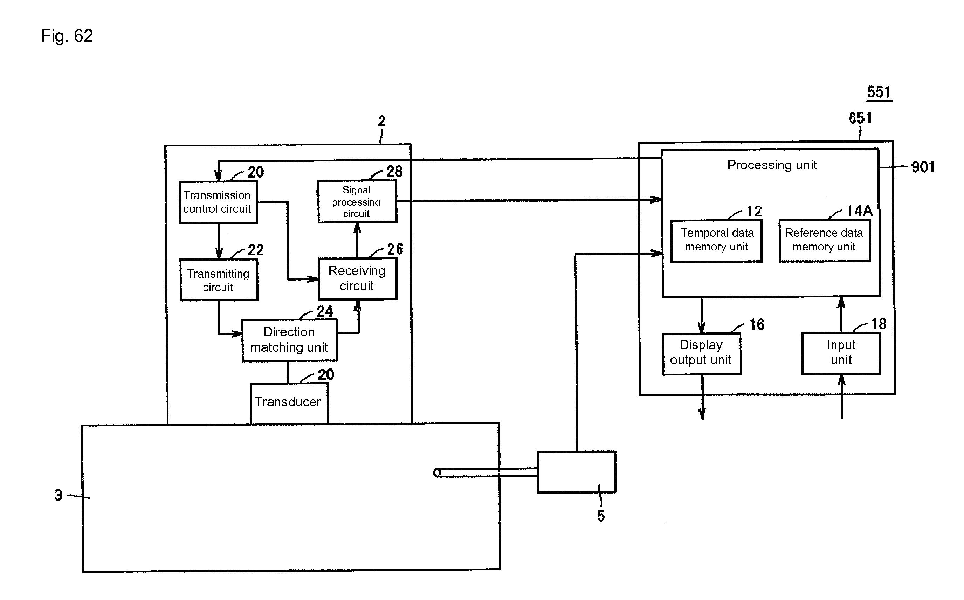

FIG. 62 shows the schematic configuration of a viscoelastic property measuring device 551 according to Embodiment 18 of the present invention.

With reference to FIG. 62, the measurement control unit 651 is constituted of a personal computer, for instance and includes a processing unit 901, display output unit 16 and input unit 18.

The processing unit is 901 constituted by including a temporal data memory unit 12 and reference data memory unit 14A. The temporal data memory unit 12 stores signals indicative of temporal intensity change in reflected sonic wave received by the sensor unit 2 in a predetermined cycle. Additionally, the temporal data memory unit 12 is configured to be able to change the cycle of storing data, responding to a request from the processing unit 901. The reference data memory unit 14A stores reference data that is associated with the delaying member temperature and indicative of characteristics of reflected sonic wave to be obtained in reference state. By way of example, in Embodiment 18 of the present invention, the reference data memory unit 14A stores, as reference data, temporal intensity change characteristic of reflected sonic wave received in reference state.

When it receives a start measurement command from a user, etc., the processing unit 901 obtains a measured temperature value of the delaying member 3 from the temperature measuring unit 5, and determines corrected reference data corresponding to the measured temperature value, based on reference data of every delaying member temperature stored in the reference data memory unit 14A. Then, the processing unit 901 gives the sensor unit 2 an emit command and not only emits incident sonic wave from the transducer 20, but also temporarily stores in the temporal data memory unit 12 a measurement signal that is outputted in response to reflected sonic wave received by the transducer 20. Then, the processing unit 901 calculates viscoelastic property of the measurement target from the measurement signal stored in the temporal memory data unit 12, with the determined corrected reference data as a reference.

As the display output unit 16 and input unit 18 are similar to Embodiment 1 of the present invention as described above, we do not repeat detailed description. In addition, as the sensor unit 2 is also similar to Embodiment 1 of the present invention as described above, we do not repeat detailed description.

(Temperature dependence of sonic wave in the delaying member)

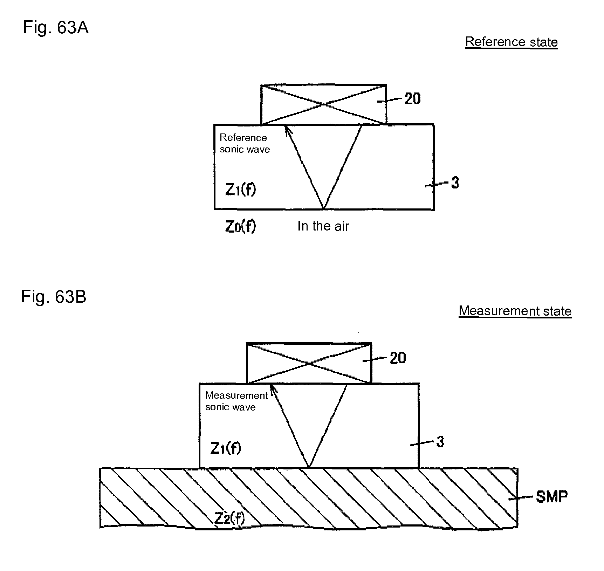

FIG. 63A shows reference state in the surface reflection method.
FIG. 63B shows measurement state in the surface reflection method.

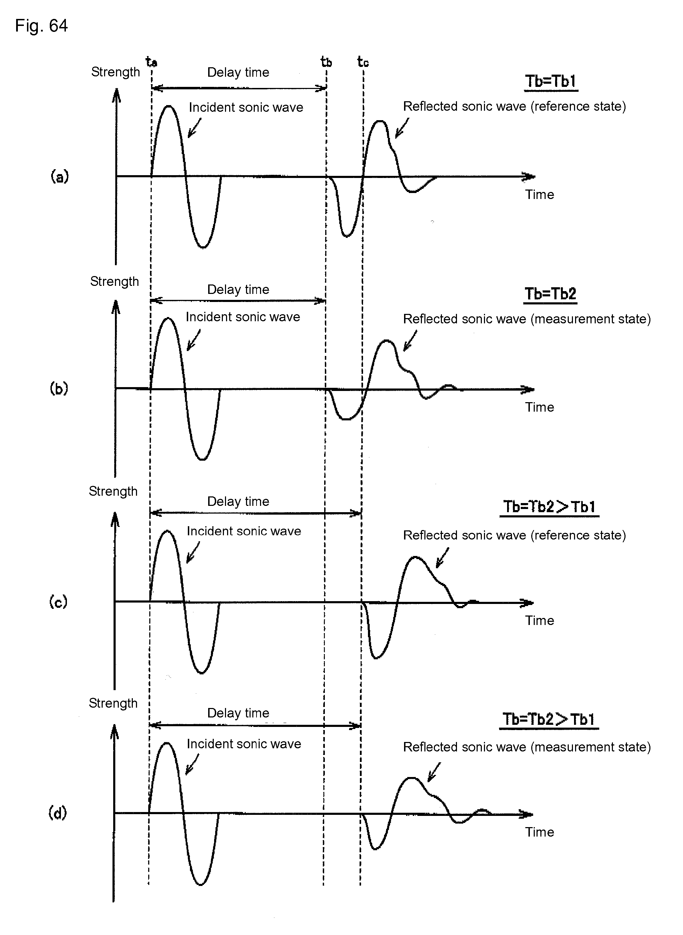

FIG. 64 shows temporal intensity change of sonic wave to be emitted or received by the transducer 20.
FIG. 64 (a) shows temporal intensity change in sonic wave in reference state when the delaying member temperature $Tb=Tb1$.
FIG. 64 (b) shows temporal intensity change in sonic wave in measurement state when the delaying member temperature $Tb=Tb1$.
FIG. 64 (c) shows temporal intensity change in sonic wave in reference state when the delaying member temperature $Tb=Tb2(>Tb1)$.
FIG. 64 (d) shows temporal intensity change in sonic wave in measurement state when the delaying member temperature $Tb=Tb2 (>Tb1)$.
With reference to FIG. 64(a), at time ta, when emission of incident sonic wave starts, the incident sonic wave enters inside of the delaying member from the top surface of the delaying member 3, and is propagated through the inside of the member toward the underside of the delaying member 3. Then, the incident sonic wave generates reflected sonic wave on a boundary among the delaying member 3, underside and atmosphere. As the reflected sonic wave is reverse to the propagation direction of the incident sonic wave, it is propagated from the underside to the top surface of the delaying member 3. Then, the reflected sonic wave is injected from the top surface of the delaying member to outside of the member, and received by the transducer 20. If reception of the reflected sonic wave by the transducer 20 starts at time tb, the time for incident sonic wave or reflected sonic wave to propagate inside the delaying member 3 in reciprocating manner, i.e., the time from when the transducer 20 emits incident sonic wave till reflected sonic wave is received by the transducer 20 (hereinafter also referred to as "delay time") is the time that represents a period from time ta to time tb.

With reference to FIG. 64 (b), similar to FIG. 64 (a), if emission of incident sonic wave starts at time ta, reception of reflected sonic wave by the transducer 20 starts at time tb. In fact, if the delaying member temperatures are mutually identical, the delay times are also identical because propagation characteristics of incident sonic wave and reflected sonic wave match each other.

With reference to FIG. 64 (c), if it is assumed that the delaying member temperature rises from Tb1 to Tb2, similar to FIG. 64(a), reception of the reflected sonic wave by the transducer 20 starts at time tc that is later than time tb, even if emission of incident sonic wave starts at time ta. In fact, with increase of temperature of the delaying member 3, the delay time is extended.

With reference to FIG. 64 (d), when the delaying member temperature rises from Tb1 to Tb2, even in measurement state the delay time is extended, similar to FIG. 64 (c).

As shown in FIG. 64, we can see that the delay time varies depending on the temperature of the delaying member 3. On the one hand, if the delaying member temperatures are identical, the delay times match each other in any of reference state and measurement state. This is because incident sonic wave and reflected sonic wave only propagate inside the delaying member and thus are not affected by any medium bonded to the underside of the delaying member 3.

Thus, acquisition of reflected sonic wave in reference state every time measurement takes place is no longer necessary because optimum reference data can be determined depending on a measured temperature value of the delaying member 3 during measurement, if reflected sonic wave in reference state of every delaying member temperature, i.e., reference data, is previously obtained.

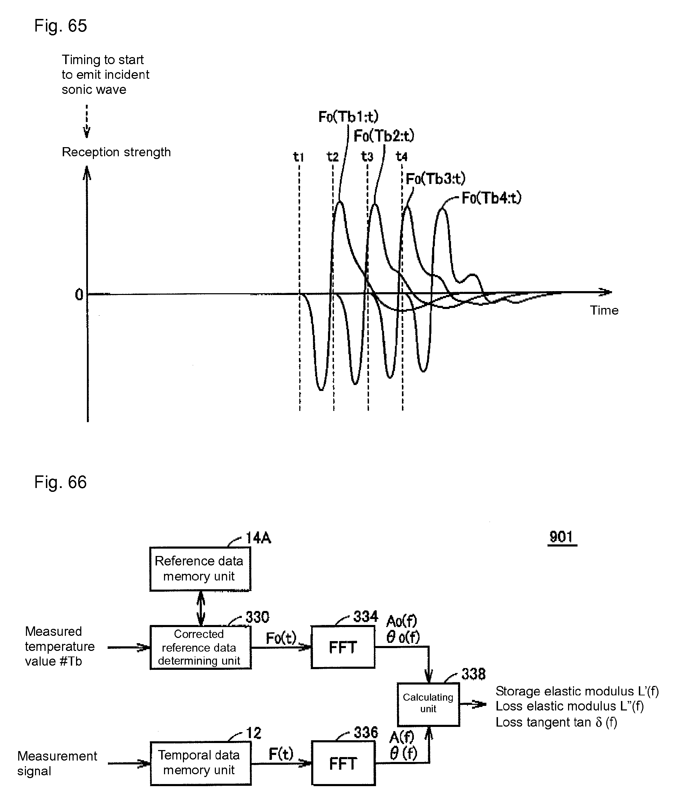

FIG. 65 shows temporal intensity change in a reference signal of every delaying member temperature.

In FIG. 65, timing when emission of incident sonic wave from the transducer 20 starts is set to a reference point (zero) of the time axis (horizontal axis), and each function is specified by 2 parameters: time elapsed since the reference point 5 and delaying member temperature. In other words, in FIG. 65, reference signals corresponding to the delaying member temperatures Tb1, Tb2, Tb3, Tb4 (Tb1 < Tb2 < Tb3 < Tb4) are expressed as $F_0$ (Tb1:t), $F_0$ (Tb2:t), $F_0$ (Tb3:t), $F_0$(Tb4:t), respectively.

With reference to FIG. 65, we can see that delay time of the reference signals are t1, t2, t3, t4 (t1 < t2 < t3 < t4), respectively, corresponding to the delaying member temperatures Tb1, Tb2, Tb3, Tb4. In addition, with increase in temperature of the delaying member 3, we can see that intensity peak of the reference signals are smaller.

As described above, in Embodiment 18 of the present invention, as reference data, temporal intensity change characteristic of reflected sonic wave received in reference state (i.e., reference signal), as shown in FIG. 65, is associated with the delaying member temperature and stored.

(Processing Structure)

FIG. 66 shows a control block of the processing unit 901 related to measurement process of viscoelastic property according to Embodiment 18 of the present invention.

With reference to FIG. 66, the process structure in the processing unit 901 includes a reference data memory unit 14A, corrected reference data determining unit 330, frequency characteristic acquisition units (FFT) 334, 336, temporal data memory unit 12 and calculating unit 338.

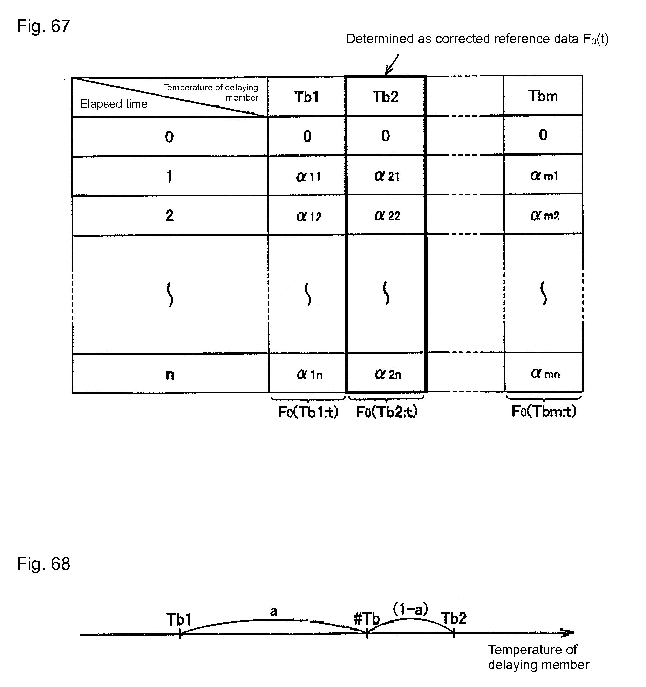

As shown in FIG. 65, the reference data memory unit 14A previously stores a plurality of reference data indicative of temporal intensity change in reflected sonic wave received in reference state for every delaying member temperature. FIG. 67 shows the data structure of reference data according to Embodiment 18 of the present invention.

With reference to FIG. 67, the reference data memory unit 14A stores two-dimensional reference data that is specified by the elapsed time with the delaying member temperature and timing of emitting incident sonic wave as a reference.

Specifically, not only the delaying member temperatures are specified column-wise but also intensity, associated with each delaying member temperature, is specified for every elapsed time. In other words, reference data $F_0$(Tb1:t) as shown in FIG. 67 is associated with the column for the delaying member temperature Tb1 and intensity values of $\alpha_{11},\alpha_{12},\bullet\bullet\bullet,\alpha_{1n}$ are stored. In the following, the reference data memory unit 14A similarly stores the temporal intensity change characteristics of reflected sonic waves in reference state, for every m kinds of temperatures.

With reference to FIG. 66 again, based on the reference data of every delaying member temperature stored in the reference data memory unit 14A, the corrected reference data determining unit 330 determines corrected reference data corresponding to the measured temperature value #Tb of the delaying member 3 to be measured by the temperature measuring unit 5. By way of example, among a plurality of reference data stored in the reference data memory unit 14A, the corrected reference data determining unit 330 according to Embodiment 18 of the present invention determines, as corrected reference data, the reference data associated delaying member temperature of which is closest to the measured temperature value #Tb of the delaying member 3.

FIG. 68 shows one example of a relationship of reference data stored in the reference data memory unit 14A and the measured temperature value #Tb.

With reference to FIG. 68, if the reference data memory unit 14A stores reference data associated with the delaying member temperatures Tb1 and Tb2, respectively, assume that there is a relationship of the delaying member temperature and the measured temperature value #Tb of the delaying member 3: Tb1 < #Tb < Tb2. Now, if |Tb1-#Tb|>|Tb2-#Tb| is true, the measured temperature value #Tb of the delaying member 3 is closest to the delaying member temperature Tb2. Then, the corrected reference data determining unit 330 determines from the reference data memory unit 14A that the reference data associated with the delaying member temperature Tb2 is the corrected reference data $F_0(t)$ (See FIG. 67), and outputs it to the frequency characteristic acquisition unit 334. Although the case of |Tb1-#Tb|=|Tb2-#Tb| is assumed, reference data associated with preset higher delaying member temperature or lower delaying member temperature is selected preferentially.

With reference to FIG. 66 again, the frequency characteristic acquisition unit 334 performs FFT process on the corrected reference data $F_0(t)$ to be outputted from the corrected reference data determining unit 330, obtains the amplitude characteristic $A_0(f)$ and phase characteristic $\theta_0(f)$ for the corrected reference data in the frequency domain, and outputs them to the calculating unit 338.

In the mean time, the temporary data memory unit 12 stores temporal intensity change in reflected sonic wave received in measurement state, and outputs the stored data to the frequency characteristic acquisition unit 336, as measurement signal F(t).

Similar to the frequency characteristic acquisition unit 334, the frequency characteristic acquisition unit 336 performs FFT process on the measurement signal F(t) to be outputted from the temporal data memory unit 12, obtains the amplitude characteristic A(f) and phase characteristic $\theta(f)$ for the measurement signal in the frequency domain, and outputs them to the calculating unit 338.

With the amplitude characteristic $A_0(f)$ and phase characteristic $\theta_0(f)$ for the corrected reference data in the frequency domain as a reference, the calculating unit 338 calculates from the amplitude characteristic A(f) and phase characteristic $\theta(f)$ for the measurement signal in the frequency domain viscoelastic properties of a measurement target SMP (storage elastic modulus L'(f), loss elastic modulus L"(f), and loss tangent $\delta(f)$). In fact, the calculating unit 38 performs arithmetic operations according to expressions (9) to (11) as described above.

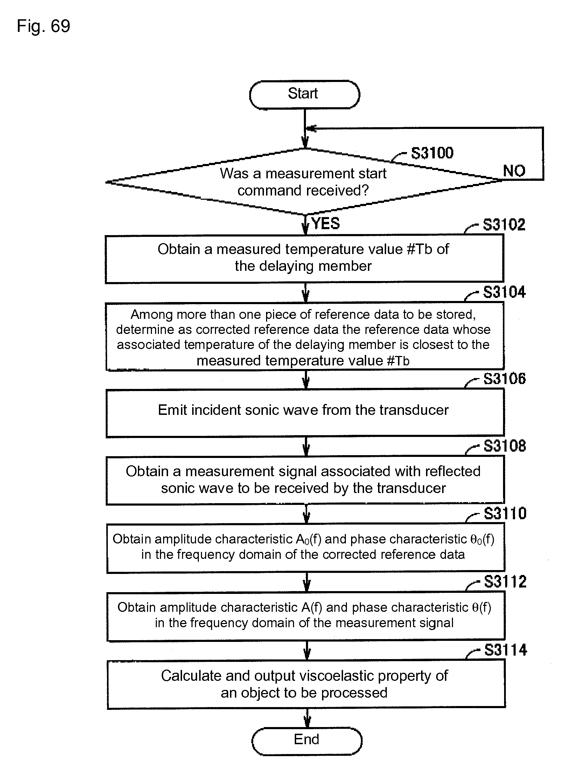

FIG. 69 shows the process flow related to measurement of viscoelastic property according to Embodiment 18 of the present invention.

With reference to FIG. 69, the processing unit 901 determines whether or not it received a measurement start command from a user, etc. (NO in step S3100). When it did not receive the measurement start command (NO in step S3100), the processing unit 901 waits till it receives the measurement start command (step S3100).

When it received the measurement start command (YES in the step S3100), the processing unit 901 obtains the measured temperature value #Tb of the delaying member 3 to be measured by the temperature measuring unit 5 (step S3102). Then, among a plurality of reference data stored, the processing unit 901 determines, as corrected reference data, the reference data the associated delaying member temperature of which is closest to the measured temperature value #Tb (step S3104).

Next, the processing unit 901 gives the sensor unit 2 an emit command, and emits incident sonic wave from the transducer 20 (step S3106). Then, the processing unit 901 obtains a measurement signal corresponding to reflected sonic wave received by the transducer 20 (step S3108).

Then, the processing unit 901 performs FFT process on the corrected reference data and obtains the amplitude characteristic $A_0(f)$ and phase characteristic $\theta_0(f)$ for the corrected reference data in the frequency domain (step S3110). In addition, the processing unit 901 performs FFT process on a measurement signal and obtains the amplitude characteristic A(f) and phase characteristic $\theta(f)$ for the measurement signal in the frequency domain (step S3112). With the amplitude characteristic $A_0(f)$ and phase characteristic $\theta_0(f)$ for the corrected reference data being as a reference, the processing unit 901 calculates from the amplitude characteristic A(f) and phase characteristic $\theta(f)$ for the measurement signal viscoelastic property of the measurement target SMP and outputs it (step S3114). Then, the processing unit 901 terminates the process.

(Acquisition of reference data)

Since each reference data stored in the viscoelastic property measuring device 51 according to Embodiment 18 of the present invention is dependent on characteristics of the transducer 20 and delaying member 3, there is no need for obtaining reference data corresponding to each viscoelastic property measuring device. In other words, common reference data can be used between the viscoelastic property measuring devices using the same transducer 20 and delaying member 3. Thus, the viscoelastic property measuring device according to the present invention is not necessarily provided with a means of obtaining reference data. However, from the standpoint of user-friendliness, it is desirable to include the means.

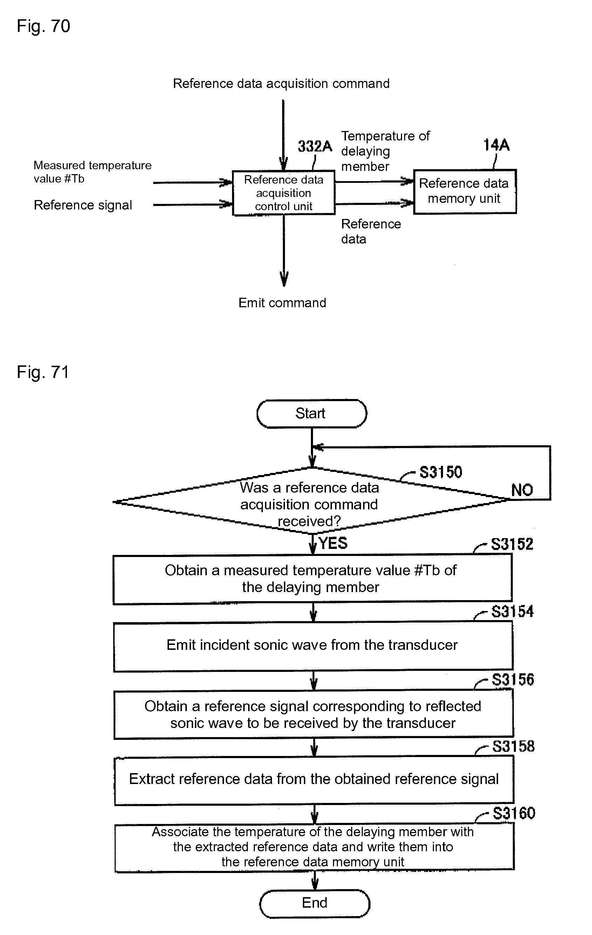

FIG. 70 shows the control block in the processing unit 901 related to process of obtaining reference data according to Embodiment 18of the present invention.

With reference to FIG. 70, the process structure related to the process of obtaining reference data includes a reference data acquisition control unit 332A and reference data memory unit 14A.

When receiving a reference data acquisition command from a user, etc., the reference data acquisition control unit 332A not only obtains the measured temperature value #Tb from the temperature measuring unit 5, but also gives the sensor unit 2 (FIG. 2) an emit command. Then, the reference data acquisition control unit 332A obtains a reference signal corresponding to reflected sonic wave received by the transducer 20. Then, while considering the measured temperature value #Tb obtained from the temperature measuring unit 5 as delaying member temperature, the reference data acquisition control unit 332A extracts reference data from the obtained reference signal, associates it with the delaying member temperature, and writes it into the reference data memory unit 14A.

Additionally, in order to improve measurement precision of viscoelastic property, it is necessary to store reference data for every delaying member temperature that is segmentalized as much as possible. Thus, it is desirable to perform storing process while adjusting the temperature of the delaying member 3. Thus, a mechanism capable of adjusting temperature of the delaying member 3 may be further provided.

FIG. 71 shows the process flow related to reference data acquisition according to Embodiment 18 of the present invention.

With reference to FIG. 71, the processing unit 901 determines whether or not it received a reference data acquisition command from a user, etc. (Step S3150). When it did not receive the reference data acquisition command (NO in step S3150), the processing unit 910 waits till it receives the reference data acquisition command (step S3150).

When it received the reference data acquisition command (YES in step S3150), the processing unit 901 obtains the measured temperature value #Tb of the delaying member 3 to be measured by the temperature measuring unit 5 (step S3152). The processing unit 901 also gives the sensor unit an emit command and emits incident sonic wave from the transducer 20 (step S3154). Then, the processing unit 901 obtains a reference signal corresponding to reflected sonic wave (step S3156). The processing unit 901 further extracts reference data from the obtained reference signal (step S3158).

After extracting the reference data, the processing unit 901 considers the measured temperature value #Tb of the delaying member to be measured by the temperature measuring unit 5 as delaying member temperature, associates it with the extracted reference data, and writes it into the reference data memory unit 14A (step S3160). Then, the processing unit 901 terminates the process.

In Embodiment 18 of the present invention, the delaying member 3 corresponds to a "delaying member", the transducer 20 corresponds to a "transducer", the measurement control unit 651 corresponds to a "measurement control unit", and the temperature measuring unit 5 corresponds to a "temperature measuring unit". Then, the reference data memory unit 14A implements a "reference data storage means", the corrected reference data determining unit 330 implements a "corrected reference data determining means", the calculating unit 338 implements a "calculating means", the frequency characteristic acquisition unit (FFT) 334 implements a "first frequency characteristic acquisition means", and the frequency characteristic acquisition unit (FFT) 336 implements a "first frequency characteristic acquisition unit". In addition, the sensor unit 2, transducer 20 and delaying member 3 correspond to a "sonic wave unit".

According to Embodiment 18 of the present invention, from a measurement signal to be obtained in measurement state in which a measurement target SMP is bonded to the underside of the delaying member 3, corrected reference data corresponding to the measurement temperature #Tb of the delaying member 3 at the time is determined when viscoelastic property of the measurement target SMP is measured. The viscoelastic property of the measurement target SMP is calculated from measurement signal using the determined corrected reference data as a reference. This enables use of reference data suitable for delaying member temperature at the time of each measurement, without obtaining a reference signal even when there arises any temperature change in the delaying member 3. Thus, not only measurement precision can be improved, but also unnecessary work related to acquisition of reference data can be controlled. Therefore, temperature dependency of sonic wave can be controlled, and efficient measurement of viscoelastic property can be implemented.

In addition, according to Embodiment 18 of the present invention, through similar operation to measurement, a plurality of reference data to be used in measurement can be previously obtained. This enables storage of reference data of every delaying member temperature that is segmentalized as much as possible, and determination of corrected reference data in more accurate manner.

[Variant Example of Embodiment 18]

In Embodiment 18 of the present invention as described above, although we exemplified the configuration in which among a plurality of reference data, the reference data the associated delaying member temperature of which is closest to the measured temperature value #Tb of the delaying member 3 is determined as corrected reference data, the configuration may be such that corrected reference data is generated by interpolation of a plurality of reference data stored in the reference data memory unit 14A.

As the viscoelastic property measuring device according to the variant example of Embodiment 18 of the present invention is similar to the viscoelastic property measuring device 551 according to Embodiment 18 of the present invention, except for content of the processes in the corrected reference data determining unit 330 (FIG 66), we do not repeat detailed description of overall configuration.

By way of example, in the variant example of Embodiment 18 of the present invention, corrected reference data can be generated by interpolating two reference data the associated delaying member temperature of which is adjacent to the measured temperature value #Tb, among a plurality of reference data stored in the reference data memory unit 14A.

With reference to FIG. 68 again, when the measured temperature value #Tb of the delaying member 3 measured by the temperature measuring unit 5 is intermediate between the delaying member temperatures Tb1 and Tb2, i.e., when the measured temperature value #Tb is adjacent to the delaying member temperatures Tb1 and Tb2, two reference data associated with the respective delaying member temperatures Tb1 and Tb2 are used for generating corrected reference data.

In particular, interpolation based on a temperature difference ratio in the temperature domain is performed. In the following, we describe the case in which a relationship of |Tb1-#Tb|:|Tb2-#Tb|=a:(1-a) is true.

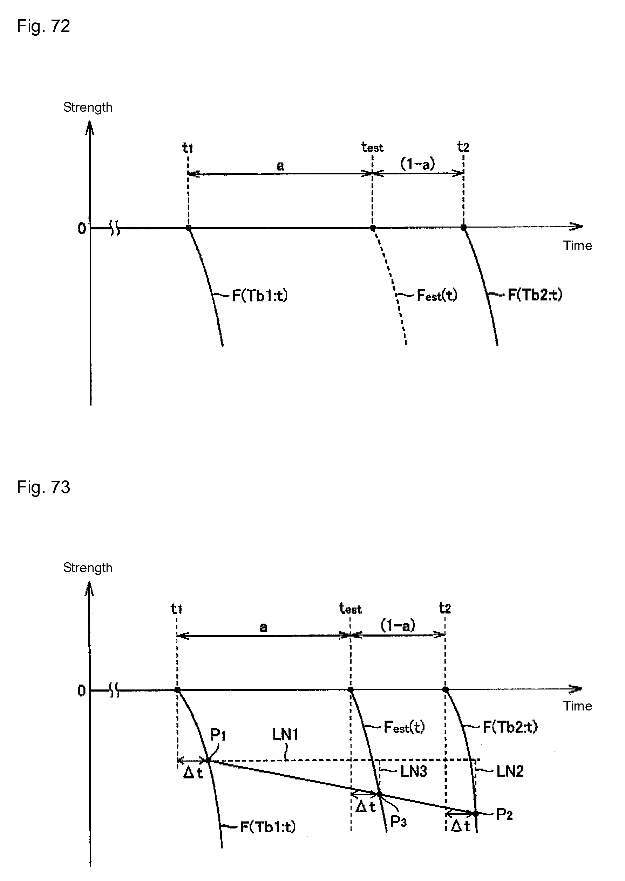

FIG. 72 shows a view for illustrating a method of determining delay time test related to the corrected reference data in the variant example of Embodiment 18 of the present invention.

With reference to FIG. 72, assume that reference data $F_0$(Tb1:t) associated with the delaying member temperature Tb1 and reference data $F_0$(Tb2:t) associated with the delaying member temperature Tb2 are t1 and t2, respectively. Then, the delay time test related to the corrected reference data $F_{est}(t)$ is determined so that a ratio of time difference between the delay time t1 and delay time t2 for the delay time test corresponds to a ratio of temperature differences between the delaying member temperature Tb1 and delaying member temperature Tb2 to the measured temperature #Tb. In other words, the delay time test is determined so that $|t1-t_{est}|:|t2-t_{est}|=|Tb1-\#Tb|:|Tb2-\#Tb|=a:(1-a)$ is true.

When the delay time test related to the corrected reference data $F_{est}(t)$ is determined, then temporal intensity change in the corrected reference data $F_{est}(t)$ is interpolated.

FIG. 73 shows a view for illustrating a method of determining temporal intensity change in the corrected reference data in Embodiment 18 of the present invention.

With reference to FIG. 73, in the reference data $F_0$(Tb1:t) and $F_0$(Tb2:t), data only after the delay time t1 and t2, respectively, is valid. Thus, t is necessary to perform interpolation on the reference data (Tb1:t) and (Tb2:t) with respective associated time t1 and t2 as a reference value (zero).

Specifically, intensity (point 3) at a point minute time Δt behind from the delay time test of the corrected reference data $F_{est}(t)$ is determined through interpolation of the intensity (point P1) of the reference data $F_0$(Tb1:t) at the time behind the delay time t1 only by the identical minute time Δt, and intensity (point 2) of the reference data $F_0$(Tb2:t) at the time behind the delay time t2 only by the identical minute time Δt.

Now, we define a line segment LN1 that passes through point P1 and is parallel to the horizontal axis. We also define line segments LN2 and LN3 that are orthogonal to the line segment LN1 and pass through points P2 and P3, respectively. Then, the relationship of |t1-t2|:|t1-t_{est}|=| line segment LN2|:| line segment LN3|=1:a is true. Now, as |line segment LN2|=|F_0(Tb2:(t2+Δt))-F_0(Tb1:(t1+Δt))|, the corrected reference data $F_{est}(t)$ can be determined so that:

$$F_{est}(t_{est}+\Delta t)=F_0(Tb1:(t1+\Delta t))+\alpha \times F_0(Tb2:(t2+\Delta t))$$

In other words, the corrected reference data $F_{est}(t)$ is determined so that an intensity difference ratio of intensity of the reference data $F_0$(Tb1:t) at the associated time and that of the reference data $F_0$(Tb2:t) at the associated time corresponds to a temperature difference ratio in the temperature domain.

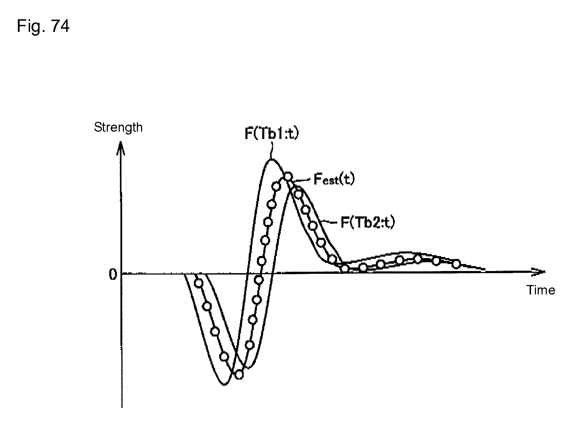

FIG. 74 shows one example of corrected reference data to be determined through interpolation of two reference data.

With reference to FIG. 74, we can see that according to the interpolation method as described above, the corrected reference data $F_{est}(t)$ is generated by reflecting a difference of the delay time of the reference data $F_0(Tb1:t)$ and the reference data $F_{est}(t)$.

As other processing structure is similar to Embodiment 18 of the present invention as described above, we do not repeat detailed description.

(Process Flow)

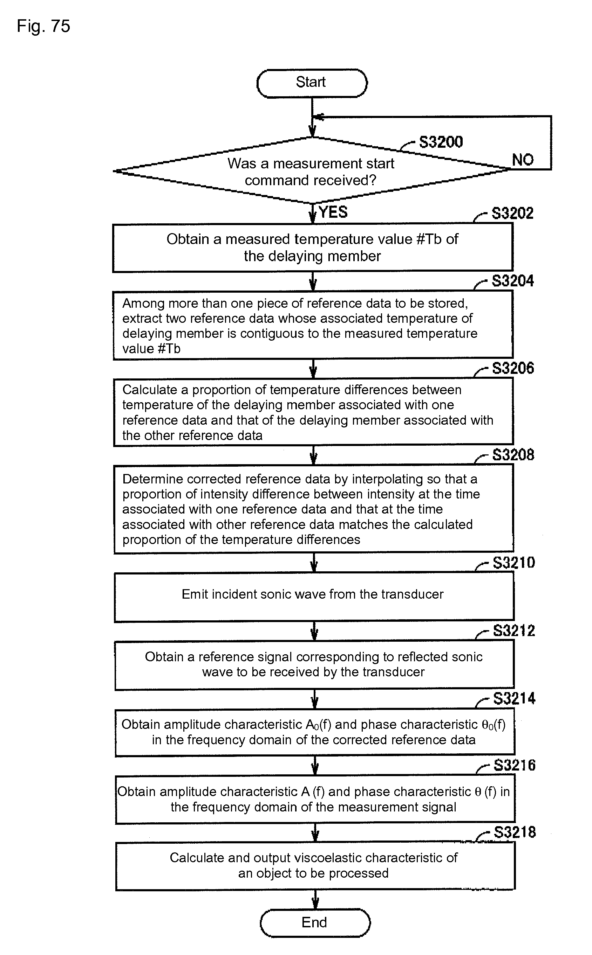

FIG. 75 is the process flow related to measurement of viscoelastic property according to the variant example of Embodiment 18 of the present invention.

With reference to FIG. 75, processing unit 901 determines whether or not it received a measurement start command from a user, etc. (step S3200). When it did not receive the measurement start command (NO in step S3200), the processing unit 901 waits till it receives the measurement start command (step S3200).

When it received the measurement start command (YES in step S3200), the processing unit 901 obtains measured temperature value #Tb of the delaying member 3 to be measured by the temperature measuring unit 5 (step S3202). Then, among a plurality of reference data, the processing unit 901 extracts two reference data the associated delaying member temperature of which is adjacent to the measured temperature value #Tb (step S3204), and calculate a ratio of temperature differences between the delaying member temperature associated with one reference data and delaying member temperature associated with the other reference data to the measured temperature #Tb (step S3206). The processing unit 901 further determines corrected reference data by performing interpolation so that an intensity difference ratio of intensity at associated time of one reference data to intensity at associated time of other reference data corresponds to a ratio of temperature differences calculated in step S3156 (step S3208).

Next, the processing unit gives the sensor unit an emit command and emits incident sonic wave from the transducer 20 (step S3210). Then, the processing unit 901 obtains a measurement signal corresponding to reflected sonic wave received by the transducer 20 (step S3212).

Then, the processing unit 901 performs FFT process on corrected reference data and obtains the amplitude characteristic $A_0(f)$ and phase characteristic $\theta_0(f)$ for the corrected reference data in the frequency domain (step S3214). The processing unit 901 also performs FFT process on a measurement signal and obtains the amplitude characteristic $A(f)$ and phase characteristic $\theta(f)$ for the measurement signal in the frequency domain (step S3216). Then, with the amplitude characteristic $A_0(f)$ and phase characteristic $\theta_0(f)$ for the corrected reference data in the frequency domain being as a reference, the processing unit 901 calculates and outputs viscoelastic property of a measurement target SMP from the amplitude characteristic $A(f)$ and phase characteristic $\theta(f)$ for the measurement signal in the frequency domain (step S3218). Then, the processing unit terminates the process.

According to the variant example of Embodiment 18 of the present invention, not only the effect similar to Embodiment 18 of the present invention can be produced, but also a corrected reference signal corresponding to the measured temperature value of the delaying member 3 can be determined by interpolating two reference data the associated delaying member temperature of which are adjacent to the measured temperature value. This enables determination of not only a corrected reference signal more suitable for measured temperature value of the delaying member 3 but also accurate corrected reference data even if the number of reference data previously stored is relatively small.

[Embodiment 19]

In Embodiment 18 and its variant example of the present invention, we described the configuration in which the temporal intensity change characteristic of reflected sonic wave is used as reference data. On the one hand, in Embodiment 19 of the present invention, we describe the configuration in which amplitude characteristic and phase characteristic of reflected sonic wave in the frequency domain is used as reference data.

As the viscoelastic property measuring device according to Embodiment 19 of the present invention is similar to the viscoelastic property measuring device 100 according to Embodiment 18 of the present invention, except the process of measuring viscoelastic property in the processing unit 901 (FIG. 62), we do not repeat detailed description of overall configuration.

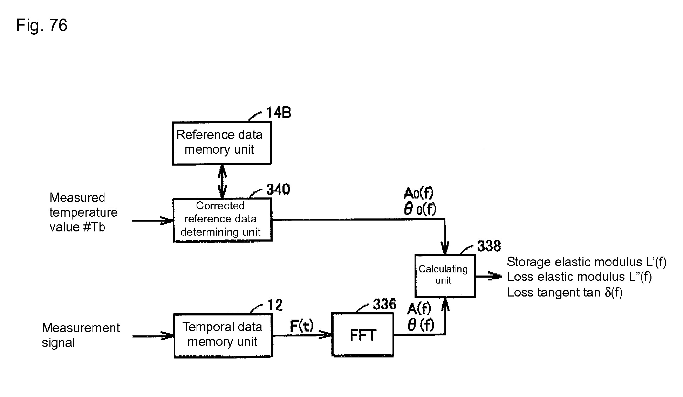

FIG. 76 shows the control block related to measurement process of viscoelastic property according to Embodiment 19 of the present invention.

With reference to FIG. 76, the viscoelastic property measurement processing structure according to Embodiment 19 of the present invention includes a reference data memory unit 14B, corrected reference data determining unit 340, frequency characteristic acquisition unit (FFT) 336, temporal data memory unit 12 and calculating unit 338.

The reference data memory unit 14B previously stores a plurality of reference data including amplitude characteristic and phase characteristic in the frequency domain of reflected sonic wave received in referenced state for every delaying member temperature.

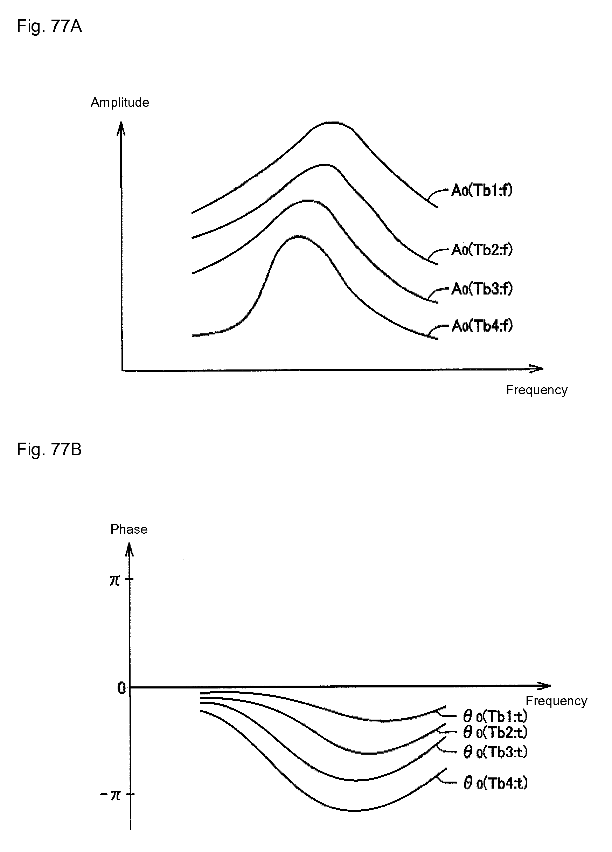

FIG. 77A and FIG. 77B show is schematic graphic views of one example of reference data to be stored in a reference data memory data unit 14B.

FIG. 77A shows amplitude characteristic of a reference signal in the frequency domain.

FIG. 77B shows phase characteristic of a reference signal in the frequency domain.

With reference to FIG. 77A, functions that take a frequency component f of a reference signal on the horizontal axis and amplitude corresponding to each frequency component on the vertical axis are specified. Each function contains a variable of the delaying member temperature. In fact, amplitude characteristics in the frequency domain of the reference signals corresponding to the delaying member temperatures Tb1, Tb2, Tb3, Tb4 (Tb1 < Tb2 < Tb3 < Tb4) are expressed as $A_0$(Tb1:f), $A_0$(Tb2:f), $A_0$(Tb3:f), $A_0$(Tb4:f), respectively.

With reference to FIG. 77B, functions that take a frequency component f of a reference signal on the horizontal axis and phase corresponding to each frequency component on the vertical axis are specified. Each function contains a variable of the delaying member temperature. In fact, phase characteristics in the frequency domain of the reference signals corresponding to the delaying member temperatures Tb1, Tb2, Tb3, Tb4 (Tb1 < Tb2 < Tb3 < Tb4) are expressed as $\theta_0$(Tb1:f), $\theta_0$(Tb2:f), $\theta_0$(Tb3:f), $\theta_0$(Tb4:f), respectively.

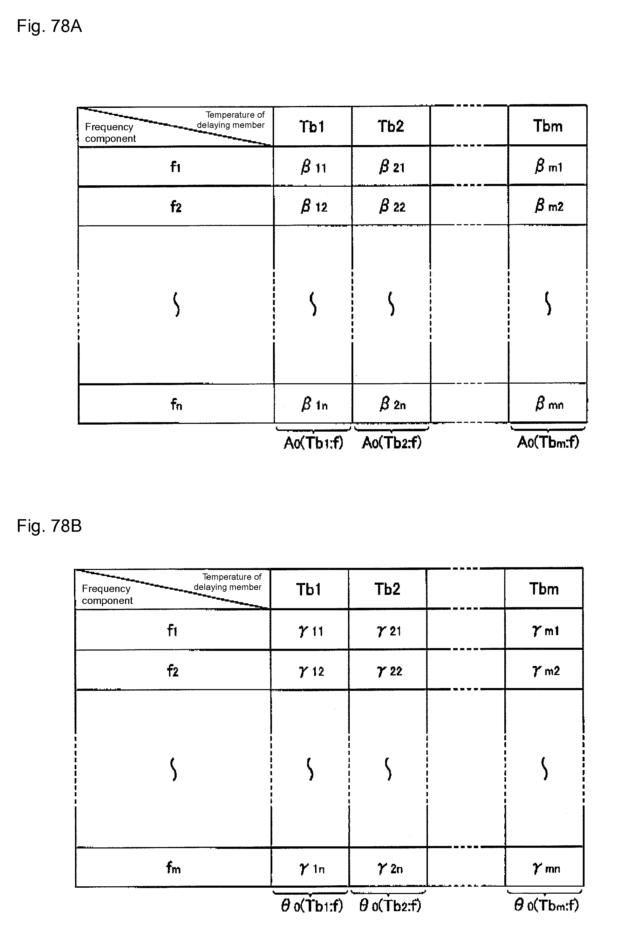

FIG. 78A and FIG. 78B show data structure of reference data according to Embodiment 19 of the present invention.

FIG. 78A shows data structure of amplitude characteristic in the frequency domain.

FIG. 78B shows data structure of phase characteristic in the frequency domain.

With reference to FIG. 78A, the reference data memory unit 14B stores two-dimensional amplitude characteristic to be specified by the delaying member temperature and the frequency component of a reference signal.

Specifically, not only the delaying member temperature is specified column-wise, but also an amplitude value (intensity) of every frequency component of incident sonic wave is associated with each delaying member temperature, and specified. In fact, the amplitude characteristic $A_0$(Tb1:f) is associated with the column of the delaying member temperature Tb1, and stores an amplitude value $\beta_{11}$, $\beta_{12}$,•••, $\beta_{1n}$ at each frequency component. In the following, the reference data memory unit 14B similarly stores the amplitude characteristic in the frequency domain of reflected sonic wave in reference state for every m kinds of temperatures.

With reference to FIG. 78B, the reference data memory unit 14B further stores two dimensional phase characteristic specified by the delaying member temperature and a frequency component of a reference signal.

Specifically, not only the delaying member temperature is specified column-wise, but also phase of every frequency component of incident sonic wave is associated with each delaying member temperature, and specified. In fact, the phase characteristic $\theta_0$(Tb1:f) is associated with the column of the delaying member temperature Tb1, and stores a phase value $\gamma_{11}$,$\gamma_{12}$, •••,$\gamma_{1n}$ at each frequency component. In the following, the reference data memory unit 14B similarly stores the phase characteristic in the frequency domain of reflected sonic wave in reference state for every m kinds of temperatures.

In addition, a reference signal cannot be specified unless both amplitude characteristic and phase characteristic in the frequency domain exist. Thus, data structure of the amplitude characteristic and phase characteristic stored in the reference data memory unit 14B is configured so that the structures mutually match.

With reference to FIG. 76 again, based on the reference data of every delaying member temperature stored in the reference data memory unit 14B, the corrected reference data determining unit 340 determines corrected reference data corresponding to measured temperature value #Tb of the delaying member to be measured by the temperature measuring unit 5. By way of example, similar to the corrected reference data determining unit 330 (FIG. 6) according to Embodiment of the present invention, the corrected reference data determining unit 340 determines as corrected reference data the reference data the associated delaying member temperature is closest to the measured temperature value #Tb of the delaying member 3, among a plurality of reference data stored in the reference data memory unit 14B.

With reference to FIG. 68 again, in the case in which the reference data memory unit 14B respective reference data associated with the delaying member temperatures Tb1 and Tb2, the measured temperature value #Tb of the delaying member 3 is closest to the delaying member temperature Tb2 provided that a relationship of Tb1 < #Tb < Tb2 exists between the delaying member temperature and the measured temperature value #Tb of the delaying member 3 measured by the temperature measuring unit 5 and that |Tb1-#Tb|>|Tb2-#Tb|is true. Then, the corrected reference data determining unit 340 determines from the reference data memory unit 14B, reference data associated with the delaying member temperature Tb2 (amplitude characteristic $A_0$(Tb2:f) and phase characteristic $\theta_0$(Tb2:f)) as corrected reference data, and outputs it to the calculating unit 338. Additionally, although the case of |Tb1-#Tb|=|Tb2-#Tb| is also assumed, reference data associated with preset higher delaying member temperature or lower delaying member temperature is selected preferentially.

With reference to FIG. 76 again, as the temporal data memory unit 12, frequency characteristic acquisition unit 336 and calculating unit 338 are similar to Embodiment 18 of the present invention as described above, we do not repeat detailed description.

The other processing structure is also similar to Embodiment 18 of the present invention as described above, we do not repeat detailed description.

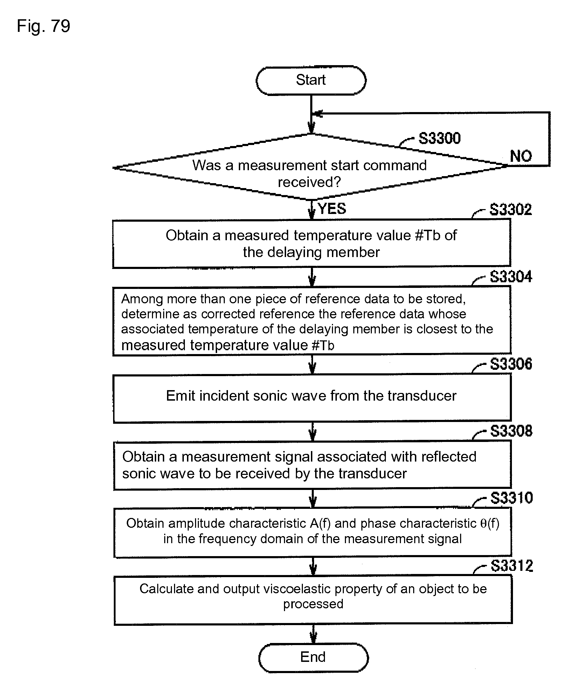

FIG. 79 shows the process flow related to the measurement process of viscoelastic property according to Embodiment 19 of the present invention.

With reference to FIG. 79, the processing unit 901 determines whether it received a measurement start command from a user, etc. (step S3300). When it did not receive the measurement start command (NO in step S3300), the processing unit 901 waits till it receives the measurement start command (step S3300).

When it received the measurement start command (YES in step S3300), the processing unit 901 obtains measured temperature value #Tb of the delaying member 3 to be measured by the temperature measuring unit 5 (step S3302). Then, among a plurality of reference data, the processing unit 901 determines the reference data the associated delaying member temperature is closest to the measured temperature #Tb as corrected reference data (step S3304).

Next, the processing unit 901 gives the sensor unit 2 an emit command and emits incident sonic wave from the transducer 20 (step S3306). Then, the processing unit 901 obtains a measurement signal corresponding to reflected sonic wave to be received by the transducer 20 (step S3308).

Then, the processing unit 901 performs FFT process on the measurement signal and obtains the amplitude characteristic A(f) and phase characteristic $\theta(f)$ for the measurement signal in the frequency domain (step S3310). Then, with the amplitude characteristic $A_0(f)$ and phase characteristic $\theta_0(f)$ in the frequency domain, which is corrected reference data, as reference, the processing unit 901 calculates from the amplitude characteristic A(f) and phase characteristic $\theta(f)$ for the measurement signal in the frequency domain viscoelastic property of a measurement target SMP and outputs it (step S3312). Then, the processing unit 901 terminates the process.

(Acquisition of reference data)

Similar to Embodiment 18 of the present invention as described above, it is desirable to provide a means of obtaining reference data from the standpoint of user-friendliness.

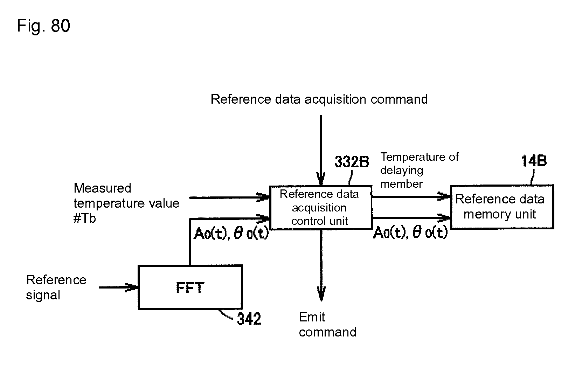

FIG. 80 shows the control block related to the reference data acquisition process according to Embodiment 19 of the present invention.

With reference to FIG. 80, the processing structure related to the reference data acquisition process including a reference data acquisition control unit 332B, frequency characteristic acquisition unit (FFT) 342, and reference data memory unit 14B.

When the reference data acquisition control unit 332B received a reference data acquisition command from a user, etc., it not only obtains measured temperature value #Tb from the temperature measuring unit 5, but also gives the sensor unit 2 (FIG. 62) an emit command. Then, the reference data acquisition control unit 332B obtains from the frequency characteristic acquisition unit 342 the amplitude characteristic $A_0(f)$ and phase characteristic $\theta_0(f)$ in the frequency domain of a reference signal received by the transducer 20. Then, while considering the measured temperature value #Tb obtained from the temperature measuring unit 5 as delaying member temperature, the reference data acquisition control unit 332B associates the amplitude characteristic $A_0(f)$ and phase characteristic $\theta_0(f)$ with delaying member temperature as reference data and writes it into the reference data memory unit 14B.

The frequency characteristic acquisition unit 342 performs FFT process on the reference signal corresponding to reflected sonic wave received by the transducer 20, obtains the amplitude characteristic $A_0(f)$ and phase characteristic $\theta_0(f)$ in the frequency domain, and outputs them to the reference data acquisition control unit 332B.

As the following is similar to the reference data acquisition process according to Embodiment 18 of the present invention as described above, we do not repeat detailed description.

In Embodiment 19 of the present invention, the delaying member corresponds to a "delaying member", the transducer 20 corresponds to a "transducer", the measurement control unit 651 corresponds to a "measurement control unit", and the temperature measuring unit 5 corresponds to a "temperature measuring unit". Then, the reference data memory unit 14B implements a "reference data storage means", the corrected reference data determining unit 340 implements a "corrected reference data determining unit", the calculating unit 338 implements a "calculating means" and the frequency characteristic acquisition unit (FFT) 336 implements a "frequency characteristic acquisition means". In addition, the sensor unit 2, transducer 20 and delaying unit correspond to a "sonic wave unit".

According to the variant example of Embodiment 19 of the present invention, not only the effect similar to Embodiment 18 of the present invention can be produced, but also amplitude characteristic and phase characteristic in the frequency domain of the reference data to be used in calculating viscoelastic property are stored as reference data. This can reduce amount of calculation related to the FFT process when viscoelastic property is calculated, compared with the case in which temporal intensity change of the reference signal is used as reference data. Therefore, faster viscoelastic property measurement process can be implemented.

[Variant example of Embodiment 19]

Similar to the variant example of Embodiment 18 of the present invention as described above, the configuration may be such that corrected reference data is configured through interpolation of a plurality of reference data to be stored in the reference data memory 14B.

As the viscoelastic property measuring device according to the variant example of Embodiment 19 of the present invention is similar to the viscoelastic property measuring device according to Embodiment 19 of the present invention, we do not repeat detailed description of overall configuration.

By way of example, in the variant example of Embodiment 19 of the present invention, among a plurality of reference data to be stored in the reference data memory unit 14B, corrected reference data is generated by interpolating two reference data the associated delaying member temperature of which is adjacent to measured temperature value #Tb.

With reference to FIG. 68 again, when the measured temperature value #Tb of the delaying member 3 measured by the temperature measuring unit 5 is intermediate between the delaying member temperatures Tb1 and Tb2, i.e., when the measured temperature value #Tb is adjacent to the delaying member temperatures Tb1 and Tb2, two reference data associated with the respective delaying member

In particular, interpolation based on a temperature difference ratio in the temperature domain is performed. In the following, we describe the case in which a relationship of |Tb1-#Tb|:|Tb2-#Tb|=a:(1-a) is true.

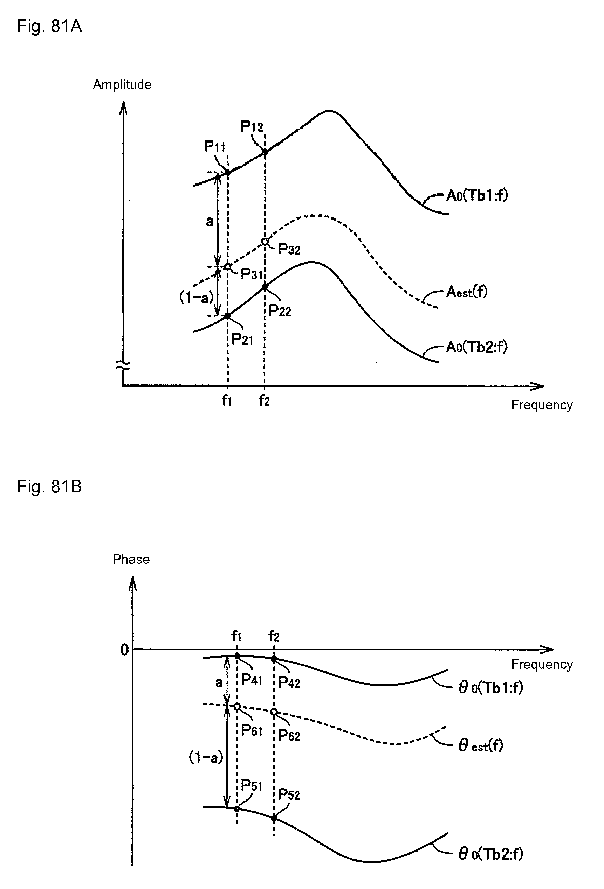

FIG. 81A and FIG. 81B show views for illustrating a method of determining corrected reference data in the variant example of Embodiment 19 of the present invention.

FIG. 81A shows a method of determining the amplitude characteristic $A_{est}(f)$ contained in corrected reference data.

FIG. 81B shows a method of determining the phase characteristic $\theta_{est}(f)$ contained in corrected reference data.

With reference to FIG. 81A, the amplitude characteristic $A_{est}(f)$ is determined so that the amplitude of the amplitude characteristic $A_0(Tb1:f)$ and that of the amplitude characteristic $A_0(Tb2:f)$ for that amplitude in the frequency domain corresponds to a ratio of temperature differences in the temperature domain.

Specifically, in frequency f1, the amplitude characteristic $A_{est}(f)$ is determined so that a relationship of a:(1-a) is true between amplitude difference between amplitude (point P11) of the amplitude characteristic $A_0(Tb1:f)$ and amplitude (point P31) of the amplitude characteristic $A_{est}(f)$ and amplitude difference between amplitude (point P31) of the amplitude characteristic $A_{est}(f)$ and amplitude (point P21) of the amplitude characteristic $A_0(Tb2:f)$. In the following, similarly, in frequency f2, the amplitude characteristic $A_{est}(f)$ is determined so that the relationship of a: (1-a) is satisfied between amplitude difference between point P12 and point P32 and amplitude difference between point P32 and P22. In other words, in each frequency,

The amplitude characteristic $A_{est}(f)$ is determined so that

$$|A_0(Tb1:f)-A_{est}(f)|:|A_0(Tb2:f)-A_{est}(f)|=a:(1-a)$$

is true.

With reference to FIG. 81B, the phase characteristic $\theta_{est}(f)$ is also determined so that in each frequency, a ratio of phase differences between phase of the phase characteristic $\theta_0(Tb1:f)$ and phase of phase characteristic $\theta_0(Tb2:f)$ for that phase corresponds to a ratio of temperature differences in the temperature domain.

Specifically, in frequency f1, the phase characteristic $\theta_{est}(f)$ is determined so that a relationship of a:(1-a) is true between phase difference between phase (point P41) of the phase characteristic $\theta_0(Tb1:f)$ and phase (point P61) of the phase characteristic $\theta_{est}(f)$, and phase difference between phase (point P61) of the phase characteristic $A_{est}(f)$ and phase (point P51) of the phase characteristic $\theta_0(Tb2:f)$. In the following, similarly, in frequency f2, the phase characteristic $\theta_{est}(f)$ is determined so that the relationship of a: (1-a) satisfied between phase difference between point P42 and point P62 and amplitude difference between point P62 and P52. In other words, in each frequency,

The phase characteristic $\theta_{est}(f)$ is determined so that

$$|\theta_0(Tb1:f)-\theta_{est}(f)|:|\theta_0(Tb2:f)-\theta_{est}(f)|=a:(1-a)$$

is true.

As the other processing structure is similar to Embodiment 19 of the present invention, we do not repeat detailed description.

(Process Flow)

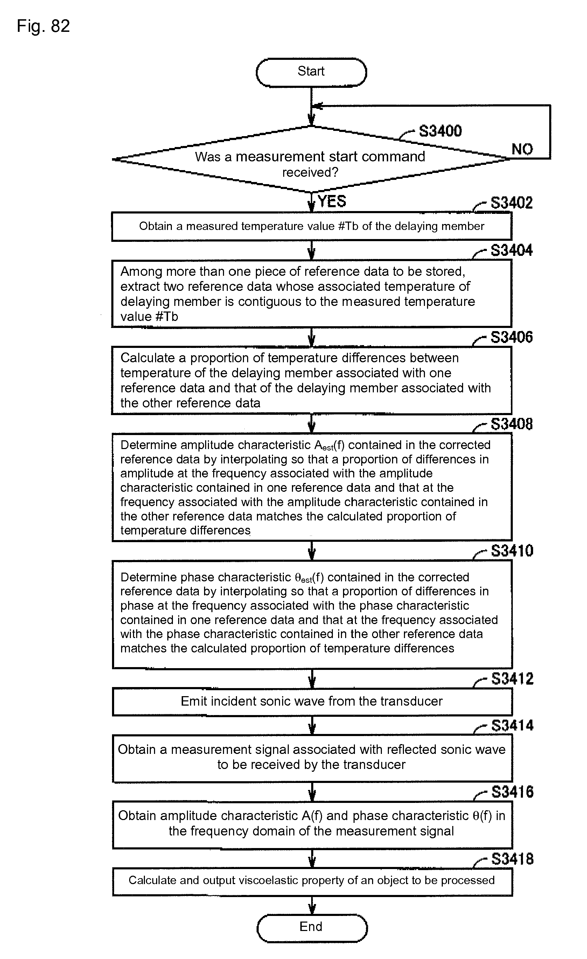

FIG. 82 is the process flow related to measurement of viscoelastic property according to Embodiment 19 of the present invention.

With reference to FIG. 82, the processing unit 901 determines whether or not it received a measurement start command from a user, etc. (step S3400). If it did not receive the measurement start command (NO in step S3400), the processing unit 901 waits till it receives the measurement start command (step S3400).

When it received the measurement start command (Yes in step S3400), the processing unit 901 obtains measured temperature value #Tb of the delaying member 3 to be measured by the measurement temperature unit 5 (step S3402). Then, among a plurality of stored reference data, the processing unit 901 extracts two reference data the associated delaying member temperature is adjacent to the measured temperature value #Tb (step S3404), and calculates a ratio of temperature differences between the delaying member temperature associated with one reference data for the measured temperature data Tb and the delaying member temperature associated with the other reference data (step S3406).

In addition, the processing unit 901 performs interpolation so that a ratio of amplitude differences between amplitude at frequency corresponding to frequency characteristic contained in one reference data and amplitude at frequency corresponding to amplitude characteristic contained in other reference data corresponds to a ratio of temperature differences calculated in step S3406, and determines the amplitude characteristic $A_{est}(f)$ contained in corrected reference data (step S3408). The processing unit also performs interpolation so that phase at corresponding frequency of phase characteristic contained in one reference data and phase at corresponding frequency of phase characteristic contained in other reference data corresponds to the ratio of temperature difference calculated in step S3406, and determines the phase characteristic $\theta_{est}(f)$ contained in the corrected reference data (step S341 0).

Next, the processing unit 901 gives the sensor unit an emit command and emits incident sonic wave from the transducer 20 (step S3412). Then, the processing unit 901 obtains a measurement signal corresponding to reflected sonic wave received by the transducer 20 (step S3414).

Then, the processing unit performs FFT process on the measurement signal, and obtains the amplitude characteristic $A(f)$ and phase characteristic $\theta(f)$ for the measurement signal in the frequency domain (step S3416). Then, with the corrected reference data containing the amplitude characteristic $A_{est}(f)$ determined in step S3408 and phase characteristic $\theta_{est}(f)$ determined in step S3410 being as a reference, the processing unit 901 calculates viscoelastic property of a measurement target (SMP) from the amplitude characteristic $A(f)$ and phase characteristic $\theta(f)$ in the frequency domain (step S3416). Then, the processing unit terminates the process.

According to the variant example of Embodiment 19 of the present invention, not only the effect similar to Embodiment 19 of the present invention can be produced, but also a corrected reference signal corresponding to measured temperature value of the delaying member 3 can be determined by interpolating two reference data the associated delaying member temperature is adjacent to the measured temperature value of the delaying member 3. This enables determination of not only a corrected reference signal more suitable for measured temperature value of the delaying member 3 but also accurate corrected reference data even if the number of reference data previously stored is relatively small.

[Embodiment 20]

In Embodiments 18 and 2, and its variant examples of the present invention described above, we described the configuration in which reference data is associated with delaying member temperature and stored. On the one hand, in Embodiment 20 of the present invention, we describe the configuration in which reference data is associated with delay time and stored.

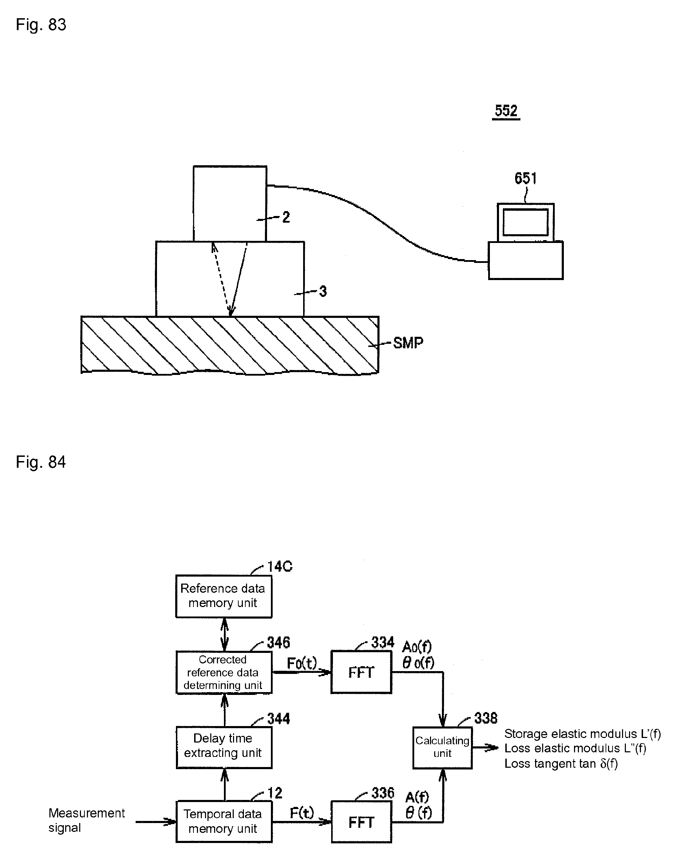

FIG. 83 shows the schematic configuration of the viscoelastic property measuring device 552 according to Embodiment 20 of the present invention.

With reference to FIG. 83, except for content of the processes in the measurement control unit 651, the viscoelastic property measuring device 552 is equivalent to the viscoelastic property measuring device 650 (FIG. 61) according to Embodiment 18 of the present invention from which the temperature measuring unit 5 is removed. In other words, the viscoelastic property measuring device 552 includes the measurement control unit 651, sensor unit 2 and delaying unit 3. As each component is similar to the viscoelastic property measuring device 100 according to Embodiment 18 of the present invention, we do not repeat detailed description.

(Propagation characteristic of sonic wave in the delaying member)

With reference to FIG. 64 (a) and FIG. 64 (b) again, if the delaying member temperature Tb = Tb1, delay time in reflected sonic wave is mutually same irrespective of whether it is in reference state or in measurement state. With reference to FIG. 64 (c) and FIG. 64 (d), even when the delaying member temperature Tb = Tb2, delay time in reflected sonic wave is also mutually same irrespective of whether it is in reference state or in measurement state. In other words, if the delaying member temperature is same, delay time corresponds to each other, irrespective of whether it is in reference state or in measurement state.

Thus, if a plurality of reference data indicative of characteristics of reflected sonic wave in reference state are previously associated with delay time in reflected sonic wave and obtained, optimal reference data corresponding to temperature state of the delaying member 3 can be determined based on the delay time in the reflected sonic wave. This eliminates the need for obtaining reference data for every measurement.

(Processing structure)

FIG. 84 shows the control block in the processing unit 901 related to the viscoelastic property measurement process according to Embodiment 20 of the present invention.

With reference to FIG. 84, the processing structure in the processing unit 901 includes a reference data memory unit 14C, corrected reference data determining unit 346, delay time extracting unit 34, frequency characteristic acquisition units (FFT) 334, 336, temporal data memory unit 12, and calculating unit 13.

The reference data memory unit 14C previously associates a plurality of reference data indicative of characteristics of reflected sonic wave with delay time in the reflected sonic wave received in reference state.

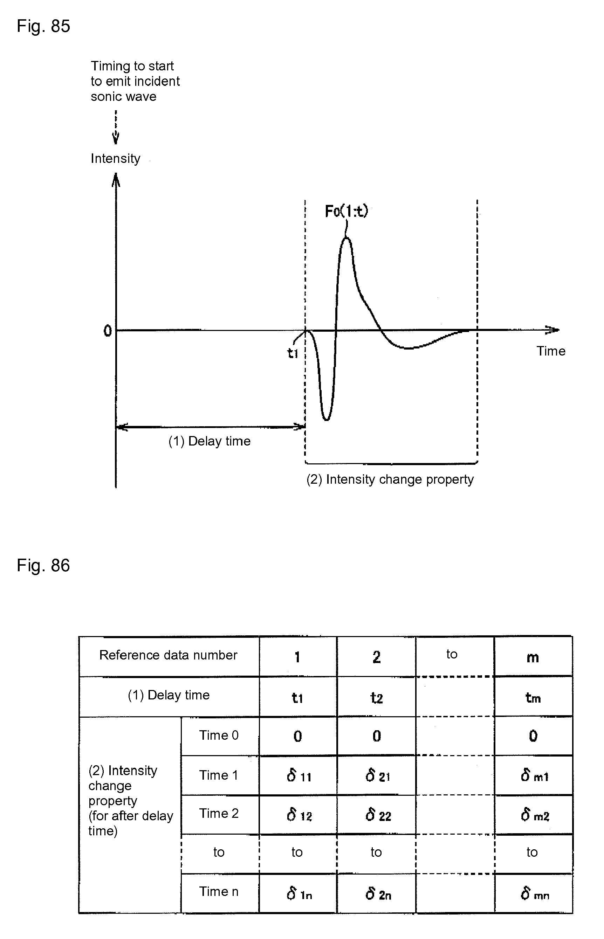

FIG. 85 shows one example of temporal intensity change in reflected sonic wave received in reference state.

With reference to FIG. 85, the timing when emission of incident sonic wave from the transducer 20 starts is set to a reference point (zero) on the time axis (horizontal axis), and time t1 from the reference point to the start of reception of reflected sonic wave corresponds to delay time of the reflected sonic wave. Then, temporal intensity change characteristic after time t1 is used as reference data.

Then, for each of a plurality of reflected sonic waves in reference state, the reference data memory unit 14C associates delay time and the intensity change characteristic after the delay time and stores it.

With reference to FIG. 86, the reference data memory unit 14C stores two dimensional data for which delay time and the intensity change characteristic after the delay time are specified for every reference data number.

Specifically, not only reference data numbers are specified column-wise, but also an area in which delay time associated with each reference data number is stored, and an area in which the intensity change characteristic is stored are formed. For instance, not only corresponding delay time t1 is stored for reference data with reference data number "1", but also with time of the delay time t1 set to "time 0", intensity values at each time $\delta_{11}, \delta_{12}, \cdots, \delta_{1n}$ are stored. In the following, similarly, m kinds of reference data are stored in the reference data memory unit 14C.

In addition, although each reference data is obtained depending on temperature change in the delaying member 3, there is no need to store the delaying member temperature associated with each reference data. In fact, this is because appropriate reference data can be determined based on delay time in reflected sonic wave, without keeping track of temperatures of the delaying member 3.

With reference to FIG. 84 again, based on a plurality of reference data in the reference data memory unit 14C associated with delay time and stored, the corrected reference data determining unit 346 determines corrected reference data corresponding to delay time of a measurement signal to be extracted by the delay time extracting unit 344. By way of example, among a plurality of reference data stored in the reference data memory unit 14C, the corrected reference data determining unit 346 according to Embodiment 20 of the present invention determines as corrected reference data, the reference data the associated delaying member temperature of which is closest to the delay time in the measurement signal.

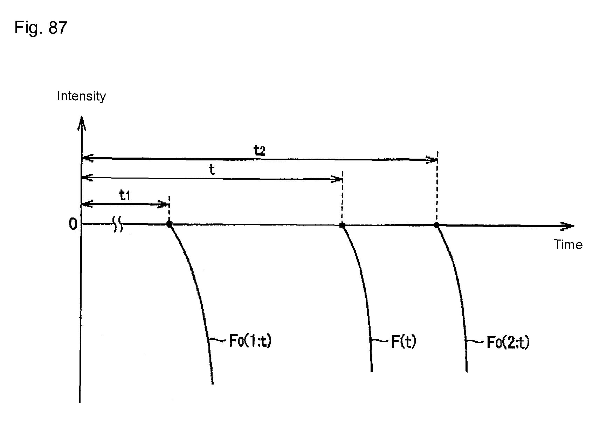

FIG. 87 shows one example of a relationship reference data to be stored in the reference data memory unit 14C and delay time.

With reference to FIG. 87, in the case in which reference data $F_0(1:t)$ and $F_0(2:t)$having delay time t1 and t2, respectively are stored in the reference data memory unit 14C, assume that there is a relationship oft1 <t<t2 with the delay time 5 for the measurement signal F(t) extracted by the delay time extracting unit 344. Now, if |t1-t|>|t2-t|is true, delay time t extracted by the delay time extracting unit 344 is closest to the delay time 52. Then, from the reference data memory unit 14C, the corrected reference data determining unit 346 determines reference data $F_0(2:t)$ associated with the delay time t2 as corrected reference data$F_0(t)$, and outputs it to the frequency characteristic acquisition unit 334. In addition, although the case of |t1-t|=|t2-t|is also assumed, reference data associated with preset smaller delaying member temperature or greater delaying member temperature is selected preferentially.

With reference to FIG. 84 again, the delay time extracting unit 344 extracts delay time in a measurement signal based on temporal intensity change of the measurement signal. Specifically, the delay time extracting unit 344 monitors an emit command to be given to the sensor unit 2, and extracts time from when the emit command is given to the time when intensity change in the measurement signal storage into the temporal data memory unit 12 of which is started is started.

As the frequency characteristic acquisition units 334, 336, temporal data memory unit 12, and calculating unit 338 are similar to Embodiment 18 of the present invention, we do not repeat detailed description. As other processing structure is also similar to Embodiment 18 of the present invention, we do not repeat detailed description.

(Extraction of delay time)

Reflected sonic wave received by the transducer 20 include some to be generated in the propagation process of incident sonic wave, in addition to those to be generated by being reflected at the underside of the delaying member 3. Thus, measurement signals to be given to the reference data memory unit contain various noise components. Then, the delay time extracting unit 344 extracts delay time of measurement signals based on signal processing as described below.

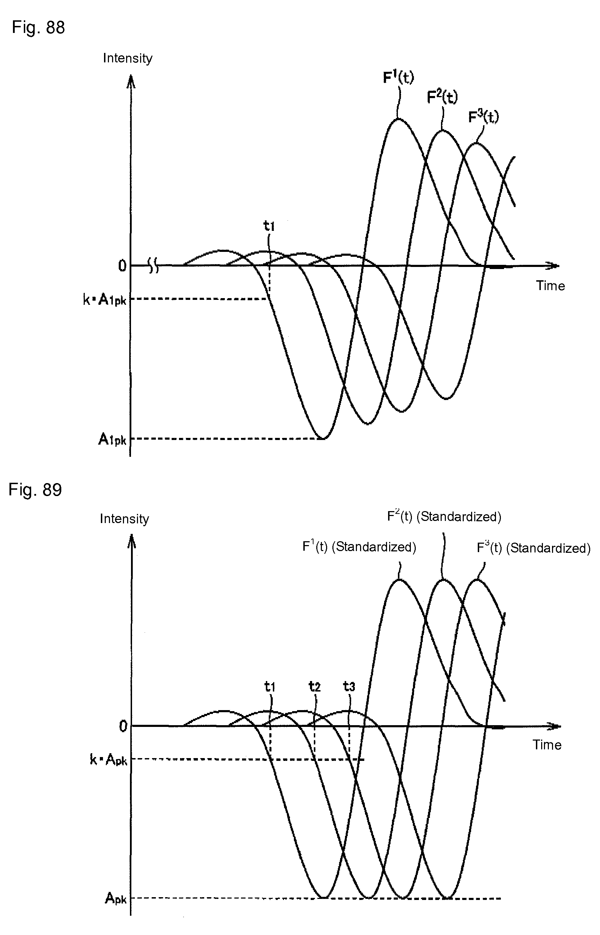

FIG. 88 shows a view for illustrating the delay time extraction process in the delay time extracting unit 344.

With reference to FIG. 88, by way of example, assume that 3 kinds of measurement signals F1(t), F2(t), F3(t) have been obtained, depending on temperature change in the delaying member 3. Additionally, FIG. 88 shows the example in which incident sonic wave is used that changes so that intensity increases, immediately after emission starts. If such incident sonic wave is used, theoretically, intensity of reflected sonic wave immediately after reception takes a downturn. However, in the measurement signals F1(t), F2(t), F3(t), their intensity has increased slightly due to a mismatch on a boundary between the underside of the delaying member 3 and a measurement target SMP, etc. Such increased intensity is attributable to noise components and they are not reflected sonic wave to be received. Thus, the delay time extracting unit 344 extracts delay time of original reflected sonic wave based on a comparison between intensity of measured signals and predetermined thresholds.

For instance, looking at measurement signal $F^1(t)$, from measurement signals temporarily stored in the temporal data memory unit 12, the delay time extracting unit 344 first detects an amplitude value $A_{1pk}$ on the negative side of a first wave. Then, the delay time extracting unit 344 calculates a threshold $k \cdot A_{1pk}$ by multiplying the detected amplitude value $A_{1pk}$ with a predetermined coefficient k. The delay time extracting unit 344 further detects time t1 that corresponds to a first intersection of the measurement signal $F^1(t)$ and threshold $k \cdot A_{1pk}$, and extracts it as delay time.

As such, the delay time extracting unit 344 determines a threshold depending on maximum amplitude of a measurement signal and detects delay time based on the determined threshold.
In addition, a method of extracting delay time as described below may be adopted.

FIG. 89 shows a view for illustrating another delay time extraction process in the delay time extracting unit 344.

FIG. 89 corresponds to waveform standardized in the direction of intensity so that each maximum amplitude value of the measurement signal $F^1(t)$, $F^2(t)$, $F^3(t)$ as shown in FIG. 88 is $A_{pk}$. As such, the delay time extracting unit 344 standardizes an acquired measurement signal so that its maximum amplitude value is the amplitude value $A_{pk}$, and extracts delay time based on waveform after standardization. Specifically, the delay time extracting unit 344 extracts as delay time the time that corresponds to a first intersection of the threshold $k \cdot A_{pk}$ obtained by multiplying the amplitude value $A_{pk}$ by a predetermined coefficient k and the standardized measurement signal. In fact, the delay time extracting unit 347 extracts delay time t1, t2, 53 for each of the measurement signals $F^1(t)$, $F^2(t)$, $F^3(t)$.

As such the delay time extracting unit 347 extracts delay time based on a common threshold after standardizing a measurement signal.

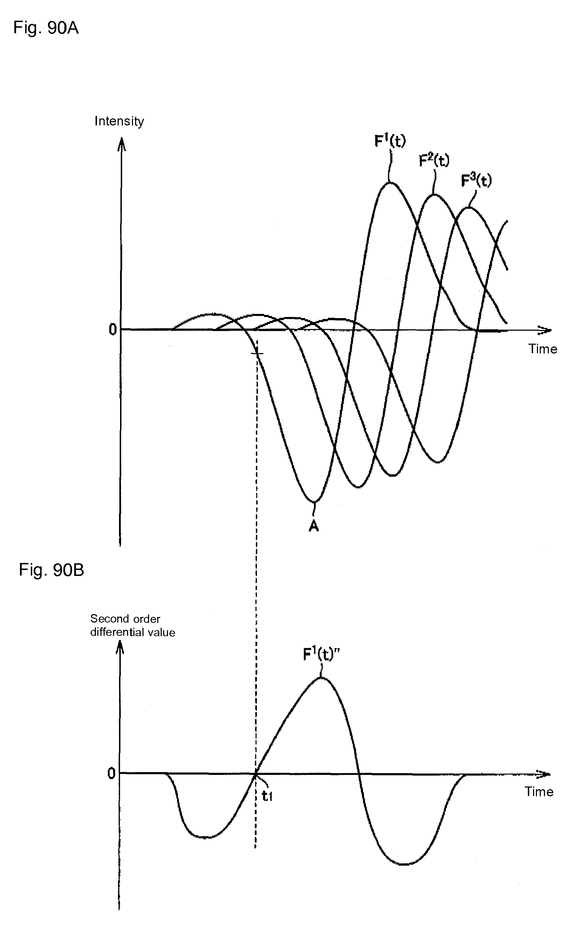

FIG. 90A and FIG. 90B show views for illustrating yet another delay time extraction process in the delay time extracting unit 347.
FIG. 90A shows temporal intensity change of a measurement signal.
FIG. 90B shows a second-order derivative value for time t of the measurement signal $F^1(t)$ of FIG. 90A.

With reference to FIG. 90A, by way of example, assume that 3 kinds of measurement signals $F^1(t)$, $F^2(t)$, $F^3(t)$ have been obtained, depending on temperature change in the delaying member 3. The delay time extracting unit 347 calculates a second-order derivative value for time t of the measurement signal thus obtained. By way of example, a second-order derivative value for time t of the measurement signal $F^1(t)$ of FIG. 90A has temporal waveform as shown n FIG. 90B. Now, the delay time extracting unit 344 extracts, as delay time of the measurement signal $F^1(t)$, the time t1 when the second-floor derivative value for time t of the measurement signal becomes zero, i.e., t1 that corresponds to an inflection point of the temporal intensity change of the measurement signal.

As such, the delay time extracting unit 344 extracts delay time based on a second-order derivative value for time of a measurement signal.

(Process Flow)

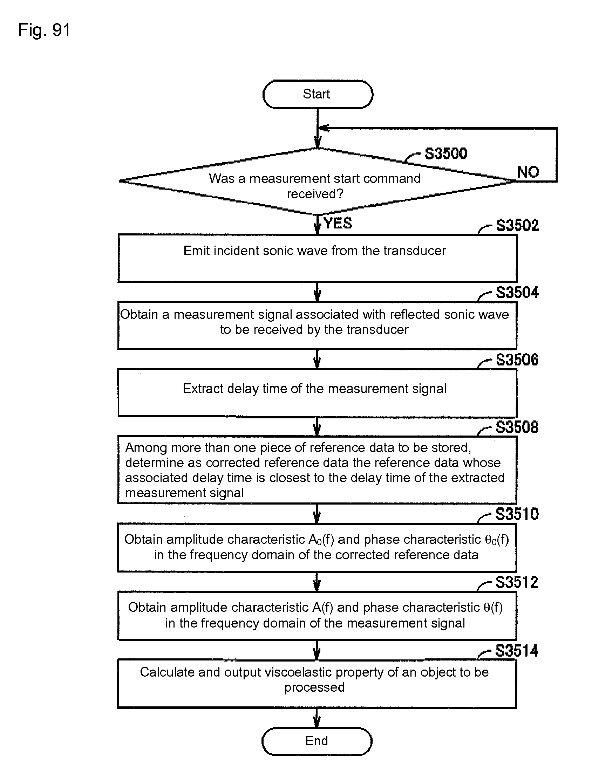

FIG. 91 shows the process flow related to the viscoelastic property measurement according to Embodiment 20 of the present invention.

With reference to FIG. 91, the processing unit 901 determines whether or not it received a measurement start command from a user, etc. (step S3500). When it did not receive the measurement start command (NO in step S3500), the processing unit 901 waits till it receives the measurement start command (step S3500).

When it received the measurement start command (YES in step S3500), the processing unit 901 gives the sensor unit an emit command and emits incident sonic wave from the transducer 20 (step S3502). Then, the processing unit 901 obtains a measurement signal corresponding to reflected sonic wave received by the transducer 20.

The processing unit 901 extracts delay time of the measurement signal based on temporal intensity change of the obtained measurement signal. Among a plurality of reference data stored, the processing unit 901 determines as corrected reference data the reference data the associated delaying time is closest to the delay time of the measurement signal extracted in the step S3506 (step S3508). The processing unit 901 further performs FFT process on the corrected reference data determined in step S3508 and obtains the amplitude characteristic $A_0(f)$ and phase characteristic $\theta_0(f)$ in the frequency domain for the corrected reference data (step S3510). The processing unit 901 also performs FFT process on the measurement signal and obtains the amplitude characteristic $A(f)$ and phase characteristic $\theta(f)$ in the frequency domain for the measurement signal (step S3512). Then, with the amplitude characteristic $A_0(f)$ and phase characteristic $\theta_0(f)$ in the frequency domain for the corrected reference data being as a reference, the processing unit 901 calculates from the amplitude characteristic $A(f)$ and phase characteristic $\theta(f)$ in the frequency domain for the measurement signal viscoelastic property of a measurement target SMP and outputs it (step 3514). Then, the processing unit 901 terminates the process.

(Acquisition of reference data)

Similar to Embodiment 18 of the present invention as described above, it is desirable to provide a means of obtaining reference data from the standpoint of user-friendliness.

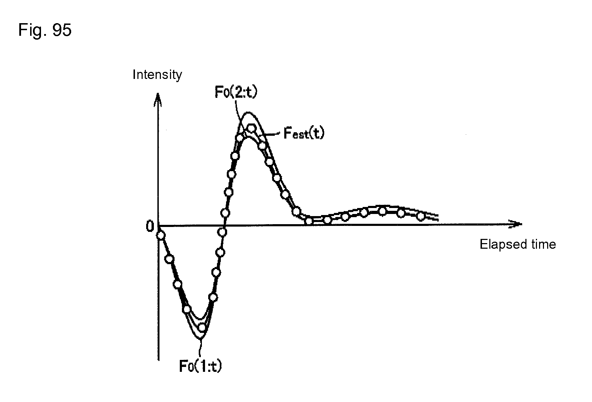

FIG. 95 shows the control block related to the reference data acquisition process according to Embodiment 20 of the present invention.

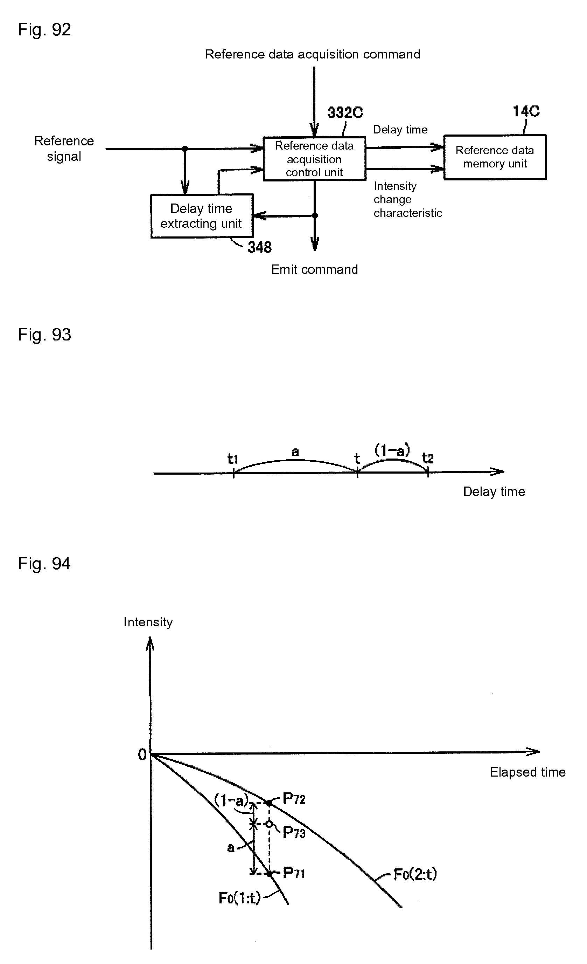

With reference to FIG. 92, the processing structure related to the reference data acquisition process includes a reference data acquisition control unit 332C, delay time extracting unit 348 and reference data memory unit 14C.

When the reference data acquisition control unit 332C receives a reference data acquisition command from a user, etc., it gives the sensor unit 2 (FIG. 62) an emit command. Then, the reference data acquisition control unit 332C obtains temporal intensity change of a reference signal received by the transducer 20. The reference data acquisition control unit 332C also obtains delay time of the reference signal from the delay time extracting unit 348. Then, the reference data acquisition control unit 332C pairs the delay time of the reference signal with temporal intensity change thereof, and writes it into the reference data memory unit 14C.

The delay time extracting unit 348 monitors an emit command to be outputted from the reference data acquisition control unit 332C, and extracts delay time from when an emit command is given till input of the reference signal is started. Additionally, as a method of extracting delay time in the delay time extracting unit 348 is similar to that described in FIG. 88 to FIG. 90, we do not repeat detailed description.

As the following is similar to the reference data acquisition process according to Embodiment 18 of the present invention, we do not repeat detailed description.

In Embodiment 30 of the present invention, the delaying member corresponds to a "delaying member", the transducer 20 corresponds to a "transducer", and the measurement control unit 651 corresponds to a "measurement control unit". The reference data memory unit 14C implements a "reference data storage means", the delay time extracting means 344 implements a "delay time extracting means", the corrected reference data determining unit 348 implements a "corrected reference data determining means", the calculating unit 338 means a "calculating means", and the frequency characteristic acquisition unit (FFT) 336 implements a "frequency characteristic acquisition means". In addition, the sensor unit 2, transducer 20 and delaying member 3 correspond to a "sonic wave unit".

According to Embodiment of the present invention, when viscoelastic property of a measurement target is measured from a measurement target obtained in measurement state in which the measurement target SMP is bonded to the underside of the delaying member 3, corrected reference data corresponding to delay time of the measurement signal at the time is determined. Then, with the determined corrected reference data as a reference, viscoelastic property of the measurement target SMP is calculated from the measurement signal. This enables use of reference data appropriate for temperatures of the delaying member at every measurement, without obtaining a reference signal, even when any temperature change occurs in the delaying member 3. Thus, not only measurement precision can be improved, but also unnecessary work involved in acquisition of reference data can be controlled. Hence, possible effects of temperature dependence of sonic wave can be controlled and efficient measurement of viscoelastic property can be implemented.

In addition, according to Embodiment 20 of the present invention, as measurement of temperature of the delaying member is no longer necessary, the device configuration can be further simplified.

[Variant example of Embodiment 20]

Similar to the variant example of Embodiment 18 of the present invention as described above, the configuration may be such that corrected reference data is generated through interpolation of a plurality of reference data stored in the reference data memory unit 14C.

As the viscoelastic property measuring device according to the variant example of Embodiment 20 of the present invention is similar to the viscoelastic property measuring device according to Embodiment 20 of the present invention, except for except for content of the processes in the corrected reference data determining unit 346 (FIG. 84), we do not repeat detailed description of overall configuration.

By way of example, in the variant example of Embodiment 20 of the present invention, corrected reference data is generated by interpolating two reference data the associated delay time is adjacent to the delay time of the measurement signal, among a plurality of reference data stored in the reference data memory unit 14C.

FG

FIG. 93 shows one example of a relationship of the reference data stored in the reference data memory unit and delay time of the measurement signal.

With reference to FIG. 93, we assume that as reference data, the intensity change characteristics $F_0(1:t)$ and $F_0(2:t)$, which are delay time t1 and t2, respectively, are stored in the reference data memory unit 14C. Now, when delay time t of the measurement signal extracted by the delay time extracting unit 344 is intermediate between delay time t1 and delay time t2, i.e., when the delay time t of the measurement signal is adjacent to the delay time t1 and t2, two intensity change characteristics $F_0(1:t)$ and $F_0(2:t)$, each of which is associated with the delay time t1 and t2, are used for generating corrected reference data.

In particular, interpolation is performed based on a ratio of time differences in the delay time domain. In the following, by way of example, we describe the case in which a relationship of $|t1-t|:|t2-t|=a:(1-a)$ is true in the delay time domain.

FIG. 94 shows a view for illustrating a method of determining intensity change characteristic, which is corrected reference data in the variant example of Embodiment 20 of the present invention.

With reference to FIG. 94, as the intensity change characteristics $F_0(1:t)$ and $F_0(2:t)$ are configured by data after the corresponding delay time, no consideration should be given to a difference in delay time. Thus, with elapsed time since the corresponding delay time set as the horizontal axis, corrected reference data (intensity change characteristic) is determined by performing interpolation so that a ratio to intensity of the intensity change characteristic $F_0(1:t)$ and intensity of intensity change characteristic $F_0(2:t)$ corresponds to a ratio of time difference in the delay time domain.

Specifically, a value (point P73) of the intensity change characteristic $F_{est}(t)$ at some elapsed time is determining through interpolation of the intensity (point P71) of the intensity change characteristic $F_0(1:t)$ at the corresponding elapsed time and the intensity (point P72) of the intensity change characteristic $F_0(2:t)$. Then, point '3 is determined so that the relationship a: (1-a) is true between the intensity difference between point P71 and point P73, and the intensity difference between point P72 and point P74. In the following, an intensity value at each elapsed time is similarly determined. In fact, at the elapsed time t, the intensity change characteristic $F_{est}(t)$ is determined so that:

$$|F_{est}(t)-F_0(1:t)|:|F_{est}(t)-F_0(2:t)|=a:(1-a)$$

is true.

FIG. 95 shows one example of corrected reference data to be determined by interpolation of two reference data.

With reference to FIG. 89, according to the interpolation method as described above, we can see that corrected reference data $F_{est}(t)$ having an intermediate amplitude value with the intensity change characteristic $F_0(1:t)$ and the intensity change characteristic $F_0(2:t)$ is generated at every elapsed time.

As other processing structure is also similar to Embodiment 20 of the present invention, we do not repeat detailed description.

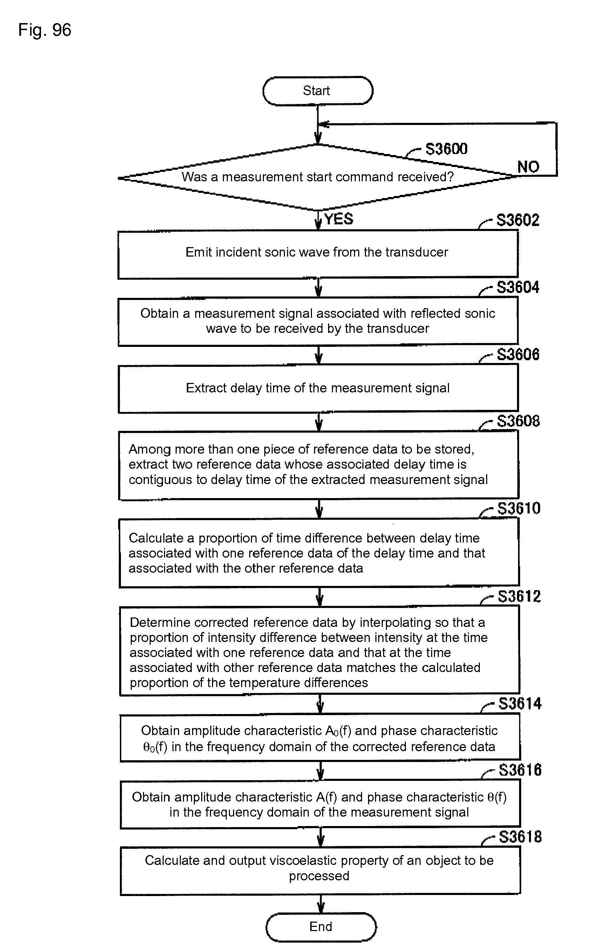

FIG. 96 shows the process flow related to measurement of viscoelastic property according to Embodiment 20 of the present invention.

With reference to FIG. 96, the processing unit 901 determines whether or not it received a measurement start command from a user, etc. (step S3600) When it did not receive the command to start measurement (NO in step S3600), the processing unit 901 waits till it receives the measurement start command (step S3600).

When it received the measurement start command (YES in step S3600), the processing unit 901 gives the sensor unit an emit command and emits incident sonic wave from the transducer 20 (step S3602). Then, the processing unit 901 obtains a measurement signal corresponding to reflected sonic wave received by the transducer 20 (step S3604).

The processing unit 901 extracts delay time of the measurement signal based on temporal intensity change of the obtained measurement signal (step S3606). Then, among a plurality of reference data stored, the processing unit 901 extracts two reference data the associated delay time of which is adjacent to the delay time of the measurement signal extracted in step S3606 (step S3608), and calculates a ratio of time difference of the delay time associated with one reference data and the delay time associated with other reference data to the delay time (step S3610). The processing unit 901 further determines corrected reference data (intensity change characteristic) by performing interpolation so that a ratio of intensity differences between intensity at the time associated with one reference data and intensity at the time associated with other reference data corresponds to a ratio of temperature differences calculated in step S3610 (step S3612).

Furthermore, the processing unit 901 performs FFT process on the corrected reference data determined in step S3612 and obtains the amplitude characteristic $A_0(f)$ and phase characteristic $\theta_0(f)$ in the frequency domain for the corrected reference data (step S3614). The processing unit 901 also performs FFT process on the measurement signal and obtains the amplitude characteristic $A(f)$ and phase characteristic $\theta(f)$ in the frequency domain for the measurement signal (step S3616). Then, with the amplitude characteristic $A_0(f)$ and phase characteristic $\theta_0(f)$ in the frequency domain for the corrected reference data being as a reference, the processing unit 901 calculates from the amplitude characteristic $A(f)$ and phase characteristic $\theta(f)$ in the frequency domain for the measurement signal viscoelastic property of a measurement target SMP (step S3618). Then the processing unit 910 terminates the process.

According to Embodiment 20 of the present invention, not only the effect similar to Embodiment 20 of the present invention can be produced, but also a corrected reference signal corresponding to measured temperature value of the delaying member 3 can be determined by interpolating two reference data the associated delaying member temperature is adjacent to the measured temperature value of the delaying member 3. This enables determination of not only a corrected reference data more appropriate for measured temperature of the delaying member 3 but also accurate corrected reference data even when the number of reference data to be previously stored is relatively small.

[Embodiment 21]

In Embodiment 20 of the present invention and its variant example, we described the configuration in which as reference data, the intensity change characteristic is associated with delay time and stored. On the one hand, in Embodiment 21 of the present invention, we describe the configuration in which as reference data, amplitude characteristic and phase characteristic in the frequency region of a reference signal are associated with delay time, and stored.

As the viscoelastic property measuring device according to Embodiment 21 of the present invention is similar to viscoelastic property measuring device 100 according to Embodiment 18 of the present invention, except for the viscoelastic property measurement process in the processing unit 901, we do not repeat detailed description of overall configuration.

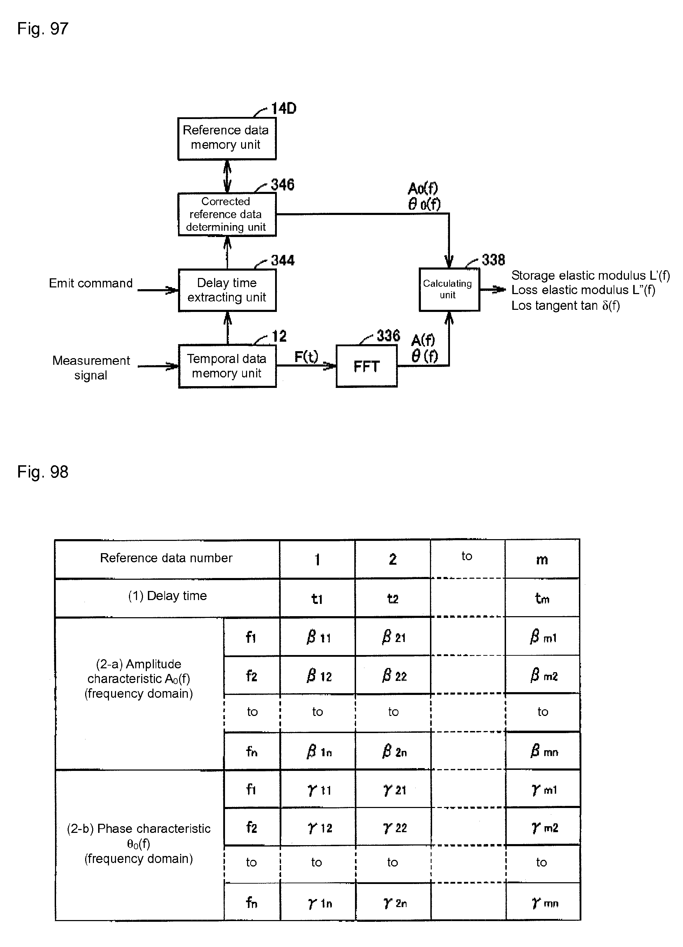

FIG. 97 shows the control block related to viscoelastic property measurement process according to Embodiment 21 of the present invention.

With reference to FIG. 97, the viscoelastic property measuring process structure according to Embodiment 21 of the present invention includes a reference data memory unit 14D, corrected reference data determining unit 346, delay time extracting unit 344, frequency characteristic acquisition unit (FFT) 336, temporal data memory unit 12, and calculating unit 338.

The reference data memory unit 14D previously stores a plurality of reference data associated with delay time of reflected sonic wave to be received in reference state.

FIG. 98 shows the data structure of reference data according to Embodiment 21 of the present invention.

With reference to FIG. 98, the reference data memory unit 14D stores two dimensional data for which delay time of a reference signal, amplitude characteristic $A_0(f)$, and phase characteristic $\theta_0(f)$ in the frequency domain for the reference signal are specified for every reference data number.

Specifically, not only reference data numbers are specified column-wise, but also an area in which delay time associated with each reference data number is stored, an area in which the amplitude characteristic $A_0(f)$ is stored, and an area in which the phase characteristic $\theta_0(f)$ is stored are formed. For instance, in reference data with reference data number "1", not only delay time t1 is stored, but also amplitude values $\beta_{11}$, $\beta_{12}$, •••, $\beta_{1n}$ at each frequency component of the amplitude characteristic $A_0(f)$ are stored, and phase values $\gamma_{11}$, $\gamma_{12}$, •••, $\gamma_{1n}$ at each frequency component of the phase characteristic $\theta_0(f)$ are stored. In the following, similarly, m kinds of reference data are stored in the reference data memory unit 14D.

Additionally, although each reference data is obtained depending on a temperature change in the delaying member 3, it is not necessary to store delaying member temperatures by associating it with each reference data number. In fact, this is because appropriate reference data can be determined based on delay time of reflected sonic wave, without keeping track of temperatures of the delaying member 3.

With reference to FIG. 97 again, based on a plurality of reference data associated with delay time and stored in the reference data memory unit 14D, the corrected reference data determining unit 346 determines corrected reference data depending on delay time of a measurement signal to be extracted by the delay time extracting unit 344. By way of example, the corrected reference data determining unit 346 according to Embodiment 21 of the present invention determines, as corrected reference data, the reference data the associated delay time of which is closest to the delay time of the measurement signal, among a plurality of reference data stored in the reference data memory unit 14D.

As the temporal data memory unit 12, delay time extracting unit 344, the frequency characteristic acquisition unit 336, and calculating unit 338 are similar to Embodiment 20 of the present invention, we do not repeat detailed description.

As other processing structure is also similar to Embodiment 20 of the present invention, we do not repeat detailed description.

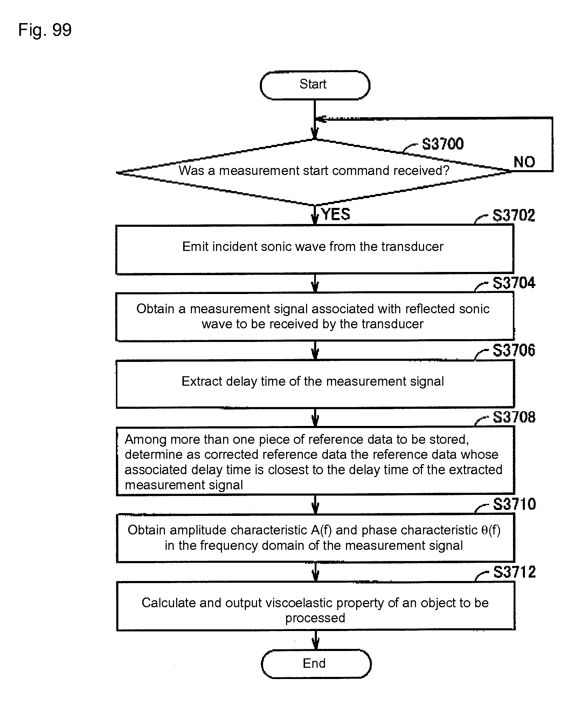

FIG. 99 shows the process flow related to the viscoelastic property measurement according to Embodiment 21 of the present invention.

With reference to FIG. 99, the processing unit 901 determines whether or not it received a measurement start command from a user, etc. (step S3700). When it did not receive the measurement start command (NO in step S3700), the processing unit 901 waits till it receives the measurement start command (step S3700).

When it received the measurement start command (YES in step S3700), the processing unit 901 gives the sensor unit an emit command and emits incident sonic wave from the transducer 20 (step S3702). Then, the processing unit 901 obtains a measurement signal corresponding to reflected sonic wave received by the transducer 20 (step S3704).

The processing unit 901 extracts delay time of the measurement signal based on temporal intensity change of the obtained measurement signal (step S3706). Then, the processing unit 901 determines, as corrected reference data, the reference data the associated delay time of which is closest to the delay time of the measurement signal extracted in step S3706 (step S3708).

The processing unit 901 also performs FFT process on the measurement signal, and obtains amplitude characteristic $A(f)$ and phase characteristic $\theta(f)$ in the frequency domain for the measurement signal (step S3710).

Then, with the amplitude characteristic $A_0(f)$ and phase characteristic and phase characteristic $\theta_0(f)$, which are corrected reference data, in the frequency domain being as a reference, the processing unit 901 calculates from amplitude characteristic $A(f)$ and phase characteristic $\theta(f)$ in the frequency domain for the measurement signal viscoelastic property of a measurement target SMP and outputs (step S3712). Then, the processing unit 901 terminates the process.

(Acquisition of reference data)

Similar to Embodiment 18 of the present invention as described above, it is desirable to provide a means of obtaining reference data from the standpoint of user-friendliness.

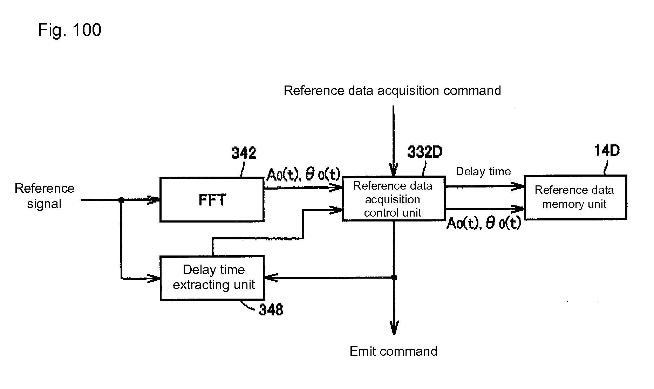

FIG. 100 shows the control block related to the reference data acquisition process according to Embodiment 21 of the present invention.

With reference to FIG. 100, the processing structure related to the reference data acquisition process includes a reference data acquisition control unit 332D, delay time extracting unit 348, frequency characteristic acquisition unit (FFT) 342, and reference data memory unit 14D.

When the reference data acquisition control unit 332D receives a reference data acquisition command from a user, etc., it gives the sensor unit (FIG. 2) an emit command. Then, the reference data acquisition control unit 332D obtains the amplitude characteristic $A_0(f)$ and phase characteristic $\theta_0(f)$ in the frequency domain for a reference signal to be received by the transducer 20. The reference data acquisition control unit 332D also obtains delay time of the reference signal from the delay time extracting unit 348. Then, the reference data acquisition control unit 332D pairs the delay time of the reference signal with the amplitude characteristic $A_0(f)$ and phase characteristic $\theta_0(f)$ in the frequency domain, and writes it to the reference data memory unit 14D.

The delay time extracting unit 348 monitors an emit command to be outputted from the reference data acquisition control unit 332D, and extracts delay time after an emit command is given till start of input of the reference data.

The frequency characteristic acquisition unit 342 performs FFT on the reference signal received by the transducer 20, obtains the amplitude characteristic $A_0(f)$ and phase characteristic $\theta_0(f)$ in the frequency domain, and outputs them to the reference data acquisition control unit 332D.

As the following is similar to the reference data acquisition process according to Embodiment 18 of the present invention, we do not repeat detailed description.

In Embodiment 21 of the present invention, the delaying member 3 corresponds to a "delaying member", the transducer 20 corresponds to a "transducer", and the measurement control unit 651 corresponds to a "measurement control unit". The reference data memory unit 14D implements a "reference data storage means", the delay time extracting means 344 implements a "delay time extracting means", the corrected reference data determining unit 348 implements a "corrected reference data determining means", the calculating unit 338 means a "calculating means", and the frequency characteristic acquisition unit (FFT) 336 implements a "frequency characteristic acquisition means". In addition, the sensor unit 2, transducer 20 and delaying member 3 correspond to a "sonic wave unit".

According to Embodiment 21 of the present invention, not only the effect similar to Embodiment 20 of the present invention can be produced, but also, as reference data, amplitude characteristic and phase characteristic in the frequency domain for a reference signal to be used in calculation of viscoelastic property are stored. This can reduce the amount of calculations involved in FFT process when viscoelastic property is calculated, compared with the case in which the temporal intensity change characteristic of a reference signal is used as reference data. Therefore, faster viscoelastic property measurement process can be implemented.

[Variant example of Embodiment 21]

Similar to the variant example of Embodiment 20 of the present invention as described above, the configuration may be such that corrected reference data is generated through interpolation from a plurality of reference data stored in the reference data memory unit 14D.

As the viscoelastic property measuring device according to the variant example of Embodiment 21 of the present invention is similar to the viscoelastic property measuring device according to Embodiment 21, except for content of the processes in the corrected reference data determining unit 340 (FIG. 97), we do not repeat detailed description of overall configuration.

By way of example, in the variant example of Embodiment 21 of the present invention, among a plurality of reference data stored in the reference data memory unit 14D, corrected reference data is generated by interpolating two reference data the associated delay time is adjacent to the delay time of the measurement signal.

With reference to FIG. 93 again, if delay time of the measurement signal extracted by the delay time extracting unit 344 is intermediate between delay time t1 and delay time t2, i.e., when the delay time t of the measurement signal is adjacent to the delay time t1 and t2, two reference data is associated with the delay time t1 and t2, are used for generating corrected reference data. If a relationship of $|t1-t|:|t2-t|=a:(1-a)$ is true in the time domain, corrected reference data is determined by following the processes similar to the variant example of Embodiment 19 of the present invention as described above.

With reference to FIG. 81A again, the amplitude characteristic $A_{est}(f)$ contained in the corrected reference data is determined so that in each frequency, a ratio of amplitude differences between amplitude of the amplitude characteristic $A_0(Tb1:f)$ for that amplitude and amplitude of the amplitude characteristic of $A_0(Tb2:f)$ corresponds to a ratio of time difference in the time domain.

In addition, with reference to FIG. 81B, the phase characteristic $\theta_{est}(f)$ contained in the corrected reference data is also determined so that in each frequency, a ratio of phase differences between phase of the phase characteristic $\theta_0(Tb1:f)$ for that phase and phase of the phase characteristic of $\theta_0(Tb2:f)$ corresponds to a ratio of time difference in the time domain.

As the following is similar to the variant example of Embodiment 19 of the present invention, we do not repeat detailed description.

(Process flow)

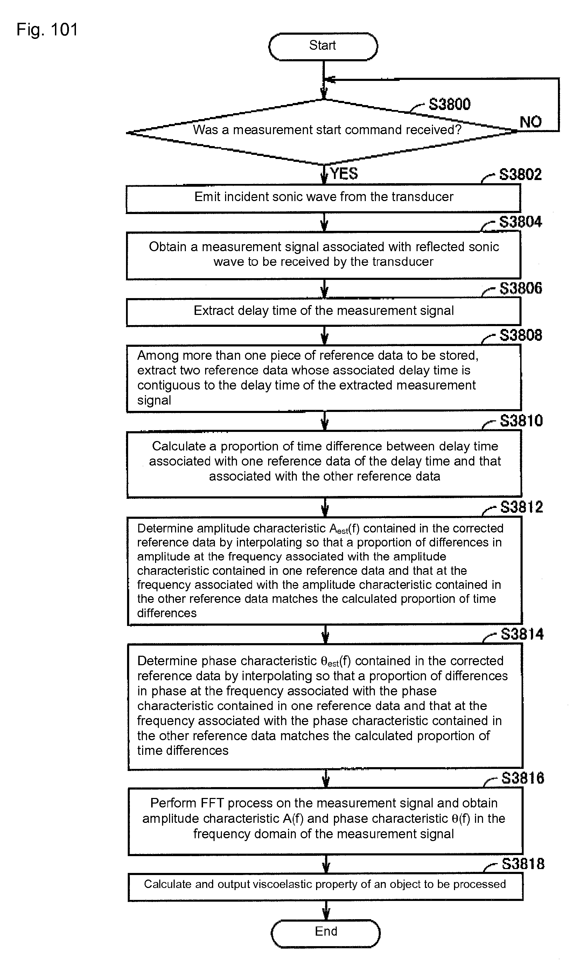

FIG. 101 shows the process flow related to the viscoelastic property measurement according to the variant example of Embodiment 21 of the present invention.

With reference to FIG. 101, the processing unit 901 determines whether or not it received a measurement start command from a user, etc (step S3800). When it did not receive the measurement start command (NO in step S3800), the processing unit 901 waits till it receives the measurement start command (step S3800).

When it received the measurement start command (YES in step S3800), the processing unit 901 gives the sensor unit an emit command and emits incident sonic wave from the transducer 20 (step S3802). Then, the processing unit 901 obtains a measurement signal corresponding to reflected sonic wave received by the transducer 20 (step S3804).

Based on temporal intensity change in the obtained measurement signal, the processing unit 901 extracts delay time of the measurement signal (step S3806). Then the processing unit extracts two reference data the associated delay time of which is adjacent to the delay time of the measurement signal extracted in step S3806 (step S3808) and calculates a ratio of time difference of the delay time associated with one reference data and the delay time associated with other reference data to the delay time (step S381 0).

The processing unit 901 further determines the amplitude characteristic $A_{est}(f)$ contained in the corrected reference data by performing interpolation so that a ratio of amplitude differences between amplitude at the frequency corresponding to the amplitude characteristic contained in one reference data and amplitude at the frequency corresponding to the amplitude characteristic contained in other reference data corresponds to a ratio of time difference calculated in step S3810 (step S3182). In addition, the processing unit 901 determines the phase characteristic $\theta_{est}(f)$ contained in the corrected reference data by performing interpolation so that a ratio of phase differences to phase at the frequency corresponding to the phase characteristic contained in one reference data and phase at the frequency corresponding to the phase characteristic contained in other reference data corresponds to a ratio of time difference calculated in step S3810 (step S3184).

The processing unit 901 also performs FFT process on the measurement signal and obtains the amplitude characteristic $A(f)$ and phase characteristic $\theta(f)$ in the frequency domain for the measurement signal (step S3816).

Then, with the amplitude characteristic $A0(f)$ and phase characteristic $\theta0(f)$ in the frequency domain, which are corrected reference data being as a reference, the processing unit 901 calculates from the amplitude characteristic $A(f)$ and phase characteristic $\theta(f)$ in the frequency domain for the measurement signal viscoelastic property of a measurement target SMP and outputs (step S3818). Then, the processing unit terminates the process.

According to the variant example of Embodiment 21 of the present invention, not only the effect similar to Embodiment 21 of the present invention can be produced, but also, a corrected reference signal corresponding to measured temperature value of the delaying member 3 can be determined by interpolating two reference data the associated delaying member temperature is adjacent to the measured temperature value of the delaying member 3. This enables determination of not only a corrected reference data more appropriate for measured temperature of the delaying member 3 but also accurate corrected reference data even when the number of reference data to be previously stored is relatively small.

[Embodiment 22]

In Embodiments 20 and 21 of the present invention and its variant examples as described above, although we described the configuration in which delay time of a measurement signal and reference data are associated and stored, the configuration may be such that delaying member temperature is further associated with each reference data and stored. Adoption of such the data structure enables not only measurement of viscoelastic property of a measurement target SMP but also estimation of temperatures of the delaying member 3. This also enables effects of heat from the measurement target SMP to the delaying member 3 being measured to be learned.

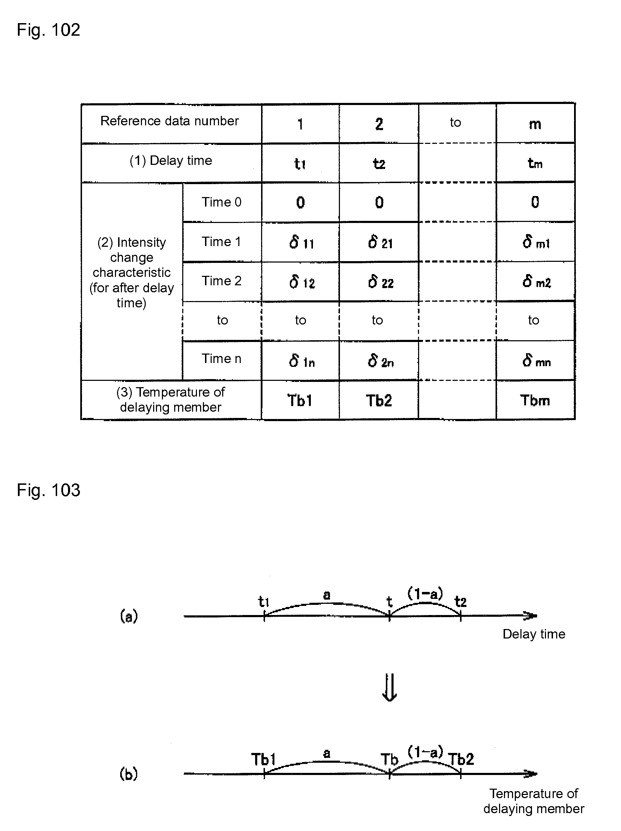

FIG. 102 shows the data structure of reference data according to Embodiment 21 of the present invention.

With reference to FIG. 102, the data structure of reference data according to Embodiment 21 of the present invention is, by way of example, equivalent to the data structure according to Embodiment 10 of the present invention (FIG. 86) to which areas for storing delaying member temperatures associated with respective reference data numbers have been added. In fact, when reference data is acquired, delaying member temperature at the time of that acquisition is stored additionally.

FIG. 103 shows a view for illustrating the process of estimating delaying member temperatures according to Embodiment 22 of the present invention.

FIG. 103 (a) shows a relationship in time domains related to delay time.

FIG. 103 (b) shows a relationship in temperature domains of the delaying member.

With reference to FIG. 103 (a), we describe the case in which a relationship of $|t1-t|:|t2-t|=a:(1-a)$ is true between delay time t of a measurement signal to be extracted and the delay time t1 and t2 of reference data, assuming that respective corresponding delay time is t1 and 2.

With reference to FIG. 103 (b), we assume that the delaying member temperature corresponding to the reference data of the delay time t1 is Tb1 and the delaying member temperature corresponding to the reference data of delay time t2 is Tb2. Then, in the temperature domain of the delaying member, the delaying member temperature Tb is determined so that a ratio of temperature differences to the delaying member temperature Tb1 and delaying member temperature Tb2 corresponds to a ratio of time difference in the time domain related to the delay time. In other words, the delaying member temperature Tb can be estimated according to:

$$Tb=(1-a)\times Tb1+a\times Tb2$$

According to Embodiment 22 of the present invention, temperatures of the delaying member can be estimated without providing a temperature measuring unit. Thus, in addition to measurement of viscoelastic property of a measurement target SMP, estimation of temperatures of the delaying member 3 is enabled while maintaining the simplified configuration. This enables effects of heat from the measurement target SMP to the delaying member 3 being measured to be learned.

It should be considered that all of the embodiments disclosed herein are illustrative and not limiting. It is intended that the scope of the present invention is defined by the Claims, and not by the above description, and that all changes in the meaning and scope equivalent to the Claims are included.

**Claims**

1. A viscoelastic property measuring device comprising:

   a sensor unit that emits a first sonic wave to a measurement target and receives a second sonic wave generated by the first sonic wave being reflected by the measurement target;
   a delaying member that is positioned in close contact with the sensor unit and generates a delay time between the first sonic wave emitted from the sensor unit and the second sonic wave received by the sensor unit with a propagation of the first sound wave and the second sound wave;
   a measurement control unit that measures viscoelastic property of the measurement target based on a measurement signal of the second sonic wave received by the sensor unit; and
   a close-contact mechanism for bringing the measurement target and the delaying member into close contact.

2. The viscoelastic property measuring device according to Claim 1 wherein the close-contact mechanism includes a pressurizing unit that pressurizes the measurement target so that the measurement target is in close contact with the delaying member.

3. The viscoelastic property measuring device according to Claim 1, wherein:

   a viscoelasticity identifying device further comprises a temperature measuring unit for measuring temperature of the delaying member,
   and the measurement control unit includes:

   a reference data storage unit that, for every temperature of the delaying member, previously stores a plurality of reference data indicative of property of the second sonic wave at a time of emitting the first sonic wave in a state where a reference medium is bonded with the delaying member in place of the measurement target;
   a corrected reference data determining unit that determines corrected reference data corresponding to the measured temperature value of the delaying member to be measured by the temperature measuring unit based on the reference data of every temperature stored in the reference data storage unit; and
   a calculating unit that calculates viscoelastic property of a measurement target from the measurement signal using the corrected reference data determined by the corrected reference data determining unit as a reference.

4. The viscoelastic property measuring device according to Claim 1, wherein:

   the measurement control unit includes:

   a reference data storage unit that previously stores the plurality of reference data indicative of property of the second sonic wave in association with the delay time until the sensor unit emits the first sonic wave and then the sensor unit receives the reflected second wave, in a state where the reference medium is bonded with the delaying member in place of the measurement target;
   a delay time extracting unit that extracts a delay time of the measurement signal based on temporal intensity change in the measurement signal;
   a corrected reference data determining unit that determines corrected reference data depending on the extraction delay time to be extracted by the delay time extracting unit based on the plurality of reference data stored in the reference data storage unit in association with the delay time; and
   a calculating unit that calculates viscoelastic property of a measurement target from a measurement signal using the corrected reference data determined by the corrected reference data determining unit as a reference.

5. A method of measuring viscoelastic property of a measurement target, comprising a step of:

   bringing the measurement target and a delaying member into close contact, wherein the delaying member is inserted between the measurement target and a sensor unit, and configured to generate the delay time between a first sonic wave to be emitted from the sensor unit and a second sonic wave to be generated by the first sonic wave being reflected by the measurement target,
the method of measuring viscoelastic property further including steps of:

emitting the first sonic wave from the sensor unit to the measurement target;
receiving the second sonic wave by the sensor unit; and
measuring viscoelastic property of the measurement target based on a measurement signal of the second sonic wave received by the sensor unit.

6. The method of measuring viscoelastic property according to Claim 5, wherein the method of measuring viscoelastic property further comprises the steps of:

for every temperature of the delaying member, previously obtaining a plurality of reference data indicative of property of the second sonic wave at a time of emitting the first sonic wave in a case where the reference medium is bonded with the delaying member in place of the measurement target;
measuring temperature of the delaying member;
determining corrected reference data depending on the measured temperature value of the delaying member based on the reference data obtained for every temperature of the delaying member; and
calculating viscoelastic property of the measurement target from the measurement signal using the determined corrected reference data as a reference.

7. The method of measuring viscoelastic property according to Claim 5, wherein the method of measuring viscoelastic property further comprises the steps of:

previously storing the plurality of reference data indicative of property of the second sonic wave in association with the delay time until the sensor unit emits the first sonic wave and then the sensor unit receives the second sonic wave in a state where the reference medium is bonded with the delaying member in place of the measurement target,;
extracting the delay time of the measurement signal based on temporal intensity change in the measurement signal;
determining the corrected reference data depending on the extracted extraction delay time based on the plurality of reference data stored in association with the delay time; and
calculating viscoelastic property of the measurement target from the measurement signal using the determined corrected reference data as a reference.

8. A process unit comprising:

an action unit that provides an object to be processed with an external action and changes viscoelastic property of the object to be processed;
a sensor unit that emits a first sonic wave to the object to be processed and receives a second sonic wave generated by the first sonic wave being reflected at the object to be processed or passing through the object to be processed; and
a measurement control unit that measures viscoelastic property of the object to be processed based on a measurement signal of the second sonic wave received by the sensor unit,

wherein the measurement control unit controls the action unit based on measurement result of viscoelastic property of the object to be processed.

9. The process unit according to Claim 8, wherein the process unit further comprises:

the delaying member that is inserted between the object to be processed and the sensor unit and generates a delay time between the first sonic wave and the second sonic wave; and
the temperature measuring unit for measuring a temperature of the delaying member,

wherein the measurement control unit includes:

the reference data storage unit that for every temperature of the delaying member, previously stores a plurality of reference data indicative of property of the second sonic wave at a time of emitting the first sonic wave in a state where the reference medium is bonded with the delaying member in place of the object to be processed;

the corrected reference data determining unit that determines the corrected reference data depending on the measured temperature value of the delaying member to be measured by the temperature measuring unit based on the reference data of every temperature stored in the reference data storage unit; and

the calculating unit that calculates viscoelastic property of the object to be processed from the measurement signal using the corrected reference data determined by the corrected reference data determining unit as a reference.

10. The process unit according to Claim 8, wherein the measurement control unit further comprises:

the reference data storage unit that previously stores the reference data indicative of property of the second sonic wave in association with the delay time until the sensor unit emits the first sonic wave and then the sensor unit receives the reflected second sonic wave in a state where the reference medium, is bonded with the delaying member in place of the object to be processed;

the delay time extracting unit that extracts the delay time of the measurement signal based on the temporal intensity change in the measurement signal;

the corrected reference data determining unit that determines the corrected reference data depending on the extraction delay time to be extracted by the delay time extracting unit based on the plurality of data stored in the reference data storage unit in association with the delay time; and

the calculating unit that calculates viscoelastic property of the object to be processed from the measurement signal using the corrected reference data to be determined by the corrected reference data determining unit as a reference.

Fig. 1

Fig. 2

Fig. 3

Fig. 4A

Fig. 4B

Fig. 4C

Fig. 5

```
                        ┌──────────┐
                        │  Start   │
                        └──────────┘
                             │
                             ▼
                          ╱     ╲  ─ S100
                        ╱         ╲
                      ╱  Was a reference ╲    NO
                     ╱   data acquisition  ╲──────┐
                      ╲  command received? ╱       │
                        ╲               ╱          │
                          ╲     ╱                  │
                          │ YES                    │
                          ▼                        │
        ┌──────────────────────────────────────┐  │
        │ Emit incident sonic wave from the     │─ S102
        │ transducer                            │  │
        └──────────────────────────────────────┘  │
                          │                        │
                          ▼                        │
        ┌──────────────────────────────────────┐  │
        │ Obtain a reference signal             │─ S104
        └──────────────────────────────────────┘  │
                          │                        │
                          ▼                        │
        ┌──────────────────────────────────────┐  │
        │ Obtain amplitude characteristic and   │─ S106
        │ phase characteristic in a frequency   │  │
        │ domain of reflected sonic wave        │  │
        └──────────────────────────────────────┘  │
                          │                        │
                          ▼                        │
        ┌──────────────────────────────────────┐  │
        │ Store them as reference data in the   │─ S108
        │ storage unit                          │  │
        └──────────────────────────────────────┘  │
                          │◄───────────────────────┘
                          ▼
                       ╱     ╲  ─ S110
                     ╱         ╲
                   ╱  Was a      ╲    NO
                  ╱ measurement    ╲──────┐
                   ╲ start command ╱       │
                    ╲ received?   ╱        │
                      ╲       ╱            │
                      │ YES                │
                      ▼                    │
        ┌──────────────────────────────────────┐
        │ Emit incident sonic wave from the     │─ S112
        │ transducer                            │
        └──────────────────────────────────────┘
                          │
                          ▼
        ┌──────────────────────────────────────┐
        │ Obtain a measurement signal           │─ S114
        └──────────────────────────────────────┘
                          │
                          ▼
        ┌──────────────────────────────────────┐
        │ Obtain an amplitude value and phase   │─ S116
        │ in the frequency domain of reflected  │
        │ sonic wave                            │
        └──────────────────────────────────────┘
                          │
                          ▼
        ┌──────────────────────────────────────┐
        │ Measure viscoelastic property of a    │─ S118
        │ measurement target                    │
        └──────────────────────────────────────┘
                          │
                          ▼
        ┌──────────────────────────────────────┐
        │ Provide the measured viscoelastic     │─ S120
        │ property for a display output unit    │
        └──────────────────────────────────────┘
                          │
                          ▼
              NO       ╱     ╲  ─ S122
          ┌─────────╱         ╲
          │       ╱  Was a stop  ╲
          │        ╲ measurement ╱
          │         ╲ command   ╱
          │          ╲received? ╱
          │            ╲     ╱
          │            │ YES
          │            ▼
          │        ┌──────────┐
          │        │   End    │
          │        └──────────┘
          └──► (back to S112)
```

Fig. 6

Fig. 7

Fig. 8

```
                    ┌─────────────┐
                    │    Start    │
                    └─────────────┘
                           │
                           ▼                    ┌──── S200
                      ╱─────────╲
                     ╱ Was a reference data ╲      NO
                    ╱  acquisition command   ╲ ──────────┐
                     ╲    received?          ╱            │
                      ╲───────────╱                       │
                           │ YES                          │
                           ▼            ┌── S202           │
              ┌─────────────────────────────┐             │
              │ Store in the storage unit    │            │
              │ amplitude                    │            │
              │ characteristic and phase     │            │
              │ characteristic in            │            │
              │ the frequency domain of a    │            │
              │ reference                    │            │
              │ signal as reference data     │            │
              │ (similar to steps            │            │
              │ S102 to S106)                │            │
              └─────────────────────────────┘             │
                           │                              │
                           ▼                ┌── S204       │
                      ╱─────────╲                          │
                     ╱           ╲             NO          │
                    ╱ Was the setting received? ╲ ─────────┤
                     ╲           ╱                         │
                      ╲─────────╱                          │
                           │ YES                           │
                           ▼          ┌── S206              │
              ┌─────────────────────────────┐              │
              │ Store the setting in the     │             │
              │ storage unit                 │             │
              └─────────────────────────────┘              │
                           │                               │
           ┌───────────────┤          ┌── S208             │
           │               ▼                               │
           │  ┌─────────────────────────────┐              │
           │  │ Measure viscoelastic         │             │
           │  │ property of a                │             │
           │  │ measurement target (similar  │             │
           │  │ to steps                     │             │
           │  │ S112 to S118)                │             │
           │  └─────────────────────────────┘              │
           │               │                               │
           │               ▼           ┌── S210            │
           │          ╱─────────╲                          │
           │         ╱ Did the viscoelastic ╲    YES        │
           │        ╱   property             ╲ ─────────┐   │
           │         ╲  value in each measured ╱        │   │
           │          ╲ frequency reach the setting? ╱   │  │
           │           ╲─────────╱                    │   │
           │               │ NO                       │   │
           │               ▼        ┌── S212          ▼      ┌── S214
           │  ┌────────────────────────┐   ┌────────────────────────┐
           │  │ Generate predetermined │   │ Carry out fluid to a   │
           │  │ amount of              │   │ next process           │
           │  │ circulation and of     │   └────────────────────────┘
           │  │ agitation in a         │              │
           │  │ reaction process       │              ▼
           │  └────────────────────────┘        ┌──────────┐
           └──────────┘                         │   End    │
                                                └──────────┘
```

Fig. 9

<u>**503**</u>

Sensor unit　　　　2　　　　　　　Measurement control unit　**603**

Fig. 10

<u>**503**</u>

Fig. 11

Fig. 12

504

Sensor unit    2          Measurement control unit   604

| | | |
|---|---|---|

22 Transmission control circuit

28 Signal processing circuit

12 Temporal data memory unit

24 Transmitting circuit

26 Receiving circuit

10C Calculating unit

14 Storage unit

25 Direction matching unit

16 Display output unit

18 Input unit

20 Transducer

3B

64

74 Drive unit

68 Depressurizing unit

Fig. 13A

Fig. 13B

Movable upward and downward

Fig. 14A

Fig. 14B

Fig. 14C

Fig. 15A

Fig. 15B

Fig. 16A

Fig. 16B

Fig. 17A

Material input

OBJ

701

140

3

801

2

142

146

144 — M

Fig. 18

701

801

Sensor unit 2

Measurement control unit

22
Transmission control circuit

28
Signal processing circuit

12
Temporal data memory unit

24
Transmitting circuit

26
Receiving circuit

11
Calculating unit

14
Storage unit

25
Direction matching unit

16
Display output unit

18
Input unit

20
Transducer

3

Process unit

Fig. 19

Storage elastic modulus (MPa)

Kneading stopped

Time (min)

Fig. 20

Flowchart:

Start

S1100 — Was a start process command received? — NO (loops back)

YES

S1102 — Give the motor an operation command

S1104 — Emit incident sonic wave from the transducer

S1106 — Obtain a measurement signal

S1108 — Obtain an amplitude value and phase in specific frequency of reflected sonic wave

S1110 — Measure the storage elastic modulus in the specific frequency

S1112 — Does the measured storage elastic modulus exceed a predetermined threshold? — NO (loops back)

YES

S1114 — Give the motor a stop command

End

Fig. 21

```
        ┌──────────────┐
        │    Start      │
        └──────┬───────┘
               │ ◄──────────────────┐
               ▼           ╭ S1150   │
          ╱─────────────╲            │
         ╱ Was a reference╲   NO     │
        ╱  data acquisition╲─────────┘
        ╲  command received?╱
         ╲─────────────────╱
               │ YES
               ▼            ╭ S1152
     ┌─────────────────────┐
     │ Emit incident sonic  │
     │ wave from the        │
     │ transducer           │
     └──────────┬──────────┘
               ▼            ╭ S1154
     ┌─────────────────────┐
     │ Obtain a reference   │
     │ signal               │
     └──────────┬──────────┘
               ▼            ╭ S1156
     ┌─────────────────────┐
     │ Obtain amplitude     │
     │ characteristic and   │
     │ phase characteristic │
     │ in the frequency     │
     │ domain of reflected  │
     │ sonic wave           │
     └──────────┬──────────┘
               ▼            ╭ S1158
     ┌─────────────────────┐
     │ Store the amplitude  │
     │ characteristic and   │
     │ phase characteristic │
     │ in the storage unit  │
     │ as reference data    │
     └──────────┬──────────┘
               ▼
        ┌──────────────┐
        │    End        │
        └──────────────┘
```

Fig. 22

Storage elastic modulus (MPa)

Kneading stopped

Maximum point

Time (min)

Fig. 23

```
                      ┌─────────────────┐
                      │      Start       │
                      └─────────────────┘
                               │        ◄──────────────────────┐
                               ▼  ┌─ S1200                      │
                          ╱─────────────╲                       │
                        ╱                 ╲                     │
                      ╱  Was a start process ╲   NO             │
                      ╲  command received?    ╱ ─────────────────┘
                        ╲                   ╱
                          ╲───────────────╱
                               │ YES        ┌─ S1202
                               ▼
          ┌──────────────────────────────────────────┐
          │ Store a predetermined initial value in the │
          │ storage unit as last measured measurement  │
          └──────────────────────────────────────────┘
                               │        ┌─ S1204
                               ▼
          ┌──────────────────────────────────────────┐
          │     Give the motor an operation command    │
          └──────────────────────────────────────────┘
                               │        ┌─ S1206
                               ▼  ◄─────────────────────────────┐
          ┌──────────────────────────────────────────┐         │
          │        Emit incident sonic wave from       │         │
          │             the transducer                 │         │
          └──────────────────────────────────────────┘         │
                               │        ┌─ S1208                 │
                               ▼                                 │
          ┌──────────────────────────────────────────┐         │
          │           Obtain a measurement signal      │         │
          └──────────────────────────────────────────┘         │
                               │        ┌─ S1210                 │
                               ▼                                 │
          ┌──────────────────────────────────────────┐         │
          │ Obtain an amplitude value and phase at     │         │
          │ specific frequency of reflected sonic wave │         │
          └──────────────────────────────────────────┘         │
                               │        ┌─ S1212                 │
                               ▼                                 │
          ┌──────────────────────────────────────────┐         │
          │     Measure the storage elastic modulus    │         │
          │          at the specific frequency         │         │
          └──────────────────────────────────────────┘         │
                               │        ┌─ S1214                 │
                               ▼                                 │
          ┌──────────────────────────────────────────┐         │
          │ Store the measured storage elastic modulus in│        │
          │ the storage unit as a measurement of this time│       │
          └──────────────────────────────────────────┘         │
                               │        ┌─ S1216                 │
                               ▼                                 │
          ┌──────────────────────────────────────────┐         │
          │ Calculate a difference between the last    │         │
          │ measurement and the measurement of this time│        │
          └──────────────────────────────────────────┘         │
                               │                                 │
                               ▼    ┌─ S1218                      │
                          ╱─────────────╲                        │
                        ╱                 ╲          ┌─ S1220     │
                      ╱  Is the calculated  ╲  NO  ┌──────────────┴──────┐
                      ╲  difference between  ╱ ────►│ Update the measurement of this│
                      ╱  the last measurement ╲     │ time to the last measurement  │
                      ╲  and the measurement   ╱    └─────────────────────┘
                        ╲ of this time a      ╱
                          ╲ negative value? ╱
                               │ YES       ┌─ S1222
                               ▼
          ┌──────────────────────────────────────────┐
          │        Give the motor a stop command       │
          └──────────────────────────────────────────┘
                               │
                               ▼
                      ┌─────────────────┐
                      │       End        │
                      └─────────────────┘
```

Fig. 24

Fig. 25

```
                    ┌──────────────┐
                    │    Start     │
                    └──────┬───────┘
                           │                          ◄──────────┐
                           ▼         ┌─ S1250                     │
                      ╱─────────╲                                 │
                    ╱             ╲      NO                        │
                  ╱  Was a start    ╲──────────────────────────────┘
                    ╲  process       ╱
                      ╲ command      ╱
                        ╲ received? ╱
                          ╲───────╱
                              │ YES        ┌─ S1252
                              ▼
              ┌────────────────────────────────────┐
              │ Store a predetermined initial value│
              │ in the storage unit as last        │
              │ measurement                        │
              └──────────────┬─────────────────────┘
                             │              ┌─ S1254
                             ▼
              ┌────────────────────────────────────┐
              │ Give the motor an operation command│
              └──────────────┬─────────────────────┘
                             │ ◄──────────────────────────┐
                             ▼              ┌─ S1256        │
              ┌────────────────────────────────────┐       │
              │ Emit incident sonic wave from      │       │
              │ the transducer                     │       │
              └──────────────┬─────────────────────┘       │
                             │              ┌─ S1258        │
                             ▼                              │
              ┌────────────────────────────────────┐       │
              │ Obtain a measurement signal        │       │
              └──────────────┬─────────────────────┘       │
                             │              ┌─ S1260        │
                             ▼                              │
              ┌────────────────────────────────────┐       │
              │ Obtain an amplitude value and phase│       │
              │ at specific frequency of reflected │       │
              │ sonic wave                         │       │
              └──────────────┬─────────────────────┘       │
                             │              ┌─ S1262        │
                             ▼                              │
              ┌────────────────────────────────────┐       │
              │ Measure the storage elastic modulus│       │
              │ at the specific frequency          │       │
              └──────────────┬─────────────────────┘       │
                             │              ┌─ S1264        │
                             ▼                              │
              ┌────────────────────────────────────┐       │
              │ Store the measured storage elastic │       │
              │ modulus in the storage unit as a   │       │
              │ measurement of this time           │       │
              └──────────────┬─────────────────────┘       │
                             │              ┌─ S1266        │
                             ▼                              │
              ┌────────────────────────────────────┐       │
              │ Calculate a difference between the │       │
              │ last measurement and the           │       │
              │ measurement of this time           │       │
              └──────────────┬─────────────────────┘       │
                             │                              │
                             ▼        ┌─ S1268             │
                        ╱─────────╲                         │
                      ╱             ╲                        │
                    ╱ Is the         ╲        ┌─ S1270      │
                  ╱ calculated        ╲  NO  ┌──────────────┴─────┐
                  ╲ difference...      ╱────►│ Update the         │
                    ╲ within a        ╱      │ measurement of this│
                      ╲ threshold    ╱       │ time to the last   │
                        ╲ range?    ╱        │ measurement        │
                          ╲───────╱          └────────────────────┘
                              │ YES      ┌─ S1272
                              ▼
              ┌────────────────────────────────────┐
              │ Give the motor a stop command      │
              └──────────────┬─────────────────────┘
                             │
                             ▼
                    ┌──────────────┐
                    │     End      │
                    └──────────────┘
```

Fig. 26

Storage elastic modulus (MPa)

Fig. 27

```
                    ( Start )
                       │
                       ▼◄──────────────────────┐
                      S1300                     │
              Was a start process    NO         │
              command received? ─────────────────┤
                       │                          │
                      YES        S1302            │
        ┌──────────────────────────────────────┐ │
        │ Give the motor an operation command  │ │
        └──────────────────────────────────────┘ │
                       │                          │
                       ▼◄─────────────────────────┤
                      S1304                        │
        ┌──────────────────────────────────────┐  │
        │ Emit incident sonic wave from the transducer │
        └──────────────────────────────────────┘  │
                       │                           │
                      S1306                         │
        ┌──────────────────────────────────────┐   │
        │       Obtain a measurement signal     │   │
        └──────────────────────────────────────┘   │
                       │                            │
                      S1308                          │
        ┌──────────────────────────────────────┐    │
        │ Obtain an amplitude value and phase at │    │
        │ specific frequency of reflected sonic wave │
        └──────────────────────────────────────┘    │
                       │                             │
                      S1310                           │
        ┌──────────────────────────────────────┐     │
        │ Measure the storage elastic modulus    │     │
        │      at the specific frequency         │     │
        └──────────────────────────────────────┘     │
                       │                              │
                      S1312                            │
        ┌──────────────────────────────────────┐      │
        │ Store the measured elastic storage     │      │
        │     modulus in the storage unit        │      │
        └──────────────────────────────────────┘      │
                       │                               │
                      S1314                             │
              Has a predetermined      NO               │
              measurement period elapsed ────────────────┘
              since the process started?
                       │
                      YES        S1316
        ┌──────────────────────────────────────┐
        │ Determine an interpolant so that an interphase │
        │ value with the read storage elastic modulus is high │
        └──────────────────────────────────────┘
                       │
                      S1318
        ┌──────────────────────────────────────┐
        │ Predict time when the storage elastic  │
        │ modulus specified by the interpolant   │
        │ reach the predetermined threshold      │
        └──────────────────────────────────────┘
                       │
                       ▼◄──────────────────────┐
                      S1320                     │
              Has the predicted arrival time  NO │
              been passed since the ─────────────┘
              process started?
                       │
                      YES        S1322
        ┌──────────────────────────────────────┐
        │    Give the motor a stop command       │
        └──────────────────────────────────────┘
                       │
                    ( End )
```

Fig. 28A

Fig. 28B

Reception strength

Fig. 29

```
                              ( Start )
                                  │
                                  ▼              S1350
                          ╱─────────────╲        NO
                        ╱  Was a start    ╲─────────►
                        ╲  process command ╱
                          ╲  received?   ╱
                            ╲─────────╱
                               │YES          S1352
                    ┌──────────────────────────────┐
                    │ Give the motor an operation command │
                    └──────────────────────────────┘
                                  │              S1354
                    ┌──────────────────────────────┐
                    │ Emit incident sonic wave from the transducer │
                    └──────────────────────────────┘
                                  │              S1356
                    ┌──────────────────────────────┐
                    │   Obtain a measurement signal to be    │
                    │ received during a predetermined period │
                    └──────────────────────────────┘
                                  │              S1358
                    ┌──────────────────────────────┐
                    │     Obtain a peak amplitude value      │
                    │      from the measurement signal       │
                    └──────────────────────────────┘
                                  │              S1360
                    ┌──────────────────────────────┐
                    │ Associate the obtained peak amplitude value with │
                    │ data for specifying that period and store them in the │
                    │ storage unit │
                    └──────────────────────────────┘
                                  │              S1362
                          ╱─────────────╲        NO
                        ╱ Was a predetermined ╲─────────►
                        ╲ number of peak amplitude ╱
                          ╲  values obtained? ╱
                            ╲─────────╱
                               │YES          S1364
                    ┌──────────────────────────────┐
                    │   Specify a period associated with the  │
                    │      extracted peak amplitude value     │
                    └──────────────────────────────┘
                                  │              S1366
                    ┌──────────────────────────────┐
                    │  Obtain an amplitude value and phase at  │
                    │ specific frequency of reflected sonic wave │
                    └──────────────────────────────┘
                                  │              S1368
                    ┌──────────────────────────────┐
                    │   Measure the storage elastic modulus   │
                    │        at the specific frequency        │
                    └──────────────────────────────┘
                                  │              S1370
                    ┌──────────────────────────────┐
                    │    Store the measured elastic storage   │
                    │        modulus in the storage unit      │
                    └──────────────────────────────┘
                                  │              S1372
                          ╱─────────────╲        NO
                        ╱  Does the measured ╲─────────►
                        ╲  storage elastic modulus ╱
                          ╲ exceed a threshold? ╱
                            ╲─────────╱
                               │YES          S1374
                    ┌──────────────────────────────┐
                    │     Give the motor a stop command       │
                    └──────────────────────────────┘
                                  │
                                  ▼
                              ( End )
```

Fig. 30

Fig. 31

Fig. 32

Material input

703

220_1    216_1  216_2  214

3

2

M

M

803    218_1

218_2    220_2

Fig. 33

Lower cutoff
frequency

Upper cutoff
frequency

Kneading
stopped

Loss elastic modulus

Time

f1            f2            f3

Frequency

Fig. 34

```
                  ( Start )
                     |
                     v
                 /S1400
          Was a start process        NO
          command received?
                     |
                   YES    /S1402
        Give the motor an operation command
                     |
                     v   /S1404
          Emit incident sonic wave from
                the transducer
                     |
                     v   /S1406
          Obtain a measurement signal
                     |
                     v   /S1408
        Obtain an amplitude value and phase at
        specific frequency of reflected sonic wave
                     |
                     v   /S1410
          Sequentially measure the loss elastic
          modulus at respective frequencies
                     |
                     v   /S1412
        Specify frequency having the maximum
        value of the loss elastic modulus among
        the measured respective frequencies
                     |
                     v
                 /S1414
          Does the specified          NO
          frequency exist within a
          preset threshold range?
                     |
                   YES    /S1416
          Give the motor a stop command
                     |
                     v
                  ( End )
```

Fig. 35

Material input

704

160  2  3  OBJ

804

158

Power
supply unit

156

154

152

M

150

Fig. 36

Loss elastic modulus

Heating
stopped

Rolling
stopped

t

Threshold

Time

Fig. 37

```
                    ( Start )
                       |
                       v
                     /‾‾‾‾\  S1450
                   /        \
                 / Was a start \  NO
                < process       >----+
                 \ command    /      |
                   \received?/       |
                     \‾‾‾/           |
                       | YES  S1452  |
                       v             |
        +------------------------------+    |
        | Give the motor an operation  |    |
        | command and the power supply |    |
        | unit an energize command     |    |
        +------------------------------+    |
                       |             |
                       v      S1454  |
        +------------------------------+    |
        | Emit incident sonic wave     |    |
        | from the transducer          |    |
        +------------------------------+    |
                       |      S1456  |
                       v             |
        +------------------------------+    |
        | Obtain a measurement signal  |    |
        +------------------------------+    |
                       |      S1458  |
                       v             |
        +------------------------------+    |
        | Obtain an amplitude value    |    |
        | and phase at specific        |    |
        | frequency of reflected       |    |
        | sonic wave                   |    |
        +------------------------------+    |
                       |      S1460  |
                       v             |
        +------------------------------+    |
        | Measure the loss elastic     |    |
        | modulus at specific frequency|    |
        +------------------------------+    |
                       |             |
                       v   S1462     |
                     /‾‾‾‾\          |
                   /        \        |
                 / Does the  \  NO   |
                < measured loss>-----+
                 \ elastic    /
                   \modulus  /
                     \‾‾‾/
                       | YES  S1464
                       v
        +------------------------------+
        | Give the power supply unit   |
        | a cutoff command             |
        +------------------------------+
                       |      S1466
                       v
        +------------------------------+
        | Wait till a predetermined    |
        | period has passed            |
        +------------------------------+
                       |      S1468
                       v
        +------------------------------+
        | Give the motor a stop command|
        +------------------------------+
                       |
                       v
                    ( End )
```

Fig. 38

Fig. 39

Loss elastic modulus

Agitation stopped

78

Storage elastic modulus

Fig. 40

```
                    ┌─────────────┐
                    │    Start    │
                    └─────────────┘
                           │
                           ▼                    ┌─ S1500
                    ╱─────────────╲
                   ╱  Was a start   ╲    NO
                  ╱  process command  ╲──────────┐
                   ╲    received?    ╱           │
                    ╲─────────────╱              │
                           │ YES                 │
                           ▼          ┌─ S1502    │
              ┌──────────────────────────────┐   │
              │ Give the motor an operation   │   │
              │          command              │   │
              └──────────────────────────────┘   │
                           │          ┌─ S1504    │
                           ▼                      │
              ┌──────────────────────────────┐   │
              │    Emit incident sonic wave   │   │
              │      from the transducer      │   │
              └──────────────────────────────┘   │
                           │          ┌─ S1506    │
                           ▼                      │
              ┌──────────────────────────────┐   │
              │   Obtain a measurement signal │   │
              └──────────────────────────────┘   │
                           │          ┌─ S1508    │
                           ▼                      │
              ┌──────────────────────────────┐   │
              │ Obtain an amplitude value and │   │
              │ phase at specific frequency   │   │
              │ of reflected sonic wave       │   │
              └──────────────────────────────┘   │
                           │          ┌─ S1510    │
                           ▼                      │
              ┌──────────────────────────────┐   │
              │ Measure the storage elastic   │   │
              │ modulus and the loss elastic  │   │
              │ modulus at specific frequency │   │
              └──────────────────────────────┘   │
                           │                      │
                           ▼        ┌─ S1512       │
                    ╱─────────────╲              │
                   ╱ Do both of the ╲   NO         │
                  ╱ measured storage  ╲───────────┘
                 ╱  elastic modulus and ╲
                 ╲  loss elastic modulus ╱
                  ╲ fall within respective╱
                   ╲  threshold range?  ╱
                    ╲─────────────╱
                           │ YES     ┌─ S1514
                           ▼
              ┌──────────────────────────────┐
              │  Give the motor a stop command│
              └──────────────────────────────┘
                           │
                           ▼
                    ┌─────────────┐
                    │     End     │
                    └─────────────┘
```

Fig. 41

Fig. 42

Fig. 43

```
                    ┌─────────────┐
                    │    Start    │
                    └─────────────┘
                           │
                           ▼
                     ╱──────────╲      ┌─ S1550
                    ╱ Was a start ╲    NO
                   ╱ process       ╲──────┐
                   ╲ command       ╱      │
                    ╲ received?   ╱       │
                     ╲──────────╱         │
                        │YES  ┌─ S1552    │
                        ▼                 │
            ┌───────────────────────┐     │
            │ Give the motor a      │     │
            │ reference rotating    │     │
            │ speed command         │     │
            └───────────────────────┘     │
                        │      ┌─ S1554   │
                        ▼                 │
            ┌───────────────────────┐     │
            │ Emit incident sonic   │     │
            │ wave from the         │     │
            │ transducer            │     │
            └───────────────────────┘     │
```

S1556 — Obtain a measurement signal

S1558 — Obtain an amplitude value and phase at specific frequency of reflected sonic wave

S1560 — Measure the loss elastic modulus at specific frequency

S1562 — Does the measured loss elastic modulus exceed an upper threshold?
    YES → S1564 — Give the power supply unit an energize command
    NO ↓

S1566 — Does the measured loss elastic modulus fall below a lower threshold?
    YES → S1568 — Give the power supply unit a cutoff command
    NO ↓

S1570 — Calculate a deviation between the measured loss elastic modulus and a target value

S1572 — Give the motor a new rotating speed command

Start

S1574 — Was a stop process command received?
    NO →
    YES ↓

End

Fig. 44

Fig. 45

Fig. 46

Fig. 47A

In the air

Fig. 47B

In the air

Fig. 47C

Fig. 48A

Fig. 48B

Fig. 48C

Fig. 49

```
                    ┌─────────────┐
                    │    Start    │
                    └──────┬──────┘
                           │      ┌──────────────────┐
                           ▼      │                  │
                        ╱─────────╲   ┌─S1600         │
                       ╱           ╲                  │
                      ╱ Was a start ╲    NO           │
                      ╲ process      ╱────────────────┘
                       ╲ command    ╱
                        ╲ received?╱
                         ╲────────╱
                          │YES      ┌─S1602
                          ▼
            ┌───────────────────────────────┐
            │ Give the motor a reference    │
            │ rotating speed command        │
            └───────────────┬───────────────┘
                            │        ┌─S1604
                            ▼
            ┌───────────────────────────────┐
            │ Emit incident sonic wave      │
            │ from the transducer           │
            └───────────────┬───────────────┘
                            │        ┌─S1606
                            ▼
            ┌───────────────────────────────┐
            │ Read out a measurement signal │
            │ of reflected sonic wave       │
            │ (A wave and B wave)           │
            └───────────────┬───────────────┘
                            │        ┌─S1608
                            ▼
            ┌───────────────────────────────┐
            │ Detect delay time             │
            └───────────────┬───────────────┘
                            │        ┌─S1610
                            ▼
            ┌───────────────────────────────┐
            │ Derive reflectivity of        │
            │ incident sonic wave on a      │
            │ boundary surface between an   │
            │ object to be processed and    │
            │ dripping pipe                 │
            └───────────────┬───────────────┘
                            │        ┌─S1612
                            ▼
            ┌───────────────────────────────┐
            │ Obtain amplitude characteristic│
            │ and phase characteristic of   │
            │ A wave and B wave,            │
            │ respectively, in the frequency│
            │ domain                        │
            └───────────────┬───────────────┘
                            │        ┌─S1614
                            ▼
            ┌───────────────────────────────┐
            │ Derive an attenuation         │
            │ coefficient of the incident   │
            │ sonic wave                    │
            └───────────────┬───────────────┘
                            │        ┌─S1616
                            ▼
            ┌───────────────────────────────┐
            │ Derive phase speed            │
            └───────────────┬───────────────┘
                            │        ┌─S1618
                            ▼
            ┌───────────────────────────────┐
            │ Measure the loss elastic      │
            │ modulus at specific frequency │
            │ from the derived attenuation  │
            │ coefficient and traveling     │
            │ speed                         │
            └───────────────┬───────────────┘
                            │        ┌─S1620
                            ▼
            ┌───────────────────────────────┐
            │ Perform similar processes to  │
            │ steps S1562 to S1574          │
            └───────────────┬───────────────┘
                            ▼
                    ┌─────────────┐
                    │     End     │
                    └─────────────┘
```

Fig. 50

```
                    ╭─────────────╮
                    │    Start     │
                    ╰──────┬──────╯
                           │  ◄──────────────────────┐
                           ▼                          │
                      ╱─────────╲  ┌S1650             │
                    ╱ Was a reference ╲    NO          │
                   ◄  data acquisition  ►──────────────┘
                    ╲ command received? ╱
                      ╲─────────╱
                           │YES      ┌S1652
                           ▼
              ┌────────────────────────────┐
              │ Emit incident sonic wave   │
              │     from the transducer    │
              └────────────┬───────────────┘
                           ▼         ┌S1654
              ┌────────────────────────────┐
              │ Obtain a measurement signal│
              │ indicative of temporal     │
              │ intensity change of A₀ wave│
              └────────────┬───────────────┘
                           ▼         ┌S1656
              ┌────────────────────────────┐
              │ Obtain amplitude           │
              │ characteristic of A₀ wave  │
              │ in the frequency domain    │
              └────────────┬───────────────┘
                           ▼         ┌S1658
              ┌────────────────────────────┐
              │ Store the amplitude        │
              │ characteristic of A₀ wave  │
              │ in the frequency domain    │
              │ as reference data          │
              └────────────┬───────────────┘
                           ▼  ◄──────────────────────┐
                      ╱─────────╲  ┌S1660             │
                    ╱  Was a reflective ╲   NO         │
                   ◄  member refer command ►──────────┘
                    ╲ received?         ╱
                      ╲─────────╱
                           │YES      ┌S1662
                           ▼
              ┌────────────────────────────┐
              │ Receive thickness and      │
              │ density of the dripping    │
              │ pipe                       │
              └────────────┬───────────────┘
                           ▼         ┌S1664
              ┌────────────────────────────┐
              │ Emit incident sonic wave   │
              │ from the transducer        │
              └────────────┬───────────────┘
                           ▼         ┌S1666
              ┌────────────────────────────┐
              │ Obtain a measurement signal│
              │ indicative of temporal     │
              │ intensity change in A₁ wave│
              │ and B₁ wave                │
              └────────────┬───────────────┘
                           ▼         ┌S1668
              ┌────────────────────────────┐
              │      Detect delay time     │
              └────────────┬───────────────┘
                           ▼         ┌S1670
              ┌────────────────────────────┐
              │ Obtain acoustic impedance  │
              │ of the dripping pipe       │
              └────────────┬───────────────┘
                           ▼         ┌S1672
              ┌────────────────────────────┐
              │ Store the obtained acoustic│
              │ impedance in the storage   │
              │ unit                       │
              └────────────┬───────────────┘
                           ▼
                    ╭─────────────╮
                    │     End      │
                    ╰─────────────╯
```

Emit incident sonic wave from the transducer

Obtain a measurement signal indicative of temporal intensity change of A$_0$ wave

Obtain amplitude characteristic of A$_0$ wave in the frequency domain

Store the amplitude characteristic of A$_0$ wave in the frequency domain as reference data

Was a reflective member refer command received?

Receive thickness and density of the dripping pipe

Emit incident sonic wave from the transducer

Obtain a measurement signal indicative of temporal intensity change in A$_1$ wave and B$_1$ wave

Detect delay time

Obtain acoustic impedance of the dripping pipe

Store the obtained acoustic impedance in the storage unit

Fig. 51

Fig. 52

Fig. 53

Fig. 54

```
                    ┌─────────────────┐
                    │      Start       │
                    └─────────────────┘
                             │        ┌────────────┐
                             ▼        │            │
                        ╱───────────╲     ╭ S1700   │
                       ╱  Was a start ╲            │
                      ⟨   process      ⟩  NO ──────┘
                       ╲ command       ╱
                        ╲ received?   ╱
                         ╲──────────╱
                             │ YES        ╭ S1702
                             ▼
               ┌──────────────────────────────┐
               │  Give the motor a reference   │
               │      rotating speed command   │
               └──────────────────────────────┘
                             │            ╭ S1704
                             ▼
               ┌──────────────────────────────┐
               │  Emit incident sonic wave     │
               │      from the transducer      │
               └──────────────────────────────┘
                             │            ╭ S1706
                             ▼
               ┌──────────────────────────────┐
               │ Obtain a measurement signal   │
               │ indicative of temporal        │
               │ intensity change of Ai wave   │
               └──────────────────────────────┘
                             │            ╭ S1708
                             ▼
               ┌──────────────────────────────┐
               │ Obtain a measurement signal   │
               │ indicative of temporal        │
               │ intensity change of At wave   │
               └──────────────────────────────┘
                             │            ╭ S1710
                             ▼
               ┌──────────────────────────────┐
               │ Obtain an amplitude value and │
               │ phase in specific frequency of│
               │ the incident sonic wave and   │
               │ transmitting sonic wave       │
               └──────────────────────────────┘
                             │            ╭ S1712
                             ▼
               ┌──────────────────────────────┐
               │ Measure the loss elastic      │
               │ modulus at the specific       │
               │ frequency                     │
               └──────────────────────────────┘
                             │            ╭ S1714
                             ▼
               ┌──────────────────────────────┐
               │ Perform similar processes to  │
               │ steps S1562 to S1574          │
               └──────────────────────────────┘
                             │
                             ▼
                    ┌─────────────────┐
                    │       End        │
                    └─────────────────┘
```

Fig. 55

Material input

710
232
230

3
2

M
236

810

238

Fig. 56

Loss elastic modulus

ΔL"

Target value

Time

Fig. 57

```
                    ┌─────────────┐
                    │    Start    │
                    └─────────────┘
                           │
                           ▼            ┌─ S1750
                     ◇─────────────◇
                    Was a start process      NO
                    command received?    ────────┐
                     ◇─────────────◇            │
                           │                     │
                          ▼ YES     ┌─ S1752     │
           ┌──────────────────────────────┐      │
           │ Give the motor a reference   │      │
           │      rotating speed command  │      │
           └──────────────────────────────┘      │
                           │                      │
                           ▼        ┌─ S1754      │
           ┌──────────────────────────────┐       │
           │  Emit incident sonic wave    │       │
           │      from the transducer     │       │
           └──────────────────────────────┘       │
                           │                       │
                           ▼        ┌─ S1756       │
           ┌──────────────────────────────┐        │
           │  Obtain a measurement signal │        │
           └──────────────────────────────┘        │
                           │                        │
                           ▼        ┌─ S1758        │
           ┌──────────────────────────────┐         │
           │ Obtain an amplitude value    │         │
           │ and phase in specific        │         │
           │ frequency of reflected       │         │
           │ sonic wave                   │         │
           └──────────────────────────────┘         │
                           │                         │
                           ▼        ┌─ S1760         │
           ┌──────────────────────────────┐          │
           │ Measure the loss elastic     │          │
           │ modulus at the specific      │          │
           │ frequency                    │          │
           └──────────────────────────────┘          │
                           │                          │
                           ▼        ┌─ S1762          │
           ┌──────────────────────────────┐           │
           │ Calculate a deviation between│           │
           │ the measured loss elastic    │           │
           │ modulus and a target value   │           │
           └──────────────────────────────┘           │
                           │                           │
                           ▼        ┌─ S1764           │
           ┌──────────────────────────────┐            │
           │ Give the motor a new         │            │
           │ rotating speed command       │            │
           └──────────────────────────────┘            │
                           │                            │
                           ▼        ┌─ S1766            │
                     ◇─────────────◇                   │
                    Was a stop process      NO ─────────┘
                    command received?
                     ◇─────────────◇
                           │
                          ▼ YES
                    ┌─────────────┐
                    │     End     │
                    └─────────────┘
```

Fig. 58

711

244  248                                    242

2
3
811        /OBJ          OBJ              OBJ

240                    246              250

Fig. 59

Loss elastic modulus

T4
———————————————————— Third threshold
T3
———————————————————— Second threshold
T2
———————————————————— First threshold
T1

Time

Fig. 60

Start

S1800 — Was object to be processed received? — NO

YES

S1802 — Position the sensor unit and delaying member on the top surface of the object to be processed

S1804 — Emit incident sonic wave from the transducer

S1806 — Obtain a measurement signal

S1808 — Obtain an amplitude value and phase in specific frequency of reflected sonic wave

S1810 — Measure the loss elastic modulus at the specific frequency

S1812 — Is a first threshold exceeded? — NO → S1814 — Select drying temperature T1

YES

S1816 — Is a second threshold exceeded? — NO → S1818 — Select drying temperature T2

YES

S1820 — Is a third threshold exceeded? — NO → S1822 — Select drying temperature T3

YES

S1824 — Select drying temperature T4

S1826 — Give the burner a burn command so that the selected drying temperature is reached

S1828 — Was object to be processed carried onto the discharging table roller? — NO

YES

End

Fig. 61

551

651

2

5

3

SMP

Fig. 62

Fig. 63A

Reference
sonic wave

$Z_1(f)$

20

3

$Z_0(f)$      In the air

Fig. 63B

Measurement
sonic wave

$Z_1(f)$

20

3

SMP

$Z_2(f)$

Fig. 64

Fig. 65

Timing to start
to emit incident
sonic wave

Reception strength

Fo(Tb1:t)
Fo(Tb2:t)

t1　t2　t3　t4

Fo(Tb3:t)

Fo(Tb4:t)

0

Time

Fig. 66

14A

Reference data
memory unit

901

Measured
temperature
value #Tb

330

Corrected
reference data
determining unit

Fo(t)

334

FFT

Ao(f)
$\theta$ o(f)

338

Calculating
unit

Storage elastic modulus L'(f)
Loss elastic modulus L"(f)
Loss tangent tan $\delta$ (f)

Measurement
signal

12

Temporal data
memory unit

F(t)

336

FFT

A(f)
$\theta$ (f)

Fig. 67

Determined as corrected reference data $F_0(t)$

| Elapsed time    Temperature of delaying member | Tb1 | Tb2 | | Tbm |
|:---:|:---:|:---:|:---:|:---:|
| 0 | 0 | 0 | | 0 |
| 1 | $\alpha_{11}$ | $\alpha_{21}$ | | $\alpha_{m1}$ |
| 2 | $\alpha_{12}$ | $\alpha_{22}$ | | $\alpha_{m2}$ |
| $\wr$ | $\wr$ | $\wr$ | | $\wr$ |
| n | $\alpha_{1n}$ | $\alpha_{2n}$ | | $\alpha_{mn}$ |

$\underbrace{\qquad}_{F_0(Tb1:t)}$ $\underbrace{\qquad}_{F_0(Tb2:t)}$ $\underbrace{\qquad}_{F_0(Tbm:t)}$

Fig. 68

Tb1    a    #Tb $\xrightarrow{(1-a)}$ Tb2

Temperature of delaying member

Fig. 69

```
                    ╭─────────────────╮
                    │      Start       │
                    ╰────────┬─────────╯
                             │      ◄─────────────────────────┐
                             ▼                                │
                        ╱─────────────╲    ┌─S3100            │
                   ╱──────────────────────╲                  │
                 ◄    Was a measurement start    ╲    NO      │
                   ╲    command received?    ╱────────────────┘
                     ╲──────────────────╱
                        ╲──────┬──────╱
                            YES │            ┌─S3102
                   ┌───────────▼──────────────────────┐
                   │  Obtain a measured temperature value #Tb of  │
                   │         the delaying member        │
                   └───────────┬──────────────────────┘
                               ▼            ┌─S3104
```

Obtain a measured temperature value #Tb of the delaying member

Among more than one piece of reference data to be stored, determine as corrected reference data the reference data whose associated temperature of the delaying member is closest to the measured temperature value #Tb

Emit incident sonic wave from the transducer

Obtain a measurement signal associated with reflected sonic wave to be received by the transducer

Obtain amplitude characteristic $A_0(f)$ and phase characteristic $\theta_0(f)$ in the frequency domain of the corrected reference data

Obtain amplitude characteristic $A(f)$ and phase characteristic $\theta(f)$ in the frequency domain of the measurement signal

Calculate and output viscoelastic property of an object to be processed

End

Fig. 70

Reference data acquisition command

Measured temperature
value #Tb

Reference signal

**332A**

Temperature of
delaying
member

**14A**

Reference data
acquisition
control unit

Reference data
memory unit

Reference
data

Emit command

Fig. 71

Start

Was a reference data
acquisition command
received? — S3150 — NO

YES — S3152

Obtain a measured temperature value #Tb of
the delaying member

S3154

Emit incident sonic wave from the transducer

S3156

Obtain a reference signal corresponding to reflected
sonic wave to be received by the transducer

S3158

Extract reference data from the obtained reference signal

S3160

Associate the temperature of the delaying member with
the extracted reference data and write them into
the reference data memory unit

End

Fig. 72

Fig. 73

Fig. 74

EP 1 944 605 A1

Fig. 75

```
            ┌─────────────┐
            │    Start     │
            └──────┬──────┘
                   │  ┌──────────────────────┐
                   ▼  ▼                       │
              ╱─────────────╲  ┌─ S3200       │
             ╱  Was a measurement ╲  NO        │
             ╲  start command     ╱───────────┘
              ╲  received?      ╱
               ╲─────────────╱
                   │ YES              ┌─ S3202
                   ▼
    ┌──────────────────────────────────────┐
    │ Obtain a measured temperature value   │
    │ #Tb of the delaying member            │
    └──────────────────┬───────────────────┘
                       │              ┌─ S3204
                       ▼
    ┌──────────────────────────────────────┐
    │ Among more than one piece of reference │
    │ data to be stored, extract two reference│
    │ data whose associated temperature of   │
    │ delaying member is contiguous to the   │
    │ measured temperature value #Tb          │
    └──────────────────┬───────────────────┘
                       │              ┌─ S3206
                       ▼
    ┌──────────────────────────────────────┐
    │ Calculate a proportion of temperature  │
    │ differences between temperature of the  │
    │ delaying member associated with one     │
    │ reference data and that of the delaying │
    │ member associated with the other        │
    │ reference data                          │
    └──────────────────┬───────────────────┘
                       │              ┌─ S3208
                       ▼
    ┌──────────────────────────────────────┐
    │ Determine corrected reference data by  │
    │ interpolating so that a proportion of   │
    │ intensity difference between intensity  │
    │ at the time associated with one         │
    │ reference data and that at the time     │
    │ associated with other reference data    │
    │ matches the calculated proportion of    │
    │ the temperature differences             │
    └──────────────────┬───────────────────┘
                       │              ┌─ S3210
                       ▼
    ┌──────────────────────────────────────┐
    │ Emit incident sonic wave from the      │
    │ transducer                             │
    └──────────────────┬───────────────────┘
                       │              ┌─ S3212
                       ▼
    ┌──────────────────────────────────────┐
    │ Obtain a reference signal corresponding│
    │ to reflected sonic wave to be received │
    │ by the transducer                       │
    └──────────────────┬───────────────────┘
                       │              ┌─ S3214
                       ▼
    ┌──────────────────────────────────────┐
    │ Obtain amplitude characteristic A0(f)  │
    │ and phase characteristic θ0(f) in the   │
    │ frequency domain of the corrected       │
    │ reference data                          │
    └──────────────────┬───────────────────┘
                       │              ┌─ S3216
                       ▼
    ┌──────────────────────────────────────┐
    │ Obtain amplitude characteristic A (f)  │
    │ and phase characteristic θ (f) in the   │
    │ frequency domain of the measurement    │
    │ signal                                  │
    └──────────────────┬───────────────────┘
                       │              ┌─ S3218
                       ▼
    ┌──────────────────────────────────────┐
    │ Calculate and output viscoelastic      │
    │ characteristic of an object to be       │
    │ processed                               │
    └──────────────────┬───────────────────┘
                       ▼
            ┌─────────────┐
            │     End      │
            └─────────────┘
```

S3200: Was a measurement start command received? — NO / YES

S3202: Obtain a measured temperature value #Tb of the delaying member

S3204: Among more than one piece of reference data to be stored, extract two reference data whose associated temperature of delaying member is contiguous to the measured temperature value #Tb

S3206: Calculate a proportion of temperature differences between temperature of the delaying member associated with one reference data and that of the delaying member associated with the other reference data

S3208: Determine corrected reference data by interpolating so that a proportion of intensity difference between intensity at the time associated with one reference data and that at the time associated with other reference data matches the calculated proportion of the temperature differences

S3210: Emit incident sonic wave from the transducer

S3212: Obtain a reference signal corresponding to reflected sonic wave to be received by the transducer

S3214: Obtain amplitude characteristic $A_0(f)$ and phase characteristic $\theta_0(f)$ in the frequency domain of the corrected reference data

S3216: Obtain amplitude characteristic $A(f)$ and phase characteristic $\theta(f)$ in the frequency domain of the measurement signal

S3218: Calculate and output viscoelastic characteristic of an object to be processed

128

Fig. 76

Fig. 77A

Fig. 77B

Fig. 78A

| Frequency component / Temperature of delaying member | Tb1 | Tb2 | | Tbm |
|---|---|---|---|---|
| $f_1$ | $\beta_{11}$ | $\beta_{21}$ | | $\beta_{m1}$ |
| $f_2$ | $\beta_{12}$ | $\beta_{22}$ | | $\beta_{m2}$ |
| $\}$ | $\}$ | $\}$ | | $\}$ |
| $f_n$ | $\beta_{1n}$ | $\beta_{2n}$ | | $\beta_{mn}$ |
| | $A_0(Tb_1{:}f)$ | $A_0(Tb_2{:}f)$ | | $A_0(Tb_m{:}f)$ |

Fig. 78B

| Frequency component / Temperature of delaying member | Tb1 | Tb2 | | Tbm |
|---|---|---|---|---|
| $f_1$ | $\gamma_{11}$ | $\gamma_{21}$ | | $\gamma_{m1}$ |
| $f_2$ | $\gamma_{12}$ | $\gamma_{22}$ | | $\gamma_{m2}$ |
| $\}$ | $\}$ | $\}$ | | $\}$ |
| $f_m$ | $\gamma_{1n}$ | $\gamma_{2n}$ | | $\gamma_{mn}$ |
| | $\theta_0(Tb_1{:}f)$ | $\theta_0(Tb_2{:}f)$ | | $\theta_0(Tb_m{:}f)$ |

Fig. 79

```
                        ┌─────────────┐
                        │    Start    │
                        └──────┬──────┘
                               │      ┌──────────────────────┐
                               ▼      │                      │
                          ╱─────────────╲   ┌─ S3300          │
                     ╱───  Was a measurement start command ──╲  NO
                     ╲───      received?                    ───╱────┘
                          ╲─────────────╱
                               │ YES                    ┌─ S3302
                   ┌───────────▼────────────────────────────────┐
                   │  Obtain a measured temperature value #Tb of │
                   │         the delaying member                 │
                   └───────────┬────────────────────────────────┘
                               │                        ┌─ S3304
   ┌───────────────────────────▼───────────────────────────────┐
   │ Among more than one piece of reference data to be stored,  │
   │ determine as corrected reference the reference data whose  │
   │ associated temperature of the delaying member is closest to the │
   │ measured temperature value #Tb                             │
   └───────────────────────────┬───────────────────────────────┘
                               │                        ┌─ S3306
                   ┌───────────▼────────────────────────────────┐
                   │   Emit incident sonic wave from the transducer │
                   └───────────┬────────────────────────────────┘
                               │                        ┌─ S3308
   ┌───────────────────────────▼───────────────────────────────┐
   │ Obtain a measurement signal associated with reflected      │
   │ sonic wave to be received by the transducer                │
   └───────────────────────────┬───────────────────────────────┘
                               │                        ┌─ S3310
   ┌───────────────────────────▼───────────────────────────────┐
   │ Obtain amplitude characteristic A(f) and phase characteristic θ(f) │
   │   in the frequency domain of the measurement signal        │
   └───────────────────────────┬───────────────────────────────┘
                               │                        ┌─ S3312
   ┌───────────────────────────▼───────────────────────────────┐
   │ Calculate and output viscoelastic property of an object to be │
   │                        processed                           │
   └───────────────────────────┬───────────────────────────────┘
                               ▼
                        ┌─────────────┐
                        │     End     │
                        └─────────────┘
```

Fig. 80

Reference data acquisition command

Measured
temperature value
#Tb

**332B** Temperature of
delaying
member

Reference data
acquisition
control unit

**14B**

Reference data
memory unit

Ao(t), θ o(t)

Ao(t), θ o(t)

Reference
signal

FFT

**342**

Emit
command

Fig. 81A

Fig. 81B

Fig. 82

```
                              ┌──────────┐
                              │  Start   │
                              └──────────┘
                                   │
                                   ▼
                                 ┌─── S3400
                    ╱───────────────────────────╲
                   ╱   Was a measurement start    ╲      NO
                   ╲     command received?         ╱─────────┐
                    ╲───────────────────────────╱           │
                                   │ YES                     │
                                   ▼           S3402         │
  ┌────────────────────────────────────────────────────┐    │
  │ Obtain a measured temperature value #Tb of the      │    │
  │ delaying member                                     │    │
  └────────────────────────────────────────────────────┘    │
                                   │           S3404         │
                                   ▼                         │
  ┌────────────────────────────────────────────────────┐    │
  │ Among more than one piece of reference data to be   │    │
  │ stored, extract two reference data whose associated │    │
  │ temperature of delaying member is contiguous to the │    │
  │ measured temperature value #Tb                      │    │
  └────────────────────────────────────────────────────┘    │
                                   │           S3406         │
                                   ▼                         │
  ┌────────────────────────────────────────────────────┐    │
  │ Calculate a proportion of temperature differences   │    │
  │ between temperature of the delaying member          │    │
  │ associated with one reference data and that of the  │    │
  │ delaying member associated with the other reference │    │
  │ data                                                │    │
  └────────────────────────────────────────────────────┘    │
                                   │           S3408         │
                                   ▼                         │
  ┌────────────────────────────────────────────────────┐    │
  │ Determine amplitude characteristic Aest(f)          │    │
  │ contained in the corrected reference data by        │    │
  │ interpolating so that a proportion of differences   │    │
  │ in amplitude at the frequency associated with the   │    │
  │ amplitude characteristic contained in one reference │    │
  │ data and that at the frequency associated with the  │    │
  │ amplitude characteristic contained in the other     │    │
  │ reference data matches the calculated proportion of │    │
  │ temperature differences                             │    │
  └────────────────────────────────────────────────────┘    │
                                   │           S3410         │
                                   ▼                         │
  ┌────────────────────────────────────────────────────┐    │
  │ Determine phase characteristic θest(f) contained in │    │
  │ the corrected reference data by interpolating so    │    │
  │ that a proportion of differences in phase at the    │    │
  │ frequency associated with the phase characteristic  │    │
  │ contained in one reference data and that at the     │    │
  │ frequency associated with the phase characteristic  │    │
  │ contained in the other reference data matches the   │    │
  │ calculated proportion of temperature differences    │    │
  └────────────────────────────────────────────────────┘    │
                                   │           S3412         │
                                   ▼                         │
  ┌────────────────────────────────────────────────────┐    │
  │      Emit incident sonic wave from the transducer   │    │
  └────────────────────────────────────────────────────┘    │
                                   │           S3414         │
                                   ▼                         │
  ┌────────────────────────────────────────────────────┐    │
  │ Obtain a measurement signal associated with         │    │
  │ reflected sonic wave to be received by the          │    │
  │ transducer                                          │    │
  └────────────────────────────────────────────────────┘    │
                                   │           S3416         │
                                   ▼                         │
  ┌────────────────────────────────────────────────────┐    │
  │ Obtain amplitude characteristic A(f) and phase      │    │
  │ characteristic θ(f) in the frequency domain of the  │    │
  │ measurement signal                                  │    │
  └────────────────────────────────────────────────────┘    │
                                   │           S3418         │
                                   ▼                         │
  ┌────────────────────────────────────────────────────┐    │
  │ Calculate and output viscoelastic property of an    │    │
  │ object to be processed                              │    │
  └────────────────────────────────────────────────────┘    │
                                   │                         │
                                   ▼                         │
                              ┌──────────┐                   │
                              │   End    │                   │
                              └──────────┘                   │
```

Fig. 83

552

651

2

3

SMP

Fig. 84

14C
Reference data memory unit

346
Corrected reference data determining unit

$F_0(t)$

334
FFT

$A_0(f)$
$\theta_0(f)$

344
Delay time extracting unit

338
Calculating unit

Storage elastic modulus L'(f)
Loss elastic modulus L"(f)
Loss tangent tan δ(f)

Measurement signal

12
Temporal data memory unit

$F(t)$

336
FFT

$A(f)$
$\theta(f)$

Fig. 85

Timing to start
to emit incident
sonic wave

Intensity

Fo(1:t)

0

t1

Time

(1) Delay time

(2) Intensity change property

Fig. 86

| Reference data number | | 1 | 2 | to | m |
|---|---|---|---|---|---|
| (1) Delay time | | $t_1$ | $t_2$ | | $t_m$ |
| (2) Intensity change property (for after delay time) | Time 0 | 0 | 0 | | 0 |
| | Time 1 | $\delta_{11}$ | $\delta_{21}$ | | $\delta_{m1}$ |
| | Time 2 | $\delta_{12}$ | $\delta_{22}$ | | $\delta_{m2}$ |
| | to | to | to | | to |
| | Time n | $\delta_{1n}$ | $\delta_{2n}$ | | $\delta_{mn}$ |

Fig. 87

Fig. 88

Fig. 89

Fig. 90A

Fig. 90B

Fig. 91

```
                        ┌─────────────────┐
                        │      Start      │
                        └─────────────────┘
                                 │
                                 ▼
                          ╱─────────────╲         ┌─ S3500
                        ╱                 ╲
              ◄───────╱  Was a measurement  ╲──────  NO
                      ╲  start command       ╱
                        ╲   received?      ╱
                          ╲─────────────╱
                                 │ YES              ┌─ S3502
                                 ▼
              ┌──────────────────────────────────────────┐
              │ Emit incident sonic wave from the transducer │
              └──────────────────────────────────────────┘
                                 │                   ┌─ S3504
                                 ▼
              ┌──────────────────────────────────────────┐
              │ Obtain a measurement signal associated with │
              │ reflected sonic wave to be received by the   │
              │ transducer                                   │
              └──────────────────────────────────────────┘
                                 │                   ┌─ S3506
                                 ▼
              ┌──────────────────────────────────────────┐
              │ Extract delay time of the measurement signal │
              └──────────────────────────────────────────┘
                                 │                   ┌─ S3508
                                 ▼
              ┌──────────────────────────────────────────┐
              │ Among more than one piece of reference data  │
              │ to be stored, determine as corrected         │
              │ reference data the reference data whose       │
              │ associated delay time is closest to the delay │
              │ time of the extracted measurement signal      │
              └──────────────────────────────────────────┘
                                 │                   ┌─ S3510
                                 ▼
              ┌──────────────────────────────────────────┐
              │ Obtain amplitude characteristic ... and phase │
              └──────────────────────────────────────────┘
```

Obtain amplitude characteristic $A_0(f)$ and phase characteristic $\theta_0(f)$ in the frequency domain of the corrected reference data

S3512

Obtain amplitude characteristic $A(f)$ and phase characteristic $\theta(f)$ in the frequency domain of the measurement signal

S3514

Calculate and output viscoelastic property of an object to be processed

End

Fig. 92

Reference data acquisition command

**332C**                    **14C**

Reference signal

Reference data acquisition control unit

Delay time extracting unit

**348**

Delay time

Intensity change characteristic

Reference data memory unit

Emit command

Fig. 93

$t1$     $a$     $t$   $(1-a)$  $t2$

Delay time

Fig. 94

Intensity

0

Elapsed time

$(1-a)$   P72

P73

$a$

P71

Fo(2:t)

Fo(1:t)

Fig. 95

Fig. 96

```
                    ┌─────────────┐
                    │    Start    │
                    └──────┬──────┘
                           │            ┌──────────────┐
                           ▼            │              │
                   ╱────────────────────╲  ┌─ S3600    │
                  ╱  Was a measurement    ╲ NO          │
                  ╲  start command received? ╱──────────┘
                   ╲────────────────────╱
                           │ YES       ┌─ S3602
                           ▼
        ┌──────────────────────────────────────────┐
        │   Emit incident sonic wave from the       │
        │   transducer                              │
        └──────────────────────────────────────────┘
                           │           ┌─ S3604
                           ▼
        ┌──────────────────────────────────────────┐
        │ Obtain a measurement signal associated    │
        │ with reflected sonic wave to be received  │
        │ by the transducer                         │
        └──────────────────────────────────────────┘
                           │           ┌─ S3606
                           ▼
        ┌──────────────────────────────────────────┐
        │  Extract delay time of the measurement    │
        │  signal                                   │
        └──────────────────────────────────────────┘
                           │           ┌─ S3608
                           ▼
        ┌──────────────────────────────────────────┐
        │ Among more than one piece of reference    │
        │ data to be stored, extract two reference  │
        │ data whose associated delay time is       │
        │ contiguous to delay time of the extracted │
        │ measurement signal                        │
        └──────────────────────────────────────────┘
                           │           ┌─ S3610
                           ▼
        ┌──────────────────────────────────────────┐
        │ Calculate a proportion of time difference │
        │ between delay time associated with one    │
        │ reference data of the delay time and that │
        │ associated with the other reference data  │
        └──────────────────────────────────────────┘
                           │           ┌─ S3612
                           ▼
        ┌──────────────────────────────────────────┐
        │ Determine corrected reference data by     │
        │ interpolating so that a proportion of     │
        │ intensity difference between intensity at │
        │ the time associated with one reference    │
        │ data and that at the time associated with │
        │ other reference data matches the          │
        │ calculated proportion of the temperature  │
        │ differences                               │
        └──────────────────────────────────────────┘
                           │           ┌─ S3614
                           ▼
        ┌──────────────────────────────────────────┐
        │ Obtain amplitude characteristic A₀(f) and │
        │ phase characteristic θ₀(f) in the         │
        │ frequency domain of the corrected         │
        │ reference data                            │
        └──────────────────────────────────────────┘
                           │           ┌─ S3616
                           ▼
        ┌──────────────────────────────────────────┐
        │ Obtain amplitude characteristic A(f) and  │
        │ phase characteristic θ(f) in the          │
        │ frequency domain of the measurement       │
        │ signal                                    │
        └──────────────────────────────────────────┘
                           │           ┌─ S3618
                           ▼
        ┌──────────────────────────────────────────┐
        │ Calculate and output viscoelastic         │
        │ property of an object to be processed     │
        └──────────────────────────────────────────┘
                           │
                           ▼
                    ┌─────────────┐
                    │     End     │
                    └─────────────┘
```

- S3600 Was a measurement start command received? — NO / YES
- S3602 Emit incident sonic wave from the transducer
- S3604 Obtain a measurement signal associated with reflected sonic wave to be received by the transducer
- S3606 Extract delay time of the measurement signal
- S3608 Among more than one piece of reference data to be stored, extract two reference data whose associated delay time is contiguous to delay time of the extracted measurement signal
- S3610 Calculate a proportion of time difference between delay time associated with one reference data of the delay time and that associated with the other reference data
- S3612 Determine corrected reference data by interpolating so that a proportion of intensity difference between intensity at the time associated with one reference data and that at the time associated with other reference data matches the calculated proportion of the temperature differences
- S3614 Obtain amplitude characteristic $A_0(f)$ and phase characteristic $\theta_0(f)$ in the frequency domain of the corrected reference data
- S3616 Obtain amplitude characteristic $A(f)$ and phase characteristic $\theta(f)$ in the frequency domain of the measurement signal
- S3618 Calculate and output viscoelastic property of an object to be processed

Fig. 97

Fig. 98

| Reference data number | | 1 | 2 | to | m |
|---|---|---|---|---|---|
| (1) Delay time | | $t_1$ | $t_2$ | | $t_m$ |
| (2-a) Amplitude characteristic $A_0(f)$ (frequency domain) | $f_1$ | $\beta_{11}$ | $\beta_{21}$ | | $\beta_{m1}$ |
| | $f_2$ | $\beta_{12}$ | $\beta_{22}$ | | $\beta_{m2}$ |
| | to | to | to | | to |
| | $f_n$ | $\beta_{1n}$ | $\beta_{2n}$ | | $\beta_{mn}$ |
| (2-b) Phase characteristic $\theta_0(f)$ (frequency domain) | $f_1$ | $\gamma_{11}$ | $\gamma_{21}$ | | $\gamma_{m1}$ |
| | $f_2$ | $\gamma_{12}$ | $\gamma_{22}$ | | $\gamma_{m2}$ |
| | to | to | to | | to |
| | $f_n$ | $\gamma_{1n}$ | $\gamma_{2n}$ | | $\gamma_{mn}$ |

Fig. 99

```
                        ┌──────────────┐
                        │    Start     │
                        └──────┬───────┘
                               │        ┌──────────┐
                               ▼        │          │
                         ╱─────────────╲     ┌ S3700│
                    ╱────                 ────╲     │
                 ╱─ Was a measurement start command received? ─╲──── NO
                    ╲────                 ────╱
                         ╲─────────────╱
                               │ YES              ┌ S3702
                ┌──────────────▼─────────────────────────┐
                │   Emit incident sonic wave from the transducer   │
                └──────────────┬─────────────────────────┘
                               │                  ┌ S3704
                ┌──────────────▼─────────────────────────┐
                │  Obtain a measurement signal associated with reflected sonic │
                │       wave to be received by the transducer      │
                └──────────────┬─────────────────────────┘
                               │                  ┌ S3706
                ┌──────────────▼─────────────────────────┐
                │    Extract delay time of the measurement signal   │
                └──────────────┬─────────────────────────┘
                               │                  ┌ S3708
                ┌──────────────▼─────────────────────────┐
                │ Among more than one piece of reference data to be stored, │
                │ determine as corrected reference data the reference data whose │
                │ associated delay time is closest to the delay time of the extracted │
                │ measurement signal                       │
                └──────────────┬─────────────────────────┘
                               │                  ┌ S3710
                ┌──────────────▼─────────────────────────┐
                │ Obtain amplitude characteristic A(f) and phase characteristic θ(f) │
                │    in the frequency domain of the measurement signal  │
                └──────────────┬─────────────────────────┘
                               │                  ┌ S3712
                ┌──────────────▼─────────────────────────┐
                │ Calculate and output viscoelastic property of an object to be │
                │                 processed                │
                └──────────────┬─────────────────────────┘
                               ▼
                        ┌──────────────┐
                        │     End      │
                        └──────────────┘
```

Fig. 100

Reference data acquisition command

342

Reference
signal

FFT

Ao(t), θ o(t)

332D

Reference data
acquisition
control unit

Delay time

14D

Reference data
memory unit

Ao(t), θ o(t)

Delay time
extracting unit

348

Emit command

Fig. 101

Start

S3800
Was a measurement start command received?  NO

YES  S3802

Emit incident sonic wave from the transducer

S3804

Obtain a measurement signal associated with reflected sonic wave to be received by the transducer

S3806

Extract delay time of the measurement signal

S3808

Among more than one piece of reference data to be stored, extract two reference data whose associated delay time is contiguous to the delay time of the extracted measurement signal

S3810

Calculate a proportion of time difference between delay time associated with one reference data of the delay time and that associated with the other reference data

S3812

Determine amplitude characteristic $A_{est}(f)$ contained in the corrected reference data by interpolating so that a proportion of differences in amplitude at the frequency associated with the amplitude characteristic contained in one reference data and that at the frequency associated with the amplitude characteristic contained in the other reference data matches the calculated proportion of time differences

S3814

Determine phase characteristic $\theta_{est}(f)$ contained in the corrected reference data by interpolating so that a proportion of differences in phase at the frequency associated with the phase characteristic contained in one reference data and that at the frequency associated with the phase characteristic contained in the other reference data matches the calculated proportion of time differences

S3816

Perform FFT process on the measurement signal and obtain amplitude characteristic $A(f)$ and phase characteristic $\theta(f)$ in the frequency domain of the measurement signal

S3818

Calculate and output viscoelastic property of an object to be processed

End

Fig. 102

| Reference data number | | 1 | 2 | to | m |
|---|---|---|---|---|---|
| (1) Delay time | | $t_1$ | $t_2$ | | $t_m$ |
| (2) Intensity change characteristic (for after delay time) | Time 0 | 0 | 0 | | 0 |
| | Time 1 | $\delta_{11}$ | $\delta_{21}$ | | $\delta_{m1}$ |
| | Time 2 | $\delta_{12}$ | $\delta_{22}$ | | $\delta_{m2}$ |
| | to | to | to | | to |
| | Time n | $\delta_{1n}$ | $\delta_{2n}$ | | $\delta_{mn}$ |
| (3) Temperature of delaying member | | Tb1 | Tb2 | | Tbm |

Fig. 103

(a)

$t_1$   a   t   (1-a)   $t_2$

Delay time

⇓

(b)

Tb1   a   Tb   (1-a)   Tb2

Temperature of delaying member

<div align="center">

**INTERNATIONAL SEARCH REPORT**

</div>

| | International application No. |
|---|---|
| | PCT/JP2006/321646 |

A. CLASSIFICATION OF SUBJECT MATTER
*G01N29/09*(2006.01)i, *G01N19/00*(2006.01)i

According to International Patent Classification (IPC) or to both national classification and IPC

B. FIELDS SEARCHED

Minimum documentation searched (classification system followed by classification symbols)
G01N29/00-29/52, G01N19/00-19/10, G01N3/00-3/62, G01N11/00-11/16

Documentation searched other than minimum documentation to the extent that such documents are included in the fields searched

| Jitsuyo Shinan Koho | 1922-1996 | Jitsuyo Shinan Toroku Koho | 1996-2007 |
|---|---|---|---|
| Kokai Jitsuyo Shinan Koho | 1971-2007 | Toroku Jitsuyo Shinan Koho | 1994-2007 |

Electronic data base consulted during the international search (name of data base and, where practicable, search terms used)
JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | Nobuaki OMATA, Keisei NI, Yuki MIYAMOTO, Masaharu IWAMOTO, "Kami Hansoyo rubber roller no Masatsu Tokusei Hyoka no tameno Koshuha Ryoiki Doteki Nendansei Tokusei Hyokaho (second report) -Choonpa ni yoru Nendansei Hyoka-", Journal of Japanese Society of Tribologists, Vol.50, No.3, 2005.03, pages 238 to 245 | 1-10 |
| Y | JP 9-243617 A (Fuji Photo Film Co., Ltd.), 19 September, 1997 (19.09.97), Full text; all drawings (Family: none) | 1-10 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 February, 2007 (02.02.07) | 13 February, 2007 (13.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/321646 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-503371 A  (Dow Global Technologies Inc.), 05 February, 2004 (05.02.04), Full text; all drawings & WO 01/96854 A2      & US 2002-38160 A1 & EP 1299222 A2 | 8-10 |

Form PCT/ISA/210 (continuation of second sheet) (April 2005)

**INTERNATIONAL SEARCH REPORT**

| International application No. |
|---|
| PCT/JP2006/321646 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
   The inventions in claims 1-7 relate to viscoelastic characteristics measuring method/device.
   The inventions in claims 8-10 relate to a process device.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5215726 A

**Non-patent literature cited in the description**

- Guide on Analytical Instruments. Japan Analytical Instruments Manufacturers Association, 01 September 2004, 105